# EUROPEAN PATENT SPECIFICATION

(11) **EP 3 431 899 B1**
(45) Date of publication and mention of the grant of the patent: **14.10.2026**
(21) Application number: 18000619.9
(22) Date of filing: 20.07.2018
(51) Int. Cl.: F24S 23/79, F24S 23/00, F24S 30/425, F24S 25/10

(54) **OVERGROUND POSITIONED SOLAR RAY CONCENTRATION SYSTEM FOR A POWER GENERATION SYSTEM**
ÜBERIRDISCH POSITIONIERTES SONNENSTRAHLENKONZENTRATIONSSYSTEM FÜR EIN ENERGIEERZEUGUNGSSYSTEM
SYSTÈME DE CONCENTRATION DE RAYONS SOLAIRES AÉRIEN POUR SYSTÈME DE PRODUCTION D'ÉNERGIE

(30) Priority: 21.07.2017 GB 201711815; 24.10.2017 GB 201717449; 19.01.2018 GB 201800938; 23.01.2018 GB 201801073
(43) Date of publication of application: 23.01.2019
(73) Proprietor: Otegui Rebollo, Juan Luis, 81737 München (DE); van Leeuw, Christiane, 81737 München (DE)
(72) Inventor: Otegui van Leeuw, Jon, deceased (DE)

(56) References cited:
- EP-A1- 3 163 214
- EP-A1- 3 176 518
- CN-A- 101 408 668
- DE-A1- 102007 052 338
- GB-A- 2 525 389
- GB-A- 2 541 198
- US-A1- 2007 137 690
- US-A1- 2009 050 324
- US-B1- 6 691 701

## Description

### Technical field: CSP power plant engineering

Document EP 3 176 518 A1 discloses a solar thermal power generation system which comprises the use of mirrors which are positioned one over the other along a tower-like mast structure which all deflect the incoming solar rays to a concentrated point down a channel which projects down towards the ground, hence bringing the solar ray concentration system's surface area to a minimum. Document US 2007/137690 relates an apparatus for obtaining electrical energy from radiant energy comprising: a) first and second photovoltaic receivers; b) a primary curved reflective surface disposed to reflect incident polychromatic radiation toward a first focal plane; and c) a spectral separator disposed between the first focal plane and the primary curved reflective surface, the spectral separator comprising: (i) a dichroic separating surface, convex with respect to the incident reflected polychromatic radiation and treated to reflect a first spectral band toward the first photovoltaic receiver and to transmit reflected polychromatic radiation outside the first spectral band; (ii) a curved separator reflective surface, convex with respect to the light transmitted through the dichroic separating surface and treated to reflect at least a portion of the light transmitted through the dichroic separating surface toward the second photovoltaic receiver.

A concentrated solar power (CSP) generation system comprising at least a device or unit comprising a set of flat collection mirrors or heliostats (1.1), each comprising at least a vertical element (1.12, 78.6a, 123.1) supporting at least a horizontal member (1.6, 66.15, 120.3) above the ground or floor surface (1.18, 105.9, 120.4), which supports said flat solar ray collection mirrors or heliostats (1.1, 105.2, 120.2), wherein each flat collection mirror or heliostat (1.1.150.2. 120.2) is sustained bv a vertical member (1.11). and faces, preferably by means of an orientation or rotational pivot (1.19. 99.2). at least partly, preferably completely, to a Plano concave or concave mirror (1.2. 66.2. 121.2) facing at least towards a convex or Plano convex mirror (1.9. 66.5) in front and under said Plano concave or concave mirror, and wherein said convex or Plano convex mirror is placed closer to said concave or Plano concave mirror (1.2, 6.4, 66.2, 121.2) than the focal point of said concave or Piano concave mirror (1.2, 6.4, 66.2, 121.2), and wherein light rays are driven by said Plano convex or convex mirror (1.9) towards a flat reflection mirror (1.13), said flat mirror (1.13) drives said light rays upwards to another flat reflection mirror (1.4), which drives said light rays towards the lowest part of the next Plano concave or concave mirror (1.2) comprised beside the next flat collection mirror or heliostat (1.1), said flat reflection mirrors (1.4, 1.13) are comprised under and behind said next flat collection mirror or heliostat (1.1).

The present invention comprises a solar ray concentration system which may comprise a plurality of concave or Piano concave mirrors (1.2) which are sustained over the ground level surface (1.18) by a set of horizontal members (1.6), which are sustained by a set of vertically projecting members (1.12). The flat solar ray collection mirrors or heliostats (1.1) drive the solar light rays (1.5) towards the concave or Plano concave mirrors (1.2), which concentrate said light rays onto a convex mirror (1.9). Then, said convex mirror (1.9) drives said light rays horizontally towards a set of flat reflection mirrors (1.4, 1.13), which adjust the position of said driven light rays (1.14), such that these (1.14) can be driven towards the next Piano concave or concave mirror (1.2) for light concentration. So, said light rays are concentrated, with both previously collected and new light rays simultaneously being driven to the next concave or Plano convex mirror (1.9). So, the previously mentioned process is repeated over a finite number of times until reaching the last concave or Piano concave mirror (1.2), hence driving the light rays all along the on the ground surface (1.18) laid power generation system. Said light rays (1.14) increase in light ray intensity until reaching the final concave or Plano concave mirror (1.2), where these (1.14) then reach the heat exchanger or steam generator (1.8) for heat collection and transfer of heat to the primary water circuit (1.16), as well as to the energy storage fluid tank (1.7). Said renewable energy system comprises a plurality of flat solar light ray collection mirrors or heliostats (1.1), each beside one Plano concave or concave mirror (1.2), and one Plano convex or convex mirror (1.9). All of said system's components are sustained over the ground's surface (1.18).

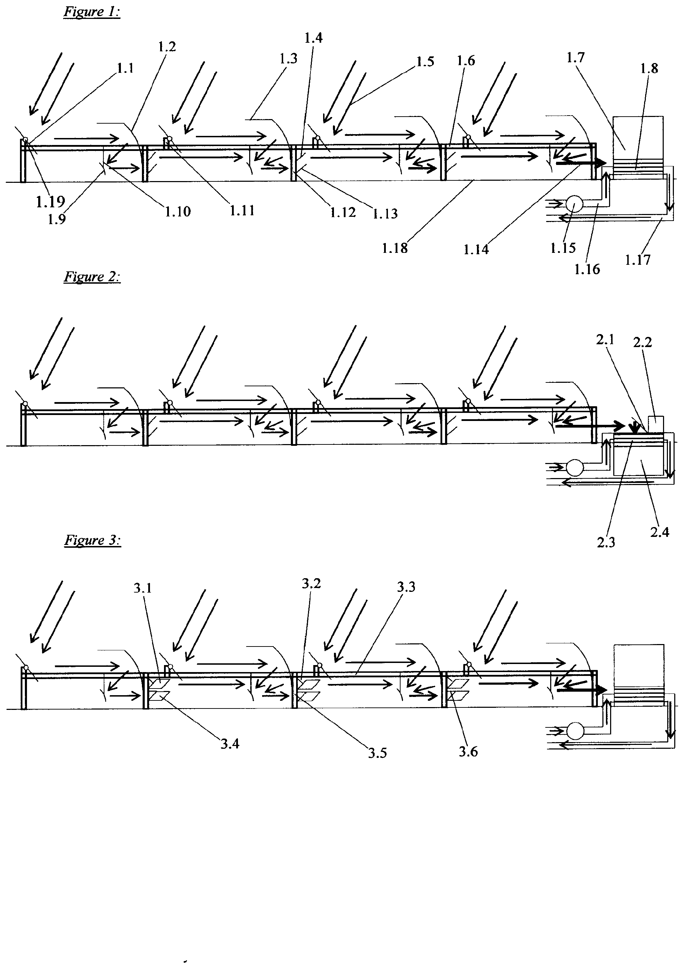

Figure 1 comprises a side view of the renewable power generating system, which is laid over the ground surface (1.18).
Figure 2 comprises a similar side view as Figure 1, but with a flat reflection mirror (2.1) at the end of the light collection process, in order to reflect said light rays vertically downwards to said heat exchanger or steam generator (2.3).
Figure 3 comprises said side view of Figure 1, but with sideways inclined flat reflection mirrors (3.1, 3.4) to move the light ray beam sideways, according to the positions of said flat light collection mirrors or heliostats (1.5) and said concave or Plano concave mirrors (1.2), as well as said convex or Piano convex mirrors (1.9).

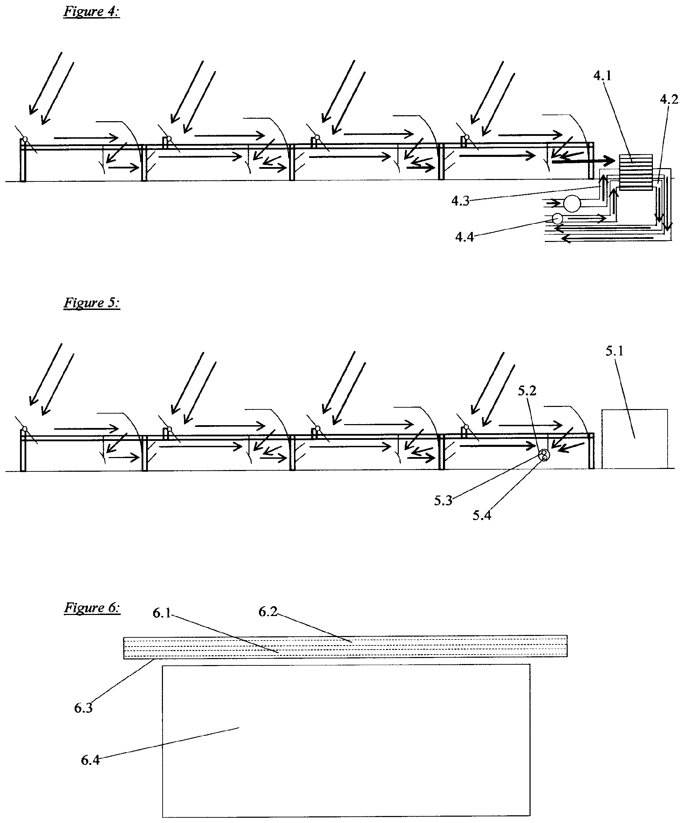

Figure 4 comprises a side view of said renewable energy system, but with said heat exchanger or steam generator (4.1) supplying the collected heat of the light rays (1.14), to both the primary water circuit (4.3) and the energy storage fluid circuit (4.2) simultaneously.
Figure 5 comprises a side view of said renewable energy power generation system, but with a heat exchanger or steam generator pipe (5.2) comprised in front of the last Plano concave or concave mirror (1.2), with the primary water circuit pipe (5.3) and the energy storage fluid pipe (5.4) comprised inside said pipe (5.2).
Figure 6 comprises a top view of said last Plano concave or concave mirror (6.4) of Figure 5, with said heat exchanger or steam generator pipe (6.3) comprised in front of it (6.4), with said pipe (6.3) comprising said primary water circuit pipe (6.1) and said energy storage fluid pipe (6.2).

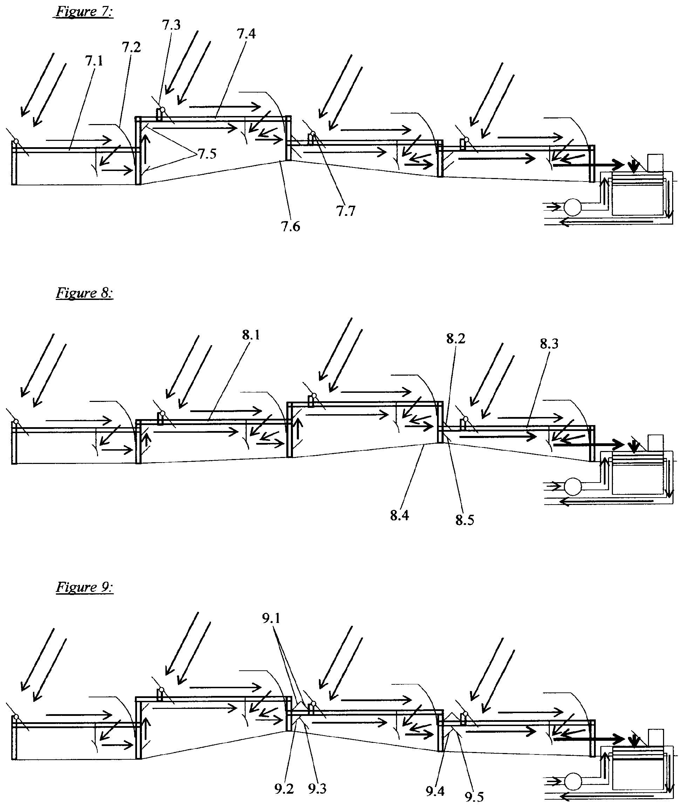

Figure 7 comprises a side view of an over ground solar ray collection system, comprising the railings (7.1, 7.4) comprised at different heights along a rough terrain (7.6).
Figure 8 comprises a side view of an over ground solar ray collection system, comprising the railings (8.1, 8.3) comprised along different heights along a rough terrain (8.4).
Figure 9 comprises said side view of said over ground solar ray collection system comprised on Figure 7, but with sets of two pairs of flat reflection mirrors (9.1, 9.2, 9.3, 9.4, 9.5) which move the position of projection of the light rays upwards or downwards after light ray concentration, according to the height of the next railings (7.1, 7.4) concerned.

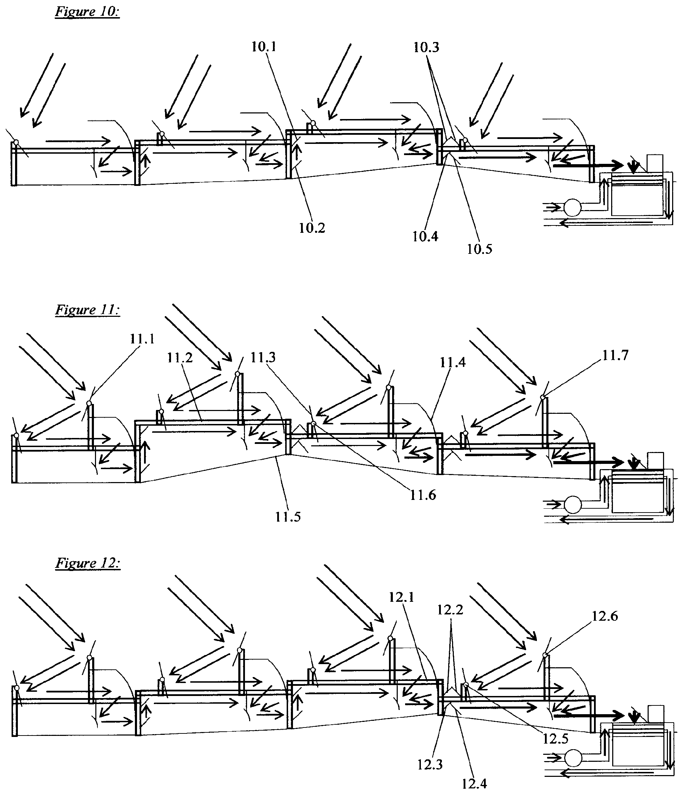

Figure 10 comprises a side view of an over ground solar ray collection system, comprising both flat reflection mirrors (10.1, 10.2) and sets of pairs of flat mirrors (10.3, 10.4, 10.5) in order to move the light rays to a suitable position of projection after light ray concentration.
Figure 11 comprises a side view of an over ground solar ray collection system on rough terrain (11.5), comprising the rotational pivots (11.6, 11.7) which actuate said flat collection mirrors or heliostats (11.1).
Figure 12 comprises a side view of an over ground solar ray collection system which comprises rotational pivots (12.5, 12.6) to actuate said mirrors or heliostats (11.1), also comprising said sets of flat reflection mirrors (12.2, 12.3, 12.4).

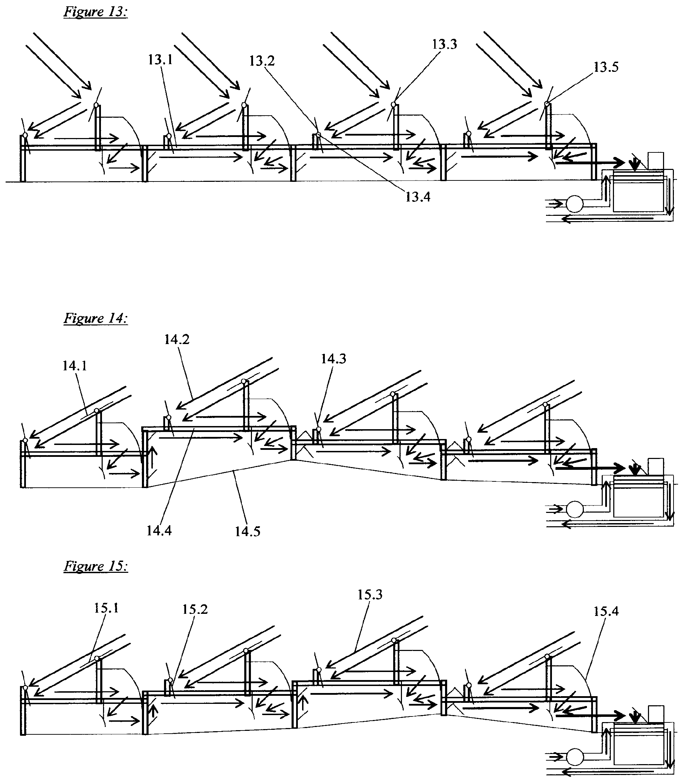

Figure 13 comprises a side view of a solar ray collection system on flat ground with the same railings (13.1) sharing various light collection systems, comprising the rotational pivots (13.4, 13.5) that can actuate said flat collection mirrors or heliostats (13.2, 13.3).
Figure 14 comprises a side view of a solar ray collection system on rough terrain (14.5), comprising said upper flat collection mirrors or heliostats (14.1) being inclined with the surfaces (14.1) at 90 degrees perpendicular to the incoming solar light rays (14.2), when said light rays project towards said lower flat reflection mirror (14.3).
Figure 15 comprises a side view of a solar ray collection system with said upper flat collection mirrors or heliostats (15.1) being inclined at 90 degrees perpendicular to the incoming solar rays (15.3) to minimise light ray obstruction when said rays (15.3) project towards said lower flat collection mirrors or heliostats (15.2).

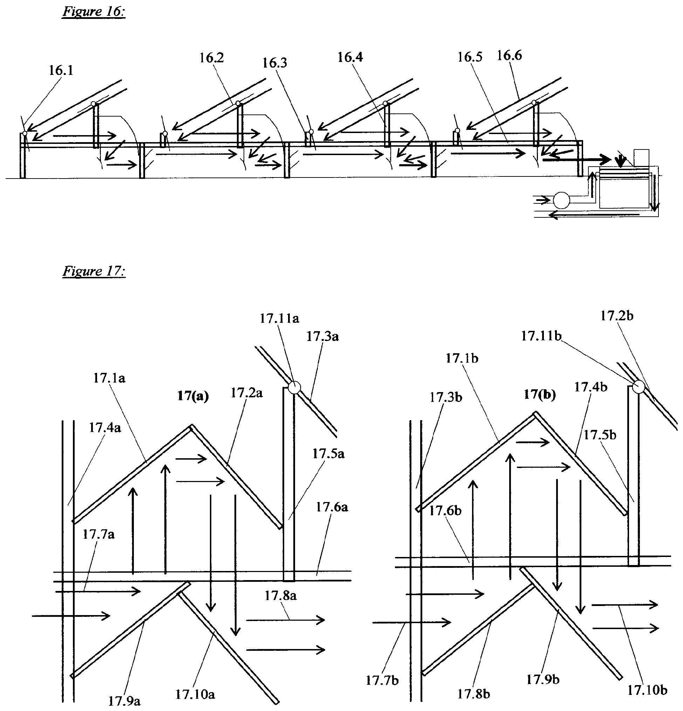

Figure 16 comprises a side view of a solar ray collection system over flat ground, with said upper flat collection mirrors or heliostats (16.2) being inclined perpendicularly at 90 degrees to the incoming solar rays (16.6) in order to minimise obstruction to said light rays (16.6) when these (16.6) project towards the lower positioned flat collection mirrors or heliostats (16.1).
Figure 17 comprises a side view of said sets of flat reflection mirrors (17.1a, 17.2a) being comprised over the lower sets of flat reflection mirrors (17.9a, 17.10a) when said light rays are moved to a lower position of projection, as well as the upper flat mirrors (17.1b, 17.4b) being comprised over the lower set of flat mirrors (17.8b, 17.9b) that are comprised such that the light rays are moved to an upper position of projection, with the difference between the two systems being the position of the light collection mirror (17.9a) being attached over the edge of the lateral mirror (17.10a) or said light collection mirror (17.8b) being attached to a lower point along the inner surface of said lateral mirror (17.9b).

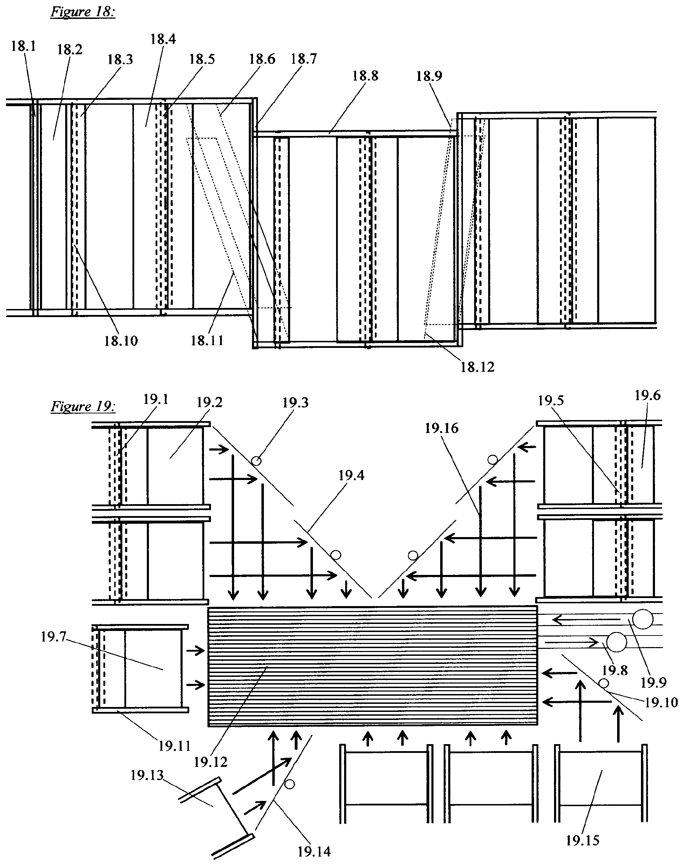

Figure 18 comprises a top view of the mirror components (18.2, 18.3, 18.4) mounted on the sustaining railings (18.7, 18.8), with said railings (18.8) being positioned sideways at different positions along said system, such that sets of flat inclined mirrors (18.6, 18.9, 18.11, 18.12) drive the light rays to being exactly opposite to the next light concentrating concave or Plano concave (15.4) mirror.
Figure 19 comprises a top view of ends of solar ray light collection sets (19.2, 19.7, 19.13, 19.15) which drive the light rays (19.16) onto flat reflection mirrors (19.4, 19.10, 19.14) which reflect said light rays (19.16) to a heat exchanger or steam generator (19.12) which transfer the heat to both the primary (19.9) and energy storage (19.8) circuits, with said system also comprising direct light projecting sets (19.7) which drive said concentrated light rays directly to said heat exchanger or steam generator (19.12).

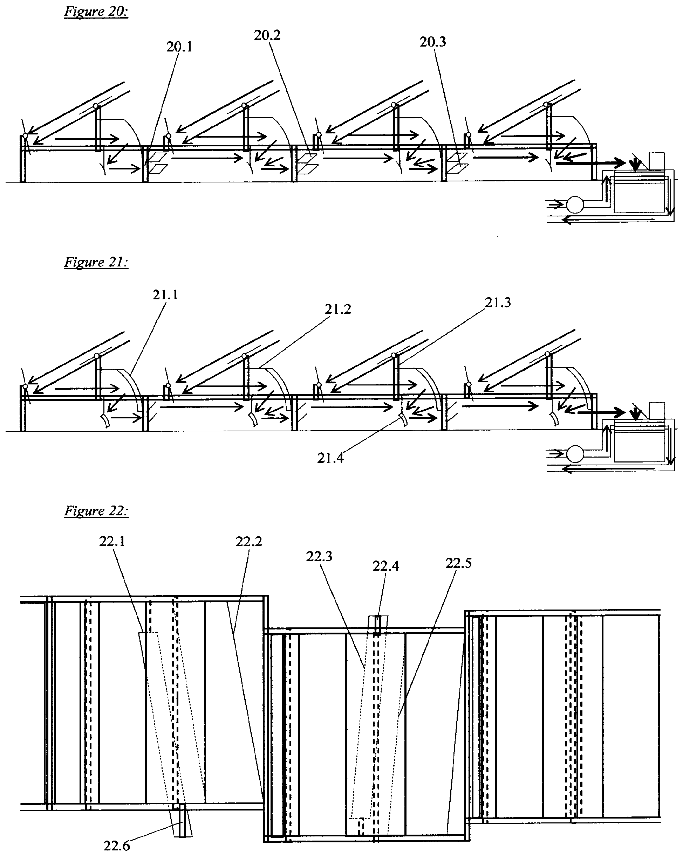

Figure 20 comprises a side view of a solar light ray collection system, with said light ray moving flat inclined mirrors of Figure 18 (20.2, 20.3) being comprised in front of each light ray collection system.
Figure 21 comprises a side view of a solar light ray collection system, with said light ray concentrating mirrors being concave (21.1), and driving said light rays to a convex mirror (21.4) for each light collection and concentration system along the light collection system set.
Figure 22 comprises a top view of said Plano concave or concave mirrors (22.2, 22.5) which are sideways inclined, and which concentrate said light rays to other sideways inclined Plano convex or convex mirrors (22.1, 22.3) in order to position the light ray beams just in front of the next Plano concave or concave mirror (22.2, 22.5) concerned, such that said sideways inclined convex or Plano convex mirrors (22.1, 22.3) are sustained outside from said side railings (18.8) by rigid railing members (22.4, 22.6) on both sides.

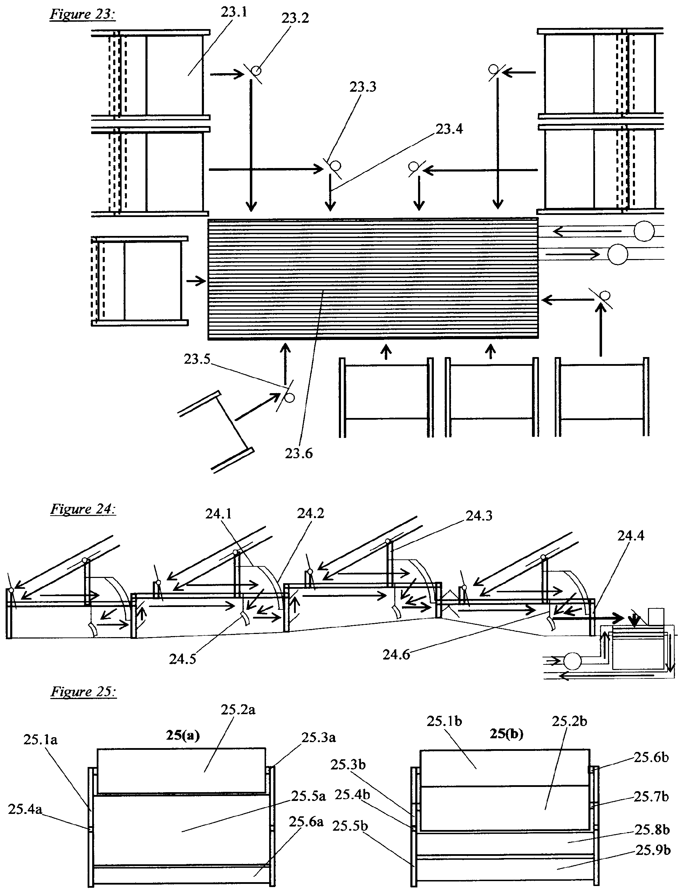

Figure 23 comprises a top view of said system design of Figure 19, but comprising smaller width flat reflection mirrors (23.3, 23.5) in order to drive said light rays (23.4) from said light collection system sets (23.1) to said heat exchanger or steam generator (23.6), as when concave (21.1) and convex (21.4) mirrors are used for the concentration process, narrow concentrated light beams (23.4) would be driven out of said sets (23.1), hence requiring only narrow flat reflection mirrors (23.3, 23.5).
Figure 24 comprises a side view of a solar ray collection system on rough terrain, comprising concave light concentrating mirrors (24.2) and convex light driving mirrors (24.5) positioned under said concave mirrors (24.2).
Figure 25 comprises frontal and rear views of the light ray collection systems (25(a), 25(b)), with a frontal view of said concave or Plano concave mirror (25.5a), the back of said convex or Plano convex mirror (25.6a) and said upper solar ray light collection mirror or heliostat (25.2a), as well as a rear view of said flat light reflection mirrors (25.8b, 25.9b) with a frontal view of said lower solar ray light collection mirror or heliostat (25.2b) and a rear view of said upper flat solar ray light collection mirror or heliostat (25.1b).

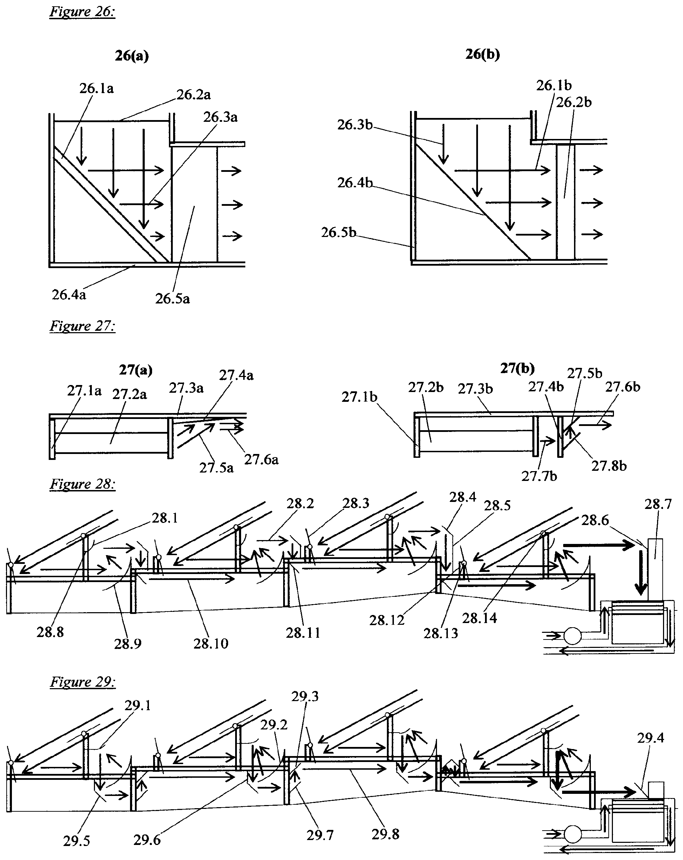

Figure 26 comprises top views of change in sideways directional light driving systems (26(a). 26(b)), with one top view of a flat inclined mirror (26.1a) which drives said light rays (26.3a) to a flat mirror (26.5a) which drives said light rays horizontally, as well as a top view of a flat sideways inclined mirror (26.4b) being 90 degrees perpendicular to the ground surface which drives said light rays (26.1b) to a set of flat inclined reflection mirrors (26.2b) in order to move the position of projection of said light rays to the required height.
Figure 27 comprises side views of said systems comprised on Figure 26, with a side view of said flat mirror (27.2a) driving light rays to said inclined flat mirror (27.4a) in order to drive said light rays into a horizontal direction, as well as a side view of said 90 degrees perpendicular to the ground reflection mirror (27.2b) which drives said light rays onto said set of flat reflection mirrors (27.5b, 27.8b), to drive said light rays from the required height above the ground.
Figure 28 comprises a side view of a solar ray light collection system, with Plano concave mirrors (28.9) projecting partly horizontally and partly upwards, and Plano convex mirrors (28.1) projecting partly horizontally and partly downwards, such that said light rays are driven horizontally from said Plano convex mirrors (28.1) to flat reflection mirrors (28.4) which drive said light rays downwards to a lower position of horizontal light ray projection, where said light rays are reflected again horizontally by another flat reflection mirror (28.11).
Figure 29 comprises said system configuration of Figure 28, but with said Plano concave mirrors (29.2) and said Plano convex mirrors (29.1) arranged such that said light rays are driven vertically downwards by said convex or Plano convex mirrors (29.2) onto a lower positioned flat reflection mirror (29.5) which drives said light rays horizontally from a lower position above the ground.

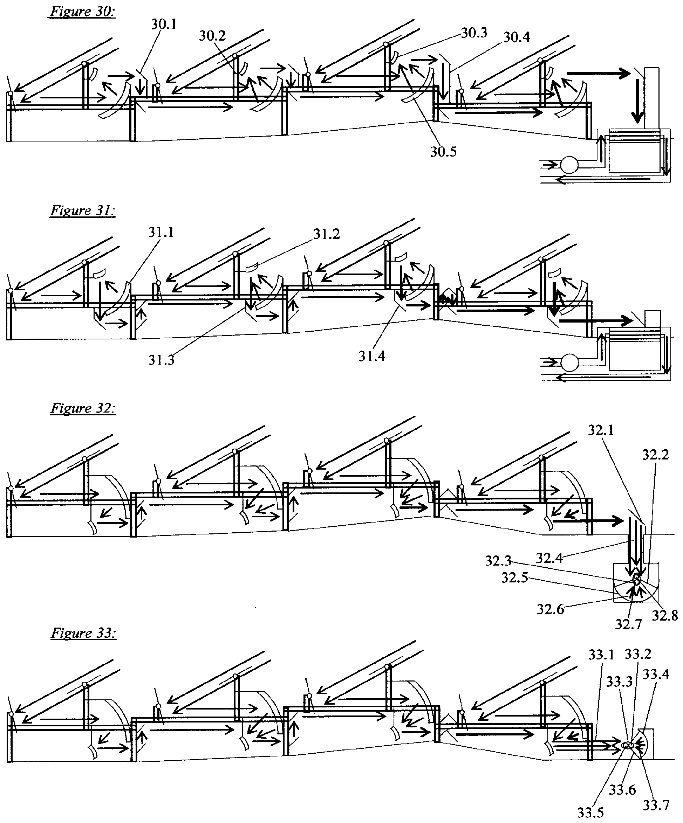

Figure 30 comprises a side view of said system of Figure 28, but with concave mirrors (30.5) in the place of said Plano concave mirrors (28.9) and convex mirrors (30.3) in the place of said Plano convex mirrors (28.1).
Figure 31 comprises a side view of said system of Figure 29, but with concave mirrors (31.1) in the place of said Plano concave mirrors (29.2) and convex mirrors (31.2) in the place of said Plano convex mirrors (29.1).
Figure 32 comprises a side view of a solar ray concentration system, which comprises a Plano concave mirror (32.5) which projects vertically upwards towards a pipe (32.3) positioned over said mirror (32.5), through which the primary circuit (32.8) and energy storage fluid circuit (32.7) are driven through, hence concentrating the incoming light rays onto said pipe (32.3) by said Plano concave mirror (32.5), such that said light rays are driven by a flat inclined reflection mirror (32.1) over the ground surface.
Figure 33 comprises a side view of a solar ray collection system, which comprises a Plano concave mirror (33.4) which concentrates said light rays onto a pipe (33.3), through which the primary (33.2) and energy storage fluid (33.5) circuits are driven, such that said Plano concave mirror (33.4) projects horizontally towards said system and concentrates the light rays' energy towards said pipe (33.3).

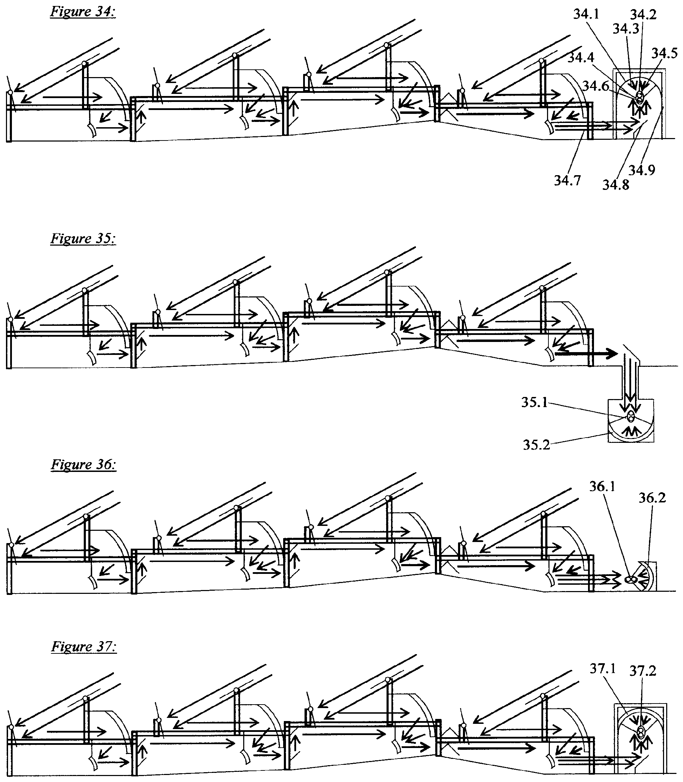

Figure 34 comprises a side view of a solar ray light collection system in which the light rays are driven by a flat reflection mirror (34.8) vertically upwards towards a Plano concave mirror (34.1) which is comprised being sustained to a vertically projecting member (34.9), such that said Plano concave mirror (34.1) projects vertically downwards towards a pipe (34.2) which comprises both primary (34.5) and energy storage fluid (34.6) circuits in it.
Figure 35 comprises said side view of Figure 32, but with a concave mirror (35.2) in the place of said Plano concave mirror (32.5), which concentrates the incoming light rays towards the pipe (35.1).
Figure 36 comprises said side view of Figure 33, but with a concave mirror (36.2) in place of said Plano concave mirror (33.4), which concentrates the light rays towards the pipe (36.1).
Figure 37 comprises said side view of Figure 34, but with a concave mirror (37.1) in place of said Plano concave mirror (34.1), which concentrates the incoming light rays towards the pipe (37.2).

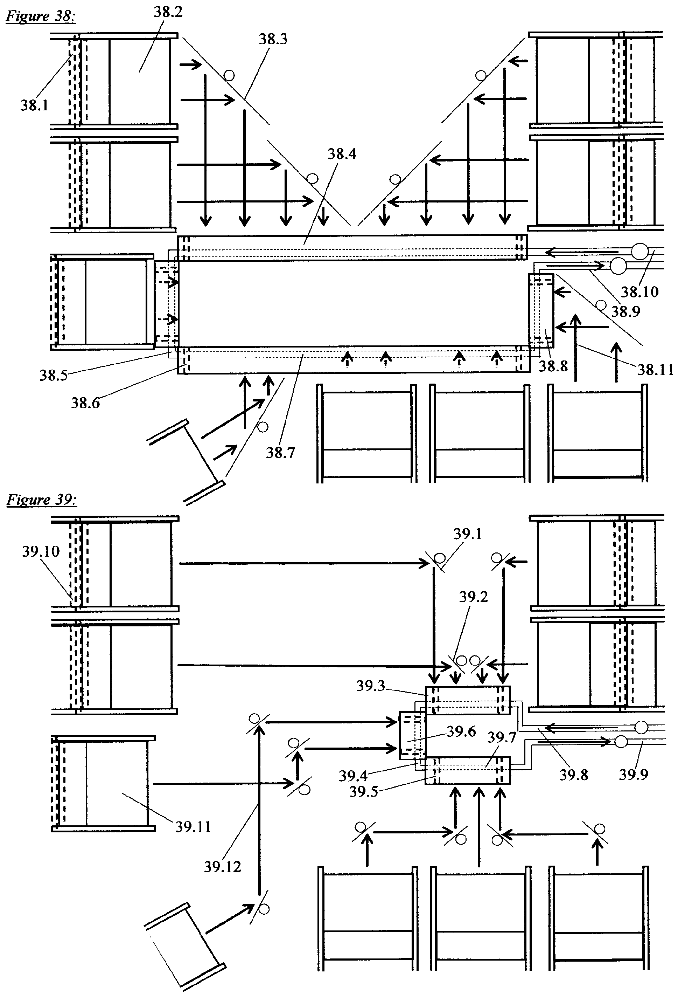

Figure 38 comprises a top view of a set of Plano concave mirrors (38.4, 38.8) comprised projecting horizontally, in order to collect the concentrated light rays of a plurality of reflection mirrors (38.3), in order to drive said light rays towards the fluid driving pipe(s) (38.5, 38.7) comprised in front of said mirrors (38.4, 38.8), such that said fluid(s) are heated to drive a steam turbine and/or to be stored as energy storage fluid.
Figure 39 comprises a top view of said horizontally projecting Plano concave mirrors (39.3, 39.6), which collect the concentrated light rays after being concentrated by concave mirrors (39.11), hence minimising the cross-sectional area required.

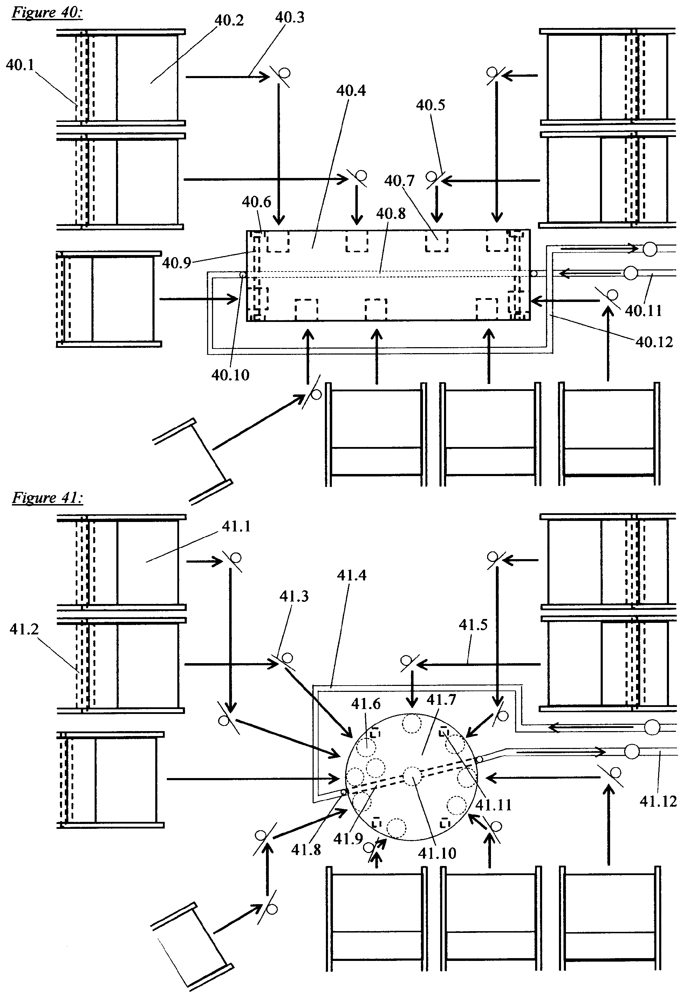

Figure 40 comprises a top view of a vertically downward projecting concave or Plano concave mirror (40.4), with said light rays being driven to flat reflection mirrors (40.7) that drive said light rays towards said mirror (40.4), such that said mirror (40.4) can concentrate the light rays further towards the fluid driving pipe(s) (40.8), such that said fluid(s) are heated to the required temperatures for energy storage and/or power generation applications.
Figure 41 comprises a top view of an upward projecting circular concave mirror (41.7) which comprises flat reflection mirrors (41.6) under it (41.7) to drive the plurality of light rays vertically up to said mirror (41.7), which will then concentrate said light rays to a heat collection disk (41.10) in order to heat the fluid(s) which are driven through the fluid pipe(s) (41.9) to drive a steam turbine and/or to use the fluid as energy storage fluid.

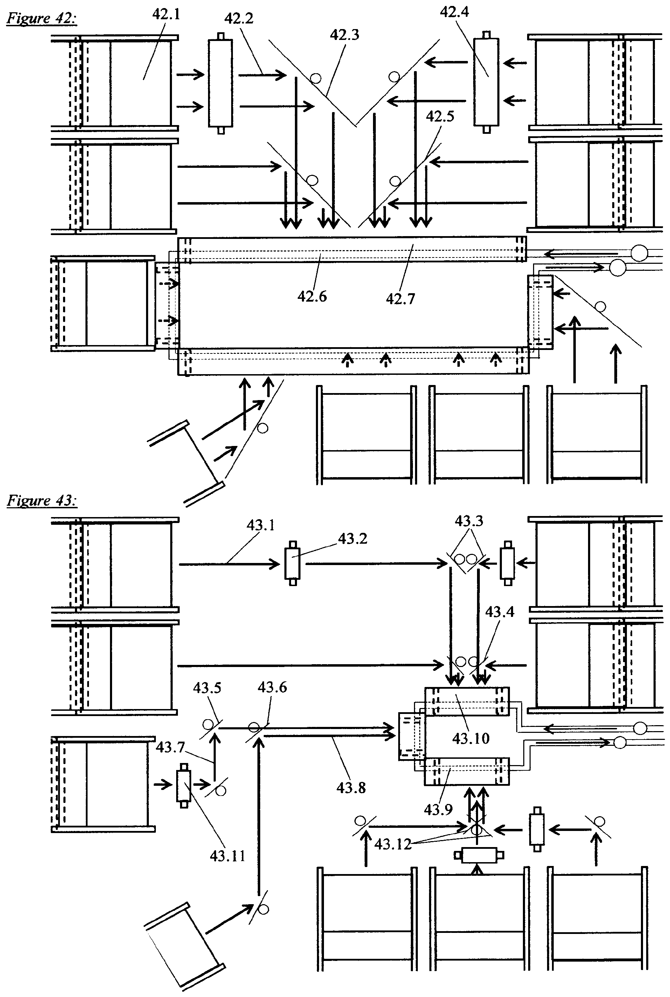

Figure 42 comprises said top view of Figure 38, but with flat reflection mirrors (42.4) that move the positions of projection of said light rays upwards in order for said light rays to be reflected by a plurality of flat reflection mirrors (42.3), such that said light rays can be driven over the flat reflection mirrors (42.5) that reflect the light rays of the adjacent light ray concentration systems, hence driving said light rays towards said Plano concave mirrors (42.7).
Figure 43 comprises said top view of Figure 39, but with said flat reflection mirrors (43.3, 43.5) reflecting said concentrated light rays over the lateral systems' flat mirrors (43.4, 43.6), by the assistance of flat reflection mirrors (43.2, 43.11) to move the positions of projection of said light rays, such that said light rays are driven towards said Plano concave mirrors (43.10).

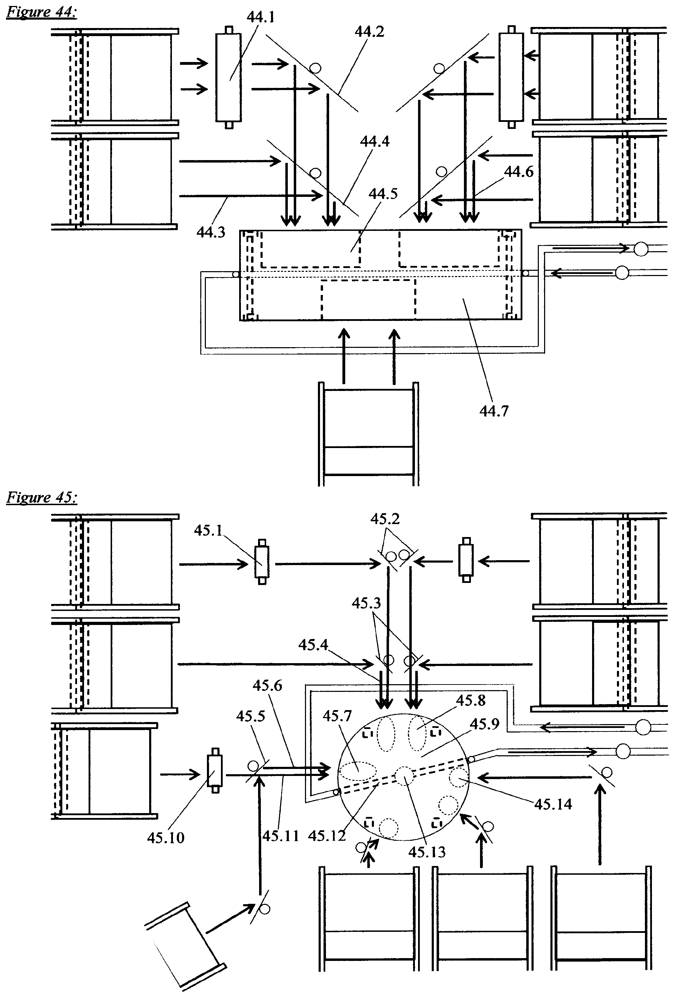

Figure 44 comprises said top view of Figure 40, but with said flat mirrors (44.2) that are further away form said concave or Plano concave mirror (44.7), driving light rays over the closer flat reflection mirrors (44.4) to said mirror (44.7), by the means of flat reflection mirrors (44.1) to move the positions of projection of said light rays upwards.
Figure 45 comprises said top view of Figure 41, but with larger flat reflection mirrors (45.7, 45.8) comprised under said main concave mirror (45.9), in order to reflect the light rays that are driven over the lower flat reflection mirrors (45.3, 45.5) by said upper flat mirrors (45.2) and light reflection mirrors (45.1, 45.10).

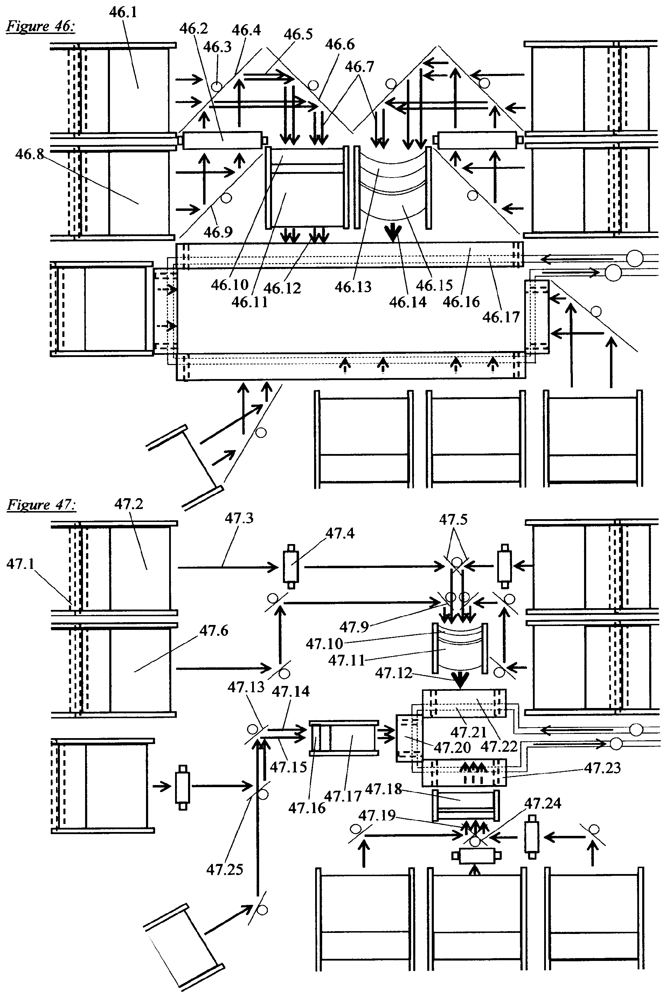

Figure 46 comprises said top view of Figure 38, but with said light rays being reflected from the places closer to said Plano concave mirror (46.16), by a flat reflection mirror (46.9), to a set of flat reflection mirrors (46.2), such that said light rays re reflected by another flat mirror (46.4) above the light rays driven by the laterally positioned system (46.1), such that a flat reflection mirror (46.6) drives said light rays to be concentrated along at least one system, by a concave mirror (46.15) that drives said light rays to a convex mirror (46.13), and drives said concentrated light rays (46.14) towards said Plano concave mirror (46.16).
Figure 47 comprises said top view of Figure 39, but with sets of flat mirrors (47.5, 47.24) being comprised perpendicular to each other (47.5, 47.24) and above each other (47.5, 47.24), as well as flat mirrors (47.25) comprised under other system driven light rays, sushi that said mirrors (47.5, 47.24, 47.25) drive light rays to sets of concave (47.11) or Plano concave (47.17) mirrors, which concentrate said light rays on respective convex (47.10) or Plano convex (47.16) mirrors, to drive said light rays towards said Plano concave mirrors (47.20, 47.22, 47.23).

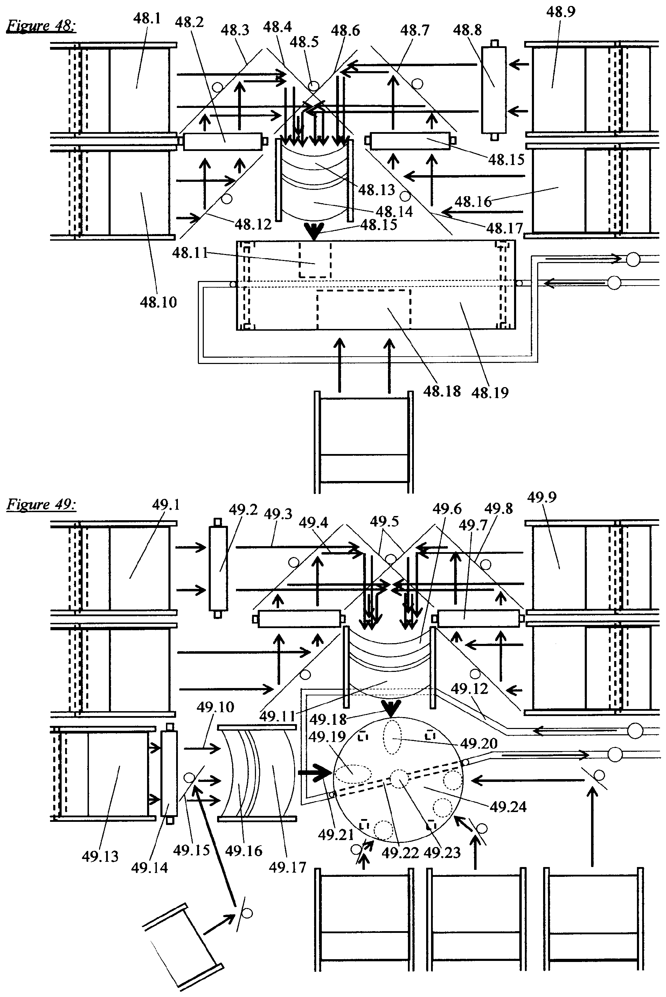

Figure 48 comprises said top view of Figure 40, but with said flat mirrors (48.12, 48.17) closer to the concave or Plano concave mirror (48.19), driving light rays through sets of flat reflection mirrors (48.2, 48.15), in order to drive said light rays to flat mirrors (48.3, 48.7), which simultaneously are then reflected by a set of perpendicularly comprised flat reflection mirrors (48.4, 48.6), which reflect the light rays of both sides at different heights, towards a concave mirror (48.14), which concentrates said light rays to a convex mirror (48.13), together with the light rays of the further lateral system (48.9), which were also driven through a set of flat reflection mirrors (48.8) in order to move the position of projection of said light rays to the required height for light reflection.
Figure 49 comprises said top view of Figure 41, but with a similar system as that comprised on Figure 48, and a light reflection mirror (49.15) which is comprised under the light rays driven by a set of flat mirrors (49.14) that move said position of projection of said light rays downwards, sushi that sets of concave (49.11, 49.17) and convex (49.6, 49.16) mirrors drive the light rays (49.18, 49.21) to wide sets of flat reflection mirrors (49.19, 49.20), which in turn drive said light rays towards said concave mirror (49.24).

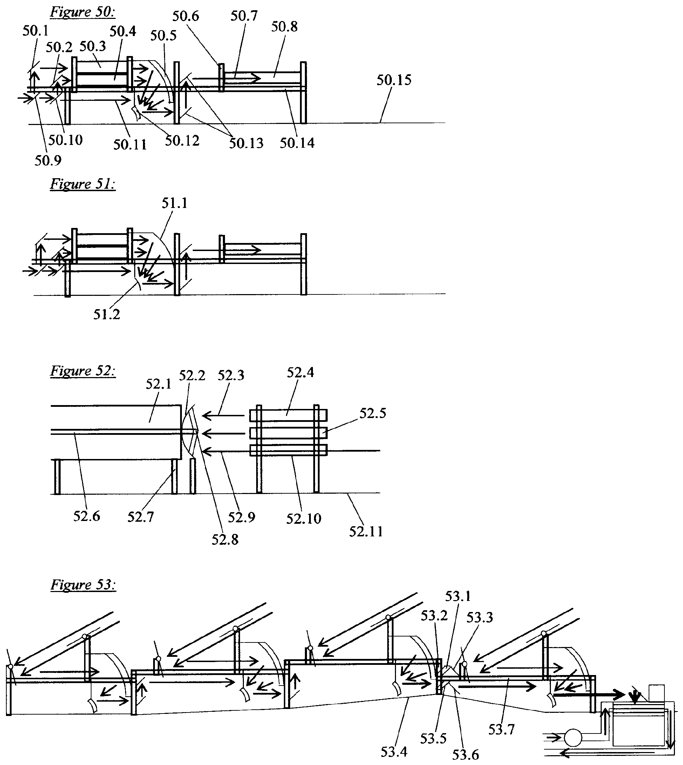

Figure 50 comprises a side view of said flat reflection mirrors (50.3, 50.4), which are comprised over each other (50.3, 50.4) to drive the light rays driven by the initial flat reflection mirrors (50.1, 50.2, 50.9, 50.10) towards a concave mirror (50.5), which drives said light rays towards another driving convex mirror (50.12), hence driving said light rays (50.7) to the central flat reflection mirror (50.8) which drives said light rays towards said collection mirrors (38.4, 39.3, 40.4, 41.7).
Figure 51 comprises said side view of Figure 50, but with a Plano concave mirror (51.1) that concentrates said light rays towards a driving Plano convex mirror (51.2).
Figure 52 comprises a side view of said flat reflection mirrors (52.4, 52.5), which are comprised over each other (52.4, 52.5) to drive the light rays reflected by said sets of flat reflection mirrors (52.10), along with parallel driven light rays (52.9) from other systems, towards the surfaces of said Plano concave mirrors (52.1, 52.2), which drive said light rays towards the fluid driving pipe(s) (52.6, 52.8) in order to transfer the heat to said fluids as efficiently as possible for energy storage application, or for electricity generation applications.
Figure 53 comprises a side view of a solar ray collection an concentration system, with said flat mirrors (53.1, 53.5) that are closer to the rear sustaining member (53.2), being inclined sideways, hence meaning that one side is closer to said mast (53.2) than the other, in order to drive the light rays' position of projection sideways, if necessary for this case, in which said light delivery mirror (53.6) delivers the light rays at a lower position of projection that is comprised towards a side, compared to before, due to the position of said light delivery mirror (53.6) being attached along the back surface of the light collection mirror (53.5).

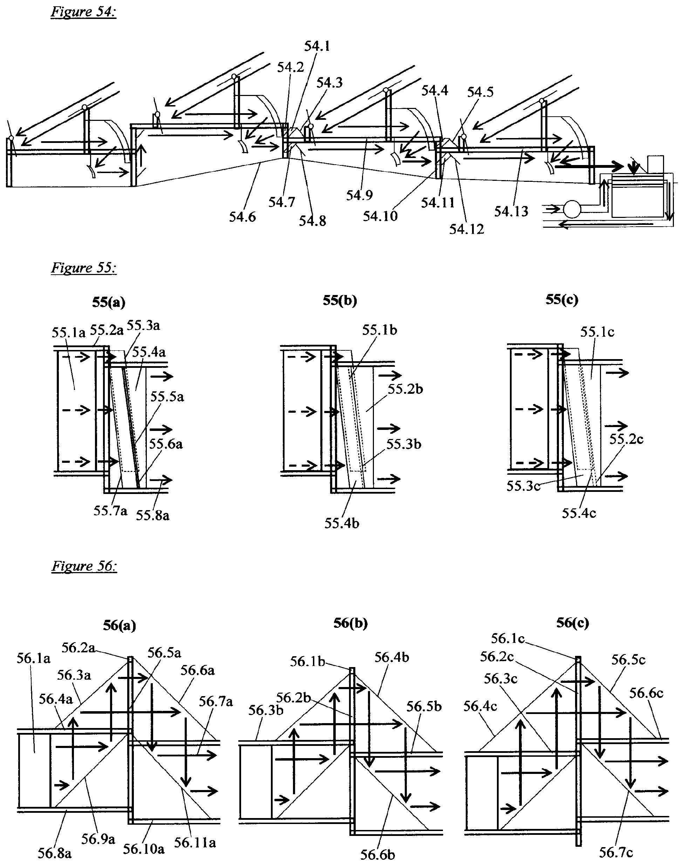

Figure 54 comprises a side view of a solar ray concentration and collection system, but with a set of flat mirrors (54.1, 54.3, 54.7, 54.8) in which said light delivery mirrors (54.8) connecting to a lower point along the back surface of the lower sideways inclined flat light collection mirror (54.7), in order to drive the light rays at a lower position of projection than previously, and towards the side, as is the case on Figure 53, as well as a set of flat mirrors (54.4, 54.5, 54.11, 54.12) in which the light delivery mirror (54.12) is sustained over the sideways inclined flat light collection mirror (54.11), such that said light collection mirror (54.11) is comprised attached along a point at the back surface of the light delivery mirror (54.12), hence driving the light rays to an upper position of projection and simultaneously comprised sideways compared to before.
Figure 55 comprises top views of guiding mirrors (55.3a, 55.7a, 55.4b, 55.3c) that drive the light rays to a sideways positioned position of projection, comprising the upper flat reflection mirrors (55.7a, 55.4a) being comprised with the inner surfaces just beside each other (55.5a, 55.6a), and being comprised over the light collection mirror (55.3a), as well as said light delivery mirror (55.2b) being attached to the back surface (55.1b) of the light collection mirror, with said upper flat mirror (55.4b) comprising the outer edge (55.3b) over the lower positioned light delivery mirror (55.2b), and also comprising the light delivery mirror (55.1c) comprising its inner surface (55.4c) comprised over the light collection mirror (55.2c), such that said light collection mirror (55.2c) attaches to the back surface of said light delivery mirror (55.1c).
Figure 56 comprises top views of the sets of light driving mirrors (56.3a, 56.9a, 56.6a, 56.11a, 56.4b, 56.6b, 56.4c, 56.5c, 56.7c) which drive the light rays to different positions of projection sideways, comprising the edges of the light collection (56.9a) and light delivery (56.11a) mirrors meeting at the same line along the mid sustaining member (56.4a), comprising said light collection mirror (56.9a) being sustained by the mid member (56.3b) of its area, while having the light delivery mirror (56.6b) being sustained by the sideways positioned mid member (56.5b), or comprising said light collection mirror (56.9a) being sustained by said mid sustaining member (56.3c) while having said light delivery mirror (56.7c) being sustained by the sideways positioned sustaining member (56.6c) if said light rays should be shifted towards the opposite sideways direction.

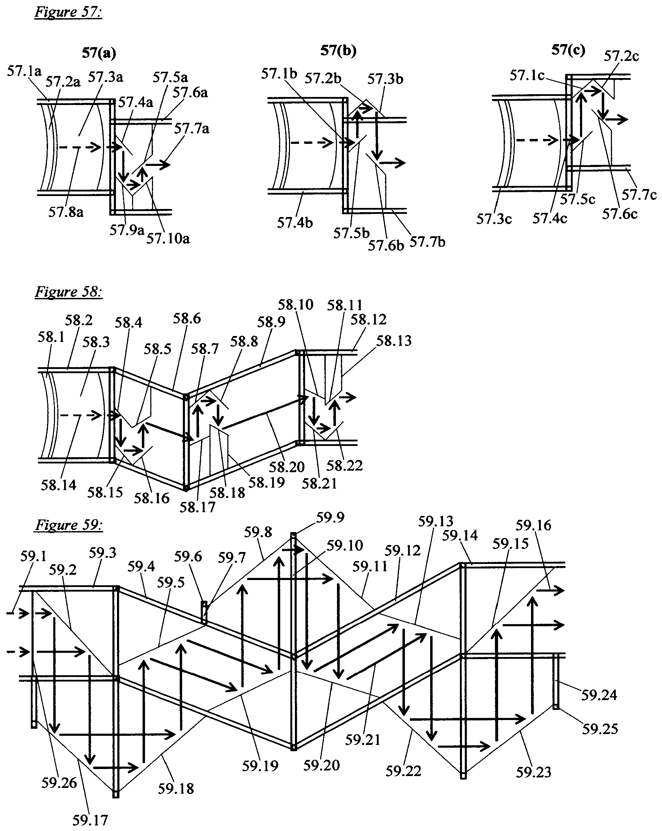

Figure 57 comprises top views of the concentrated light rays (57.8a, 57.7a, 57.1b, 57.4c) being driven to a sideways position of projection after being concentrated by a concave mirror (57.3a) and then driven by a convex mirror (57.2a), comprising sets of flat reflection mirrors (57.4a, 57.5a, 57.9a, 57.10a) that drive said light rays (57.8a, 57.7a) towards the direction of horizontal shifting, or comprising flat reflection mirrors (57.2b, 57.3b, 57.5b, 57.6b) that drive said light rays (57.1b) opposite to the direction of horizontal shifting and keeping said light rays along the original member widths (57.4b), or comprising flat reflection mirrors (57.1c, 57.2c, 57.5c, 57.6c) that drive said light rays (57.4c) towards the direction of horizontal shifting, but on the opposite direction.
Figure 58 comprises a top view of a system in which the sustaining members (58.6, 58.9) are slid from a horizontal side position towards another position, hence changing from the original position (58.2) to the final position (58.12), through which the concentrated light rays (58.14) are driven from a convex mirror (58.1) after being concentrated by a concave mirror (58.3), and are (58.20) hence driven through sets of flat reflection mirrors (58.4, 58.5, 58.15, 58.16, 58.7, 58.8, 58.17, 58.18, 58.10, 58.11, 58.21, 58.22) in order for said light rays (58.20) to constantly follow the profile of the supporting members (58.2, 58.6, 58.9, 58.12) according to terrain suitability due to its geometry.
Figure 59 comprises a top view of a similar system as on Figure 58, but for light rays (59.1) that are concentrated by only Plano concave mirrors (59.26), such that the light rays (59.21) are driven along the profiles of the sustaining members (59.3, 59.4, 59.12, 59.14) by sets of flat reflection mirrors (59.2, 59.5, 59.17, 59.18, 59.8, 59.11, 59.19, 59.20, 59.13, 59.15, 59.22, 59.23) that are positioned between the inner areas between said members (59.3, 59.4, 59.12, 59.14) and the outer areas of the members that are further away horizontally (59.4, 59.12), such that sustaining members (59.10, 59.24) are sustained by outer vertical members (59.9, 59.25) and are attached to the main sustaining structure (59.3, 59.4, 59.12, 59.14), such that said light rays (59.16) are driven to the required horizontal position of projection.

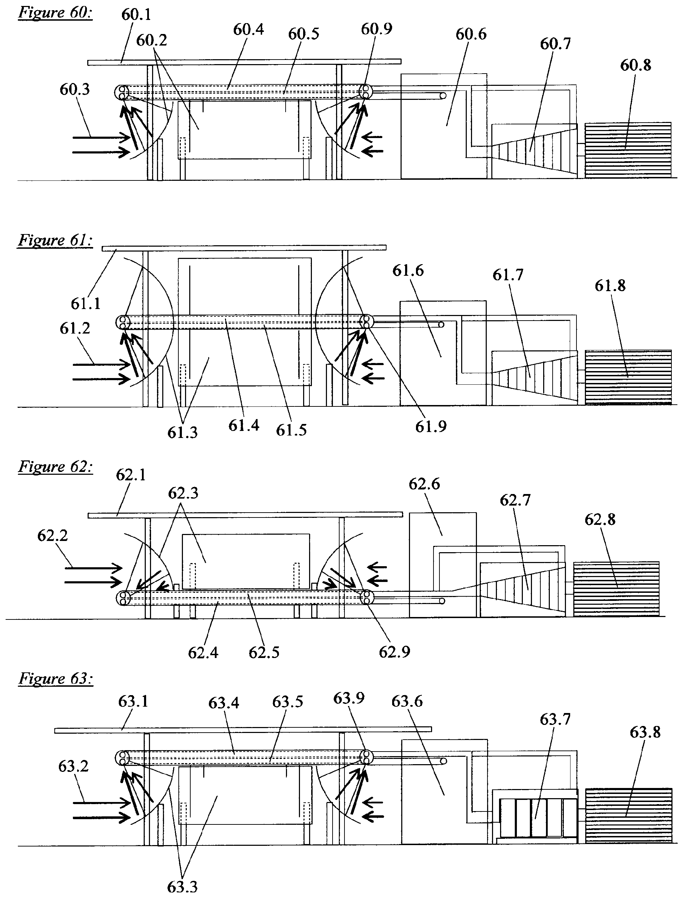

Figure 60 comprises a side view of a set of Plano concave mirrors (60.2) that are connected by the primary (60.4) circuits and the energy storage fluid circuit (60.5), which are both driven through a pipe (60.9) along the foal points of said Plano concave mirrors (60.2), such that said heated fluid can drive a steam turbine (60.7) or supply heated fluid to the energy storage tank (60.6), such that the light rays (60.3) of the power generation system are driven to the surfaces of said mirrors (60.2).
Figure 61 comprises a side view of a set of Plano concave mirrors (61.3) which comprise the focal points along the centre area of said mirrors (61.3), such that the primary (61.4) and energy storage fluid (61.5) pipes, can be driven along the focal points of said mirrors (61.3) through a pipe (61.9), such that the light rays (61.2) can be driven to the surfaces of said mirrors (61.3), which hence drive said light rays (61.2) to the focal points of said mirrors (61.3), which comprise a pipe (61.9) in which the primary circuit (61.4) and energy storage circuit (61.5) get the fluids heated to drive a steam turbine (61.7) and to supply heat to the energy storage tank (61.6).
Figure 62 comprises a side view of a plurality of downward facing Plano concave mirrors (62.3), which comprise a pipe (62.9) along the ground surface, which drives the primary (62.5) and energy storage fluid (62.4) circuits to collect the heat in order to drive a steam turbine (62.7) and to supply heat to the energy storage fluid tank (62.6), such that the concentrated light rays (62.2) of a plurality of solar ray concentration systems can be driven towards said pipe (62.9).
Figure 63 comprises a side view of a plurality of upward facing Plano concave mirrors (63.3), which comprise a pipe (63.9) over said mirrors (63.3), which drives the primary (63.4) and energy storage fluid (63.5) circuits to collect the heat in order to drive a set of reciprocating pistons (63.7) and to supply heat to the energy storage fluid tank (63.6), such that the concentrated light rays (63.2) of a plurality of solar ray concentration systems can be driven towards said pipe (63.9).

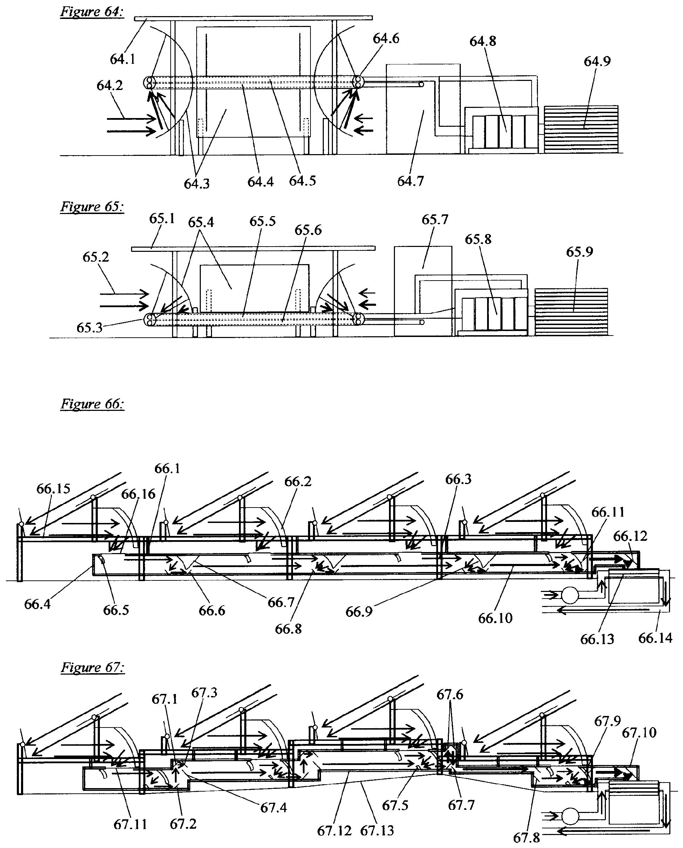

Figure 64 comprises a side view of a plurality of sideways facing Plano concave mirrors (64.3), which comprise a pipe (64.6) in front of said mirrors (64.3), which drives the primary (64.5) and energy storage fluid (64.4) circuits to collect the heat in order to drive a set of reciprocating pistons (64.8) and to supply heat to the energy storage fluid tank (64.7), such that the concentrated light rays (64.2) of a plurality of solar ray concentration systems can be driven towards said pipe (64.6).
Figure 65 comprises a side view of a plurality of downward facing Plano concave mirrors (65.4), which comprise a pipe (65.3) over said mirrors (65.4), which drives the primary (65.5) and energy storage fluid (65.6) circuits to collect the heat in order to drive a set of reciprocating pistons (65.8) and to supply heat to the energy storage fluid tank (65.7), such that the concentrated light rays (65.2) of a plurality of solar ray concentration systems can be driven towards said pipe (65.3).
Figure 66 comprises a side view of a solar ray collection and concentration system, which comprises a convex mirror (66.5) inside a closed tubular structure (66.4) which projects under the mirrors (66.2), such that a sealed transparent shield (66.16) allows the light rays to be driven by the concave mirror (66.2) to said convex mirror (66.5), such that the light rays are reflected by a set of Plano concave (66.9) and Plano convex (66.8) mirrors, and then reflected by a set of flat reflection mirrors (66.6, 66.7), with said components being comprised all inside the sealed closed structure (66.4), such that the light rays can be collected inside said closed structure (66.4), and be driven directly to the required heat exchanger or steam generator (66.13) by the means of mirrors (66.12), hence maximising system safety, and impeding any deposition of contamination from the environment and/or damage to environmental species.
Figure 67 comprises a side view of a solar ray collection and concentration system, which comprises a convex mirror (66.5) inside a closed tubular structure (67.11) which projects under the mirrors (66.2) and follows the curved geometry of the ground floor (67.12), such that a sealed transparent shield (67.11) allows the light rays to be driven by the concave mirror (66.2) to said convex mirror (66.5), such that the light rays are reflected by a set of concave (67.9) and convex (67.5) mirrors, and then reflected by a set of flat reflection mirrors (67.3, 67.4, 67.6, 67.7) to drive said lights rays to the required height, with said components being comprised all inside the sealed closed structure (67.11), such that the light rays can be collected inside said closed structure (67.11), and be driven directly to the required heat exchanger or steam generator (66.13) by the means of mirrors (67.8), hence maximising system safety, and impeding any deposition of contamination from the environment and/or damage to environmental species.

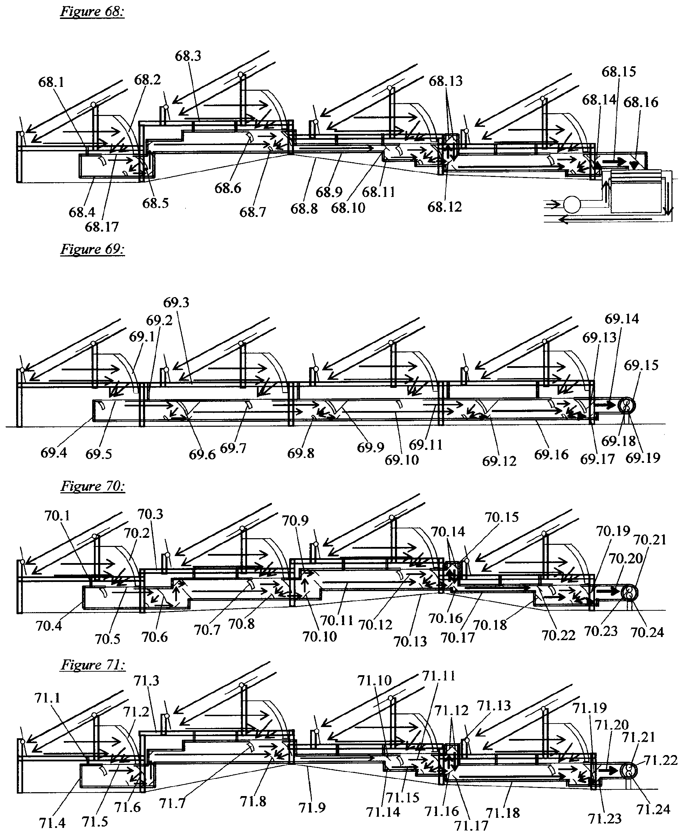

Figure 68 comprises a side view of a solar ray collection and concentration system, which comprises a convex mirror (68.6) inside a closed tubular structure (68.4, 68.9) which projects under the concave mirrors (68.2) and follows the curved geometry of the ground floor (68.8), such that a sealed transparent shield (68.17) allows the light rays to be driven by the concave mirror (68.2) to said convex mirror (68.6), such that the light rays are reflected by a set of concave (68.5) and convex (68.7) mirrors, and then reflected by a set of flat reflection mirrors (68.10, 68.11, 68.12, 68.13) to drive said light rays to the required height, with said components being comprised all inside the sealed closed structure (68.4, 68.9), such that the light rays can be collected inside said closed structure (68.4, 68.9), and be driven directly to the required heat exchanger or steam generator (66.13) by the means of mirrors (68.14, 68.16), hence maximising system safety, and impeding any deposition of contamination from the environment and/or damage to environmental species.
Figure 69 comprises a side view of a solar ray collection and concentration system, which comprises a convex mirror (69.7) inside a closed tubular structure (69.4, 69.16) which projects under the concave mirrors (69.1) and follows the geometry of the ground floor, such that a sealed transparent shield (69.5) allows the light rays to be driven by the concave mirror (69.1) to said convex mirror (69.7), such that the light rays are reflected by a set of concave (69.6) and convex (69.8) mirrors, and then reflected by a set of flat reflection mirrors (69.9, 69.12, 69.13, 69.17) to drive said light rays to the required height, with said components being comprised all inside the sealed closed structure (69.4, 69.16), such that the light rays can be collected inside said closed structure (69.4, 69.16), and be driven directly to the required pipe (69.15), transferring heat to the primary (69.18) and energy storage (69.19) circuits by the means of mirrors (69.13, 69.17), hence maximising system safety, and impeding any deposition of contamination from the environment and/or damage to environmental species.
Figure 70 comprises a side view of a solar ray collection and concentration system, which comprises a convex mirror (70.7) inside a closed tubular structure (70.4, 70.17) which projects under the concave mirrors (70.2) and follows the curved geometry of the ground floor (70.13), such that a sealed transparent shield (70.5) allows the light rays to be driven by the concave mirrors (70.2) to said convex mirror (70.7), such that the light rays are reflected by a set of Plano concave (70.6) and Plano convex (70.8) mirrors, and then reflected by a set of flat reflection mirrors (70.9, 70.10, 70.14, 70.16, 70.18, 70.22) to drive said light rays to the required height, with said components being comprised all inside the sealed closed structure (70.4, 70.17), such that the light rays can be collected inside said closed structure (70.4, 70.17), and be driven directly to the required pipe (70.21), transferring heat to the primary (70.23) and energy storage fluid (70.24) circuits by the means of mirrors (70.19), hence maximising system safety, and impeding any deposition of contamination from the environment and/or damage to environmental species.
Figure 71 comprises a side view of a solar ray collection and concentration system, which comprises a convex mirror (71.7) inside a closed tubular structure (71.4, 71.18) which projects under the concave mirrors (71.2) and follows the curved geometry of the ground floor (71.9), such that a sealed transparent shield (71.5) allows the light rays to be driven by the concave mirrors (71.2) to said convex mirrors (71.7), such that the light rays are reflected by a set of Plano concave (71.6) and Plano convex (71.8) mirrors, and then reflected by a set of flat reflection mirrors (71.10, 71.14, 71.12, 71.16, 71.17) to drive said light rays to the required height, with said components being comprised all inside the sealed closed structure (71.4, 71.18), such that the light rays can be collected inside said closed structure (71.4, 71.18), and be driven directly to the required pipe (71.21), transferring heat to the primary (71.22) and energy storage fluid (71.24) circuits by the means of mirrors (71.19, 71.23), hence maximising system safety, and impeding any deposition of contamination from the environment and/or damage to environmental species.

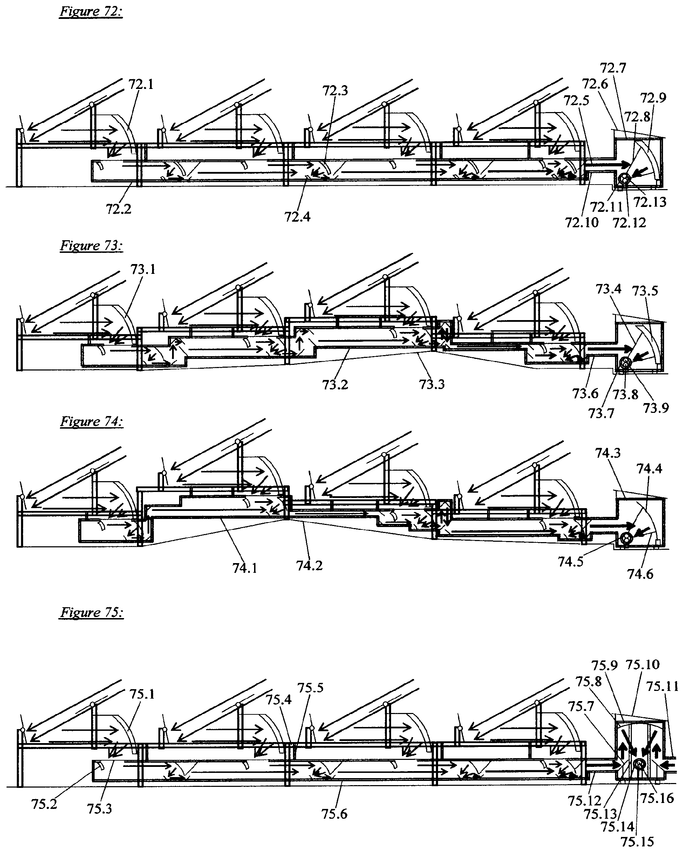

Figure 72 comprises a side view of a solar ray collection and concentration system, which comprises a convex mirror (70.7) inside a closed tubular structure (72.2, 72.10) which projects under the concave mirrors (72.1) and follows the straight geometry of the ground floor, such that a sealed transparent shield (70.5) allows the light rays to be driven by the concave mirrors (72.1) to said convex mirror (70.7), such that the light rays are reflected by a set of concave (72.3) and convex (72.4) mirrors, and then reflected by a set of flat reflection mirrors (70.9, 70.10, 70.14, 70.16, 70.18, 70.22) to drive said light rays (72.5) to the required height, with said components being comprised all inside the sealed closed structure (72.2, 72.10), such that the light rays can be collected inside said closed structure (72.2, 72.10), and be driven directly to the required pipe (72.11), transferring heat to the primary (72.13) and energy storage fluid (72.12) circuits by the means of mirrors (70.19), by a concave mirror (72.9) comprised in front of the concentrated light rays (72.5), hence driving the light rays (72.5) towards said pipe (72.11) and maximising system safety, and impeding any deposition of contamination from the environment and/or damage to environmental species.
Figure 73 comprises a side view of a solar ray collection and concentration system, which comprises a convex mirror (70.7) inside a closed tubular structure (73.2, 73.6) which projects under the concave mirrors (73.1) and follows the curved geometry of the ground floor (73.3), such that a sealed transparent shield (70.5) allows the light rays to be driven by the concave mirrors (73.1) to said convex mirror (70.7), such that the light rays are reflected by a set of Plano concave and Plano convex mirrors, and then reflected by a set of flat reflection mirrors to drive said light rays (72.5) to the required height, with said components being comprised all inside the sealed closed structure (73.2, 73.6), such that the light rays can be collected inside said closed structure (73.2, 73.6), and be driven directly to the required pipe (73.7), transferring heat to the primary (73.9) and energy storage fluid (73.8) circuits by the means of mirrors (70.19), by a concave mirror (73.5) comprised in front of the concentrated light rays (72.5), hence driving the light rays (72.5) towards said pipe (73.7) and maximising system safety, and impeding any deposition of contamination from the environment and/or damage to environmental species.
Figure 74 comprises a side view of a solar ray concentration and collection system, which comprises a tubular structure (74.1) being driven over the curved surface of the ground floor (74.2), such that the concentrated light rays are driven by a Plano concave mirror (74.4) towards the pipe (74.5) in order to transfer the heat of the light rays to the circuit fluids.
Figure 75 comprises a side view of the solar ray collection and concentration system, comprising the rigid tubular structure (75.6) projecting under said concave mirrors (75.1), which concentrate the light rays to the convex mirrors (75.2) through a transparent sealed layer (75.3) under each concave mirror (75.1), such that said tubular structure (75.6) is sustained by supports (75.5) to said main sustaining structure (75.4), such that said light rays of various systems can be driven by flat mirrors (75.7) to a downward projecting Plano concave mirror (75.8), which then reflects the light rays towards the pipe (75.14) in order to transfer the heat to the primary (75.16) and energy storage fluid (75.15) circuits.

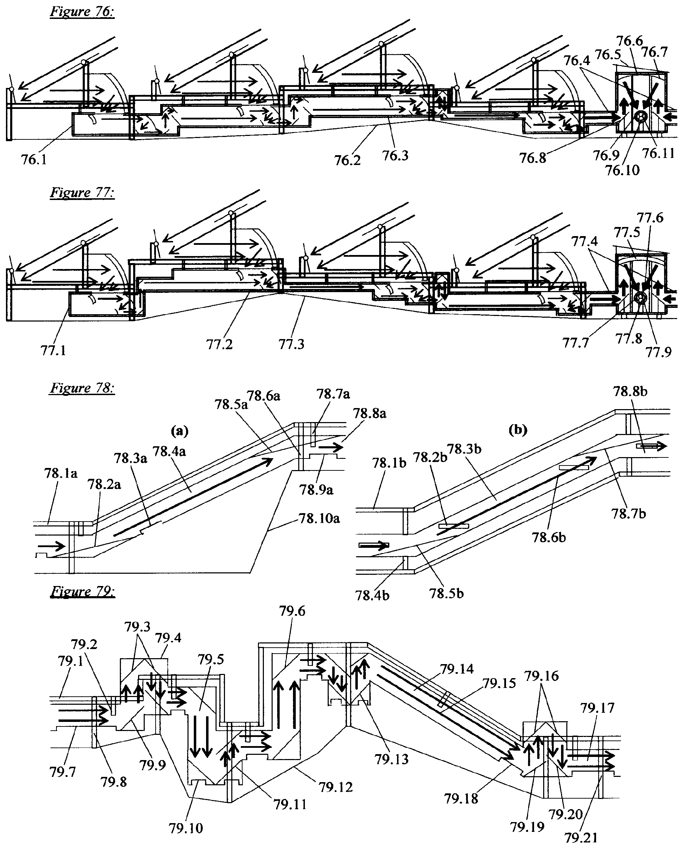

Figure 76 comprises the same side view as Figure 75, but with said tubular structure (76.1, 76.3) being driven over the curved profile of the ground floor (76.2) geometry, with the pipes (76.4) of a plurality of light rays collection and concentration systems, driving the light rays towards said Plano concave mirror (76.7).
Figure 77 comprises said side view of said tubular structure (77.1, 77.2) projecting over the curved geometry of the ground floor (77.3), but with said plurality of pipes (77.4) being driven towards a downward facing concave mirror (77.5), which drives the heat towards the pipe (77.7) in a more concentrated manner, to supply heat to said primary circuit pipe (77.9) and said energy storage fluid pipe (77.8).
Figure 78 comprises a side view of a pipe (78.4a) driving concentrated light rays onto different directions by the means of flat reflection mirrors (78.2a, 78.5a) on rough terrain (78.10a) and sustained by members (78.7a) to the rigid sustaining structure (78.1a), and a top view of a pipe structure (78.3b) which drives light rays onto different directions by the means of flat reflection mirrors (78.5b, 78.7b) sustained by members (78.4b) to the rigid sustaining members (78.1b).
Figure 79 comprises a side view of a rough terrain geometry (79.12) which comprises a tubular closed structure (79.5, 79.14, 79.17), which drive the light rays into different directions by flat reflection mirrors (79.6, 79.9, 79.11) and by the means of pairs of flat mirrors (79.3, 79.16, 79.19, 79.20) which are used to move the height of projection of said light rays to upper or lower heights, such that said tubular structure (79.5, 79.14, 79.17) is sustained to the rigid structure (79.1) by said (79.8, 79.21).

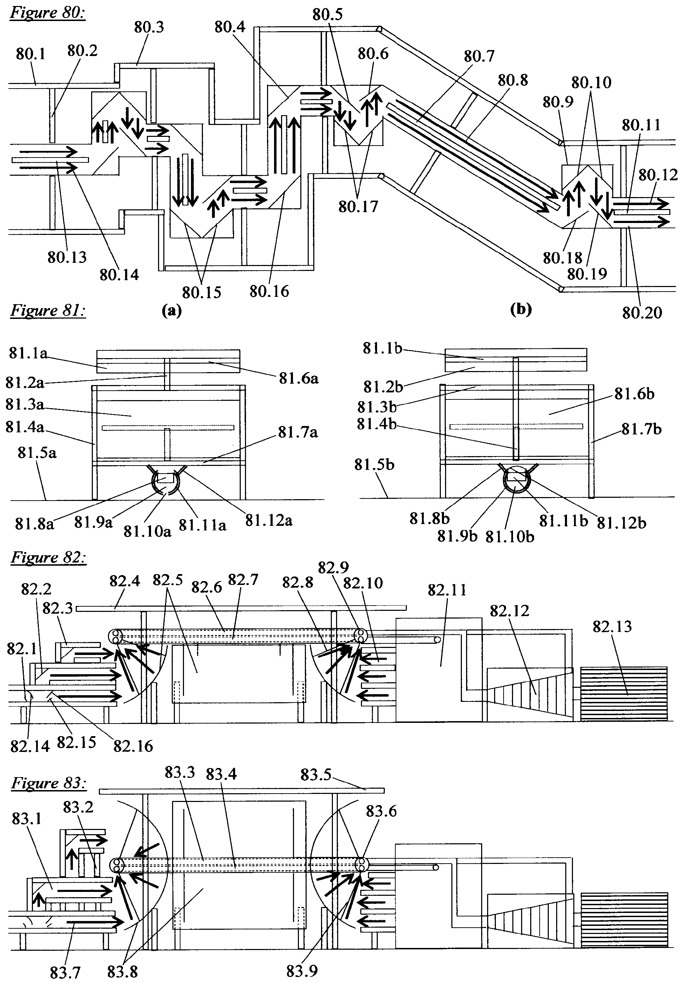

Figure 80 comprises a top view of the tubular structure (80.12) in which the light rays (80.14) are driven onto different directions by flat reflection mirrors (80.4, 80.16) onto the centre path of said tubular structure (80.12), and in which the position of projection is altered by pairs of flat reflection mirrors (80.15, 80.5, 80.6, 80.10, 80.17, 80.18, 80.19), and which is sustained into the required position by the horizontal members (80.2) that sustain the tubular structure (80.12) to the required metallic structure (80.1, 80.3).
Figure 81 comprises a front view of the light collection mirrors (81.1a) and light concentration concave mirrors (81.3a), along with the sustaining structure (81.4a, 81.7a) which also sustains the tubular structure (81.11a) by the sustaining members (81.12a), such that the convex mirrors (81.8a) are comprised inside the tubular structures (81.9a), as well as comprising a frontal view of the light collection mirrors (81.2b) and the concave mirror (81.6b) which is comprised sustained by the sustaining members (81.3b, 81.7b), which also sustain the tubular structure (81.9b) by the sustaining members (81.8b), with a transparent layer (81.12b) that seal the interior (81.10b) of said tubular structure (81.9b) in order for said concave mirrors (81.6b) to transfer light rays to the convex mirror (81.11b) inside said tubular structure (81.9b).
Figure 82 comprises a side view of a plurality of Plano concave mirrors (82.5) which are comprised on a plurality of directions of projections, and which reflect the light rays driven through the plurality of tubular structures (82.10), to the fluid driving pipe (82.9), which is comprised over said Plano concave mirrors (82.5) and which drive the primary (82.6) and energy storage fluid (82.7) circuits along said mirrors (82.5) to collect the heat of the light rays in order to drive a steam turbine (82.12) and supply heat to the energy storage tank (82.11).
Figure 83 comprises said side view of Figure 82, but comprises a set of pluralities of Plano concave mirrors (83.8) which project along a plurality of directions of projection, and which reflect the light rays (83.7) from said tubes (83.1), to the fluid driving pipe (83.6), which is comprised along the centre area of said mirrors (83.8), and drives the primary (83.3) and energy storage fluid (83.4) circuits.

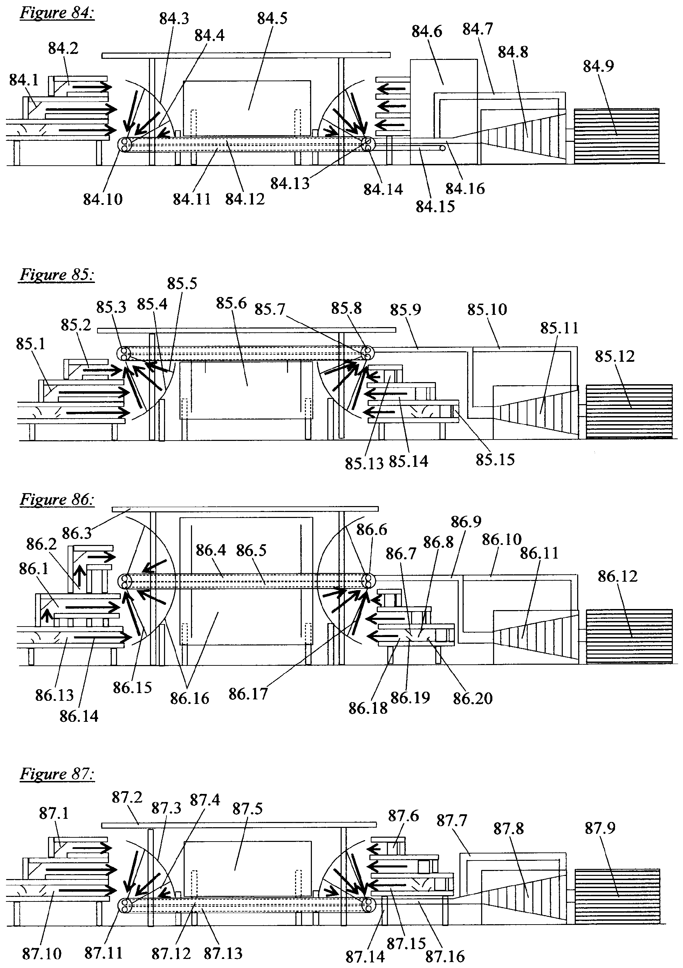

Figure 84 comprises said side view of Figure 83, but comprises a set of Plano concave mirrors (84.3, 84.5) projecting along a plurality of directions of projection, and reflect the incoming light rays to the fluid driving pipe (84.10), which is comprised along the lower surfaces of said mirrors (84.3, 84.5), but is driven along said mirrors (84.3, 84.5) in order for said mirrors (84.3, 84.5) to supply heat to the primary (84.13) and energy storage fluid (84.14) circuits, with said pipes (84.11, 84.12) flowing beside each other, hence supplying heat by pipe (84.15) to the energy storage tank (84.6) and separately driving a steam turbine (84.8) from the pipe (84.16) which follows the primary circuit (84.12, 84.13).
Figure 85 comprises said side view of Figure 84, but comprises the Plano concave mirrors (85.6) driving the light rays to the fluid driving pipe (85.3) which is comprised over said mirrors (85.6) due to the upper direction of projection of said mirrors (85.6), with said primary (85.8) circuit supplying steam to drive the steam turbine (85.11) by pipes (85.9), and comprising said tubes (85.2, 85.14) driving light rays after being reflected by flat mirrors (85.1, 85.13) on both sides of the system.
Figure 86 comprises said side view comprised on Figure 85, but with a plurality of Plano concave mirrors (86.16) which project horizontally sideways and in a plurality of directions of projection, and which comprises light ray projecting tubes (86.1, 86.13, 86.18) on both sides of the light ray reflection system, such that the fluid driving pipe (86.6) flows along the centre area of the mirrors (86.16), and hence collects heat from the concentrated light rays to said primary (86.4) and energy storage fluid (86.5) circuits, with said primary circuit fluid being driving through a pipe (86.9) to drive a steam turbine (86.11).
Figure 87 comprises said side view of a light ray concentration system of Figure 86, but with the Plano concave mirrors (87.3, 87.5) projecting on a downward direction of projection, hence driving the light rays driven to said mirrors (87.3, 87.5) from the tubes (87.10, 87.15) on both sides, towards the lower surface along said mirrors (87.3, 87.5), with said Plano concave mirrors (87.3, 87.5) hence concentrating the light ray heat towards the fluid driving pipe (87.11), which houses the primary (87.12) and energy storage fluid (87.13) circuits, hence driving a steam turbine (87.8) with the primary circuit steam via a driving pipe (87.16).

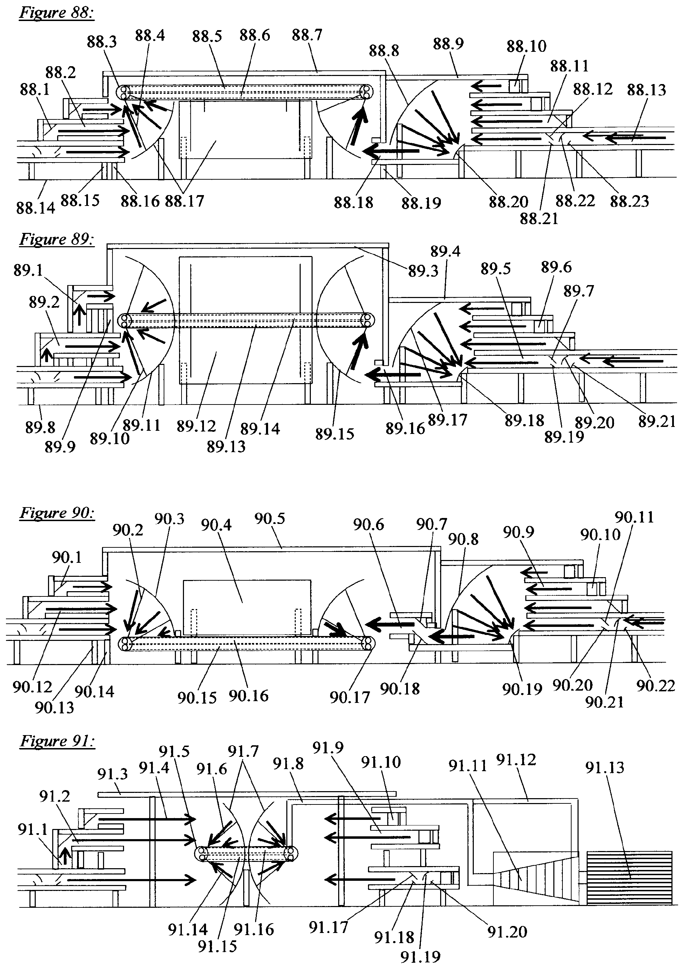

Figure 88 comprises a side view of a set of Plano concave mirrors (88.17), which project upwards, hence comprising the fluid driving pipe (88.3) along the upper surfaces of said mirrors (88.17), in which the primary (88.5) and energy storage fluid (88.6) circuit pipes are embedded, such that both sides of the system comprises tubes (88.2, 88.11) which drive light rays after being reflected by flat mirrors (88.1, 88.10), with one side comprising a Plano concave mirror (88.8) which concentrates the light rays towards a Plano convex mirror (88.20) before driving said light rays through a conduit (88.18) to one of said Plano concave mirrors (88.17), with said system fully closed and sealed from the outer environment to avoid any damage to species or undesired deposition of environmental elements.
Figure 89 comprises a side view of a light ray concentration and reflection system, with said features and characteristics of the design comprised on Figure 88, but comprising the Plano concave mirrors (89.11, 89.12, 89.15) projecting sideways and along a plurality of directions of projection, hence comprising the fluid driving pipe (88.3) in front of the central areas of said mirrors (89.11, 89.12, 89.150, in which the primary (89.14) and energy storage fluid (89.13) pipes are driven and embedded.
Figure 90 comprises said side view of Figure 89, but with the Plano concave mirrors (90.3, 90.4) projecting on a downward direction of projection, and hence projecting towards the fluid driving pipe (90.17), which is driven in front of the lower surfaces of said mirrors (90.3, 90.4), and hence near to the ground floor surface, with the primary (90.16) and energy storage fluid (90.15) circuit pipes embedded inside said fluid driving pipe (90.17), such that the conduit (90.6) driving the concentrated light rays from the Plano concave mirror (90.19), drives said light rays to an upper position of projection by the means of two flat reflection mirrors (90.7, 90.18).
Figure 91 comprises a side view of a light ray reflection and concentration system, which comprises two oppositely positioned sideways projecting Plano concave mirrors (91.7), which drive the light rays driven by said tubes (91.2, 91.9) on both sides of the system, towards the fluid driving pipe (91.5), which is comprised along the centre area of said Plano concave mirrors (91.7), in which the primary (91.16) and energy storage fluid (91.15) pipes are housed, such that the primary circuit fluid can drive a steam turbine (91.11) after being driven through a pipe (91.8) from said mirrors (91.7).

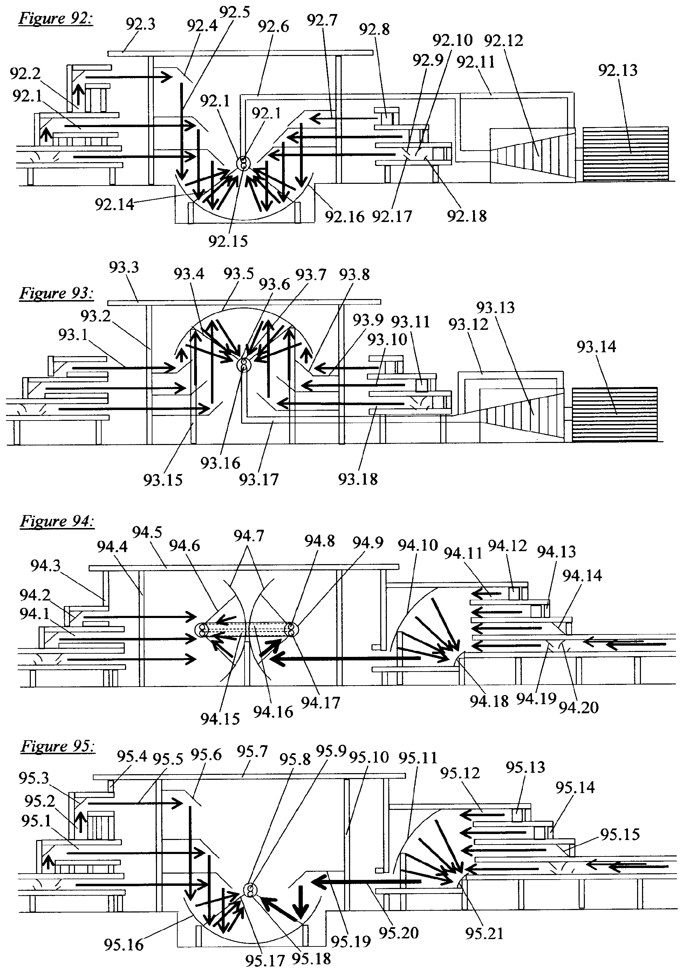

Figure 92 comprises a side view of a solar ray concentration and reflection system, comprising an upwards projecting Plano concave mirror (92.16) which reflects the light rays (92.5) driven downwards by said flat reflection mirrors (92.4), towards the main fluid driving pipe (92.1), which drives the primary circuit (92.1) fluid to drive a steam turbine (92.12) through a pipe (92.6), and drives the energy storage fluid circuit pipe (92.15), with the two pipes (92.1, 92.15) embedded inside the fluid driving pipe (92.1), such that the tubes (92.1) can drive the light rays (92.7) horizontally towards said flat reflection mirrors (92.4) after having reflected said light rays (92.7) by flat reflection mirrors (92.8).
Figure 93 comprises the same side view as Figure 92, but with the flat reflection ,mirrors (93.8) driving the light rays (93.1, 93.10) vertically upwards from the tubes (93.18) that drive said light rays horizontally, such that said light rays (93.1, 93.10) are driven towards a downward projecting Plano concave mirror (93.5), which drives the light rays towards the fluid driving pipe (93.6) under the central area of said mirror (93.5), with said pipe (93.6) driving the primary circuit pipe (93.7) and the energy storage fluid pipe (93.16) embedded into said pipe (93.6), and in parallel to each other (93.7, 93.16).
Figure 94 comprises a side view of a solar ray concentration and reflection system, which comprises two sideways projecting Plano concave mirrors (94.7) which drives the sideways projecting light rays towards the fluid driving pipe (94.9), which comprises the primary circuit pipe (94.8) and the energy storage fluid pipe (94.17) embedded into the same pipe (94.9), with the system fully closed from the outer environment to avoid any pollution or undesired deposition of matter, as well as comprising a Plano concave mirror (94.10) which drives the light rays from the tubes (94.11) towards a Plano concave mirror (94.18) which drives the light rays straight towards one of the two Plano concave mirrors (94.7).
Figure 95 comprises the same side view as comprised on Figure 94, but comprises a Plano concave mirror (95.16) which projects vertically upwards, onto which the light rays (95.5) are driven vertically downwards after being reflected by flat reflection mirrors (95.6), such that said Plano concave mirror (95.16) reflects the light rays to concentrate these towards the fluid driving pipe (95.8), which comprises the primary circuit pipe (95.9) and the energy storage fluid pipe (95.18) together in the same pipe (95.8), such that the light rays which are driven horizontally after being driven through the horizontal tubes (95.12), and concentrated by the Plano concave (95.11) and Plano convex (95.21) mirrors, are also driven towards said Plano concave mirror (95.16).

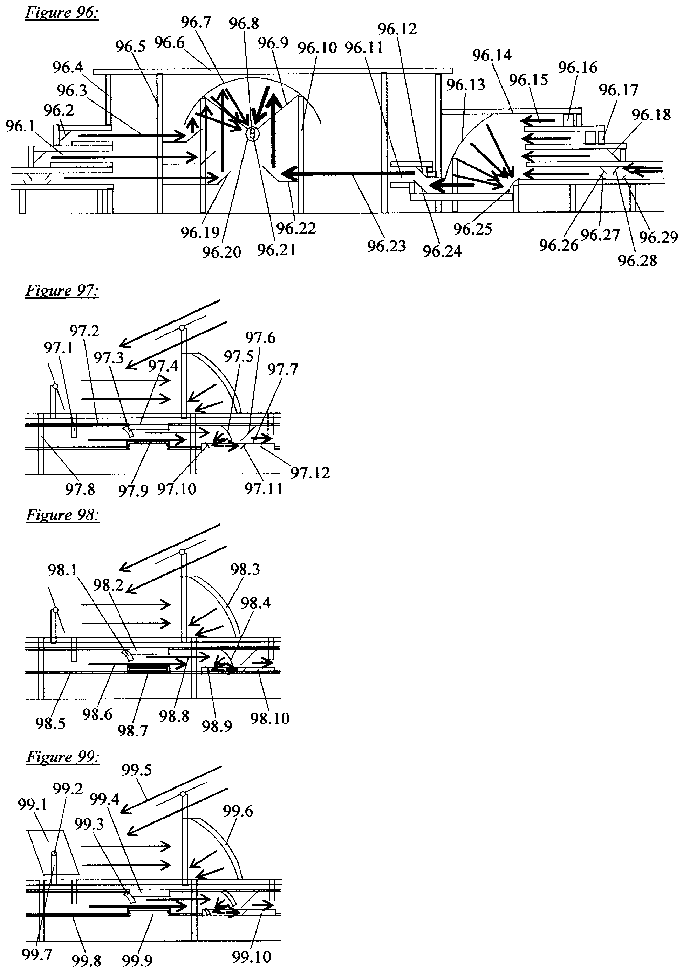

Figure 96 comprises a side view of a closed and sealed solar ray concentration and reflection system, which comprises a vertically downward projecting Plano concave mirror (96.7), which is sustained over the ground structure by vertical members (96.10), which drives the light rays (96.3) towards the fluid driving pipe (96.20) after said light rays (96.3) are being driven horizontally by the flat reflection mirrors (96.2, 96.17, 96.18) through the tubes (96.1, 96.15), as well as being concentrated by a Plano concave mirror (96.13) towards a Plano convex mirror (96.25) that drives said light rays (96.23) horizontally towards the flat reflection mirrors (96.19), which drive said light rays (96.3, 96.23) upwards before being concentrated again towards said fluid driving pipe (96.20).
Figure 97 comprises a side view of a part of the cross-section of a solar ray collection and concentration system, comprising a concave mirror and a convex mirror (97.3) inside the closed tubular structure (97.2) that is sustained by vertical members (97.1) to the rigid sustaining structure, and which comprises a transparent shield (97.4) between the two said mirrors (97.3), such that lower openings (97.9, 97.12) comprised along the bottom of said tube structure (97.2) to allow any drainage of water to take place.
Figure 98 comprises said side view of Figure 98, but comprises lower opening areas (98.7, 98.10) that are closed and sealed from the outer environment, as if there are transparent shields (98.2) covering the light ray entrances from the concave mirror (98.3) to the tube (98.5) comprised convex mirror (98.1) into the tubular structure, (98.5) no water will enter into the tube (98.5) when it rains.
Figure 99 comprises said side view of Figure 98, but with the lower light collection mirror (99.1) being inclined to reflect the incoming light rays (99.5) that come at an angle towards said mirrors (99.1), hence driving these (99.5) in parallel to the tubular structure (99.8) towards the concave mirror (99.6).

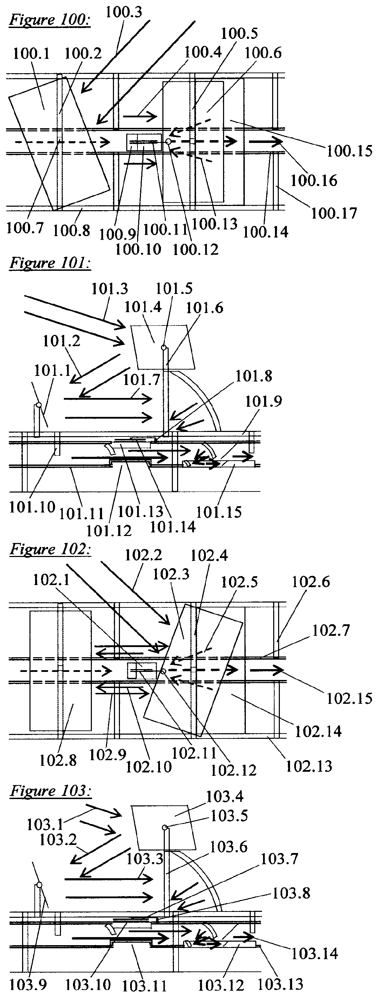

Figure 100 comprises a top view of a part of a solar light ray collection and concentration system, comprising an inclined light collection mirror (100.1) that reflects the incoming light rays (100.3) at an angle in order to drive these (100.3) in parallel to the system's linear structure towards the concave mirror (100.15), which concentrates said light rays (100.13) towards the opening (100.10) of the tubular structure (100.14), through which said light rays (100.13) are driven towards the inner comprised convex mirror (100.9), with said transparent shield (100.10) being cleaned by a wiper blade (100.11) to minimise losses of light radiation when required.
Figure 101 comprises a side view of a part of a solar light ray collection and concentration system, in which the light rays (101.3) from the sun are driven at an angle towards the upper light collection mirror (101.4), which drives said light rays (101.2) downwards towards the lower flat collection mirror (101.1), which in turn drives said light rays towards the concave mirror that in turn drives said light rays through the transparent shield towards the convex mirror comprised inside the tubular structure (101.11).
Figure 102 comprises a top view of part of a solar ray collection and concentration system, where the light rays (102.2) of the sun are driven at an angle towards the upper flat light collection mirror (102.3), which in turn drives said light rays (102.10) towards the lower flat light collection mirror (102.8) that finally drives said light rays (102.9) towards the concave mirror (102.14), that finally concentrates said light rays (102.5) towards the transparent shielded opening (102.1) of the tubular structure (102.7) for efficient and safe light collection and concentration.
Figure 103 comprises a side view of part of a solar ray light collection and concentration system, comprising the light rays (103.1) of the sun projecting at an angle and thus being reflected accurately by the upper flat light collection mirror (103.4) in order to drive the light rays (103.2) downwards towards the lower flat light collection mirror (103.9), which in turn drives said light rays (103.3) towards the concave mirror, which hence concentrates said light rays towards the transparent shield (103.10) comprised on the tubular structure.

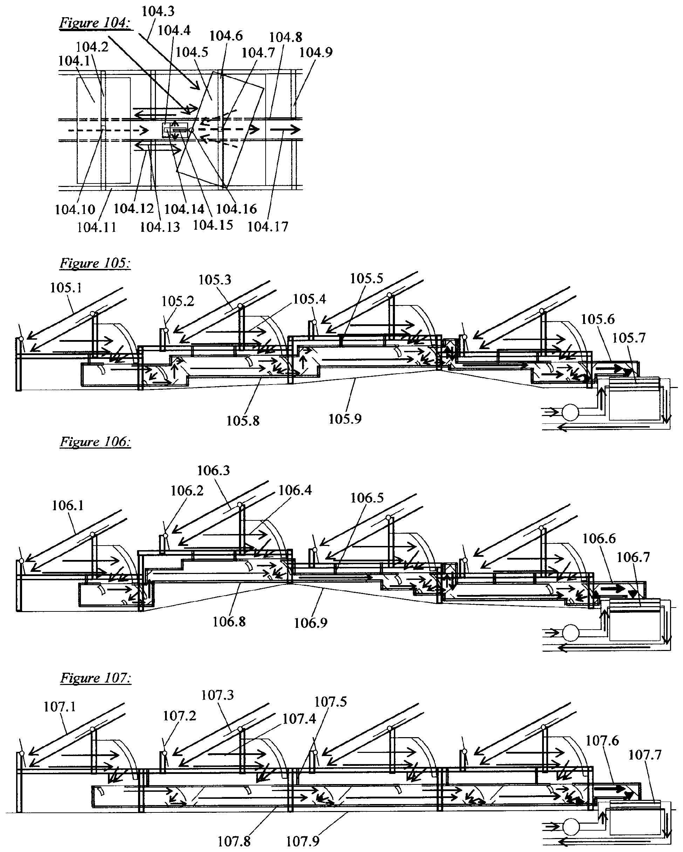

Figure 104 comprises a top view of part of a solar ray collection and concentration system, where the solar light rays (104.3) project at an angle towards the upper flat light collection mirror (104.5), which reflects the light rays to drive these (104.13) in parallel to the system's linear geometry, towards the lower flat light collection mirror (104.1), which in turn drives said light rays (104.12) in parallel to the tubular structure (104.8), towards the concave mirror, which concentrates said light rays towards the convex mirror (104.4) inside the tubular structure (104.8).
Figure 105 comprises a side view of a solar ray collection and concentration system, where the flat light collection mirrors (105.2, 105.3) collect and reflect the light rays (105.1) and drive these (105.4) towards the concave mirrors, with the lower comprised tubular structure (105.8) being driven over the ground floor surface (105.9).
Figure 106 comprises a side view of a solar ray collection and concentration system, comprising the flat light ray collection mirrors (106.2, 106.3) which collect and reflect the solar light rays (106.1) and drive said light rays (106.4) in parallel to the tubular structure (106.8) towards the concave mirrors, with said lower comprised tubular structure (106.8) being driven over the ground floor surface (106.9).
Figure 107 comprises a side view of a solar ray collection and concentration system, comprising the lower tubular structure (107.8) being driven over the ground floor surface (107.9) and being sustained to the sustaining structure by the means of vertical members (107.5), over which the flat light collection mirrors (107.2, 107.3) collect the incoming solar light rays (107.1) and drive these (107.4) towards the concave mirrors.

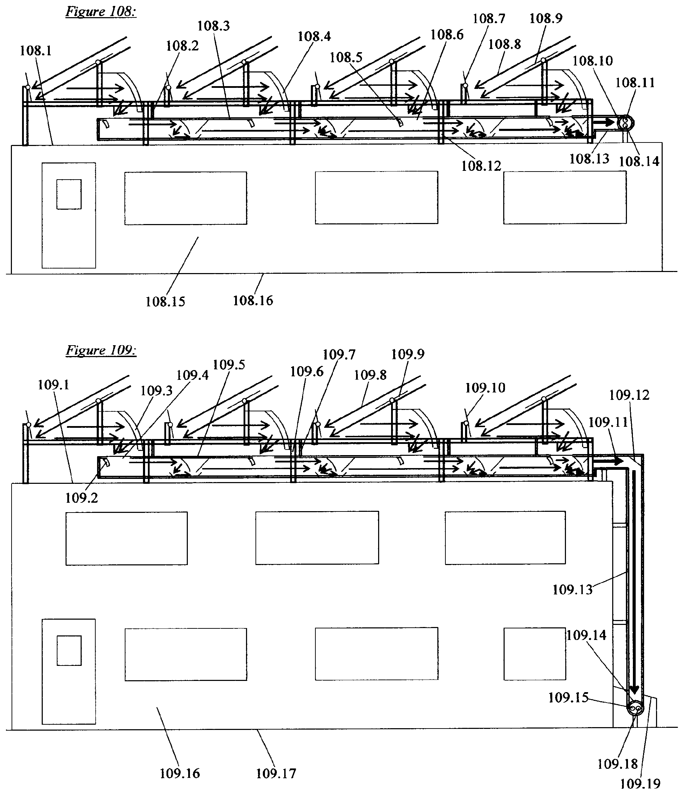

Figure 108 comprises a side view of a solar ray light collection and concentration system, where the sustaining structure is sustained by vertical members (108.12) over the roof of a building (108.15), with the lower tubular structure (108.3) being sustained to the rigid sustaining structure by vertical members (108.2), such that the light rays are driven into said closed and sealed tubular structure (108.3) towards the fluid driving pipe (108.10), hence transferring heat to the primary (108.11) and energy storage fluid (108.14) pipes.
Figure 109 comprises a similar side view of a solar light ray collection and concentration system as on Figure 108, but with the lower tubular structure (109.11) comprising a conduit (109.11) that drives the concentrated light rays to a flat reflection mirror (109.12), which drives said light rays vertically downwards into the downward projecting pipe (109.13) towards the fluid driving pipe (109.14), which is comprised over the ground floor surface (109.17) and is hence comprised at the bottom of the building (109.16), hence transferring the heat of the light rays to the primary (109.15) and energy storage fluid (109.18) pipes inside said fluid driving pipe (109.14).

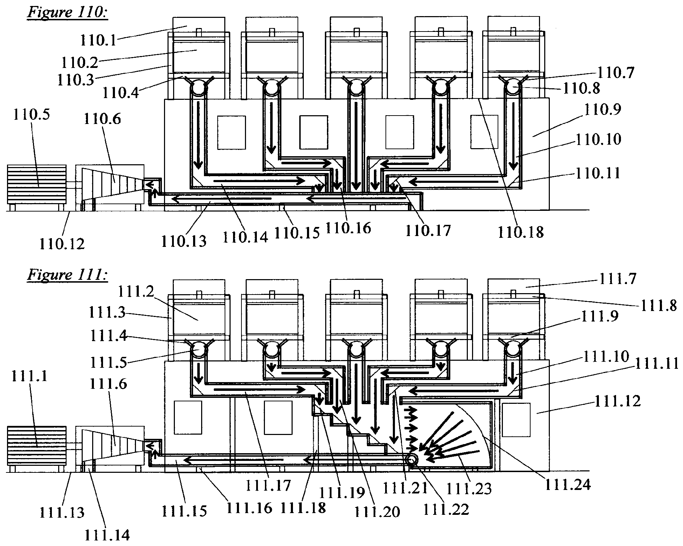

Figure 110 comprises a frontal view of a plurality of solar ray collection and concentration systems, which are each mounted on the roof (110.18) of a building (110.9) and which each comprise the sustaining structures (110.3, 110.4) that sustaining the mirrors (110.1, 110.2), as well as sustaining the lower tubular structure (110.8) by the sustaining members (110.7), such that all concentrated light rays are driven through pipes (110.10, 110.14) by flat reflection mirrors (110.11, 110.17) towards a fluid driving pipe (110.13), which uses the heat to drive a steam turbine (110.6) and can also comprise an energy storage fluid pipe into said pipe (110.13).
Figure 111 comprises a similar frontal view as Figure 110, but with the light driving pipes (111.10, 111.17) driving light rays by the use of flat reflection mirrors (111.11, 111.21) to a set of flat reflection mirrors (111.19), each (111.19) comprised under each pipe outlet (111.20), such that all light rays are driven horizontally towards a Plano concave mirror (111.24), which concentrates all light rays towards a fluid driving pipe (111.15, 111.22), which uses the heat to drive a steam turbine (111.14), with all structures being maintained along the building (111.12) by the means of vertical sustaining members (111.18) on the ground floor surface (111.13).

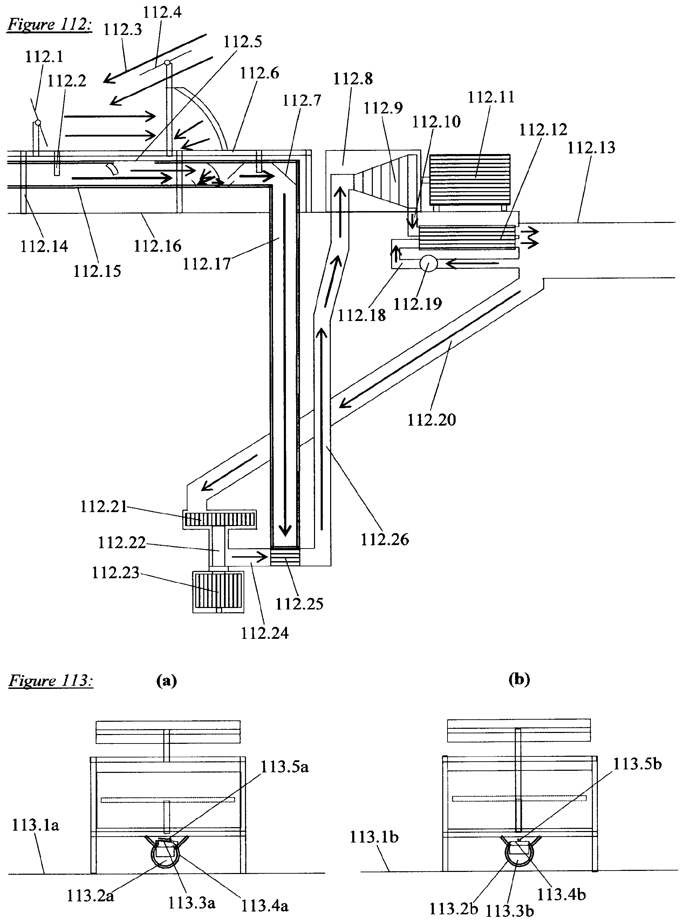

Figure 112 comprises a side view of the end part of a solar ray collection and concentration system, with the flat light collection mirrors (112.1, 112.4) collecting the incoming light rays (112.3) from the sun, such that these (112.3) are finally driven through the lower tubular structure (112.15), at which the light rays are reflected vertically downwards by a flat reflection mirror (112.7) into a pipe (112.17) towards a lower positioned heat exchanger or steam generator (112.25), which transfers the heat energy to the flowing water (112.24) after driving a water turbine (112.21) with the gravitational energy of the water when flowing through the downward pipe (112.20) from a water basin (112.13), hence generating electricity at the generator (112.23) before being driven as steam upwards again through a pipe (112.26) to drive a steam turbine (112.9) which drives another generator (112.11), such that the water is driven through a pipe (112.10) back to the water basin (112.13), through which it is cooled by a condenser (112.12).
Figure 113 comprises frontal or rear views of the solar ray collection and concentration systems, with a sideways inclined flat transparent shield (113.3a) over the tubular structures (113.4a) which can let light rays through it (113.3a) as well as drive rain water away, and also comprising a wiper blade (113.5a) on said shield (113.3a) to drive water particles away, as well as a flat transparent shield (113.4b) on the upper surface of said tubular structure (113.2b) with a wiper blade comprised on top of said shield (113.4b) to remove any rain water being deposited on it, hence maximising system functionality with said designs.

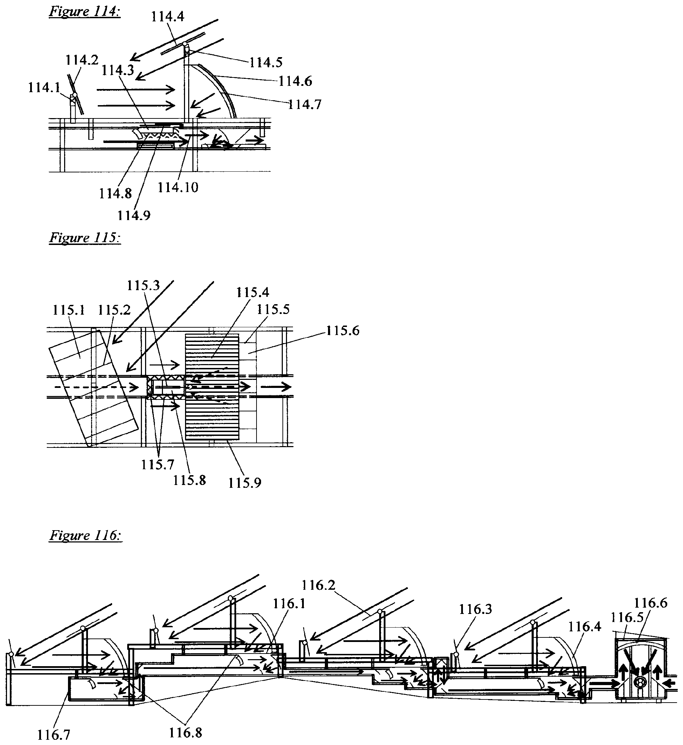

Figure 114 comprises a side view of part of a solar ray collection and concentration system, featuring de-icing filament systems (114.2, 114.4, 114.6, 114.8) around the critical areas, such as the mirrors (114.2, 114.4, 114.7) and the transparent shield (114.3).
Figure 115 comprises a top view of part of the solar ray collection and concentration system, comprising filament wires (115.2, 115.4, 115.5, 115.7) around the critical areas present, such as mirrors (115.1, 115.9, 115.6) and the transparent shield (115.8).
Figure 116 comprises a side view of a solar ray collection and concentration system, showing where on said system, should the de-icing components be comprised, and which areas will be protected from icing at all times.

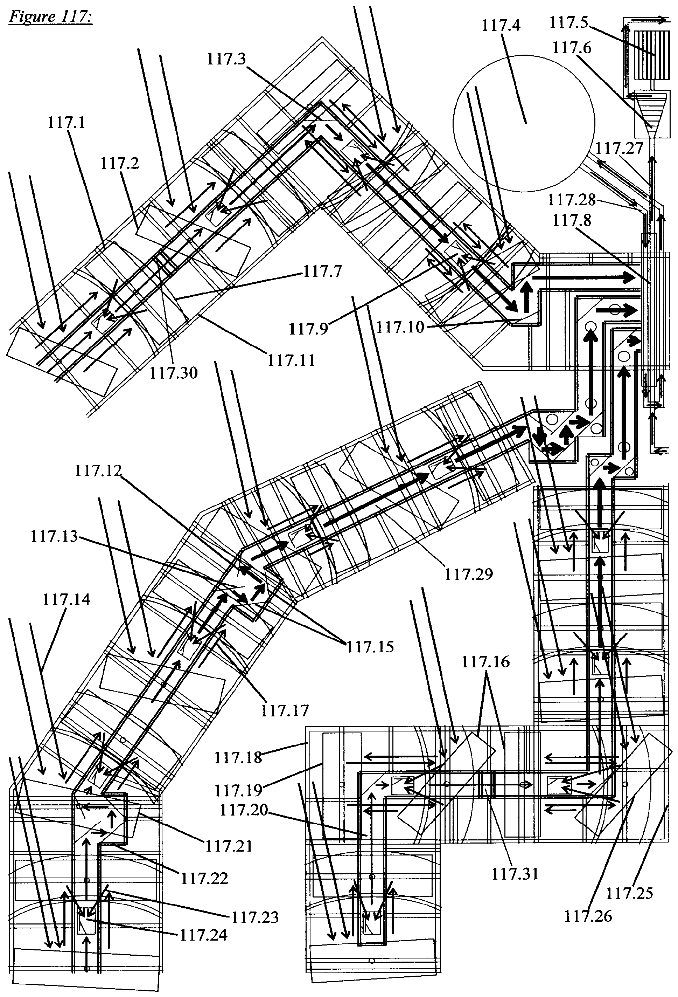

Figure 117 comprises a top view of a set of solar ay collection and concentration systems, each comprising light collection mirrors (117.1, 117.2, 117.16, 117.26) and concave light concentration mirrors (117.7), which all drive the light rays to the heat collection pipes (117.8), with each light collection mirror (117.1, 117.2, 117.16, 117.26) being inclined at a separate angle in order to drive said solar light rays towards the concave concentration mirrors (117.7).

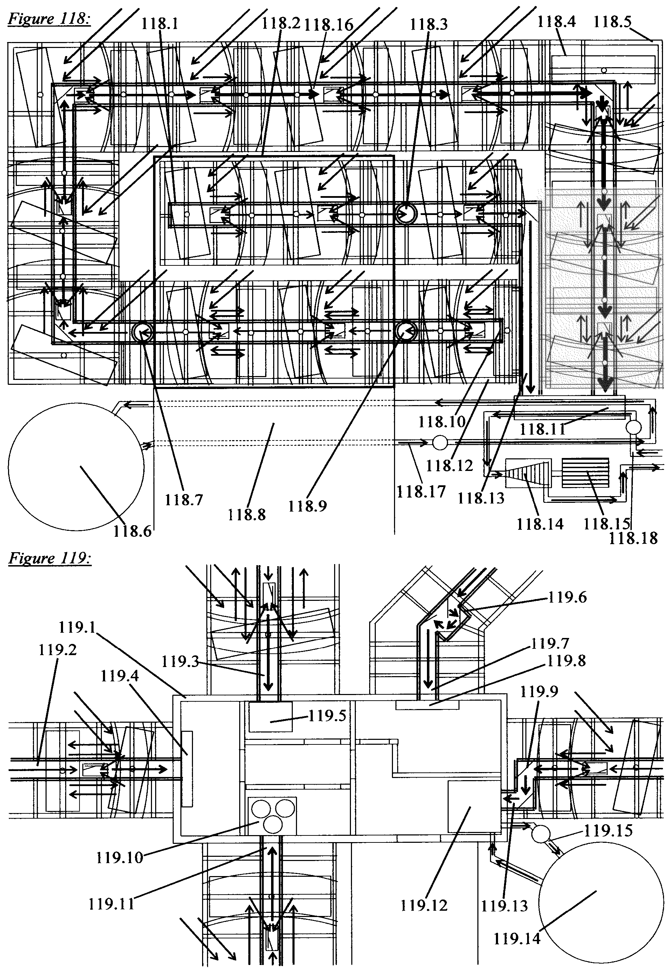

Figure 118 comprises a top view of a building (118.2) on which a set of light collection systems are comprised, which connect to ground positioned light collection systems via pipes (118.3, 118.7, 118.9), hence forming at least one linear continuous light concentration system, whose pipe (118.12) can be positioned around said building (118.2) to minimise place and system costs, and in which a plurality of pipes (118.10, 118.13) drive said light rays to a heat exchanger (118.11) in order to transfer said heat to the heat collection pipes.
Figure 119 comprises a top view of a building (119.1), comprising its interior amenities such as radiator (119.4, 119.8), boiler (119.5), cooker (119.10) and electrical energy conversion unit (119.12), into which the heat is supplied by various solar light collection and concentration systems, with one pipe (119.11) to heat the cooker (119.10), on pipe (119.2, 119.7) to heat each radiator (119.4, 119.8), one pipe (119.3) to heat the water boiler (119.5), and one pipe (119.13) to supply electricity to said building, including heat to the energy storage fluid tank (119.14).

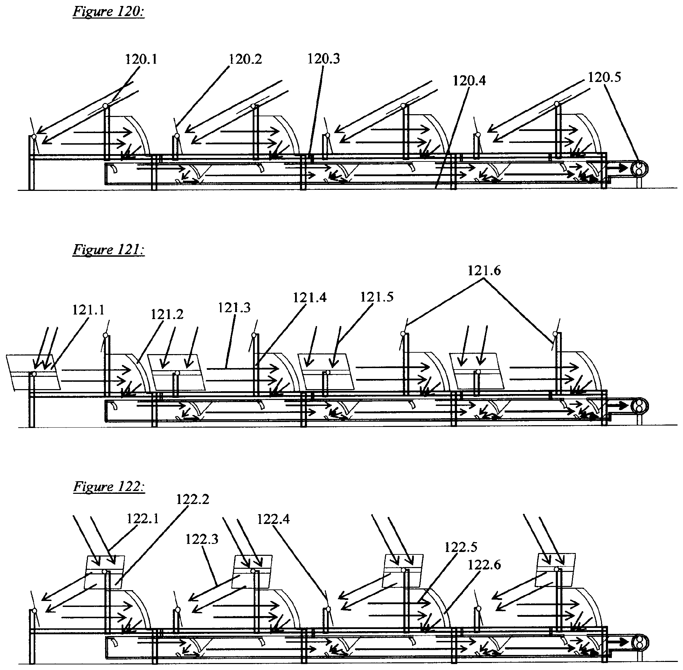

Figure 120 comprises a side view of a solar light collection and concentration system, onto which the upper flat mirror or heliostat (120.1) is in this case inclined perpendicular to the direction of motion of the solar rays, in order to maximise light collection by the lower mirrors or heliostats (120.2), whose flat reflection surfaces (120.2) are above the sustaining bars (120.3) to maximise light reception efficiency.
Figure 121 comprises a side view of a solar light ray collection and concentration system, onto which said lower flat mirrors or heliostats (121.1) are inclined laterally in order to recover and reflect horizontally (121.4), the light rays (121.5) that are projected to the side of said mirrors or heliostats (121.1) from the suns, such that said light rays are driven horizontally (121.3) towards said concave mirrors (121.2), with said upper mirrors or heliostats (121.6) being positioned perpendicular to the incoming light rays (121.5) in order to maximise light ray reception by said lower mirrors or heliostat (121.1).
Figure 122 comprises a side view of said solar ray collection and concentration system, where the light rays (122.1) from the sun are projected oppositely, such that the upper mirrors or heliostat (122.2) are inclined laterally in order to drive said light rays (122.1) onto a coherent pathway (122.3) towards the lower mirrors or heliostat (122.4), which in turn drive said light rays (122.5) coherently and horizontally towards said concave light concentration mirrors (122.6).

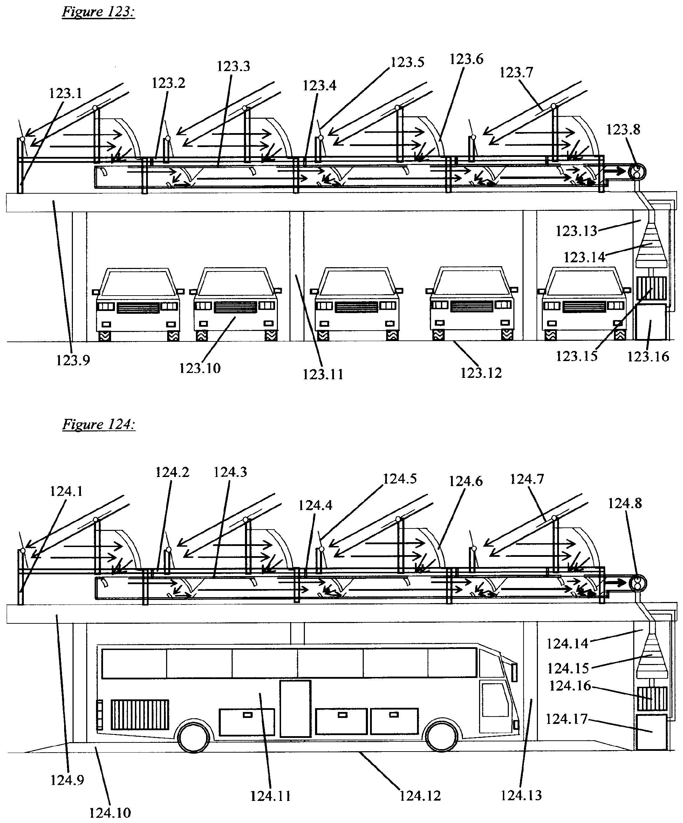

Figure 123 comprises a side view of a solar ray collection and concentration system, which is comprised over the roof (123.9) of a car park, with the parked cars (123.10) projecting frontally towards the position of the view, such that said mirrors (123.5, 123.7) collect light and drive it towards the concave mirrors (123.6) in a coherent system architecture, with said light rays then being driven through a tubular structure (123.3) towards a heat exchanger (123.8), that drives the light rays' heat to drive a steam turbine (123.14) and a generator (123.15), as well as supplying heat to the energy storage fluid tank (123.16).
Figure 124 comprises a side view of a solar light collection and concentration system that is comprised over the roof (124.9) of a bus stop or station, with said mirrors (124.5, 124.7) supplying heat to the concave mirrors (124.6) into a linear and plural manner, such that said light rays are driven in a concentrated manner through a lower tubular structure (124.3) to a heat exchanger (124.8), which transfers the heat of the light rays to drive a steam turbine (124.15) and in turn a generator (124.16), as well as supplying heat to the energy storage fluid tank (124.17).

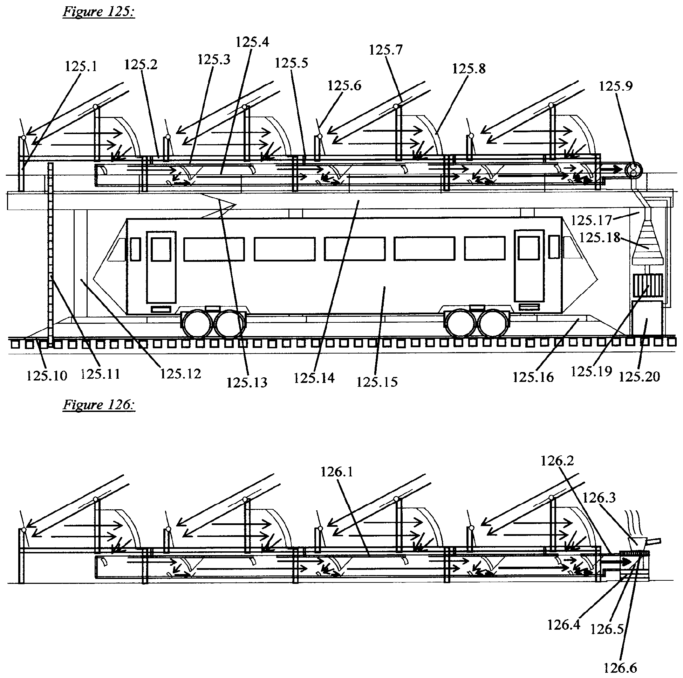

Figure 125 comprises a side view of a solar ray collection and concentration system, which is comprised over a roof (125.14) of a train station, hence not affecting the trains (125.15) being aligned on the platforms (125.16) of said station, nor the catenary (125.4) comprised near the roof (125.14) of said station, with said mirrors (125.6, 125.7) driving the light rays to said concave mirrors (125.8), such that said light rays are driven through a lower tubular structure (125.3) towards a heat exchanger (125.9), that supplies the light rays' heat to drove a steam turbine (125.18) and in turn a generator (125.19), as well as simultaneously supplying heat to the energy storage fluid tank (125.20).
Figure 126 comprises a side view of a solar light ray collection and concentration system, where said pipe (126.1) supplies heat via the end duct (126.2) towards a flat mirror (126.5), which reflects the light rays upwards towards a cooking plate (126.6), such that the light rays' heat can be used to efficiently use said cooker to heat any cooking member (126.3) as required without the use of any other forms of energy or electricity from outside said system.

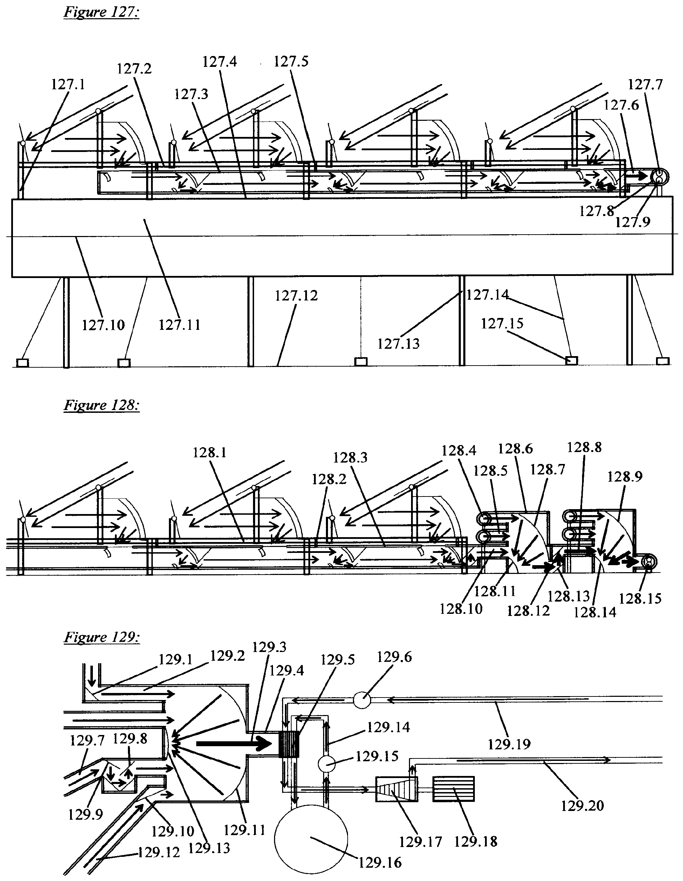

Figure 127 comprises a side view of a solar ray collection and concentration system, which is comprised over the upper surface (127.4) of a floating vessel (127.11), which can be sustained in position either by rigid masts (127.13), cables (127.14) rigidly attached to mounts (127.15) on the bed, or both, such that the system can supply heat to both heat collecting pipes simultaneously through a heat exchanger (127.7) without taking floor space that could be used for other projects.
Figure 128 comprises a side view of a solar light collection and concentration system, in which a linearly positioned plurality of light concentration systems (128.6), comprises Plano concave mirrors (128.7, 128.9) which concentrate the light rays towards a Plano convex mirror (128.11, 128.14), such that the light rays of a plurality of laterally positioned solar ray light collection and concentration systems (128.4), can be all concentrated onto a light driving tube (128.10, 128.8), which can then drive said light rays towards the required heat exchanger (128.15).
Figure 129 comprises a top view of a set of Plano concave mirrors (129.11), which drive the light rays from a plurality of light driving pipes (129.2, 129.7, 129.12) from various systems, towards a Plano convex mirror (129.13), such that said Plano convex mirror (129.13) drives said light rays towards a heat exchanger (129.5), which supplies the heat simultaneously to both the energy storage fluid circuit (129.14) and the heat collection circuit (129.19), which in turn drives a steam turbine (129.17) that in turn drives a generator (129.18).

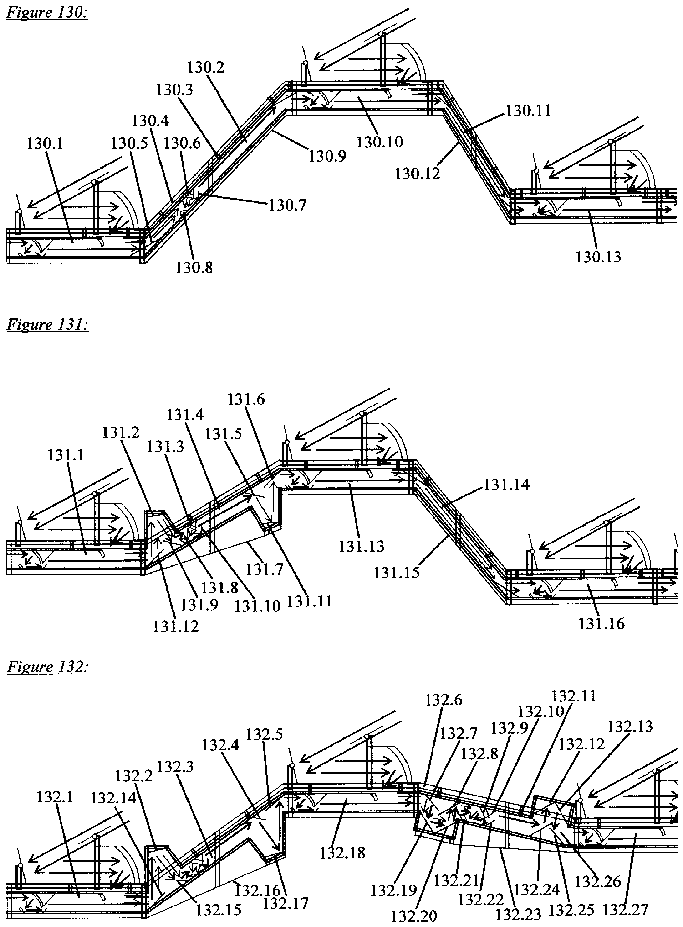

Figure 130 comprises a side view of a solar light ray collection and concentration system, which comprises the lower light driving pipe (130.1) driving the light rays upwards by a flat mirror (130.5), to an upper position (130.10), and then downwards again through the pipe (130.11) towards a lower position (130.13), hence showing that the same pipe (130.1) can be driven along any inclined ground geometry (130.9, 130.12) without the need of any major modification.
Figure 131 comprises a side view of a solar light ray collection and concentration system, wherein the light driving pipe (131.1) drives the light rays towards a flat mirror (131.12) that drives the light rays towards an upper inclined flat mirror (131.2), which then drives the light rays perpendicular to the desired upward direction (131.4), hence to be reflected by another flat mirror (131.9), hence comprising the same flat mirror (131.5) reflection onto a perpendicular direction towards another flat mirror (131.11), prior of driving said light rays perpendicular to the new direction (131.13), in order to then be reflected by a last flat mirror (131.6), hence showing a system in which a combination of only three flat mirrors can be used to accurately drive the light rays where required.
Figure 132 comprises a side view of a solar light ray collection and concentration system, wherein the light driving pipe (132.1) drives the light rays upwards to an upper position (132.18) by said three flat mirror system compositions as comprised on Figure 131, and drives said light rays downwards to a lower position (132.27) by the means of four flat mirror arrangements at each side, into which a flat mirror (132.7) drives the light rays to a set of two flat mirrors (132.19, 132.20), before said last flat mirror (132.20) drives said light rays perpendicular to the desired direction, in order to finally be reflected by a last flat mirror (132.8), until finally reaching a lower point (132.27) by comprising a flat mirror (132.24) that drives said light rays towards a set of two flat mirrors (132.12, 132.13), hence comprising the last flat mirror (132.13) driving the light rays towards a flat reflection mirror (132.25) which in turn reflects these horizontally.

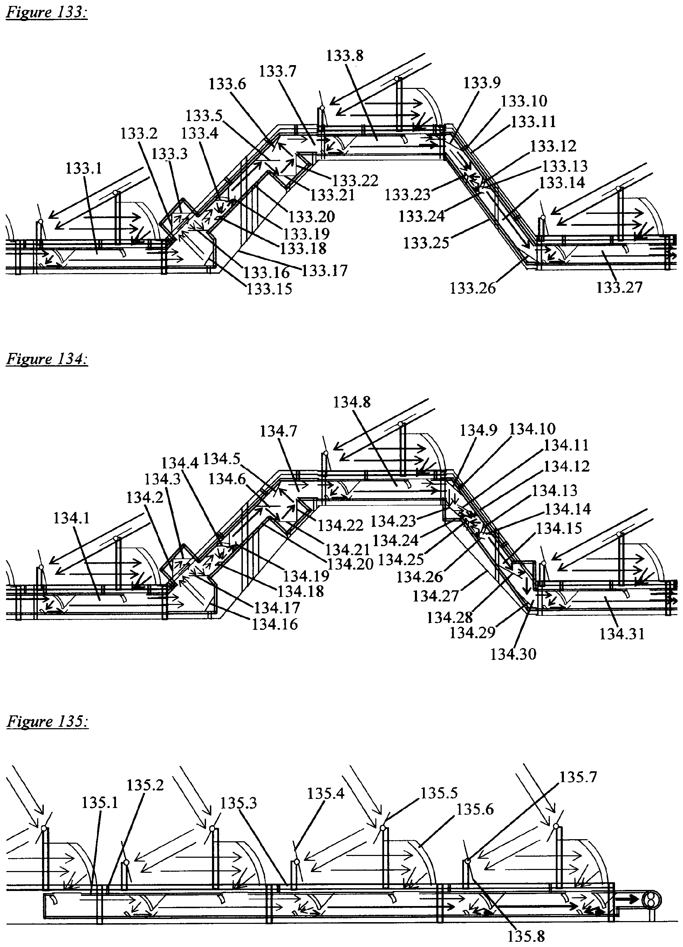

Figure 133 comprises a side view of a solar light ray collection and concentration system, wherein a light ray driving pipe (133.1) drives the light rays to an upper pipe position (133.8) onto the same pipe, by comprising sets of four flat mirror arrangements, comprising a flat reflection mirror (133.15) that drives the light rays perpendicularly to the required direction, towards a set of flat reflection mirrors (133.2, 133.3) in order for the last mirror (133.3) to drive the light rays perpendicular to the required direction and hence be reflected by a final flat reflection mirror (133.16), such that when reaching the upper point (133.8), a flat mirror (133.5) drives the light rays downwards to a set of two flat mirrors (133.21, 133.22), in order to finally drive said light rays to a flat reflection mirror (133.6) which drives said light rays onto the required direction (133.7).
Figure 134 comprises a side view of a solar light collection and concentration system, comprising the same system to drive light rays from a lower position (134.1) to an upper position (134.8) by the means of a set of four flat reflection mirrors at each side as described for Figure 133, and a set of three flat reflection mirrors (134.9, 134.23, 134.11) at each end, such that the first mirror (134.9) drives the light rays from the upper position (134.8) downwards perpendicularly to another flat reflection mirror (134.23), which finally drives the light rays to a last flat mirror (134.11) that drives said light rays onto the required downward direction, such that near to the lower point (134.31), a flat mirror (134.28) drives the light rays to a flat mirror which drives said rays perpendicular towards a flat mirror (134.29) that finally drives said light rays onto the required horizontal direction (134.30, 134.31).
Figure 135 comprises a side view of a solar light ray collection and concentration system, where said lower flat light collection mirrors (135.4, 135.8) are always comprised at a height which is above that of the sustaining bar (135.3) that is comprised at each side to sustain said system, hence maximising the light ray collection and reflection by said lower flat mirrors (135.4, 135.8), and hence maximising system efficiency.

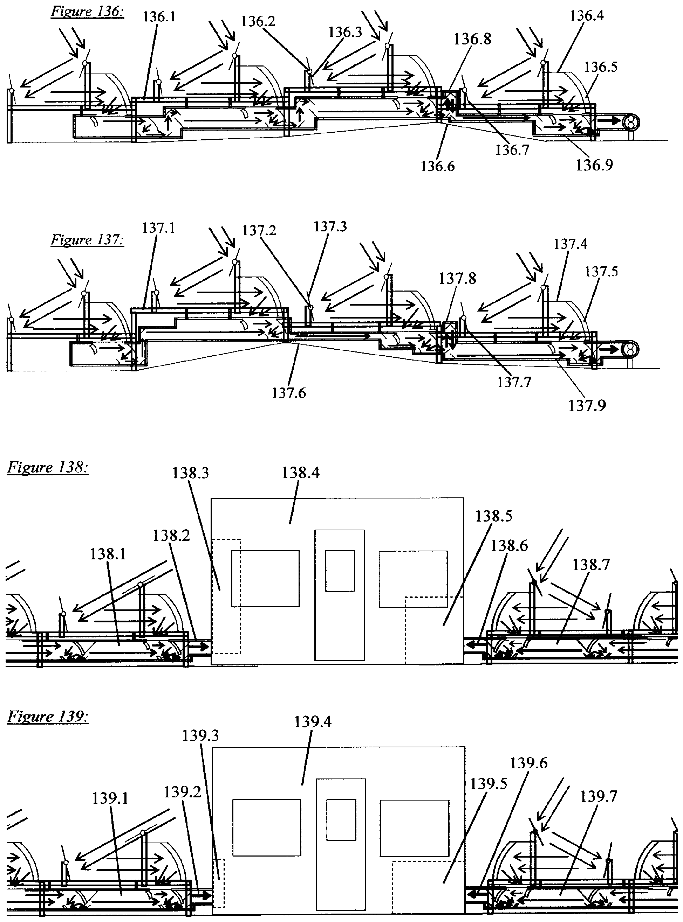

Figure 136 comprises a side view of a solar light ray collection and concentration system, which is comprised over uneven terrain (136.6), such that said lower flat mirrors (136.3, 136.7) are comprised over the height of the sustaining bars (136.1) which sustain the system structure altogether.
Figure 137 comprises a side view of a solar light ray collection and concentration system which is comprised on uneven terrain (137.6), on which said lower mirrors (137.3, 137.7) are comprised over the height of the sustaining bars (137.1) which sustain the entire system structure in place.
Figure 138 comprises a side view of a building (138.4) with a side view of a plurality of light collection and concentration systems (138.1, 138.7), onto which light driving pipes (138.1, 138.7) of a plurality of solar light ray collection and concertation systems, supply solar light ray heat to a plurality of amenities inside said building (138.4), such as the boiler (138.3) on the left hand side and the electrical energy conversion unit (138.5) on the right hand side.
Figure 139 comprises a side view of a building (139.4) with a side view of a plurality of light collection and concentration systems (139.1, 139.7), onto which a plurality of light driving pipes (139.1, 139.7) supply solar light ray heats separately to separate sides of the building (139.4) in question, such that one the left hand side, the radiator (139.3) is supplied with heat, while simultaneously on the right hand side, the electrical conversion unit (139.5) is also supplied with solar light ray heat.

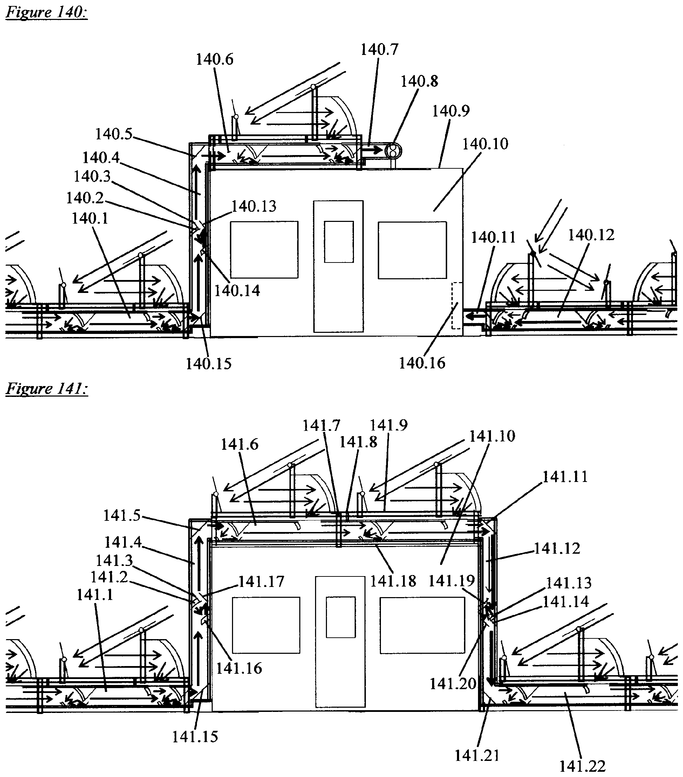

Figure 140 comprises a side view of a building (140.10), comprising two solar ray collection and concentration systems, viewed also form the side, with one pipe (140.1) driving the light rays to the top of the roof (140.9) of said building (140.10) in which said pipe (140.6) transfers the heat to the heat exchanger (140.8) to minimise system surface area used by the means of flat mirrors (140.5, 140.15), while another system drives light ray heat via its pipe (140.12) to the radiator (140.16) of the building (140.10).
Figure 141 comprises a side view of a building (141.10) in which a continuous light ray collection and concentration system drives the light rays from the lower pipe (141.1) to the upper pipe (141.6) over the roof (141.18) of the building (141.10) by the means of flat reflection mirrors (141.5, 141.15), while another set of flat reflection mirrors (141.11, 141.21) drives the concentrated light rays back to the lower position beside the building, hence driving said light rays continuously through the pipe (141.22), hence forming a continuous light collection and concentration system that minimises ground floor use for the system.

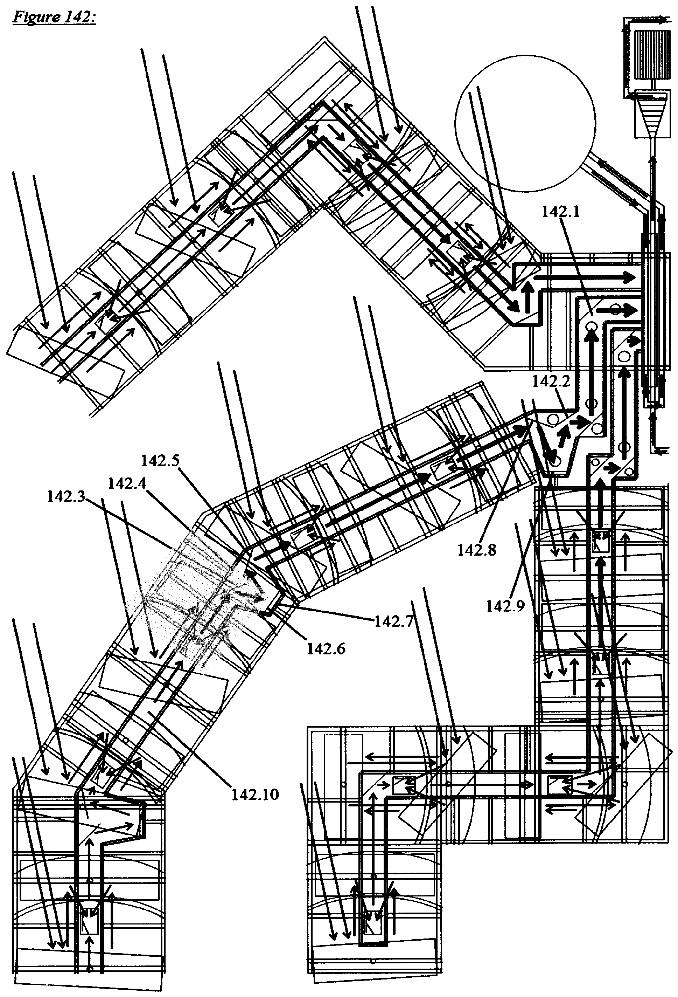

Figure 142 comprises a top view of a plurality of solar ray collection and concentration systems, where each system drives its light rays towards a heat exchanger to supply heat to the required pipes, with the reflection mirrors of one of said systems (142.2, 142.8, 142.9) are comprised of one flat mirror (142.3) that drives the light rays towards another flat reflection mirror (142.6), which then drives the light rays towards a final flat mirror (142.5) that drives the light rays onto the required direction through the pipe (142.10), such that said pipe (142.10) drives the light rays efficiently inside its casing (142.7).

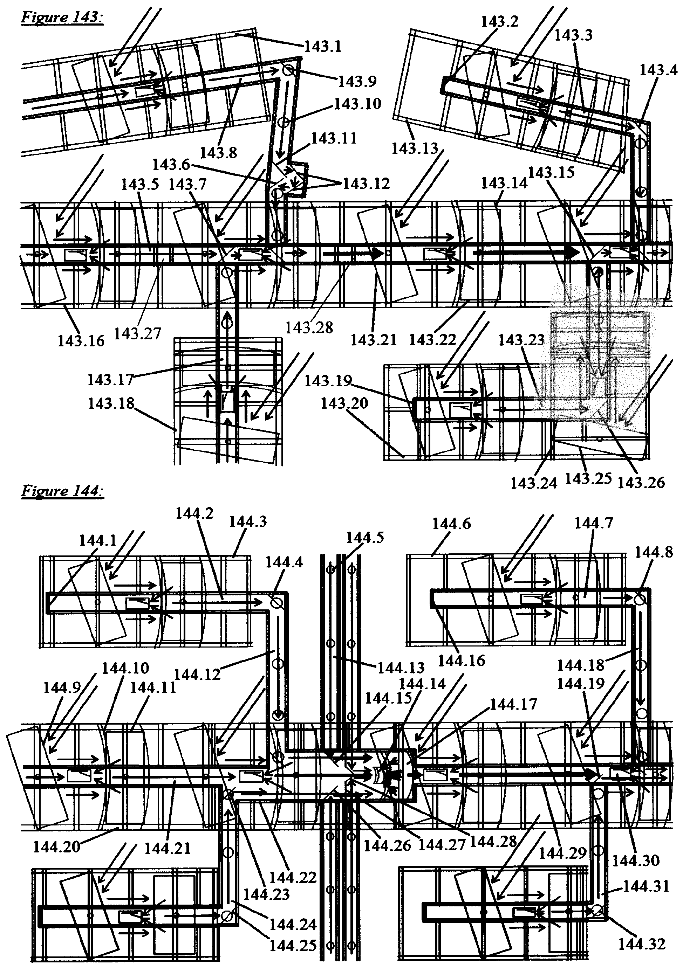

Figure 143 comprises a top view of a main solar light ray collection and concentration system (143.5, 143.14) set of solar ray collection and concentration systems (143.1, 143.2, 143.18, 143.20) being oriented onto various directions of projection, with each separate pipe (143.8, 143.3, 143.17, 143.23) driving the concentrated light rays to a flat reflection mirror (143.7, 143.15) which drives the light rays onto the main light driving pipe (143.5) of a solar ray collection and concentration system from both sides of said pipe (143.5), such that the number of pipes (143.5) and heat exchangers is reduced to a minimum to save system costs.
Figure 144 comprises a top view of a set of a solar light ray collection and concentration system (144.20, 144.21) onto which the pipes (144.2, 144.13, 144.18, 144.24, 144.31) of various solar ray light collection an concentration systems (144.1, 144.3, 144.6, 144.16) at each side of said main system light driving pipe (144.21), drive the light rays to sets of flat reflection mirrors (144.15, 144.23, 144.26, 144.28) in order to focus said light rays altogether by concave (144.17) and convex (144.14) mirrors, hence producing a single coherent set of light rays, hence minimising the piping used for the system.

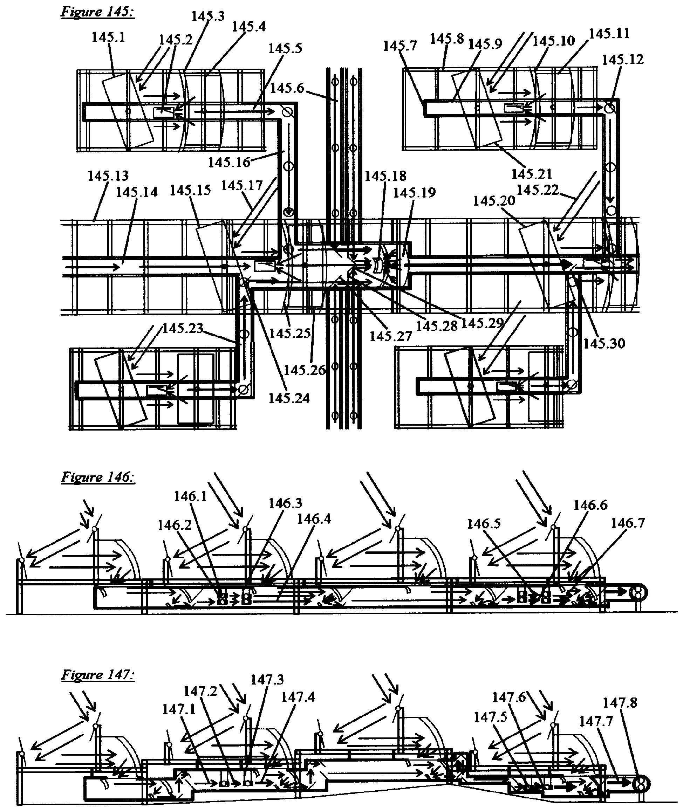

Figure 145 comprises a top view of a solar ray light collection and concentration system (145.13, 145.14) in which the light trays of a plurality of solar ray collection and concentration systems (145.3, 145.4, 145.7, 145.8) are driven via pipes (145.6, 145.5, 145.23) to sets of flat reflection mirrors (145.24, 145.27, 145.29) which drive the light rays onto a concave mirror (145.19) which concentrates said light rays to a convex mirror (145.18), hence driving the light rays onto a coherent light ray beam through the main pipe (145.14), with said light collection systems (145.15, 145.20) being comprised such that no lateral light collection and concentration systems (145.1, 145.3, 145.4, 145.8, 145.10, 145.11, 145.21) can obstruct the solar light rays when projecting sideways towards said main system (145.15, 145.20).
Figure 146 comprises a side view of a solar ray collection and concentration system, which comprises sets of flat mirrors (146.2) comprised in front of incoming pipes (146.1), in which said mirrors (146.2) are sustained by vertical members (146.3) to the upper surface of the light driving piping, such that the light rays (146.5, 146.6) are driven one over the other by said mirrors (146.2), which can be comprised one over the other (146.2) and beside each other to also allow light rays (146.5, 146.7) to be driven beside each other at the same height, with said sustaining vertical members (146.3) being able to sustain more than one flat mirror (146.2) in place.
Figure 147 comprises a side view of a solar light ray collection and concentration system in which the flat reflection mirrors (147.6) are sustained by vertical members (147.3) to the upper surface of the light driving pipe (147.7), such that these (147.6) are comprised in front of incoming pipes (147.5), hence meaning that the mirrors (147.6) are comprised at different places into the pipe (147.7), such that the light rays (147.1, 147.2, 147.4) can be driven laterally to each other (147.1, 147.2, 147.4) at the same height across the pipe (147.7) with said vertical sustaining members (147.3), sustaining said mirrors (147.6).

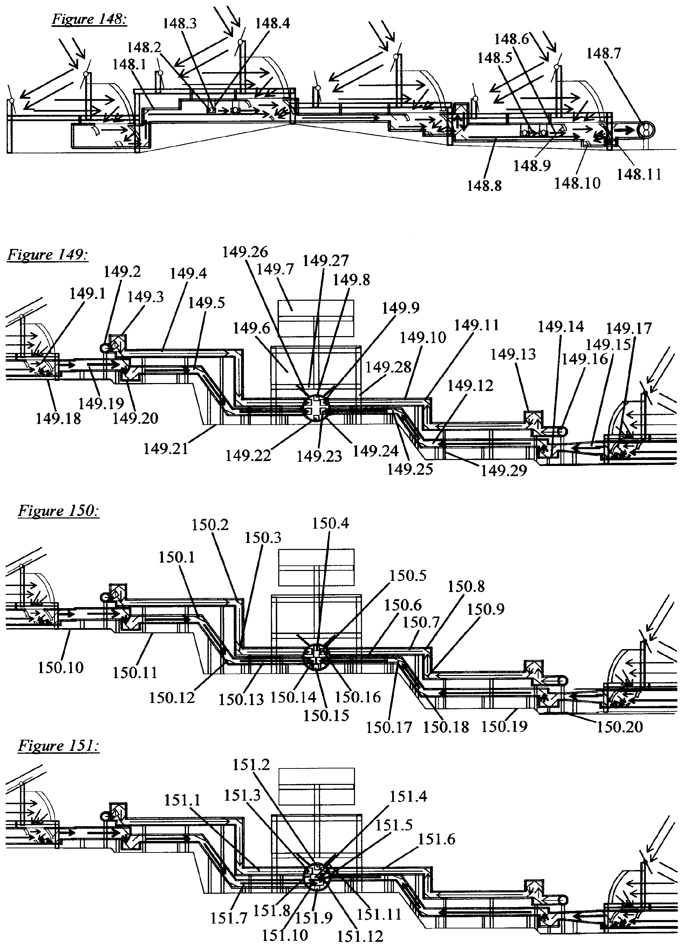

Figure 148 comprises a side view of a solar light ray collection and concentration system, which comprises flat mirrors (148.3) which are sustained by vertical members (148.4) that are sustained to the upper surface of the pipe casing (148.1), but are simultaneously positioned at different positions to each other (148.3) such that the light rays (148.5, 148.6) can be projected beside each other along the same direction, with each flat mirror (148.3) reflecting the light rays coming from an incoming pipe (148.3), hence driving said light rays to the heat exchanger (148.7).
Figure 149 comprises a side view of a set of two solar light ray collection and concentration systems (149.1, 149.17) that drive the light rays from said systems (149.1, 149.17) and other lateral light concentration systems (149.2, 149.16) to sets of four mirrors (149.3, 149.13, 149.14, 149.20) in order to move the height of projection slightly, or to move the light rays to upper (149.10, 149.25) or lower positions of projection by flat mirrors (149.11), such that said pipes (149.4, 149.5, 149.10, 149.25) drive the light rays to sets of flat reflection mirrors (149.9, 149.23) comprised over each other (149.9, 149.23), hence driving said light rays onto a system pipe (149.24) viewed frontally on Figure 149.
Figure 150 comprises the same design features as Figure 149, but with said pipes (150.6, 150.7, 150.13) comprising flat reflection mirrors (150.1, 150.2, 150.3, 150.8, 150.9, 150.12, 150.17, 150.18) to move the light rays to upper (150.6, 150.7) or lower (150.13) positions of projection, such that said pipes drive the light rays to laterally comprised sets of flat reflection mirrors (150.14, 150.16) comprised over each other (150.14, 150.16), but at different positions, in order to accumulate the maximum number of mirrors possible on the pipe viewed frontally on Figure 150.
Figure 151 comprises the same design topology as on Figure 150, but with said light ray driving pipes (151.6, 151.6, 151.7) driving the light rays to flat reflection mirrors (151.4, 151.5) that are comprised over each other (151.4, 151.5) and that are sustained to the pipe structure (151.10) by lateral sustaining members (151.8, 151.12), while simultaneously comprising flat reflection mirrors (151.3) comprised over said lower mirrors (151.4, 151.5) that collect the light rays of said upper pipes (151.1, 151.6) to maximise the number of mirrors comprised into said pipe (151.10) viewed frontally on Figure 151, hence minimising system costs.

The present invention comprises a set of flat collection mirrors or heliostats (1.1) which are each comprised of a vertical member (1.11), with electrical motors to control the attitudes of said mirrors or heliostats, in order for the solar rays (1.5) to be always reflected by said mirrors or heliostats (1.1) towards a Plano concave or concave mirror (1.2) comprised beside each of said mirrors or heliostats (1.1). So, said solar rays are directed towards said Plano concave or concave mirrors (1.2), which then concentrate said light rays (1.5) towards a Plano convex or convex mirror (1.9) comprised just in front of and under each of said Plano concave or concave mirrors (1.2). So, said light rays are driven by said Plano convex or convex mirror (1.9) towards a flat reflection mirror (1.13). Said flat mirror (1.13) drives said light rays upwards to another flat reflection mirror (1.4), which drives said light rays towards the lowest part of the next Plano concave or concave mirror (1.2) comprised beside the next flat collection mirror or heliostat (1.1). Said flat reflection mirrors (1.4, 1.13) are comprised under and behind said next flat collection mirror or heliostat (1.1).

The computerised control system connected to the flat solar ray collection mirrors (1.1), make said mirrors act as heliostats, and are hence heliostats due to said nature.

A set of vertical mast structures (1.12) sustain the horizontal mast structured structure (1.6), which sustains all flat collection heliostats (1.1), as well as all Plano concave or concave mirrors (1.2) and Plano convex or convex mirrors (1.9). Said flat reflection mirrors (1.4, 1.13) are sustained by said vertical mast structures (1.12), while said convex or Plano convex mirrors (1.9) are sustained to said horizontal members (1.6) by a vertically projecting member (1.10). So, said structure (1.6) sustained said mirrors (1.1, 1.3, 1.9, 1.4, 1.13) above the ground level surface (1.18) at all times. A horizontal positioned mirror structure (1.3) can also be comprised at the outer upper end of said Plano concave or concave mirrors (1.2) for safety reasons in order to make sure that said convex or Plano convex mirrors (1.9) do not drive light rays towards the open air upwards in the case of accident.

So, said solar rays (1.5) are all simultaneously collected and reflected by said light collection heliostats (1.1), such that these light rays (1.5) are each time concentrated by said concave or Plano concave mirrors (1.2) simultaneously while said concave or Plano concave mirrors (1.2) also concentrate the newly collected light rays towards said convex or Plano convex mirror (1.9). So, the light rays of the previously positioned collection heliostats (1.1) are concentrated simultaneously with the light rays of the laterally positioned collection heliostat (1.1), by said concave or Plano concave mirror (1.2) towards said convex or Plano convex mirror (1.9).

Said convex mirror (1.9) drives said light rays via said flat reflection mirrors (1.4, 1.13) towards the next light collection system, where the same process is repeated again. So, this process is repeated over a plurality of times, each time producing concentrated light rays (1.14) with higher light intensities, until said highly concentrated light rays (1.14), are reflected by the last convex or Plano convex mirror (1.9) to the heat exchanger or steam generator (1.8). Said solar reflected light rays (1.5), as well as the concentrated light rays (1.14), are always sustained over the ground surface (1.18), as are all the components of the system.

Said flat collection heliostats (1.1) are each comprised over a vertical member (1.11), which is sustained by the horizontal structural members (1.6). Each of said light collection heliostats (1.1) comprises an electrical power motor system, which orientates the mirrors (1.1) in order for each of said mirrors (1.1) to comprise its own orientation actuation system in order to position said mirrors (1.1) into the required orientation in order to collect the incoming solar rays (1.5), according to their (1.5) angle of projection towards the ground. Said mirrors (1.1) are therefore heliostats (1.1).

Said concentrated light rays (1.14) are driven to said heat exchanger or steam generator (1.8) ate the end of the light rays concentrating process. Said heat exchanger or steam generator (1.8) collects the heat from the light rays (1.14), and transfers it to the energy storage fluid comprised in the energy storage fluid tank (1.7). In this case, said heat exchanger or steam generator (1.8) is comprised inside the energy storage fluid tank's structure (1.7). The primary circuit pipe (1.16) can drive primary circuit fluid, preferably water, through a pipe (1.16), and by the force of an electric pump (1.15), through said heat exchanger or steam generator (1.8). So, said primary circuit (1.16) can collect the heat form said light rays, and convert said fluid into steam when flowing through said heat exchanger or steam generator (1.8), before being driven through the exit pipe (1.17) in order to drive a steam turbine. Said steam turbine would in turn drive a generator to generate electricity.

A flat reflection mirror (2.1) can be comprised in order to drive said light rays towards the top surface of said heat storage tank (2.4), over which said heat exchanger or steam generator (2.3), is comprised to collected said heat. So, said heat can be simultaneously transferred to the energy storage fluid inside said tank (2.4), and to the primary circuit water pipe (1.16), by the means of said heat exchanger or steam generator (2.3). A vertical member (2.2) can also be comprised behind said flat reflection mirror (2.1) in order to protect the outskirts of the system from any light rays in case of accidental undesired light projection. Said vertical member (2.2) is a safety design feature.

Said concave or Piano concave mirrors (1.2) are comprised projecting partly towards the solar ray collection heliostat (1.1), and partly towards the ground surface (1.18), while said convex or Plano convex mirrors (1.9), face partly towards the lower flat reflection mirror (1.13), and partly upwards towards said flat safety mirror structure (1.3) comprised over it (1.9). At all times, said concave or Plano concave mirrors (1.2) are comprised above said convex or Plano convex mirrors (1.9). Said concave or Plano concave mirrors (1.2) can also be comprised upside down, but the access to the light rays would be severely diminished for the light collection heliostats (1.1), due to the positioning of the convex or Plano convex mirrors (1.9), as well as due to the upper structural part of said concave or Piano concave mirror (1.2), which would restrict light ray access to the lateral light collection heliostat (1.1) if the position of the sun drives the light rays (1.5) at a shallow angle compared to the ground surface level (1.18).

Said Plano concave or concave mirrors (1.2) can also be comprised more laterally towards the right or towered the left of the next flat solar ray collection heliostat (1.1). Said design is suitable if the solar ray concentration system layout has to avoid an obstacle along the path, such as a geological obstacle such as a hill or rocks. In this case, the upper (3.1) and lower (3.4) flat reflection mirrors are not only inclined upwards at 45 degrees, but are also inclined sideways at the required angle which is needed towards the required side in order to move sad light rays (1.14) to the new required position of projection. So, said light rays can be driven as required to the laterally positioned components.

Said lower flat reflection mirror (3.4) is comprised on the original position, while the upper flat reflection mirror (3.1) is comprised on the newly positioned line of light driving and reflection, such that the lower flat mirror (3.4) drives said light rays (1.14) to the upper flat mirror (3.1) while said next flat collection heliostat (1.1) is positioned to a lateral side compared to the previous light collection heliostat (1.1). The upper flat mirror (3.1) is sustained by a horizontal downward inclined member (3.2), while said lower flat reflection mirror (3.4) is sustained in its position by a horizontal member (3.6). Both flat mirrors (3.1, 3.4) are sustained by said vertical sustaining members (3.5), while said horizontal member (3.3) is sustained in its required position by said vertical members (3.5).

Said electrical actuators are comprised on said vertical member (1.11), and hence under each separate flat solar ray collection heliostat (1.1), and control the orientation of said mirrors (1.1) in all x, y, and z axis simultaneously, according to the direction of projection of the solar rays (1.5), such that said solar rays will always be reflected and driven towards said concave or Piano concave mirrors (1.2) at all times.

The solar ray concentration system can also comprise the heat exchanger or steam generator (4.1) transferring the collected heat to the primary circuit pipe (4.3) and the energy storage fluid pipe (4.2) simultaneously. With said design, said heat exchanger or steam generator (4.1) supplies heat to said primary circuit water in its pipe (4.3), and supplies heat to the energy storage fluid comprised in said tank (5.1) simultaneously. Said energy storage fluid can also be driven by an electric pump (4.4).

Said power generation system can also comprise its heat exchanger or steam generator inside a closed pipe (5.2) which flows under the last concave or Plano concave mirror (1.2), and which also comprises said primary water circuit pipe (5.3) and said energy storage fluid pipe (5.4) simultaneously inside said pipe (5.2). So, the primary circuit (5.3) can collect the required heat, while the energy storage fluid can be simultaneously driven to said energy storage fluid tank (5.1) with the newly collected heat inside. Both pipes (5.3, 5.4) comprise their own septate ducting and pipes, and both the Piano concave or concave mirrors (1.2), as well as said pipe structure (5.2) which projects along the focal point of said concave or Plano concave mirror (1.2), are static positioned structures.

Said pipe (5.2, 6.3) projects just along the focal point of the last concave or Plano concave mirror (1.2, 6.4), in order to maximise the efficiency of heat collection of the concentrated light rays (1.14), and to transfer said heat simultaneously to both the primary water circuit pipe (5.3, 6.1) and the energy storage fluid pipe (5.4, 6.2). Said concave or Plano concave mirrors (1.2, 6.4) and said focal point positioned pipe (5.2, 6.3) are all static structures, as are the convex or Plano convex mirrors (1.9) and the flat reflection mirrors (1.4, 1.13, 3.1, 3.4).

Said concave or Plano concave mirrors (1.2, 6.4) are comprised projecting downwards, as if it rains, no rainwater could easily be comprised over the surface of the concave or Plano concave mirrors (1.2, 6.4), hence maximising the light reflection efficiency of said concave or Plano concave mirrors (1.2, 6.4). Simultaneously for the convex or Plano convex mirrors (1.9), said horizontal projecting component (1.3) which is sustained by the outer part of the concave or Plano concave mirror (1.2, 6.4) comprised at the place concerned, protects said convex of Plano convex mirror (1.9) from the rainwater, hence avoiding any undesired light reflections after the rain due to the rainwater reflecting said light rays onto undesired accidental directions. This design hence maximises the working efficiency of said concave or Plano concave mirrors (1.2, 6.4), as well as that of said convex or Plano convex mirrors (1.9, 6.3) simultaneously.

A glassed structure can also be comprised all along the power generation system, hence offering a full transparent shield all over the entire power generation system. This design would hence protect said power generation system from undesired rain water or snow. Said glassed structure should be made of steel members, with clear glass panels being comprised in between said members, hence protecting said mirrors (1.1, 1.9, 1.2, 6.4, 1.4, 1.13, 3.1, 3.4) from environmental damages. An electrically powered de-icing system can also be comprised on the flat solar ray collection heliostats (1.1), the convex or Plano convex mirrors (1.9), the concave or Plano concave mirrors (1.2, 6.4), and the flat reflection mirrors (1.4, 1.13, 3.1, 3.4).

Said system power generation system design comprised in this invention offers the lowest construction and maintenance cost solution for concentrated solar power, but does however require a larger ground surface (1.18) area, hence adding costs from that direction. The design which comprises a heat exchanger or steam generator comprised inside a pipe (5.2, 6.3) comprised at the focal point of said last concave or Plano concave mirror (1.2, 6.4), reduces the construction and maintenance costs of the CSP system dramatically, as no heat exchangers or steam generators (1.7, 2.4, 4.1) have to be separately built and maintained beside said solar ray concentrating system.

The primary circuit fluid should preferably be water, while the energy storage fluid should preferably be pressurised steam, molten salt, or synthetic oil. Said flat reflection mirrors (1.4, 1.13, 3.1, 3.4) should preferably be inclined at 45 degrees vertically. Said flat reflection mirror (2.1) which reflects said concentrated light rays (1.14) downwards should also be preferably inclined at 45 degrees vertically. Said mirror inclination will reduce the required space needed for the light reflections of said mirrors (1.4, 1.13, 3.1, 3.4, 2.1) to a minimum.

Said convex or Plano convex mirrors (1.9) should always comprise a lower radius of curvature than said concave or Plano concave mirror (1.2, 6.4) in order for said convex or Plano convex mirror (1.9) to reflect efficiently the concentrated light rays towards said flat reflection mirrors (1.4, 1.13, 3.1, 3.4). Said convex or Plano convex mirrors (1.9) should also be comprised closer to said concave or Plano concave mirror (1.2, 6.4) than the focal point of said concave or Plano concave mirror (1.2, 6.4), such that said concave or Plano concave mirror (1.2, 6.4) can concentrate efficiently the light rays towards said convex or Plano convex mirror (1.9). Said convex or Plano convex mirror (1.9) then reflects said light rays towards said flat reflection mirrors (1.4, 1.13, 3.1, 3.4). Said design should be comprised in front of each concave or Plano concave mirror (1.2, 6.4) comprised on said power generation system.

Each of said flat solar ray collection heliostats (1.1) are attached to a rotational pivot (1.19), which can rotate each of said heliostats (1.1) along a vertical axis and a horizontal axis simultaneously. So, said pivots (1.19) can rotate each of said heliostats (1.1) sideways, as well as upwards or downwards, hence positioning said flat heliostats always accurately opposite to the solar rays (1.5) which project over the solar ray collection system. This allows said system to constantly drive the incoming solar rays into the concave or Plano concave mirrors (1.2) for light ray concentration.

Said pivots (1.19) are actuated by a computerised control system, which sends commands to said pivot's (1.19) actuators for small corrections according to the orientation of the projection of said light rays (1.5). Said computerised control system is programmed for at least the length of an entire year, with a timed light ray orientation and projection envelope for said light rays (1.5), saved for each single day on said computer's database. So, said control computer can constantly control the orientation of said flat light ray collection mirrors (1.1) by actuating said rotational pivots (1.19) continuously, each time actuating a small correction, hence making said mirrors (1.1) heliostats (1.1). Said computerised control system can also function with a sensor which senses the orientation of the projecting solar rays (1.5) over the solar ray collection system. Said computer can either function with the programmed data for each date and time on its database, or with said sensor or with a solar clock, in order to determine accurately and constantly, the orientation of the projecting light rays for each single day of the year concerned.

Said solar ray concentration system can also be comprised on rough terrain (7.6). In this case, the railing which are comprised on the highest points (7.4) will be comprised higher than said railings which are comprised along the lower points (7.1). Flat reflection mirrors (7.5) comprised at the end of each system, drive the light rays upwards or downwards to the level of projection towards the next concave or Plano concave mirror (7.2), depending on the height of the next railings (7.4) comprised to the railings (7.1) of the system concerned. Said flat reflection mirrors (7.5) are inclined upward to drive light rays up, or downwards to drive light rays down, depending on the difference in height of the railings (7.1, 7.4) on said rough terrain (7.6). Said lower flat reflection mirror (7.5) is comprised just in front of the prior convex or Plano convex mirror (1.9). Said upper flat mirror (7.5) is comprised just in front of the next concave or Plano concave mirror (7.2) concerned. Said light collection heliostats (7.3) are controlled and oriented onto the required direction by computer controlled rotational pivots (7.7). Said pivots (7.7) actuate said mirrors (7.3) onto the required orientation continuously.

Said computerised control system controls said solar ray collection heliostats (7.3) along both x, y and z axis, and said commands are hence sent to the actuators, which in turn rotate said rotational pivots (7.7).

Said supporting railings (8.1) which support said mirrors (7.2, 8.2, 8.5) into position, can be moved from different positions due to the rough terrain (8.4) present, such that the railings (8.3) would be comprised at different altitudes along the solar ray collection system. If said light rays need to be moved down after being concentrated, said light rays are driven by a set of flat reflection mirrors (8.2, 8.5), with both mirrors facing downwards. The inclinations of said mirrors (8.2, 8.5) should be 45 degrees preferably. The top mirror (8.2) faces said incoming light rays, while the lower mirror (8.5) faces the next concave or Plano concave mirror (7.2), towards which it (8.5) drives the light rays.

Said flat reflection mirrors (8.2, 8.5) are comprised between said previous concave or Plano concave mirror (7.2) and said next flat light ray collection heliostat (7.3). Said design assures that said light rays are positioned suitably to be concentrated again in the next light concentration system by said next concave or Plano concave mirror (7.2).

Another design can comprise a set of two pairs of flat reflection mirrors (9.1, 9.2, 9.3) being comprised on the same place as said flat mirrors (8.2, 8.5), with one pair of flat mirrors (9.1) comprised over the lower pair (9.2, 9.3) of flat mirrors. This system design allows the moving of the light ray projection positions, no matter whether these are very small or very large, with total accuracy. As all flat mirrors (9.1, 9.2, 9.3) are inclined at 45 degrees, said light rays are driven around said set of mirrors (9.1, 9.2, 9.3), being driven along the inside surfaces. Said light rays are driven by the lower light collection mirror (9.2) up onto said upper two flat mirrors (9.1), in order to be finally driven onto said lower lateral mirror (9.3). Said mirror drives said light rays onto the required position of projection, towards said next concave or Plano concave mirror (7.2). Said pairs of mirrors always comprise one flat mirror (9.2, 9.4) being oriented with its surface at 90 degree perpendicular to that of the lateral flat mirror (9.3, 9.5).

If said light rays have to be moved to a lower point, said lateral mirror (9.3) is sustained with its upper edge (9.3) attached to a lower point along the back surface of the light collection mirror (9.2). However, if said light rays have to be moved to an upper point, said lateral mirror (9.5) is mounted such that it is the light collection mirror (9.4) that is sustained by its upper edge (9.4) to a pint along the back surface (9.5) of said lateral mirror (9.5). Said system designs are always comprised along the lower pairs of flat mirrors (9.2, 9.3, 9.4, 9.5). If said light rays have to be moved to a much lower point, the distance between the top pairs (9.1) and the lower pairs (9.2, 9.3, 9.4, 9.5) can be increased to the required height, according to design requirements.

However, if said light rays have to be moved to a point which is much higher, a set of two flat mirrors (7.5) is the moist suitable design option.

Said light ray collection and concentration system can comprise both sets of top (10.1) and bottom (10.2) flat reflection mirrors, as well as said sets of top pairs of flat mirrors (10.3) being comprised over said sets of lower flat mirrors (10.4, 10.5), such that said system is comprised on a different location. So, designers can choose the required light reflection system according to the change in height of the light rays required, as well as the height change required for said horizontally projected light rays. This depends purely on design specifications. Said designers can hence use one system (10.1, 10.2) or the other (10.3, 10.4, 10.5) on different locations along said light ray collection systems, according to design requirements. Said light delivery flat mirror (10.5) is attached at 90 degree perpendicularly to a place along the rear surface of the lower light collection mirror (10.4) in this case, as said light rays have to be moved slightly downwards.

Said solar light rays can be also efficiently delivered to said lower flat heliostats (11.3), even if said light rays project towards the back of said flat mirrors (11.3). This can be achieved by comprising a flat heliostat (11.1) being comprised over the upper edge of each concave or Plano concave mirror (11.4). So, if said solar light rays project oppositely to said lower heliostat (11.3), said upper heliostat (11.1) reflects said light rays, and drives these directly towards said lower heliostat (11.3). Said lower heliostat (11.3) then drives said light rays towards the concave or Plano concave mirror (11.4) which is comprised in front of said lower flat heliostat (11.3). So, said system design maximises the surface area of the mirrors which reflect light rays, and hence maximises the light ray concentration being driven towards said lower heliostat (11.3), which is then driven to the concave or Plano concave mirror (11.4) directly in turn.

Said oppositely facing upper flat heliostats (11.1) are each mounted over said upper edge of said lower positioned concave or Plano concave mirror (11.4), and are sustained by a set of vertical members (16.4), which are sustained by the sustaining railings (11.2). Said railings (11.2) sustain said structures (16.4) and said mirrors (11.4) at each light rays collection section. Said system can also be comprised on rough terrain (11.5), without any matter of how the terrain is. Said flat heliostats (11.1, 11.3) can always be arranged to collect the maximum light ray concentration, according to the position of the sun, and the reaction of projection of said light rays. The rotational pivots (11.7) of said upper flat heliostats (11.1) assure that said flat heliostats (11.1, 11.3) are always correctly oriented, such that the light rays are always driven towards said lower flat heliostats (11.3), according to the position of the sun. Said rotational pivots (11.6) of said lower flat heliostats (11.3) assure that said light rays are always reflected towards the frontal positioned Plano concave or concave mirror (11.4), without any matter of the sun's position. Said rotational pivots (11.6, 11.7) are constantly controlled by actuators, which are controlled all day long by a computerised system. Said pivots can rotate each of said flat heliostats (11.1, 11.3) individually about all x, y and z axis, according to the sun's position and the direction of projection of its light rays towards the ground, such that said heliostats (11.1, 11.3) are always properly oriented.

If said light rays should be driven to a slightly lower position of projection, said upper flat mirrors (12.2) with said light collection (12.3) and light delivery (12.4) mirrors, can perform the job without any issue. Said flat mirrors (12.2, 12.3, 12.4) are always mounted over each other in two pairs (12.2, 12.3, 12.4), with each pair (12.2, 12.3, 12.4) comprising two flat mirrors (12.2, 12.3, 12.4) being mounted at 90 degrees perpendicularly to each other. In this case, said light delivery mirror (12.4) is mounted to the rear surface of the light collection mirror (12.3). Said sustaining railings (12.1) sustain the structural components constantly, and said rotational pivots (12.5, 12.6) assure that said flat heliostats (11.1, 11.3) are always oriented towards the required directions, with all lower (12.5) and upper (12.6) heliostat control pivots operating separately and individually.

Said solar ray collection systems can be comprised along supporting members (13.1) which comprises a continuous height along the entire system, provided that said terrain is not rough. So, said flat lower heliostats (13.2) can be supported by the required rotational pivots (13.4), while said upper heliostats (13.3) can be in turn supported by the required rotational pivots (13.5). Each rotational pivot (13.4, 13.5) is supported by the supporting members (16.4) for said upper heliostat (13.3), and separately by said supporting members (16.3) for said lower heliostats (13.2) respectively. Both of said supporting members (16.3, 16.4) are sustained into position by the supporting members (13.1). Each rotational pivot (13.4, 13.5) of each heliostat (13.2, 13.3) is operated separately and individually by an actuator, which follows the commands of the computerised heliostat control system.

Said upper flat heliostats (14.1) can be inclined such that the flat surfaces of said heliostats (14.1) project at 90 degrees perpendicularly to the direction of projection of said solar light rays (14.2). Said design feature should only be used by the control system if said solar rays (14.2) project directly towards the lower heliostats (14.3) at angles of 45 degrees to the ground or lower. In that case, the computerised control system will instruct the actuators of the rotational pivots (13.5) of the upper heliostats (14.1) to incline the upper flat mirrors (14.1), such that these (14.1) comprise the surfaces projecting just perpendicularly to the incoming solar rays (14.2). Said design will hence minimise the obstruction of said upper heliostat (14.1), such that said light rays can reach said lower heliostats (14.3) with a maximum light concentration, hence offering a maximum efficiency. Said rotational pivots (13.4, 13.5) are constantly controlled by actuators, which are constantly controlled by a computerised control system, which sends commands to said actuators, in order to execute minor corrections in orientation to said flat heliostats (14.1, 14.3). Said actuators can rotate said pivots (13.5) of said upper heliostats (14.1) to the required positions if required.

Said light rays would project directly towards said lower heliostat (14.3), which would be accurately inclined by said rotational pivots (13.4), such that it (14.3) would drive the light rays towards the frontal positioned concave or Plano concave mirror (11.4). Said upper heliostats (14.1) should in this case be inclined at 90 degrees perpendicularly to the direction of projection of said light rays (14.2). This would maximise the light collection and reflection efficiencies of said lower heliostats (14.3), towards the concave or Plano concave mirror (11.4) concerned.

Said supporting members (14.4) support all systems, including concave or Plano concave mirrors (11.4), as well as said heliostats (14.1, 14.3). The terrain on which said system is comprised, can be rough, with said system performing perfectly as required, but however with the need of flat reflection mirror systems (10.1, 10.2, 10.3, 10.4, 10.5) in order to position the light rays at the required position of projection.

Said upper inclined heliostats (15.1) can be inclined at 90 degrees perpendicularly to the direction of projection of the solar rays (15.3), such that said light rays are reflected by said lower flat heliostats (15.2) towards the frontal petitioned concave or Plano concave mirror (15.4), with no matter how rough or irregular the terrain over which the system is comprised, is. Said upper heliostat mirrors' (15.1) inclination maximises the light rays collected and reflected by said lower heliostats (15.2), hence maximising the light concentration of said system, and hence maximising the efficiency of said system. This would mean a maximum system power generation efficiency, with no matter where the sun is positioned, or at which direction are the solar light rays (15.3) projecting towards the ground.

Said lower heliostats (16.1) are supported by vertical members (16.3), with one vertical projecting member (16.3) at each side of said mirrors (16.1). Each of said vertical members (16.3) is sustained by the supporting member (16.5) comprised at the side concerned. One supporting member (16.5) at each side is comprised to sustain the required systems into place. A similar design is present for the upper heliostats (16.2), which are sustained by a vertically projecting member (16.4) at each side of said mirrors (16.2). Each side comprises a vertically projecting member (16.4) which is sustained into the required position by said horizontally projecting sustaining members (16.5). One horizontally sustained member (16.5) is comprised at each side. As one member (16.4) is comprised at each side, said sustained system does not obstruct the view of said lower heliostat (16.1) towards said concave or Plano concave mirror (11.4). Said members (16.4) sustain said upper heliostats (16.2). Said vertical members (16.4) can also sustain the upper prat of said concave or Plano concave mirror (11.4) if required, without obstructing its frontal view to said lower heliostat (16.1), hence sustaining the upper heliostat (16.2) as well simultaneously.

Said upper heliostats (16.2) should be inclined at 90 degrees perpendicularly to the incoming solar rays (16.6) if these (16.6) project directly towards said lower heliostat (16.1), hence minimising any obstruction of said upper heliostat (16.2) on the incoming solar rays (16.6). This would maximise the efficiency of light ray collection by said lower heliostat (16.1), and hence maximise said system's efficiency. The horizontally projecting sustaining members (16.5) can span along the entire system length if the terrain is flat or unchanged in height along the length of said light ray collection system. Said system can also be comprised on flat terrain hence saving the number of horizontally protecting sustaining members (16.5) that are required.

The upper flat heliostats (17.3a, 17.2b) are attached to the rotational pivots (17.11a, 17.11b) each, with each of said pivots attached to actuators. Said systems (17.3a, 17.1 1a, 17.2b, 17.11b) are each sustained onto the required positions by sets of two vertically projecting members (17.5a, 17.5b) for each upper flat heliostat (17.3a, 17.2b). Said vertically projecting members (17.5a, 17.5b) are sustained by a horizontally projecting sustaining member (17.6a, 17.6b) at each side. Said vertically projecting sustaining members (17.4a, 17.3b) sustain the supporting members (17.6a, 17.6b) on the ground surface at each side, hence comprising one vertical member (17.4a, 17.3b) for each horizontally projecting member (17.6a, 17.6b) at each side.

If the position of horizontal projection of said light rays (17.7a) should be moved slightly downwards, said light rays (17.7a) are driven along the surface of the flat collection mirror (17.9a), which drives said light rays to the tow upper flat driving mirrors (17.1a, 17.2a), with said last driving mirror (17.2a) finally delivering said light rays (17.7a) vertically downwards towards the light delivery mirror (17.10a). Said mirror (17.10a) drives said light rays (17.8a) as required horizontally, but at a lower point of projection. Said set of two upper flat mirrors (17.1a, 17.2a) are inclined at 45 degrees to the sustaining members (17.6a), and are comprised with surfaces being at 90 degrees perpendicular to each other. Said upper set of flat mirrors (17.1a, 17.2a) comprises the two mirrors (17.1a, 17.2a) supported to each other at the upper edges, and sustained by both the main vertically projecting supporting member (17.4a) and the horizontal member supported (17.6a) vertically projecting member (17.5a). Said upper flat mirrors (17.1a, 17.2a) are preferably supported over the supporting horizontal member (17.6a).

The lower set of mirrors (17.9a, 17.10a) are comprised just under the upper set of mirrors (17.1a, 17.2a), and preferably under the horizontal supporting member (17.6a). Said mirrors (17.9a, 17.10a) are flat. Said mirrors (17.9a, 17.10a) are supported by the main vertical supporting member (17.4a) which supports the lower edge of the light rays collection mirror (17.9a), and the horizontally projecting sustaining member (17.6a) which supports the upper edge of the light collection mirror (17.9a). Said light delivery mirror (17.10a) is sustained by comprising its upper edge mounted to the back surface of the light collection mirror (17.9a). Both mirrors (17.9a, 17.10a) are inclined at 90 degrees each, and the surfaces (17.9a, 17.10a) project at 90 degrees perpendicular to each other. Said light delivery mirror (17.10a) drives said light rays (17.8a) horizontally away at the required point of projection.

If said light rays (17.7b) should be moved to a slightly higher position of horizontal projection, a similar designs comprised, but however with said light collection mirror (17.8b) being mounted to the back surface of the light delivery mirror (17.9b). So, in that case, said light rays (17.7b) are driven towards the light collection mirror (17.8b), which drives said light rays vertically upwards to the set of two light driving mirrors (17.1b, 17.4b). Said mirrors (17.1b, 17.4b) drive the light rays (17.7b) horizontally over the light delivery mirror (17.9b), such that said lateral mirror (17.4b) finally drives said light rays (17.7b) vertically downwards to the light delivery mirror (17.9b). Finally said light delivery mirror (17.9b) finally drives said light rays (17.10b) horizontally again along the same direction as previously, but along the required point of projection, which in this case is slightly more upwards. So, said light delivery mirror (17.9b) drives finally said light rays (17.10b) horizontally as required, and away from said system.

Said upper flat mirrors (17.1b, 17.2b) are sustained to each other at the upper edges, and are preferably sustained over said supporting horizontal members (17.6b) by said main vertically projecting supporting member (17.3b) and said horizontal member (17.6b) supported vertical member (17.5b). Said last mentioned vertical member (17.5b) in turn supports the upper flat heliostat (17.2b) concerned. The lower edge of said upper light collection mirror (17.1b) is sustained by said main vertical member (17.3b), while the lower edge of the upper light delivery mirror (17.4b) is sustained by said vertical member (17.5b), which is sustained by said horizontal member (17.6b) and which sustains the upper heliostat (17.2b). Said upper mirrors (17.1b, 17.4b) attach to each other at the upper edges, and are positioned at 90 degrees perpendicularly to each other (17.1b, 17.4b).

The lower set of flat mirrors (17.8b, 17.9b) are comprised just under the upper set of flat mirrors (17.1b, 17.4b). Said mirrors (17.8b, 17.9b) are both flat and are attached to each other, with the light collection mirror (17.8b) comprising the surface projecting at 90 degrees perpendicular to the surface of the lateral light delivery mirror (17.9b). Said light collection mirror (17.8b) is supported at the lower edge by the main vertical projecting member (17.3b), which supports the structure over the ground floor, while the light delivery mirror (17.9b) is sustained by its upper edge to the horizontally projecting sustaining member (17.6b). Said mirrors (17.8b, 17.9b) should preferably be comprised under the horizontally projecting supporting member (17.6b). The light collection mirror (17.8b) attaches to the back surface of the light delivery mirror (17.9b). This allows the surface of said light delivery mirror (17.9b) to be comprised at a slightly higher point compared to said light collection mirror (17.8b), hence driving the resulting light rays (17.10b) as horizontally a before, but along a slightly higher point of projection compared to the previous situation (17.7b).

Said sets of two pairs of flat mirrors (17.1a, 17.2a, 17.1b, 17.4b) mounted over each other (17.9a, 17.10a, 17.8b, 17.9b) allow the positions of projection of said light rays to be moved by a very small distance either upwards or downwards, in order for said light rays to be driven along the required direction towards the next lower flat heliostat (13.2, 16.1) if said next system is positioned more upwards or downwards. Said heliostats (13.2, 16.1, 13.3, 16.2) are both oriented in all x, y and z axis according to the sun's position at all times by the mans of a computerised control system, which feeds signals to the actuators which actuate the rotational pivots (13.4, 13.5) that actuate said heliostats (13.2, 16.1, 13.3, 16.2).

Said supporting members (18.1, 18.10) are supported by the supporting horizontal members (18.7, 18.8), which support the entire structure over the ground surface. So, the sets of flat reflection mirrors (18.2) are hence supported by said supporting members (18.8), as are perpendicular members (18.10) which sustain the lower heliostats (18.10). The supporting member (18.5) which sustains said vertical member that sustains said upper heliostat (18.4), is also supported by said sustaining members (18.8). Said design comprises flat reflection mirrors (18.6, 18.11, 18.9, 18.12) that move the light rays to a lateral position of projection. Said lateral system is sustained by perpendicular projecting members (18.7), which project perpendicularly to the sustaining members (18.8).

So, the light collection mirror (18.6) moves said light rays upwards, and simultaneously to the side by being inclined sideways. So, the light driving mirror (18.11), which is comprised over the light collection mirror (18.6), drives the light rays along the required sideways path, which is positioned laterally to the previous path, and is comprised between the two sustaining members (18.8). If said light rays should be moved to the other sideways direction, said flat mirrors (18.9, 18.12) are inclined sideways towards the opposite direction, such that said light collection mirrors (18.12) drive said light rays to the side, hence along said light delivery mirror (18.9) to deliver the light rays projecting along the required path. Said light delivery mirror (18.9, 18.11) is comprised over the light collection mirror (18.6, 18.12). However, said light collection mirrors (18.6, 18.12) can be comprised over the light delivery mirrors (18.9, 18.11) if the ground surface's topology and geometry requires the light rays to be moved downwards to a lower position of horizontal light ray projection.

The surfaces and edges of the light collection mirrors (18.6, 18.12) project just in parallel to the surfaces and edges of the light delivery mirrors (18.9, 18.11), or vice versa, but the design should comprise both light collection (18.6, 18.12) and light delivery (18.9, 18.11) mirrors in parallel to each other, in order for the light rays to still project toward the same direction of projection after being shifted horizontally sideways.

The pivots (19.1) which sustain the upper heliostat (19.6), are comprised in front and over the Plano concave or concave mirrors (19.2) for the case of each light collection and concentration system. The Plano convex or convex mirrors (19.5) are comprised under said upper heliostat (19.6). Said systems can be positioned one beside the other, and not only projecting in parallel to each other, but also projecting perpendicularly to each other at any angle suitable. So, said systems can be comprised projecting in parallel to each other (19.2, 19.7), or perpendicularly (19.13, 19.15) to each other. Said light rays (19.16) of all systems can be reflected by flat mirrors (19.4, 19.10, 19.14) towards a heat exchanger or steam generator (19.12), which transfers the heat to both primary and/or secondary circuits. Said circuits flow through intake pipes (19.9) into said heat exchanger or steam generator (19.12), and flow out of the system with the heat collected, through exit pipes (19.8). The flat mirrors (19.4, 19.10, 19.14) are sustained over the ground by vertically projecting members (19.3). The systems (19.7) which project directly towards said heat exchanger or steam generator (19.12) do not need any flat reflection mirrors to guide the light rays. The mirrors (19.2, 19.5, 19.6) are sustained by the latterly positioned sustaining members (19.11), which sustain the components of each system (19.2, 19.7, 19.13, 19.15) over the ground surface.

The sideways inclined flat light reflection mirrors (20.2, 20.3) are sustained by the rear vertically projecting member (20.1), which is comprised just behind these (20.2, 20.3). The light collection mirror (20.3) is comprised under the light delivery mirror (20.2). However, said light delivery mirror (20.2) can be a light collection mirror if said light rays need to be moved downwards due to alterations in terrain height due to terrain topology. In this case, the light collection mirror (20.2) would be comprised under the light delivery mirror (20.3). It all depends on design requirements, and on terrain topology and geometry.

The light concentrating Plano concave mirrors (21.1) can be sideways inclined, such that the light rays are moved sideways to a lateral point of horizontal light ray projection, where said light rays are then driven by sideways inclined Plano convex mirrors (21.4). Said Plano convex mirrors (21.4) are comprised with the surfaces and edges (21.4) projecting in parallel to the surfaces of the Plano concave mirrors (21.1). The protection component (21.2) is comprised between the upper edge of the Plano concave mirror (21.1) and the vertical member (21.3) which sustains said upper heliostat. Said designs can also be achieved with concave mirrors (21.1) that project directly towards convex mirrors (21.4), hence concentrating the light rays by said concave mirrors (21.1) towards convex mirrors (21.4), as long as these (21.1, 21.4) are inclined to the required sideways angle, with both mirrors (21.1, 21.4) being inclined at exactly the same angle to the side.

The sideways inclined concave or Plano concave mirrors (22.2) are inclined sideways, but project exactly towards a convex or Plano convex mirror (22.1), such that the edges of both mirrors (22.1, 22.2) project in parallel to each other. With said design, said light rays are shifted to a lateral position of horizontal projection, hence being projected along the required new path, but without changing the direction of horizontal projection. Said convex or Plano convex mirrors (22.1) are sustained by horizontally projecting members (22.6) which sustain the mirror's (22.1) outer edge, and attach to the main sustaining member (18.8) of the side concerned. The same feature is comprised if the light rays should be shifted towards the opposite direction horizontally. So, the concave or Plano concave mirrors (22.5) are positioned inclined sideways, and projecting towards a Plano convex or convex mirror (22.3). Said convex or Plano convex mirror (22.3) comprises the outer edges being aligned with the sustaining members (18.8) of the new horizontal light ray projecting path, hence driving the light rays through the required horizontal light driving direction. The outer edge of the convex or Plano convex mirror (22.3) is sustained by a horizontally projecting member (22.4), which sustains said convex or Plano convex mirror (22.3) in the required direction, and attaches to the lateral sustaining member (18.8) of the side concerned. With said design, the light rays are hence concentrated by said sideways inclined concave or Plano concave mirrors (22.2, 22.5) to the sideways inclined frontal projecting convex or Plano convex mirrors (22.1, 22.3), which drive the light rays back towards the original direction of projection, but along a sideways shifted point of projection.

The light ray collection and concentration systems (23.1) can comprise flat mirrors (23.3, 23.5) which drive the concentrated light rays (23.4) towards a heat exchanger or steam generator (23.6). The flat mirrors (23.3, 23.5) are sustained into the required position by vertically projecting members (23.2) that are comprised attaching to the back surfaces of said flat mirrors (23.3, 23.5). Said small flat mirrors (23.3, 23.5) can only be used if the light concentrating mirrors (23.1) used by said light collection and concentration systems (23.1), are concave mirrors, hence minimising the diameter of the light ray beam which is driven out of said systems (23.1). A plurality of systems (23.1) can be hence comprised around the heat exchanger or steam generator (23.6), not only projecting in parallel to each other (23.1), but also perpendicularly to each other, and around said heat exchanger or steam generator (23.6) to maximise heat transfer capacity.

The concave mirrors (24.2) project and concentrate the light rays towards a convex mirror (24.5) for each concave mirror (24.2). The protection member (24.1) is comprised at the point where the vertically projecting sustaining member (24.3) projects, and unites with the upper edge of said concave mirror (24.2) for the case of each mirror (24.2). The convex mirrors (24.5) are sustained by vertically projecting members (24.6) that attach said mirrors (24.5) to the side positioned sustaining horizontal members (11.2).

Sad concave mirrors (24.2) can also be Plano concave mirrors (24.2) that are inclined sideways, hence being comprised in front of Plano convex mirrors (24.5) that are also inclined sideways. This design hence allows said light rays to be moved to lateral positions of projection, without adding any further systems, or changing the orientation of the flat reflection mirrors (10.1, 10.2, 10.3, 10.4, 10.5) at any time.

The vertically projecting side sustaining members (25.1a) sustain the upper heliostat (25.2a) by the sustaining members (25.3a), while supporting the lower positioned concave or Plano concave mirror (25.5a) by the horizontally projecting member (25.4a) which sustains it (25.5a). Said horizontally projecting members (25.4a) are sustained by the vertically projecting sustaining members (25.1a). The lower positioned Plano concave mirror (25.6a), is sustained to the horizontally projecting members (25.4a), and projects directly towards said upper positioned Plano concave mirror (25.5a).

The upper heliostat (25.1b) is sustained by the sustaining horizontal member (25.6b) that is sustained by the vertically projecting sustaining members (25.1a), which hence sustain said upper heliostat (25.1b). The lower heliostat (25.2b) is sustained by the horizontally projecting member (25.7b), which is sustained by the vertically projecting members (25.3b) at the two sides. On each side, said vertical members (25.3b) are sustained to the horizontally projecting members (25.4b), which are comprised along each side of said components (25.1b, 25.2b). The flat reflection mirrors (25.8b, 25.9b), comprising the upper (25.8b) and lower (25.9b) flat reflection mirrors, are sustained to the main vertically projecting sustaining member (25.5b), which is sustained over the ground surface, and also supports the horizontally projecting supporting members (25.4a, 25.4b) at each side, on the required positions at all times.

If said light rays (26.3) require to be reflected to be moved towards a deferent horizontally projecting direction, said light rays (26.3a) can be driven under the light ray concentrating concave or Plano concave mirror (26.2a), and then be reflected by an upward inclined flat reflection mirror (26.1a). Said mirror (26.1a) drives said light rays (26.3a) upwards towards another inclined flat reflection mirror (26.5a), which finally drives said light rays (26.3a) onto a new horizontally projecting path of projection, but along a horizontal line of projection. Said system can be used to simultaneously move the position and direction of projection to another point for said light rays (26.3a), while moving said light rays (26.3a) to an upper position of projection. Said components (26.1a, 26.5a) are sustained by the horizontally projecting sustaining members (26.4a), which are comprised along the side edges of said components (26.1a, 26.5a).

Alternatively, said light rays (26.3b) can be driven towards a flat reflection mirror (26.4b), which is comprised at 90 degrees perpendicularly to the ground level surface, hence driving the reflected light rays (26.1b) towards a simple set of flat reflection mirrors (26.2b). Said set of flat reflection mirrors (26.2b) comprises two mirrors (26.2b) being comprised at the same inclined angles over each other, and can hence move said light rays (26.1b) as required upwards, or even downwards if required due to rough terrain topology requirements. This depends on the positions of the light collection (27.8b) and delivery (27.5b) mirrors. If said light collection mirror (27.8b) is comprised over the light delivery mirror (27.5b), said light rays (26.1b, 26.3b) are moved down, but however, if said light delivery mirror (27.5b) is over the light collection mirror (27.8b), said light rays (26.1b, 26.3b) are moved upwards. Said components (26.2b, 26.4b) are sustained by the horizontally projecting sustaining members (26.5b), which are comprised along the side edges of said components (26.2b, 26.4b).

The light rays can hence be reflected by said flat inclined reflection mirror (27.2a), which will drive said light rays (27.5a) into an upward motion of projection. Said light rays (27.5a) are then reflected by a flat inclined reflection mirror (27.4a), which drives said light rays into a horizontal direction of projection again. The components of the system (27.2a, 27.4a) are sustained by the horizontally projecting side members (27.3a), which are sustained over the ground surface by the vertically projecting supporting members (27.1a). Said vertical members (27.1a) also support the flat reflection mirror (27.2a) concerned.

Said flat reflection mirror (27.2b) can also be comprised being perpendicular at 90 degrees to the ground level surface, and be sustained by the vertically projecting sustaining members (27.1b). In this case, the concentrated light rays (27.7b) are driven by said flat reflection mirror (27.2b) to a set of flat mirrors (27.5b, 27.8b), which move the position of projection of said light rays (27.6b) upwards, hence driving said light rays (27.6b) into an upward direction of projection. Said light collection mirror (27.8b) drives said light rays towards said light delivery mirror (27.5b), which is (27.5b) inclined at the same angle as the light collection mirror (27.8b), preferably 45 degrees. Said light delivery mirror (27.5b) then drives said light rays as required. Said set of flat mirrors (27.5b, 27.8b) is sustained by one of the vertical sustaining members (27.4b). Said vertical members (27.1b, 27.4b) sustained the horizontally projecting sustaining members (27.3b), which in turn can partly sustain the light delivery mirror (27.5b).

The light sun light collection and concentration systems can comprise Plano concave mirrors (28.9) which project upwards towards Plano convex mirrors (28.1). Said Plano convex mirrors (28.1) then drive the concentrated solar rays (28.2) horizontally towards the next light concentration area. So, a set of flat reflection mirrors (28.11) drive the light rays downwards, such that these (28.10) can then be driven under the next lower heliostat (28.3). The flat reflection member (28.8) is this time comprised between the lower surface of the Plano convex mirror (28.1) and the vertical member that supports the upper heliostat's pivot (28.14). The concentrated light rays are then concentrated again by the next Plano concave mirror (28.9), and driven horizontally by the upper Plano convex mirror (28.1).

So, said light rays are driven to a flat reflection mirror (28.4), which is sustained by a vertical member (28.5) to the horizontal sustaining members. Said light rays are then again driven by a lower positioned flat mirror (28.11) horizontally towards the next Plano concave mirror (28.9). The vertical member (28.12) that supports the rotational pivot (28.13) of said lower heliostat (28.3), is present in the previously described configuration. The light rays can hence be driven according to the terrain roughness and topology, hence upwards and downwards over the ground floor. Said light rays are finally driven by a flat reflection mirror (28.6) downwards towards a heat exchanger or steam generator. Said flat mirror (28.6) is sustained by a vertical member (28.7).

Said upper positioned Plano convex mirrors (29.1) can drive said light rays vertically downwards towards a flat reflection mirror (29.5), which then drives said light rays under the Plano concave mirror (29.2) that concentrated these. Said flat mirror (29.5) is sustained by a vertically projecting member (29.6), which attaches to said horizontally projecting supporting mirrors. Said light rays are driven to a light collection mirror (29.7), which drives the light rays vertically upwards towards a light delivery mirror (29.3), which drives said light rays (29.8) back horizontally, but at an upper point of projection, towards the next Plano concave mirror (29.2) for light concentration.

Said light collection mirror (29.7) should be inclined at the same angle as said light delivery mirror (29.3). So, the process can continue, even over rough or uneven terrain with all sorts of topologies, to finally reaching a flat reflection mirror (29.4), where said concentrated light rays are driven vertically downwards towards a heat exchanger or steam generator. Said light rays (29.8) are driven between the two vertical members (29.6) at each side, which sustain said flat reflection mirror (29.5). Said Plano concave mirror (29.2) then concentrates said light rays (29.8) towards said Plano convex mirror (29.1). Said Plano convex mirror (29.1) then finally drives said light rays vertically downwards towards said flat reflection mirror (29.5), which in turn drives said light rays again towards the next light collection mirror (29.7). The system carries on using said methods until reaching said final flat reflection mirror (29.4).

Said Plano concave mirrors (28.9) can also be replaced by concave mirrors (30.5), which drive the light rays towards a convex mirror (30.3). So, said light rays will be fully concentrated, and the diameter of said rays will be reduced as much as possible, hence increasing light concentration efficiency. The flat reflection mirrors (30.1), which drive the horizontally projecting light rays from said convex mirror (30.3) vertically downwards, are sustained as before by a vertically projecting member (30.4). Said flat protection member (30.2) attaches to the lower edge of the convex mirror (30.3), and hence sustains it (30.3) into the required rigid position at all times. Said convex mirrors (30.3) are comprised at a higher height above the ground surface level than the concave mirror (30.5) positioned under it (30.3), and projects towards said concave mirror (30.5).

Said Plano concave mirror (29.2) can also be replaced by a concave mirror (31.1), which drives said light rays towards a convex mirror (31.2). Said convex mirror (31.2) then drives said light rays vertically downwards towards a flat reflection mirror (31.4), which drives said light rays horizontally again towards the next concave mirror (31.1). Said flat reflection mirrors (31.4) are sustained into position by vertically projecting members (31.3). Said convex mirrors (31.2) are comprised at a higher height above the ground level surface than the concave mirror (31.1) positioned under it (31.2), and projects towards said concave mirror (31.1).

Said light rays can be driven towards a Plano concave mirror (32.5), which concentrates the incoming light rays (32.6) towards a circular pipe (32.3). Said circular pipe (32.3) can comprise both primary circuit (32.8) and energy storage fluid (32.7) pipes embedded inside it (32.3). So, the light rays will transfer heat to both pipes (32.7, 32.8) efficiently and simultaneously. Said pipe (32.30 is sustained over said Plano concave mirror (32.5) by the means of sustaining members (32.2), which attach to both said pipe (32.3 and said Plano concave mirror (32.5). Said concentrated light rays are driven by a flat reflection mirror (32.1) vertically downwards towards said Plano concave mirror (32.5). The upper part of said fluid driving pipe (32.3) is also heated by the vertically downward projecting light rays. Said light rays are driven through a vertical conduit (32.4) down towards said mirror (32.5). The light rays (32.6) which pass at the sides of said pipe (32.3), are reflected by said Plano concave mirror (32.5). So, said light rays (32.6) are finally driven towards the surface of said fluid driving pipe (32.3). Said pipe (32.3) can contain only the primary circuit fluid pipe (32.8), only the energy storage fluid pipe (32.7), or both pipes (32.7, 32.8) driving fluid simultaneously beside each other.

The Plano concave mirror (32.5) is comprised projecting vertically upwards, and is positioned at a level which is lower than the solar ray collection and concentration system. So, the solar rays are driven by said flat mirror (32.1) through a vertical conduit (32.4) directly towards said Plano concave mirror (32.5), hence reaching it's surface (32.5) very easily. So, said Plano concave mirror (32.5) concentrates the incoming light rays (32.6) towards the fluid driving pipe (32.3). So, said Plano concave mirror (32.5) should in this case be comprised preferably under the ground surface. However, this depends on the terrain topology.

The Plano concave mirror (33.4) can also be comprised over the ground surface, hence projecting horizontally towards the light collection and concentration system. So, the concentrated light rays (33.1) are driven horizontally towards said Plano concave mirror (33.4). Part of the light rays (33.1) are driven towards the opposite side of the fluid driving pipe (33.3), while the light rays (33.1) that are driven around said pipe (33.3), are driven straight to the surface of the Plano concave mirror (33.4). So, said Plano concave mirror (33.4) concentrates the incoming light rays (33.1) towards the fluid driving pipe (33.3). So, said light rays (33.7) are driven towards the other surface of the fluid driving pipe (33.3). The fluid driving pipe can house the primary circuit pipe (33.5), the energy storage fluid pipe (33.2), or both of said pipes (33.2, 33.5) simultaneously through said fluid driving pipe (33.3). So, said circuits (33.2, 33.5) can be supplied with heat simultaneously and efficiently by said Plano concave mirror (33.4). Said pipe (33.3) is sustained along the surface of said Plano concave mirror (33.4) by members (33.6) which attach to both said pipe (33.3) and said Plano concave mirror (33.4) simultaneously.

Said Plano concave mirror (34.1) can also be comprised projecting vertically downwards towards the ground surface, and hence be comprised over the ground surface. In this case, said Plano concave mirror (34.1) is sustained by a set of vertically projecting members (34.9), which sustain said mirror (34.1) over the ground surface. In this case, said concentrated light rays (34.7) are driven to a flat reflection mirror (34.8), which should be inclined at 45 degrees. So, said flat reflection mirror (34.8) drives said light rays (34.7) vertically upwards towards said Plano concave mirror (34.1). Part of the light rays (34.7) are driven towards the lower surface of the fluid driving pipe (34.2). The rest of the light rays (34.7) are driven around said fluid driving pipe (34.2) towards the surface of said Plano concave mirror (34.1).

Said Plano concave mirror (34.1) then concentrates said light rays (34.3) towards the upper and lateral surfaces of the fluid driving pipe (34.2). The fluid driving pipe (34.2) is sustained into its required position rigidly by the means of sustaining members (34.4), which attach to both the pipe (34.2) and the Plano concave mirror (34.1) simultaneously. The Plano concave mirror (34.1) is rigidly sustained into position by the vertically projecting sustaining members (34.9). The fluid driving pipe (34.2) can house the primary circuit pipe (34.5), the energy storage fluid pipe (34.6), or both pipes (34.5, 34.6) driving fluid simultaneously in parallel to each other. So, said system design allows both primary circuit (34.5) and energy storage fluid circuit (34.6), to be supplied with heat constantly, efficiently and simultaneously.

Said lower positioned vertically upwards projecting Plano concave mirror (32.5) can also be comprised as a concave mirror (35.2), which would hence transfer the light rays (32.6) towards the fluid driving pipe (35.1), hence offering higher light ray (32.6) concentrations on a lower surface on said fluid driving pipe (35.1). This would offer higher temperatures on lower surface areas present over the fluid driving pipe (35.1). A similar design can be comprised for the horizontally projecting Plano concave mirror (33.4), where a concave mirror (36.2) would concentrate said light rays (33.7) towards said fluid driving pipe (36.1) at higher light ray (33.7) concentrations, and hence transferring heat at higher temperatures over a lower surface area on said fluid driving pipe (36.1). Similarly for the vertically downward projecting Plano concave mirror (34.1), a concave mirror (37.1) can project vertically downwards, hence concentrating the light rays (34.3) towards the fluid driving pipe (37.2), but offering higher light ray (34.3) concentrations. This would transfer heat at higher temperatures on lower surfaces along the fluid driving pipe (37.2) concerned.

Said Plano concave mirrors (38.2), concentrate the light rays on Plano convex mirrors (38.1), prior of said Plano convex mirrors (38.1) driving said light rays towards the next system. So, solar collection and concentration systems (38.1, 38.2) can be comprised in parallel to each other, or perpendicularly, with all driving the concentrated light rays towards a central point. At said point, a set of horizontally protecting Plano concave mirrors (38.4, 38.8) can be comprised. Said mirrors (38.4, 38.8) project around all four directions, thence forming a rectangular shape of four sides, with one mirror (38.4, 38.8) projecting towards each side. Said design allows the light rays of all systems to be concentrated towards the fluid driving pipe (38.5, 38.7). Said fluid driving pipe (38.5, 38.7) drives fluid in front of all mirrors (38.4, 38.7, 38.8).

So, said fluid driving pipe (38.5, 38.7) is driven in between (38.5) said mirrors (38.4, 38.8), and in front of each of said mirrors (38.7). Said pipe comprises an intake pipe (38.10) which drives the fluid towards said mirrors (38.4, 38.8), and an exit pipe (38.9) which drives the heated fluid out of the system fir power generation or energy storage applications. Said fluid driving pipe (38.5, 38.7) can comprise the primary circuit and energy storage fluid pipes projecting in parallel to each other, such that both fluids would be heated simultaneously, constantly and efficiently. If the final mirrors (38.1, 38.2) of said systems do not project directly towards said Plano concave mirrors (38.4, 38.8), flat reflection mirrors (38.3) can reflect the concentrated light trays (38.11), hence guiding these (38.11) towards the surfaces of said Plano concave mirrors (38.4, 38.8). The fluid driving pipe (38.5, 38.7) is sustained in front of said Plano concave mirrors (38.4, 38.8) by the means of sustaining members (38.6).

Said solar ray collection and concentration systems (39.10, 39.11) can be comprised projecting in parallel to each other (39.10, 39.11), with the mirrors (39.10, 39.11) of said systems projecting to the same directions. But if said mirrors (39.10, 39.11) comprises concave (39.11) and convex (39.10) mirrors, the concentrated light rays (39.12) can be driven towards small diameter flat reflection mirrors (39.1, 39.2), which drive said light rays towards horizontally projecting Plano concave mirrors (39.3). Said flat reflection mirrors (39.1, 39.2) can be comprised to drive light rays (39.12) in parallel projecting directions, altogether towards a Plano concave mirror (39.3). Said fluid driving pipe (39.4, 39.7) is driven in front (39.7) of said Plano concave mirrors (39.3, 39.6), with the same pipe (39.4) being driven around all Plano concave mirrors (39.3, 39.6).

Said fluid driving pipe (39.4) can hence be driven from Plano concave mirror (39.3) to Plano concave mirror (39.6) in order to maximise the heat supply efficiency to the fluid driving pipe. The fluid driving pipe (39.4, 39.7) can house both primary circuit and energy storage fluid pipes simultaneously, hence offering an efficient fluid heating process. Said pipe (39.4, 39.7) can comprise an intake pipe (39.8), which drives said fluid in front of said mirrors (39.4, 39.7), and a fluid exit pipe (39.9), which drives the superheated fluids out of the system for power generation and/or energy storage applications. Said fluid driving pipe (39.4, 39.7) can be sustained into its required position rigidly by being sustained by members (39.5) that attach to both said pipe (39.4, 39.7) and said Plano concave mirrors (39.3, 39.6).

If said mirrors (40.1, 40.2) are comprised of concave (40.2) and convex (40.1) mirrors, said light rays (40.3) are concentrated to the minimum diameter, hence allowing the use of small diameter flat reflection mirrors (40.5). Said small diameter flat reflection mirrors (40.5) can reflect the concentrated light rays (40.3) towards the required direction, and hence towards a Plano concave mirror (40.4) in this case. If said Plano concave mirror (40.4) projects vertically downwards, said light rays (40.3) are reflected by flat reflection mirrors (40.7) to drive the light rays vertically upwards towards the surface of said Plano concave mirror (40.4). If said Plano concave mirror (40.4) projects vertically upwards, said flat reflection mirrors (40.7) reflect the light rays (40.3) vertically downwards towards the surface of said Plano concave mirror (40.4). In any case, said flat reflection mirrors (40.7) should be inclined at 45 degrees. Said Plano concave mirror (40.4) is in any case sustained by vertically projecting members (40.6), which can attach to the back surface (40.4) or the reflective surface (40.4) of said Plano concave mirror (40.4).

The Plano concave mirror (40.4) sustains said fluid driving pipe (40.8) along its surface (40.4) rigidly by the means of sustaining members (40.9), which attach to both said vertical sustaining members (40.6) and said fluid driving pipe (40.8), hence sustaining said fluid driving pipe (40.8) rigidly in its required position. Vertically projecting pipe sections (40.10) drive the fluid up or down towards or away form said Plano concave mirror (40.4) according to the difference in height between the intake (40.11) and exit (40.12) pipes and the surface of said Plano concave mirror (40.4).

So, said fluid driving pipe (40.11) drives said fluid through a pipe (40.8) over or under the surface of said Plano concave mirror (40.4), hence maximising the heat supply efficiency from said mirror (40.4) to said pipe (40.8). Said pipe (40.8) then drives said fluid through said vertical pipe (40.10), and finally through said exit pipe (40.12). Said Plano concave mirror (40.4) drives said light rays, concentrating these towards the fluid driving pipe (40.8), which is driven along the surface of said Plano concave mirror (40.4). The design comprising the Plano concave mirror (40.4) projecting vertically downwards, projects said mirror surface (40.4) from rain water or any other falling natural inconveniences.

Said mirrors (41.1, 41.2) of said solar ray collection and concentration systems, can comprise concave (41.1) and convex (41.2) mirrors, hence concentrating said light rays to the minimum diameter possible. Said design allows the use of small diameter flat reflection mirrors (41.3), which drive the light rays (41.5) projecting from said systems (41.1, 41.2) towards flat reflection mirrors (41.6). Said flat reflection mirrors (41.6) drive said light rays vertically upwards towards the surface of a concave mirror (41.7). Said concave mirror (41.7) then reflects said light rays, and concentrates these towards a heat transfer disk (41.10). Said heat transfer disk (41.10) is comprised near the focal point of said concave mirror (41.7), and comprises the fluid driving pipe (41.9) being driven through said disk (41.10), in order to transfer the heat efficiently to the fluid driven through said fluid driving pipe (41.9).

Said concave mirror (41.7) can also project vertically upwards, hence comprising said flat mirrors (41.6) driving the light rays vertically downwards, towards the surface of said concave mirror (41.7). Said concave mirror (41.7) would in that case concentrate the incoming light rays towards the heat supply disk (41.10). However, the advantage of comprising said concave mirror (41.7) projecting vertically downwards towards the ground surface, is that no cavity has to be dug into the ground in order to incorporate said concave mirror (41.7) at a lower level. Also, said concave mirror surface (41.7) would be protected from natural inconveniences, such as rain water. In any design case, said flat reflection mirrors (41.6) have to be inclined at 45 degrees in order to drive the light rays accurately, weather it is vertically downwards, or vertically upwards. Another advantage of a vertically projecting concave mirror (41.7), is that flat reflection mirrors (41.6) can be positioned around any position under said concave mirror (41.7) surface.

The fluid driving pipe (41.4) drives the fluid through a vertical pipe section (41.8), that drives said fluid to the required height in order to be driven under the concave mirror (41.7) through the fluid driving pipe (41.9), and hence through the heat supply disk (41.10). The pipe (41.9) then drives said fluid through another vertical pipe section (41.8) to the height of the fluid exit pipe (41.12), prior of driving said fluid through said exit pipe (41.12) for power generation and/or energy storage applications. The vertical pipe sections (41.8) can drive the fluid vertically downwards if said concave mirror (41.7) projects vertically upwards, or vertically upwards if said concave mirror (41.7) projects vertically downwards. Said fluid driving pipe (41.4, 41.8, 41.9, 41.12) can also house both primary and energy storage fluid pipes into the same pipe (41.4, 41.8, 41.9, 41.12), hence driving the fluids in parallel, but through two separate fluid pipes. This design allows the two fluids to be superheated continuously, simultaneously, and efficiently, when being driven through the fluid driving pipe (41.4, 41.8, 41.9, 41.12), and hence through said heat supply disk (41.10).

Said concave mirror (41.7), whether projecting vertically upwards or vertically downwards, is supported over the ground level surface by a set of vertical supporting members (41.11), which sustain and keep said concave mirror (41.7) rigidly in its required position at all times. The heat supply disk (41.10) is sustained by the fluid driving pipe (41.9), hence forming the same structure. Said fluid driving pipe (41.9) can be sustained over or under said concave mirror (41.7) by the means of supporting members, which support said fluid driving pipe (41.9) in its required position rigidly at all times.

The light rays (42.2) projected by the solar light concentration and collection systems (42.1), can be driven upwards by a set of flat reflection mirrors (42.4). So, the resulting light rays (42.2) are driven towards the same direction as before, but at a higher point of projection. So, the light rays can be reflected by a flat reflection mirror (42.3) on each side, hence allowing also to comprise oppositely projecting light collection and concentration systems (42.1). So, said flat mirrors (42.3) can hence reflect the light rays towards the horizontally projecting Plano concave mirrors (42.7) that are comprised on the system concerned. Said light rays are hence driven over the flat reflection mirrors (42.5) that reflect the light rays of the laterally positioned light collection and concentration systems (42.1). So, the light rays (42.2) of all systems (42.1) are driven by said flat reflection mirrors (42.3, 42.5) towards the reflective surfaces of said horizontally projecting Plano concave mirrors (42.7). Said mirrors (42.7) hence concentrate said light rays towards the surface of the fluid driving pipe (42.6), hence transferring the heat to the primary circuit pipe, the energy storage fluid pipe, or both fluid driving pipes simultaneously, if these project in parallel to each other through said fluid driving pipe (42.6).

If said mirrors (42.1) of said systems (42.1) are concave mirrors, said light rays (43.1) are projected with the minimal diameter, hence requiring small diameter sets of flat reflection mirrors (43.2, 43.11) to move the position of projection of said light rays upwards. Said light rays (43.1) of the laterally and oppositely comprised systems, can hence be reflected by flat reflection mirrors (43.3), and hence be driven over the sets of flat reflection mirrors (43.4) which reflect the light rays of the laterally comprised systems. So, said light rays (43.1) of all systems project in parallel towards the surface of the horizontally projecting Plano concave mirrors (43.10), which then concentrate said light rays towards the fluid driving pipe (43.9) in order to transfer the heat to it (43.9). Sets of flat reflection mirrors (43.11) can move the light rays (43.7) to an upper position of projection, such that these (43.7) are then reflected by flat reflection mirrors (43.5) until projecting straight towards a Plano concave mirror (43.10).

Said light rays (43.7) can hence flow over other sets of flat reflection mirrors (43.6) that also drive the light rays of other side positioned systems, to the Plano concave mirrors (43.10), such that both light rays (43.7, 43.8) are driven in parallel and over each other towards said Plano concave mirrors (43.10), which then concentrate said light rays (43.7, 43.8) towards the fluid driving pipe. Flat reflection mirrors (43.12) that are comprised over each other, can be comprised to reflect the light rays of at least two oppositely projecting directions, into one direction, such that all light rays are driven in parallel towards said Plano concave mirrors (43.10). Said mirrors (43.10) should be preferably comprised forming a rectangular pattern of at least three Plano concave mirrors (43.10) which project horizontally away from said pattern (43.10), with the same fluid driving pipe (43.9) being driven in front of all mirrors (43.10), in order to maximise the designs and heat transfer efficiencies of the system concerned, while minimising the numbers of components and tubing used.

The light rays of the further systems, can be moved upwards by flat refection mirror sets (44.1), in order for flat reflection mirrors (44.2) to drive these light rays (44.6) over other flat reflection mirrors (44.4) that also drive the light rays (44.3) of the systems that are closer to said Plano concave or concave mirror (44.7) than said other systems. Said flat reflection mirrors (44.2, 44.4) drive altogether the light rays (44.3, 44.6) towards said Plano concave mirror (44.7). So, said light rays (44.3, 44.6) are driven in parallel to each other an over each other towards a flat reflection mirror (44.5), which is comprised in front of each set of flat reflection mirrors (44.2, 44.4). Said flat reflection mirror (44.5) is inclined at 45 degrees, hence driving said light rays vertically upwards towards the surface of said Plano concave mirror (44.7). As said mirror (44.7), projects vertically downwards, said design is suitable, and also projects said reflective mirror surface (44.7) from any natural inconveniences, such as leaves or rain water. Said flat reflection mirrors (44.5) are comprised under the surface of the Plano concave mirror (44.7).

Said mirror (44.7) can also be a concave mirror, which could maximise light ray concertation on the fluid driving pipe, hence maximising temperatures for heat transfer. If said Plano concave or concave mirror (44.7) projects vertically upwards, said flat reflection mirrors (44.5) comprise the reflective surfaces projecting vertically downwards, and inclined at 45 degrees, such that the light rays (44.3, 44.6) are hence reflected vertically downwards towards the reflective surface of said Plano concave or concave mirror (44.7).

Said sets of flat reflection mirrors (45.1, 45.10) can move the position of projection of said light rays upwards, such that said light rays are reflected by flat reflection mirrors (45.2) and driven over the flat reflection mirrors (45.3) that reflect the light rays (45.4) from other systems. So, said light rays (45.4) are driven in parallel to each other and over each other towards flat reflection mirrors (45.8). Said flat reflection mirrors (45.8) are lengthened to be able to reflect all light rays (45.6, 45.11) until the upper heights if a plurality of light rays is comprised (45.6, 45.11), and drive these vertically upwards towards the concave mirror (45.9). Said concave mirror (45.9) is comprised over the flat reflection mirrors (45.7, 45.8, 45.14). The concave mirror (45.9) concentrates said light rays (45.4) towards the heat transfer disk (45.13), through which the fluid driving pipe (45.12) is driven in order for the light rays' (45.6, 45.11) heat to be transferred to the flowing fluids inside said fluid driving pipe (45.12). Said fluids can be the primary circuit, the energy storage fluid, or both fluids being driven separately, but in parallel through separate pipes which are embedded inside said fluid driving pipe (45.12).

The flat reflection mirrors (45.14) for the light rays which do not comprise pluralities of systems, do not need to be lengthened, but the flat reflection mirrors (45.7, 45.8) that reflect pluralities of light rays (45.4, 45.6, 45.11) from pluralities of systems, need to be lengthened to ensure that all light rays are driven vertically upwards towards the reflective surface of said concave mirror (45.9). All flat reflection mirrors (45.7, 45.8, 45.14) are inclined at 45 degrees to ensure that all light rays are reflected vertically upwards. After being reflected upwards by a set of flat reflection mirrors (45.10), said light rays (45.11) can be driven over lower positioned flat mirrors (45.5) which drive the light rays (45.6) of another system towards the same direction of projection, hence driving the light rays (45.6, 45.11) of the two systems in parallel to each other and over each other, towards a flat reflection mirror (45.7). Said flat reflection mirror (45.7) then drives said light rays vertically upwards towards the concave mirror's surface (45.9), which concentrates said light rays towards the heat transfer disk (45.13) for heat transfer.

Said concave mirror (45.9) can also project vertically upwards, but with hence said flat reflection mirrors (45.7, 45.8, 45.14) driving said light rays (45.4, 45.6, 45.11) vertically downwards towards the reflective surface of said concave mirror (45.9). Said fluid driving pipe (45.12) would in that case be driven over the surface of said concave mirror (45.9), with said heat transfer disk (45.13) being sustained into position by said fluid driving pipe (45.12), or by additional sustaining members.

The light rays that come from the systems (46.8) that are closest to said Plano concave mirror (46.16), can be reflected by flat reflection mirrors (46.9), such that said light rays are driven through a set of flat reflection mirrors (46.2) in order to lift the position of projection of said light rays. So, said light rays can be reflected by a flat reflection mirror (46.4) that is higher in position, and that is comprised in front of the lateral system (46.1). Said lateral system (46.1) drives the light rays under said flat reflection mirror (46.4). Said flat reflection mirror (46.4) should be sustained over the ground surface by vertically projecting members (46.3), which should preferably be comprised at the edges, in order to avoid any obstruction to said other system's (46.1) light rays.

Said light rays (46.5) are hence driven over each other and in parallel to each other, until these are then reflected by a flat reflection mirror (46.6), which drives said light rays (46.7) straight towards a Plano concave mirror (46.11). Said Plano concave mirror (46.11) then concentrates said light rays towards a Plano convex mirror (46.10). Said resulting concentrated light rays (46.12) are hence driven towards a horizontally projecting Plano concave mirror (46.16). The light rays of the adjacent positioned systems, are concentrated and reflected with the same methods as previously explained, until said light rays (46.7) are driven towards a concave mirror (46.15), which concentrates said light rays towards a convex mirror (46.13). Said convex mirror (46.13) then drives said concentrated light rays (46.14) towards said horizontally projecting Plano concave mirror surface (46.16).

Said light rays are then concentrated further by said Plano concave mirror (46.16), towards the fluid driving pipe (46.17), in order to transfer the heat of said light rays to the fluids concerned. Said fluids can be the primary circuit, the energy storage circuit, or both circuits flowing into two separate parallel projecting pipes, which are embedded into said fluid driving pipe (46.17).

If the mirrors (47.1, 47.2, 47.6) of the systems (47.2, 47.6) are concave mirrors (47.2, 47.6) comprised in front of convex mirrors (47.1), said light rays (47.3) comprise a much smaller diameter, such that these (47.3) can be moved to an upper position of projection by smaller diameter sets of flat reflection mirrors (47.4). Said light rays can be reflected by sets of perpendicularly projecting flat reflection mirrors (47.5), as the light rays of the oppositely comprised systems are moved to an upper or lower position of projection by another set of flat reflection mirrors (47.4). Said flat reflection mirrors (47.5) can hence drive said light rays over sets of flat reflection mirrors (47.9) which drive the light rays of other systems (47.6) in parallel to the other light rays towards the same direction.

So, said light rays can be driven towards a concave mirror (47.11). Said concave mirror (47.11) drives said light rays towards another convex mirror (47.10), which drives said light rays (47.12) into the previous direction if projection after said further light concentration by said concave mirror (47.11). Said light rays (47.12) are hence driven towards the horizontally projecting surface of said Plano concave mirrors (47.220, which then concentrates said light rays still further towards said fluid driving conduit (47.21) for efficient transfer of heat from said light rays (47.12).

The flat reflection mirrors (47.25) can reflect the light rays of other systems, over the light rays of another system, such that another flat reflection mirror (47.13) then reflects said light rays (47.14, 47.15), hence driving the light rays of both systems (47.14, 47.15) in parallel to each other and over each other, towards a Plano concave mirror (47.17). Said Plano concave mirror (47.17) concentrates the light rays onto a Plano convex mirror (47.16), which then drives these straight towards another horizontally projecting Plano concave mirror (47.20).

Another set of perpendicularly comprised flat reflection mirrors (47.24) can be comprised, which drive the reflected light rays (47.19) over each other and in parallel to each other, towards a Plano concave mirror (47.18). Said Plano concave mirror (47.18) then drives the light rays onto a Plano convex mirror, which then drives said light rays towards the horizontally projecting surface of a Plano concave mirror (47.23). All horizontally projecting Plano concave mirrors (47.20, 47.22, 47.23) concentrate the light rays towards the fluid driving pipe (47.21), which is driven in front of all Plano concave mirrors (47.20, 47.22, 47.23) in order to minimise the number of tubing and components used, as well as to maximise the heat transfer efficiency to the primary and/or energy storage fluid circuits.

The light rays of the systems (48.10) that are comprised closer to said Plano concave mirror (48.19), can be reflected by a flat reflection mirror (48.12), which drives said light rays to a set of flat reflection mirrors (48.2) in order to move the position of projection upwards. So, said light rays can be reflected by a flat reflection mirror (48.3) that is comprised at the same height as the light rays that are driven out of said flat reflection mirror set (48.2). So, said light rays can then be reflected by said other flat reflection mirror (48.3) while the light rays of the oppositely positioned system (48.10, are driven under said mirror (48.3). So, the light rays of both laterally comprised systems (48.1, 48.10) are driven over each other and in parallel to each other until these reach a flat reflection mirror (48.4). Said flat reflection mirror (48.4) reflects said light rays towards a concave mirror (48.14), which concentrates said light rays towards a convex mirror (48.13).

Said flat reflection mirror (48.4) is sustained by a central vertically projecting member (48.5), which also sustains a perpendicularly projecting flat reflection mirror (48.6). Said flat reflection mirror (48.6) is sustained by the same member (48.5), but is comprised at a higher height in order to reflect the light rays of the other systems (48.9, 48.16) simultaneously towards said concave mirror (48.14). Said concave mirror (48.14) concentrates the light rays further towards the convex mirror (48.13). The concentrated light rays (48.15) are driven from the convex mirror (48.13), straight towards the flat reflection mirror (48.11), which drives the light rays vertically upwards towards the reflective surface of the vertically projecting Plano concave mirror (48.19). Said flat reflection mirror (48.11) is inclined at 45 degrees, in order to drive said light rays vertically upwards towards said Plano concave mirror's (48.19) reflective surface.

For concentrated light rays, other flat reflection mirrors (48.18) with larger diameters, can be comprised, but always comprised under said Plano concave mirror (48.19) and inclined at 45 degrees to accurately reflect the light rays. Said flat reflection mirror (48.11) does not need to comprise a wide diameter, as the light rays (48.15) that it reflects are very concentrated, but needs to be comprised under said Plano concave mirror (48.19) for efficient light reflection, to drive said light rays (48.15) towards said Plano concave mirror (48.19). In order for said flat reflection mirror (48.6) to reflect the light rays that are projecting from other systems (48.9, 48.16), the closest system (48.16) to said Plano concave mirror (48.19) comprises a flat reflection mirror (48.17), which drives said light rays towards a set of flat reflection mirror (48.15) to lift the position of projection of said light rays upwards. Simultaneously, the laterally comprised system (48.9) drives the light rays towards a set of flat reflection mirrors (48.8) to lift the position of projection of the light rays to a different upper position to that reached by other sets of flat reflection mirrors (48.2, 48.15).

So, a flat reflection mirror (48.7) reflects the light rays of the closest system (48.16) to said Plano concave mirror (48.19), while the light rays of the laterally comprised system (48.9), are driven over or under said flat reflection mirror (48.7) after being driven through said set of flat reflection mirrors (48.8). Finally, said flat reflection mirror (48.6) can hence drive said light rays in parallel and over the other systems' (48.1, 48.10) light rays, towards the concentrating concave mirror (48.14). Said concave mirror (48.14) concentrates said light rays on a convex mirror (48.13), which then drives said light rays (48.15) towards said flat reflection mirror (48.11). The flat reflection mirrors (48.11, 48.18) can be inclined at 45 degrees, but with the reflective surface on the opposite surface, if said Plano concave mirror (48.19) projects at the opposite way round, which is virtually upwards. So, said light rays would reach the reflective surface of said Plano concave mirror (48.19). However, said design is more prone to damage from environmental issues such as leaves or rain water.

The sets of flat reflection mirrors (48.2, 48.15) that move the positions of projection of the light rays of the systems (48.10, 48.16) that are closer to said Plano concave mirror (48.19), are comprised perpendicularly to the directions of projection of the light rays from said systems (48.10, 48.16), hence minimising the space required for the system, and maximising the functionality of the system. Said sets of flat reflection mirrors (48.2, 48.8, 48.15), weather being comprised in parallel (48.8) or perpendicularly (48.2, 48.15) to the directions of projection of the light rays being projected from said systems (48.1, 48.9, 48.10, 48.16), are sustained by a vertically positioned member at each side of the mirrors (48.2, 48.8, 48.15), in order to avoid any obstructions to the concentrated light rays that should be reflected and moved upwards or downwards by said mirrors (48.2, 48.8, 48.15).

The light rays of one system (49.9) can be driven in parallel to the light rays of another laterally positioned system, which were reflected by a flat reflection mirror (49.8), which were previously moved to an upper position of projection by a set of flat reflection mirrors (49.7). Simultaneously, the light rays of the oppositely projecting system (49.1) are driven to another set of flat reflection mirrors (49.2) in order to move the position of projection upwards, but to a different height as said other set of flat reflection mirrors (49.7). So, said light rays (49.3) are being driven in parallel to the light rays (49.4) of the laterally comprised system, which are reflected by a lower positioned flat reflection mirror (49.8). So, the light rays of all four systems (49.1, 49.9) can be reflected at the same time by a set of flat reflection mirrors (49.5), which has perpendicularly projecting surfaces (49.5), which head to the light rays driven by said systems (49.9) or sets of flat reflection mirrors (49.2, 49.9).

So, said set of perpendicularly projecting flat reflection mirrors (49.5), drives said light rays (49.3, 49.4) on parallel to each other an over each other, towards a concave mirror (49,11). Said concave mirror (49.11) drives and concentrates said light rays towards a convex mirror (49.6). Said convex mirror (49.6) then drives said light rays (49.18) towards a flat reflection mirror (49.20). Said flat reflection mirror (49.20) is lengthened to reflect the light rays at various heights, and is inclined at 45 degrees to drive said light rays towards the reflective surface of the concave mirror (49.24). Said concave mirror (49.24) projects vertically downwards, and is comprised over said flat reflection mirror (49.20).

Other light collection and concentration systems (49.13) drive the light rays to a set of flat reflection mirrors (49.14), which move the position of projection of said light rays upwards. So, said flat reflection mirrors (49.14) drive said light rays (49.10) over the flat reflection mirror (49.15) that reflects light rays of another system, such that both systems' (49.13) light rays are driven in parallel and over each other towards a concave mirror (49.17). Said concave mirror (49.17) then drives and concentrates said light rays towards a convex mirror (49.16), which then in turn drives said concentrated light rays (49.21) towards a flat reflection mirror (49.19). Said flat reflection mirror (49.19) is inclined at 45 degrees and is comprised under said concave mirror's (49.24) reflective surface. So, said mirror (49.19) drives said light rays towards the reflective surface of said concave mirror (49.24). All light rays (49.18, 49.21) that are driven by said flat reflection mirrors (49.19, 49.20), are driven to said concave mirror (49.24), which then drive and concentrate said light rays towards the heat transfer disk (49.23).

Said heat transfer disk comprises the fluid driving pipe (49.22) being driven through it (49.23) in order for the heat transfer to take place to the fluids continuously and at maximum efficiency. The fluid driving pipe (49.12) is supplied from outside the system, and then projects as a passing pipe (49.22) under the concave mirror (49.24), hence collecting the heat from the disk (49.23). The concave mirror (49.24) can also project vertically upwards, hence requiring said flat mirrors (49.19, 49.20) to project vertically downwards, to drive said light rays to the reflective surface of said concave mirror (49.24). This system is best suited and conceived for the transfer of heat at high temperatures, and at high temperature points, which in this case, is the heat transfer disk (49.23) comprised. The fluid driving pipe (49.12, 49.22) can house the primary circuit pipe, the energy storage fluid pipe, or both fluid pipes flowing separately in parallel to each other through said fluid driving pipe (49.12, 49.22).

The advantage of comprising concave mirrors (47.11, 49.17) and convex mirrors (47.10, 49.16) after initially concentrating said light rays (47.3, 47.14, 47.1, 47.19) through the concave (47.2, 47.6) and convex (47.1) mirrors of the solar light ray collection and concentration systems, is that the diameter of said concentrated light rays (47.12, 49.21), can be reduced to the minimum, hence also not requiring the required space between the concave (47.2, 47.6) and convex (47.1) mirrors at each system in order to concentrate said light rays (47.12, 49.21). This would hence allow for high temperatures reached for heat transfers, as well as a reduced space required between the concave (47.2, 47.6) and convex (47.6) mirrors at each system, hence maximising the amount of heliostats that could be comprised per unit of distance along the light collection and concentration systems concerned, and hence maximising the light ray concentration output and energy production outputs by consequence.

The lower (50.9, 50.10) and upper (50.1, 50.2) flat reflection mirrors of said sets of flat reflection mirrors, should preferably be the light collection (50.9, 50.10) and delivery (50.1, 50.2) mirrors. Said mirrors are used to move the light rays to an upper position of projection to avoid any obstacles from obstructing the path of said light rays. So, flat reflection mirrors (50.3, 50.4) comprised at different heights, can reflect the light rays of perpendicularly projecting light collection and concentration systems. So, said light rays are driven in parallel to the lower light rays (50.11), and hence over said lower projecting light rays (50.11), to a concave or Plano concave mirror (50.5). Said mirror (50.5) concentrates said light rays towards a Plano convex or convex mirror (50.12), which drives said light rays again in a horizontal direction of projection.

Said light rays (50.7) are then driven by a set of flat reflection mirrors (50.13) to an upper position of projection, such that said concentrated light rays (50.7) can be finally reflected by another flat reflection mirror (50.8) into the required direction of projection. Said system is comprised on the design comprised on Figures 38 to 49. Said flat reflection mirror (50.8) is sustained by a vertical member (50.6) which is sustained to the horizontally projecting member (50.14), hence keeping said components rigidly sustained. Said components are comprised over the ground level surface (50.15) at all times. Said system is used to concentrate to a maximum the light rays (50.11, 50.7) that are driven from a plurality of light collection and concentration systems.

Said mirrors can also be Plano concave (51.1) and Plano convex (51.2), hence reflecting the concave (50.50 and convex (50.12) mirrors if only a vertical light ray concentration and reduction of height, is required. This all depends on design requirements for the system concerned. So, said Plano concave mirror (51.1) can be inserted in place of said concave mirror (50.5), while said Plano convex mirror (51.2) can be inserted in place of said convex mirror (50.12).

Said flat reflection mirrors (52.4, 52.5), comprised at different heights, in order to reflect the light rays of a plurality of light collection and concertation systems, towards the horizontally projecting Plano concave mirror (52.2) surface. So, said mirrors (52.4, 52.50 drive said light rays (52.3) in parallel to the lower positioned light rays (52.9), which also project in the same direction, towards the Plano concave mirror surface (52.2). So, said light rays (52.3, 52.9) project in parallel to each other, with the upper light ray beams (52.3) projecting over the lower light rays beams (52.9). The lower light collection mirror (52.10), drives the light rays upwards to the light delivery mirrors. So, said lower projecting light rays (52.9) do not face any obstruction in the light rays' (52.9) path.

Said Plano concave mirror (52.2) concentrates said light rays onto the fluid driving pipe (52.6, 52.8), which projects along a plurality of Plano concave mirrors (52.1, 52.2), such that said fluid driving pipe (52.6, 52.8) is driven along the Plano concave mirror in question (52.2), and then is driven in front of other laterally comprised Plano concave mirrors (52.1) that can project either in parallel or perpendicularly to said Plano concave mirror (52.2) in question. Said fluid driving pipe (52.6, 52.8) can be comprised in two pipes (52.6, 52.8), but should preferably comprise a single pipe, which is driven in front of all Plano concave mirrors (52.1, 52.2). Said fluid driving pipe (52.6, 52.8) should comprise the primary circuit pipe, the energy storage fluid pipe, or both pipes projecting in parallel to each other, embedded into said fluid driving pipe (52.6, 52.8), to maximise heat transfer and efficiency to both fluid pipes simultaneously.

Said Plano concave mirrors (52.1, 52.2) are suitable over the ground level surface (52.11) by the means of vertical sustained members (52.7) that are fixed and attached to the ground level surface (52.11). Said system design is also comprised on the design comprised on Figures 38 to 49.

On rough terrain (53.4), the horizontal members (53.7) are supported by the vertically projecting members (53.2). Said flat reflection mirrors (53.1, 53.5) are sustained by said vertically projecting member (53.2). The light collection mirror (53.5) can be inclined sideways to move the position of projection of said light rays towards the side. The light delivery mirror (53.1) is comprised at exactly the same sideway angle as the lower comprised light collection mirror (53.5). This ensures that said light rays project into exactly the same horizontal direction after being moved to a side positioned position of projection. Said light reflection mirrors (53.3, 53.6) are attached to said sideways inclined mirrors (53.1, 53.5), such that said upper collection mirror (53.3) drives said light rays vertically downwards to the light delivery mirror (53.6). Said light delivery mirror (53.6) delivers the light rays onto the original horizontally projecting path, but at the required height level and at the required sideways position, such that said light rays can be driven towards the next light concentration system concerned. Said system can hence be comprised on rough terrain (53.4), such that said flat reflection mirrors (53.1, 53.3, 53.5, 53.6) are used to move the position of projection of said light rays slightly upwards or downwards, depending on the requirements set by the design, as well as the geology and topology of the rough terrain concerned, on which said system should be built on.

The flat delivery mirror (53.6) is in this case sustained to the back surface of the light collection mirror (53.5), as said light rays are moved to a slightly lower position of projection.

On the rough terrain (54.6), said vertical members (54.2, 54.10) sustain said horizontally projecting members (54.9, 54.13). Due to the rough and height changing topology of the rough terrain (54.6), said light rays have to be moved to upper or lower heights, in order to follow the required height over the terrain (54.6) concerned. Said sideways inclined flat reflection mirrors (54.1, 54.7) can hence move the position of projection of said light rays sideways, such that said upper mirror (54.1) drives said light rays horizontally to the upper reflection mirror (54.3), which in turn drives said light rays to the light delivery mirror (54.8). As said light rays are driven to a slightly lower position of projection compared to before, said flat mirror (54.8) is lower comprised than the light collection mirror (54.7), hence being attached to the back surface of it (54.7). If said light ray should be moved to a slightly upper position of projection, said light collection mirror (54.11), being inclined sideways, moves the light rays to the required sideways position, before said light rays are again reflected horizontally by the upward positioned sideways inclined mirror (54.4). Said mirror (54.4) drives said light rays to the upper flat reflection mirror (54.50, which drives said light rays vertically downwards to the light delivery mirror (54.12). Said light delivery mirror (54.12) is comprised at a higher position than said light collection mirror (54.11), such that said light collection mirror (54.11) attaches to the back surface of said light delivery mirror (54.12). Said mirror (54.12) drives said light rays to a slightly upper position of projection, while said position is comprised to the side of the original position of projection.

The Plano concave mirrors (55.1a) are sustained by the horizontally projecting members (55.2a), as are other components such as the flat reflection mirrors (55.3a, 55.5a, 55.6a, 55.7a). If said flat collection mirror (55.3a) is inclined sideways, the light rays will then be driven horizontally again by the light delivery mirror (55.7a) into the right path, from said light delivery mirror (55.7a) which is comprised over the light collection mirror (55.3a). The edge (55.5a) of the sideways comprised light delivery mirror (55.7a) is comprised just beside the edge (55.5a) of the flat light reflection mirror (55.4a) that is comprised beside said sideways inclined light delivery mirror (55.7a), hence meaning that the two edges (55.5a, 55.6a) project in parallel to each other. So, the light rays (55.8a) are then driven horizontally from the light ray delivery mirror into the required horizontal direction of projection, and at the required side point of projection, which is comprised at the required height.

The upper edge (55.1b) of the lateral projection lower flat reflection mirror (55.2b) is comprised attached at the back surface of the lower sideways inclined light collection mirror (55.4b). So, the edge (55.3b) of the upper flat reflection mirror (55.2b) attaches to the upper sideways inclined light delivery mirror. This allows the light rays (55.8a) to be moved to a slightly lower position of projection, while being moved to a sideways point of projection.

The upper edge (55.4c) of the lower sideways inclined flat light collection mirror (55.3c) can be comprised over that (55.2c) of the lower flat light delivery mirror (55.1c), such that said lower flat light delivery mirror (55.1c) can also be comprised over the side surface of the sideways inclined light collection mirror (55.3c), such that the upper edge (55.2c) of said sideways flat mirror (55.3c) attaches to the back surface of said lower flat light delivery mirror (55.1c). This design hence moves the position of projection of said light rays (55.8a) to a slightly lower point of projection, with said point of projection being at the required sideway position.

Said Plano concave mirrors (56.1a) are sustained by the horizontal side members (56.4a, 56.8a), which also sustain the flat reflection mirrors (56.9a) that drive the light rays to the side comprised flat mirror (56.3a). Said flat mirror (56.3a) drives the light rays to the lateral light collection mirror (56.6a), which drives said light rays (56.7a) to the light delivery mirror (56.11a). As said light delivery mirror (56.11a) is comprised at a side position compared to the light collection mirror (56.9a), said light rays (56.7a) are driven towards a sideways position of projection, but along the same direction of projection as before. Said flat light delivery mirror (56.11a) is sustained by the horizontally projecting sustaining member (56.10a). Said horizontal sustaining members (56.4a, 56.8a, 56.10a) attach to the horizontally projecting perpendicularly projecting member (56.5a), which sustains said laterally comprised flat reflection mirrors (56.3a, 56.6a), and which is sustained by a vertically projecting member (56.2a) at the end of said horizontal member (56.5a). In this design case, the light collection (56.9a) and delivery (56.11a) mirror attaches to the same point at the end of the lateral horizontally projecting member (56.4a).

If said light delivery mirror (56.6b) ids comprised with its furthest edge being sustained at the start of said lateral horizontally sustaining member (56.5b), the movement of the position of projection of said light rays (56.7a) remains identical, with said horizontal member (56.3b) attaching to the perpendicular horizontal member (56.2b), which is sustained by said vertical member (56.1b). Said light reflection mirror (56.4b) is comprised opposite to said light delivery mirror (56.6b), and is sustained by the two concentrating horizontal members (56.2b, 56.5b).

If the light rays' (56.7a) position of projection should be moved to the opposite side, said light delivery mirror (56.7c) is comprised opposite to the light reflection mirror (56.5c), and both mirrors are sustained by said horizontal member (56.6c). The horizontal projecting member of the identical projection (56.3c) attaches to the perpendicular member (56.2c), which sustains said flat reflection mirror (56.4c) of the other side. Said vertical member (56.1c) sustains said perpendicularly horizontal member (56.2c). In this design case, the lateral horizontal member of the new projecting direction (56.6c) is comprised further towards the side than the prior projection's sustaining horizontal member (56.3c).

If the mirrors (57.2a, 57.3a) comprised at the end of said light collection and concentration system are concave (57.3a) and convex (57.2a), said light rays are driven by said concave mirror (57.3a) towards said convex mirror (57.2a). So, said convex mirror (57.2a) drives the light rays (57.8a) under said concave mirror (57.3a) towards a flat reflection mirror (57.4a). Said flat mirror (57.4a) needs to be of reduced diameter, as the light rays have been concentrated from all angles by said concave mirror (57.3a). Said flat mirror (57.4a) drives said light rays to a pair of flat reflection mirrors (57.9a, 57.10a) that are comprised being positioned beside each other.

Said laterally comprised flat mirror (57.10a) drives the light rays to the final flat reflection mirror (57.5a), which drives said light rays (57.7a) towards the required direction of projection, but comprised at a side point compared to before. The concave (57.3a) and convex (57.2a) mirrors are sustained by the initial projection's horizontal members (57.1a), while the flat reflection mirrors (57.4a, 57.5a, 57.9a, 57.10a) are sustained by the next projection's horizontal members (57.6a).

If said light rays (57.1b) are driven to a flat reflection mirror (57.5b), the light rays are driven towards a set of flat reflection mirrors (57.2b, 57.3b). Said adjacent flat reflection mirror (57.3b) then drives said light rays to the last flat reflection mirror (57.6a), which drives said light rays towards the new required direction of projection. The advantage with this design, is that the light rays are initially driven by said flat reflection mirror (57.5b) towards the direction opposite to the light shifting direction, and hence towards a set of flat reflection mirrors (57.2b, 57.3b) that are comprised between the new and older reflection's horizontal members (57.4b, 57.7b). Said lateral horizontally projecting members (57.4b, 57.7b) sustains the flat mirrors (57.2b, 57.3b, 57.5b, 57.6b) into the required positions rigidly. The advantage of this design is that the flat mirrors (57.2b, 57.3b) do not obstruct the path of the laterally comprised terrain features.

If said light rays (57.4c) are driven towards said flat reflection mirror (57.1c, 57.2c) by said flat reflection mirror (57.5c) towards the opposite direction, but towards the light rays shifting direction, the final flat light delivery mirror (57.6c) drives said light rays towards the required direction of projection. In this design case, the flat reflection mirrors (57.1c, 57.2c, 57.5c, 57.6c) are comprised between the two new projection horizontal members (57.7c), as is the case in the initial design (57.4a, 57.5a, 57.9a, 57.10a). Said light rays are hence reflected by flat mirrors (57.1c, 57.2c) that are comprised in said enclosure of members (57.7c). The horizontally projecting members (57.3c) sustain the concave (57.3a) and convex (57.2a) mirrors comprised beside these (57.3c). Said members (57.3c, 57.7c) are comprised apart, according to the distance of shifting of said light rays (57.4c).

Said mirrors (57.4a, 57.5a, 57.9a, 57.10a, 57.2b, 57.3b, 57.5b, 57.6b, 57.1c, 57.2, 57.5c, 57.6c) project perpendicularly to the ground surface, with said surfaces (57.4a, 57.5a, 57.9a, 57.10a, 57.2b, 57.3b, 57.5b, 57.6b, 57.1c, 57.2, 57.5c, 57.6c) projecting perpendicularly at 90 degrees to said ground surface.

Said concave mirror (58.3) and said convex mirror (58.10, are sustained by said horizontal sustaining member (58.2). Said mirrors (58.3, 58.1) drive said light rays under said concave mirror (58.3) towards the flat reflection mirror (58.4). Said flat reflection mirror (58.4) drives said light rays to a set of flat reflection mirrors (58.15, 58.16), which drive said light rays towards a side inclined flat reflection mirror (58.5). Said side inclined flat reflection mirror (58.5) drives said light rays in parallel to the sustaining member (58.6) comprised after said mirrors (58.4, 58.5, 58.15, 58.16). So, if the direction of projection of said light rays needs to be changed, said light rays can be driven to a side inclined flat reflection mirror (58.17), which drives said light rays to a set of flat reflection mirrors (58.7, 58.8).

Said lateral mirror (58.8) drives said light rays to a side inclined flat reflection mirror (58.18), which again drives said light rays (58.20) in parallel to the new direction of said sustaining members (58.9). Said reflection mirrors (58.17, 58.8) are sustained by sustaining members (58.19) that attach to the horizontal supporting members (58.9). Another flat reflection mirror (58.10) can then drive said light rays (58.20) to a set of flat reflection mirrors (58.21, 58.22). Said last flat reflection mirror (58.22) drives said light rays to a flat reflection mirror (58.11), which drives the light rays onto the new required direction of projection, and hence in parallel to the sustaining horizontal members (58.12). So, said light rays are driven into the new direction of projection, in parallel to the direction of projection of said horizontally sustaining members (58.12). Said flat mirrors (58.10, 58.11) are sustained by horizontally projecting members (58.13), which are attached to the horizontally projecting sustaining members (58.12).

Said concave mirror (58.3) concentrates said light rays towards said convex mirror (58.1), such that said convex mirror (58.1) drives concentrated light rays which comprise the minimum diameter, hence allowing said flat reflection mirrors (58.4, 58.5, 58.15, 58.16) to be comprised with the minimum diameter. This makes said design more practical and efficient to use for the changes in direction required for the light rays (58.14). This system is very efficient to use to change the direction of the driven light rays (58.20), or to move the position of projection of said light rays (58.20) sideways.

If said last concentrating mirror (59.26) is a Plano concave mirror (59.26), said light rays (59.1) comprise a wide diameter, such that said flat reflection mirrors (59.2, 59.17, 59.18, 59.5, 59.19, 59.8, 59.11, 59.20, 59.13, 59.22, 59.23, 59.15) need to comprise a wide diameter in order to efficiently reflect and drive said light rays (59.1). Said light rays (59.1) are initially driven under said Plano concave mirror (59.26) to a flat reflection mirror (59.2), which drives said light rays to a set of flat reflection mirrors (59.17, 59.18). Said light delivery mirror (59.18) drives said light rays back to a flat reflection mirror (59.5). Said flat mirror (59.5) drives said light rays in a direction of projection which is parallel to the direction of the horizontal sustaining members (59.4). Said light rays can then be driven into another direction by using a flat mirror (59.19), which again, drives the light rays towards the outside of the system' line, where a set of flat mirrors (59.8, 59.11) is comprised. Said light delivery mirror (59.11) drives said light rays to a flat reflection mirror (59.20), which reflects and drives said light rays (59.21) onto the required new direction of projection, hence driving said light rays (59.21) in parallel to the direction of projection of the new horizontal sustaining member (59.12).

Said initial flat reflection mirror (59.2) drives the light rays perpendicularly to the initial direction of projection (59.1), which is in parallel to the initial sustaining member's (59.3) direction of projection. Said initial flat reflection mirror (59.80 is sustained at the outer edge by a vertical member (59.6), which is sustained over the ground surface, and attaches to a horizontal member (59.7), which attaches to the main horizontal sustaining member (59.4) of said side. In order to drive said light rays (59.21) back into the previous direction of projection, a flat mirror (59.13) reflects said light rays to a set of flat reflection mirrors (59.22, 59.23), such that the light delivery mirror (59.23) drives said light rays to the last reflection mirror (59.15).

Said flat reflection mirror (59.15) reflects and drives said light rays (59.16) into the original direction of projection, hence driving these (59.16) in parallel to the direction of projection of the new horizontal sustained members (59.14). Said light delivery mirror (59.23) is sustained at the outer edge by a vertically projecting member (59.25), which sustains a horizontal member (59.24) which hence also attaches to the horizontal sustaining member of said side (59.14). Said external set of reflection mirrors (59.8, 59.11) both attach to the same vertical member (59.9), which sustain a horizontally projecting member (59.10) which in turn attaches to the main horizontal sustaining members (59.4, 59.123) of the two sides. Said light delivery mirror (59.23) drives said light rays perpendicularly to the required direction of projection, until the last flat reflection mirror (59.15) drives said light rays (59.16) into the original direction of projection. Said flat reflection mirrors (59.2, 59.15) are sustained rigidly into position by the horizontal sustaining members (59.3, 59.14), which project in parallel to the light rays concerned (59.1, 59.16).

The advantage of this system, is that it can be used to drive wide diameter light rays (59.1, 59.21, 59.16) into any direction, weather it is on one side or the other, without taking much space at the side of said light collection and concentration system. This system can be used to drive said light rays (59.1, 59.21, 59.16) between geological obstacles if said terrain used is rough and uneven. Said set of flat mirrors (59.8, 59.11, 59.19, 59.20) change the direction of driving and projection of the entire light rays (59.1, 59.21, 59.16) projection, towards a direction, which is towards the opposite side compared to the original direction of projection of said light rays (59.1).

Said flat reflection mirrors (59.2, 59.17, 59.18, 59.5, 59.19, 59.8, 59.11, 59.20, 59.13, 59.22, 59.23, 59.15) are all sustained by the horizontal sustaining members (59.3, 59.4, 59.7, 59.10, 59.12, 59.14, 59.24), which are all sustained above the ground surface by said vertically projecting members (59.6, 59.9, 59.25). Said flat reflection mirrors (59.2, 59.17, 59.18, 59.5, 59.19, 59.8, 59.11, 59.20, 59.13, 59.22, 59.23, 59.15) project perpendicularly to the ground surface, with the surfaces of said mirrors (59.2, 59.17, 59.18, 59.5, 59.19, 59.8, 59.11, 59.20, 59.13, 59.22, 59.23, 59.15) being comprised perpendicularly to the ground surface of the terrain on which said system is being comprised. This system design allows the light rays (59.16) to be also driven to the same position of projection as the original one (59.1), but along a sideways position compared to the previous position of projection of said light rays (59.1), where these (59.1) were comprised originally.

The concentrated light rays (60.3) of the light ray collection and concentration systems concerned, can be projected towards a Plano concave mirror (60.2) after being concentrated, in order for said mirror (60.2) to concentrate the light rays towards the fluid driving pipe (60.9). In this design case, the Plano concave mirrors (60.2) project upwards, such that the fluid driving pipe (60.9) is driven along the upper surface of said mirror (60.2). A plurality of mirrors (60.2) projecting in a plurality of directions (60.2) can be comprised to concentrate the light rays (60.3) coming from a plurality of light ray concentration systems simultaneously. A roof structure (60.2) can be comprised over said Plano concave mirrors (60.2) in order to avoid any deposition of rain water on these (60.2). The fluid driving pipe (60.9) comprises the primary circuit pipe (60.4) and the energy storage fluid pipe (60.5) embedded inside said pipe (60.9), such that the heat from the light rays can be transferred from said mirrors (60.2) to said two circuit fluids (60.4, 60.5) efficiently and simultaneously. The primary circuit pipe (60.4) can hence drive a steam turbine (60.7) that in turn drives a generator (60.8) to generate electricity, as well as supplying heat to the energy storage fluid tank (60.6) simultaneously.

The concentrated light rays (61.2) can also be driven towards a set of Plano concave mirrors (61.3) which project into a plurality of directions to collect the light rays of various light concentration systems simultaneously around the set of Plano concave mirrors (61.3). The Plano concave mirrors (61.3) in this design case are comprised projecting horizontally sideways, and the fluid driving pipe (61.9) is driven along the centre area of all Plano concave mirrors (61.3) simultaneously. The roof structure (61.1) over said mirrors (61.3) in order to avoid any contamination over the mirrors (61.3). The fluid driving pipe (61.9) collects the heat of the light rays (61.2) that are concentrated by said Plano concave mirrors (61.3) on the fluid driving pipe (61.9). The primary (61.4) and the energy storage fluid (61.5) circuits, can hence collect the heat of the light rays (61.2) simultaneously and use said heat to supply heat to the energy storage tank (61.6) and separately driving a steam turbine (61.7) simultaneously. Said steam turbine (61.7) drives in turn a generator (61.8) to generate electricity.

The light rays (62.2) can also be driven to a set of Plano concave mirrors (62.3) from various directions after collecting and concentrating the light rays (62.2). The Plano concave mirrors (62.3) project downwards, such that the light rays are driven towards the lower surfaces of said mirrors (62.3), such that the fluid driving pipe (62.9) is comprised along the lower surfaces of said Plano concave mirrors (62.3). So, said mirrors (62.3) drive and concentrate the light rays to said fluid driving pipe (62.9), which transfers heat to both primary (62.5) and energy storage fluid (62.4) circuit pipes simultaneously. The energy storage fluid pipe (62.4) can supply storage heat to the energy storage tank (62.6), while the primary circuit pipe (62.5) can drive a steam turbine (62.7), which in turn drives a generator (62.8) to generate electricity. A roof structure (62.1) over said mirrors (62.3) avoids any deposition of unwanted matter on said mirrors (62.3) from the rain fallouts.

The light rays (63.2) can also be used to drive a set of reciprocating piston expanders (63.7). So, the Plano concave mirrors (63.3) concentrate the light rays (63.2) on the fluid driving pipe (63.9), which hence transfers heat to both the primary circuit (63.4) and energy storage fluid circuit (63.5) pipes simultaneously. The primary circuit (63.4) fluid can hence drive a set of reciprocating piston expanders (63.7), which in turn drives a generator (63.8) to generate electricity. The energy storage fluid pipe (63.5) supplies heat simultaneously to the energy storage tank (63.6). The roof structure (63.1) ensures that said mirrors (63.3) are kept clean.

The advantage of these systems, is that embedding both primary (63.4) and energy storage fluid (63.5) pipes (63.4, 63.5) into the same fluid driving pipe (63.9) can accomplish both energy storage and electricity generation functions simultaneously. During dark hours, the energy storage fluid from the tank (63.6), can be used to convert water into steam to drive a steam turbine (62.7) or the reciprocating piston expanders (63.7).

The light rays (64.2) can also be driven towards a set of Plano concave mirrors (64.3) with a roof (64.1) on top of said mirrors (64.3) to protect these (64.3) against any undesired dirt. So, the light rays are driven towards the fluid driving pipe (64.6), which embeds both primary circuit pipe (64.5) and energy storage fluid pipe (64.4). So, the heat of the light rays can be used to simultaneously drive a set of reciprocating expanding pistons (64.8) from the primary circuit pipe (64.5) and to supply of heat to the energy stage tank (64.7) by the energy storage fluid pipe (64.4). The set of reciprocating pistons (64.8) in turn drives a generator (64.9) to generate electricity.

The light rays (65.2) can also be projected from a solar ray collection and concentration system, towards a set of downward projecting Plano concave mirrors (65.4), such that said mirrors (65.4) concentrate the light rays (65.2) towards the fluid driving pipe (65.3). Said pipe (65.3) is comprised close to the ground floor surface, as the mirrors (65.4) project downwards. The floor structure (65.1) protects the Plano concave mirrors (65.4) from any undesired deposition of dirt from above. So, the fluid driving pipe (65.3) embeds the primary circuit pipe (65.5) and the energy storage fluid pipe (65.6), such that the heat of the light rays (65.2) can be simultaneously transmitted to both pipes (65.5, 65.6). This design allows the simultaneous supply of heat to the energy storage tank (65.7) and the driving of the set of reciprocating piston expanders (65.8). The set of reciprocating piston expanders (65.8) drives in turn a generator set (65.9) for electricity production.

The advantage of said design is that a plurality of solar ray collection and concentration systems can project to the various Plano concave mirrors (65.4) comprised on the set concerned simultaneously, hence concentrating all the heat of said systems to the fluid driving pipe (65.3). As said pipe (65.3) comprises both primary (65.5) and energy storage fluid (65.6) circuits simultaneously, the supply of heat to the storage tank (65.7) and the driving of the generator (65.9) can be performed simultaneously, with no matter if it is a set of reciprocating pistons (65.8) or a steam turbine (62.7). The fluid from the tank (65.7) can then heat up the primary circuit fluid during dark hours by the means of a heat exchanger or a steam generator. The set of reciprocating piston expanders (65.8) is more suitable than a steam turbine (62.7) if the system is situated in an area of low solar radiation or mostly cloudy weather, and so where the generative power outputs are low, hence making the reciprocating piston set (65.8) more efficient than the steam turbine (62.7).

The light rays can be driven by the concave mirrors (66.2) to the convex mirrors (66.5) comprised inside a tubular structure (66.4). So, said tubular structure comprises a transparent shield (66.16) which allows the light rays to pass through when driven by the concave mirror (66.2), hence reaching the convex mirror (66.50. The light rays are then further concentrated by a Plano concave mirror (66.9) comprised inside the tubular structure (66.4), which drives the light rays towards a Plano convex mirror (66.8) that then drives the light rays back onto the required horizontal direction of projection. Flat reflection mirrors (66.6, 66.7) drive said light rays (66.3) onto the required directions of projection. The Plano concave mirrors (66.9) of the next systems, concentrate the light rays of the next convex mirror (66.5), as well as the already concentrated light rays, towards the Plano concave mirror (66.8). The Plano convex mirror (66.8) drives the light rays again into the horizontal direction of projection. Said systems are all housed inside the tubular structure (66.4), which is totally closed and sealed everywhere. This avoids any cleaning required to the mirrors (66.5, 66.6, 66.7, 66.8, 66.9, 66.11, 66.12) inside the tubular structure (66.4) because these (66.5, 66.6, 66.7, 66.8, 66.9, 66.11, 66.12) are in a closed environment. This hence means that no unwanted biological matter from the environment, environmental species or deposits from dropping rain water, can be accumulated over the surfaces of the mirrors (66.5, 66.6, 66.7, 66.8, 66.9, 66.11, 66.12). Furthermore, the concentration of the light rays is only partly from each concave mirror (66.2) towards the transparent lens shields (66.16) comprised in front of each concave mirror (66.2). This maximises safety of the external environment for light ray concentrations, as no organisms or species such as birds, can be present in front of the concentrated light rays outside the tubular structure (66.4). The light rays are only partly concentrated when being outside the tubular structure (66.4). This means that the area over the transparent shields (66.16) is safe for both humans and environmental species such as birds. However, it is recommended not to approach the concave mirrors (66.2) when being in operation.

The advantage of this design comprising the tubular structure (66.4) is therefore a much reduced maintenance task, which hence reduces the maintenance costs of the system significantly, as well as maximising safety for the environmental organisms of the nature comprised around the system concerned. This is because the tubular structure (66.4) is fully closed and sealed, until reaching the required heat transfer structure (66.13), which can be a heat exchanger or steam generator (66.13). Transparent shields (66.16) can be made of transparent glass, preferably tempered glass, or transparent plastic such as PVC or UPVC. The glass structures (66.4) are always comprised under the concave mirrors (66.2) in order to avoid any obstacles in front of the incoming light rays, which would produce losses in system efficiency due to light ray losses.

This design system comprises a tubular structure (66.4) that is sustained by rigid vertical members (66.1) to the sustaining structure (66.15), which sustains said concave mirrors (66.2) over said tubular structure (66.4). The concave mirrors (66.2) drive and concentrate the light rays through the transparent shields (66.16) towards the convex mirrors (66.5). Said convex mirrors (66.5) then drive the light rays into a horizontal direction of projection towards a Plano concave mirror (66.9), which then concentrates the light rays further towards a Plano convex mirror (66.8). Said Plano convex mirror (66.8) then drives the concentrated light rays horizontally again towards a flat reflection mirror (66.6), which moves the light rays upwards to the required height of projection before being reflected again horizontally by another flat reflection mirror (66.7). So, the next Plano concave mirrors (66.9) concentrate the light rays (66.3) from the next convex mirror (66.5) and the previously concentrated light rays (66.10) from the previously comprised systems, in order to concentrate the light rays again towards a Plano concave mirror (66.8). The light collection systems, comprise each a concave mirror (66.2) and are aligned one after the other (66.2) along the system into a horizontally projecting line, with each comprising a transparent shield (66.16) and a convex mirror (66.5) inside said lower comprised tubular structure (66.4). So, the light rays are driven under a finite set of systems, each comprising a concave mirror (66.2), a transparent shield (66.16) and a convex mirror (66.5). Finally, the light rays are driven by flat reflection mirrors (66.11) to the required horizontal height of projection. So, the light rays are reflected by a flat reflection mirror (66.12) to be driven to a heat exchanger or steam generator (66.13). Said heat exchanger or generator set (66.13) transfers the heat to a fluid circuit (66.14), preferably a water circuit, to drive a steam turbine, hence generating electricity by driving in turn a generator set.

The light collection and concertation system can also be comprised on uneven or rough ground floor terrain (67.13). This hence means that the lower tubular structure (67.12) has to follow the uneven terrain (67.13) by driving the light rays upwards or downwards as required by using sets of flat reflection mirrors (67.1, 67.2, 67.3, 67.4). The transparent shields (67.11) are comprised at each light collection system. The flat reflection mirrors (67.1, 67.2, 67.3, 67.4, 67.6, 67.7) can also be comprised in sets of laterally comprised flat mirrors (67.1, 67.3, 67.6) in order to lift or lower the high of projection of the light rays horizontally by the position of the light delivery mirror (67.4, 67.7). So, the tubular structure (67.12) can be driven along the rough terrain (67.13). Flat reflection mirrors (67.8) can also move the light rays downwards. The light rays are concentrated by concave mirrors (67.9) and driven again horizontally by convex mirrors (67.5). These concave (67.9) and convex (67.5) mirrors can also be comprised inside the tubular structure (67.12) in order to concentrate the light rays even further without the usage of more mirror sets. All mirrors (67.1, 67.2, 67.3, 67.4, 67.5, 67.6, 67.7, 67.8, 67.9) are comprised inside the tubular structure (67.12), which is closed and sealed to the outer environment. The tubular structure (67.12) comprises a part (67.10) which drives the light rays towards the heat exchanger or steam generator (66.13). The transparent shields (67.11) seal the interior of the tubular structure (67.12).

The light rays can also be driven by the concave mirrors (68.2) towards the convex mirrors (68.6) through the transparent shields (68.17) that are housed along the upper surfaces of the closed tubing structure (68.4), hence sealing the interior of the tubing structure (68.4, 68.9). The tubing structure (68.4) can comprised concave mirrors (68.50 that concentrate the light rays still further towards the convex mirror (68.7). Both mirrors (68.5, 68.7) are comprised inside the tubular structure (68.4). The sustaining structure (68.3) sustains the tubular structure (68.4, 68.9) by vertical sustaining members (68.1). The tubular structure (68.9) is driven over rough terrain on the ground floor (68.8), no matter how rough or irregular the terrain (68.8) is. The transparent shields (68.17) are curved over the top structure of the tubular structure (68.4, 68.9), along with the tubular structure itself (68.4, 68.9) in order to facilitate the evacuation of rain particles from said transparent shields. The upper covers sustained to the concave mirrors (68.2) also assist in avoiding that. The flat reflection mirrors (68.10, 68.11) comprised inside said tubular structure (68.9), drive the light rays to the required heights of projection inside the tubular structure (68.9). Sets of laterally positioned flat reflection mirrors (68.13) are comprised over light collection (68.12) and driving (68.11) mirrors in order to adjust the height of projection to the minor required detail. The flat reflection mirrors (68.14) are also used to drive the concentrated light rays (68.15) to the flat reflection mirror (68.16) to drive the light rays towards the required heat exchanger or steam generator (66.13).

The light rays are concentrated under each concave mirror (68.2) in a plurality of times by the concave (68.5) and convex (68.7) mirrors, hence concentrating the newly collected light rays and the already concentrated light rays into a highly concentrated light ray beam, comprised projecting out of the convex mirrors (68.7) at each time. The concave (68.5) and convex (68.7) mirrors concentrate the light rays at even higher concentration ratios, hence maximising the light ray concentration efficiency of the system.

The sustaining structure (69.3) can project into a straight line projection if the surface of the terrain is smooth, hence sustaining the tubular structure (69.4, 69.16) by vertical sustaining members (69.2) to said sustaining structure (69.3). The concave mirrors (69.1) concentrate the light rays towards said convex mirror (69.6) inside said tubular structure (69.4, 69.16) through the transparent shields (69.5). Then inside said tubular structure (69.4, 69.16), the light rays are concentrated by a concave mirror (69.6) into the convex mirrors (69.8). Once concentrated, said light rays are driven by sets of flat reflection mirrors (69.9, 69.12) to the required height of projection. So, the next system collects the newly collected light rays (69.11) and the already concentrated light rays (69.10) to the concave mirror (69.6), which then concentrates these (69.10, 69.11) towards the convex mirror (69.8) again. Flat reflection mirrors (69.13, 69.17) move the light rays (69.14) to the required position of horizontal projection, after being driven horizontally into a plurality of times by the mirrors (69.6, 69.8, 69.9, 69.12). So, said light rays (69.14) are finally driven towards the tubular structure (69.15) of the fluid driving pipe (69.15). Said pipe (69.15) comprises both primary (69.18) and energy storage fluid (69.19) pipes beside each other, embedded into the same pipe (69.15). So, heat can be transferred to both pipes simultaneously to supply storage heat and drive the required energy production machinery, e.g. steam turbines, simultaneously. Said heat transfer area is comprised in a fully sealed environment from the exterior of said tubular structure (69.4, 69.16), hence avoiding pollution or unwanted deposition of environmental matter.

The closed tubular structure (70.4) is sustained to the sustaining structure (70.3) by sustaining vertical members (70.1). The concave mirrors (70.2) of each system, drives the light rays through the transparent shield (70.5), towards the convex mirror (70.7). The Plano concave mirrors (70.6) then concentrate the light ray towards the Plano convex mirrors (70.8). Plano convex (70.8) and concave (70.6) mirrors also concentrate the light rays in an appropriate way. Said mirrors (70.6, 70.8) are all comprised inside the tubular structure (70.4, 70.17). The flat reflection mirrors (70.9, 70.10) move the position of horizontal projection upwards to the required projection height. The newly collected light rays (70.12) from the next concave mirror (70.7) and the already concentrated light rays (70.11), are concentrated by the next Plano concave mirror (70.6) towards the next Plano convex mirror (70.8). The next positioned flat reflection mirrors (70.14) move the light rays to the required position of horizontal projection, where the flat delivery mirror (70.160 is comprised. The flat upper mirrors (70.14) are comprised into a box like structure (70.15), which does not affect the light rays received by the next system, and which is fully sealed from the outer environment. The tubular structure (70.17) hence drives the reflected light rays onto a plurality of times until reaching a set of flat reflection mirrors (70.18, 70.22), which position the light rays onto the required position of horizontal projection. The light rays (70.11) are always driven under the next system's concave mirror (70.7). The flat reflection mirror (70.19) at the end of the system, drives the light rays (70.20) towards the fluid driving pipe (70.21), which transfers the light ray heat to both the primary (70.23) and energy storage fluid (70.24) pipes simultaneously, as said pipes (70.23, 70.24) are embedded into said fluid driving pipe (70.21). The terrain (70.13) can be rough, but the tubular structure (70.17) is driven over said terrain (70.13).

The tubular structure (71.4, 71.18), is sustained to the rigid sustaining structure (71.3) by rigid vertical members (71.1). The concave mirrors (71.2) drives the light rays to the convex mirrors (71.7), which is housed inside the tubular structure (71.4, 71.18). The transparent shields allow the light rays through, but seal the interior of said tubular structure from the outer environment. The Plano concave mirrors (71.6) drive the light rays towards the Plano convex mirrors (71.8). The tubular structure (71.18) is driven over the rough terrain (71.9), over which the light rays are driven. The flat reflection mirrors (71.10, 71.14) drive the light rays to a lower position of horizontal projection. The newly collected light rays (71.11) and the already collected light rays (71.15), are concentrated by the next Plano concave mirror (71.6), which drives said light rays (71.11, 71.15) towards the Plano convex mirror (71.8). The light collection mirror (71.16) drives the light rays to a set of flat reflection mirrors (71.12), which are housed inside a box style structure (71.13) that is part of the tubular structure. The light delivery mirror (71.17) drives the light rays horizontally again into the tubular structure (71.18). The light rays are driven to the last set of flat reflection mirrors (71.19, 71.23) after passing through the Plano concave (71.6) and Plano convex (71.8) mirrors along a plurality of times, under each light collection and concentration system. The concentrated light rays (71.20) are finally driven towards the fluid driving pipe (71.21), which embeds the primary (71.22) and energy storage fluid (71.24) circuit pipes. Said embedded pipes are heated simultaneously by the fluid pipe (71.21), which receives the concentrated light rays straight into it (71.21).

The concentrated light rays (72.5) can also be driven towards a concave mirror (72.9). The light rays are driven through a pipe (72.10), which makes part of the tubular structure (72.2). The concave mirror (72.9) is sustained by sustaining members (72.8) to the fluid driving pipe (72.11). Said concave mirror (72.9) drives and concentrates the incoming light rays (72.5) towards the fluid driving pipe (72.11). As said fluid driving pipe (72.11) comprises both primary (72.13) and energy storage fluid (72.12) pipes embedded into it (72.11), the heat of the light rays is transferred simultaneously to the fluids of both pipes, while maintaining the tubular structure (72.2) closed and sealed from the outer environment. The concave mirror (72.9) is also comprised inside the tubular structure (72.2), and is hence comprised inside a box style structure (72.7), which comprises an inclined roof (72.6) on it to drive the rainwater away. This system, as all others, comprises concave mirrors (72.1) at each light collection system, with concave (72.3) and convex mirrors (72.4) inside the tubular structure (72.2) to further concentrate the light rays.

The light rays are reflected and concentrated by concave mirrors (73.1) towards the convex mirrors. The tubular structure (73.2) is driven around the rough terrain surface (73.3) of the ground floor (73.3). The concave mirror (73.5) is sustained by rigid sustaining members (73.4) to the fluid driving pipe (73.7). The pipe (73.6) drives the concentrated light rays towards said concave mirror (73.5). The concave mirror (73.5) drives and concentrates the light rays towards the fluid driving pipe (73.7). Said fluid driving pipe (73.7) embeds the primary circuit pipe (73.9) and the energy storage fluid pipe (73.8), to which the heat of the light rays is transferred automatically by the driving of said light rays to said fluid driving pipe (73.7) by said concave mirror (73.5).

The light driving tubular structure (74.1) are being driven over the rough terrain surface (74.2) as in the case of all systems. The housing (74.3) of the Plano concave mirror (74.4) is part of the tubular structure (74.1) and is sealed from the exterior environment. The Plano concave mirror (74.4) is sustained by rigid members (74.6) to the fluid driving pipe (74.5). Said primary (73.9) and energy storage fluid (73.8) pipes are embedded inside the fluid driving pipe (74.5). A Plano concave mirror (74.4) can be used instead of a concave mirror (72.9, 73.5) in order to drive the incoming light rays along a greater surface on the fluid driving pipe (74.5). This results in a better, more distributed and more efficient heat transfer of the heat of the light rays on the surfaces of the fluid driving pipe (74.5), and hence to the fluids of said pipes (73.8, 73.9).

The concave mirrors (75.1) drive and concentrate the light rays towards the convex mirrors (75.2) through the transparent shields (75.3). The convex mirror (75.2) is comprised inside the tubular structure (75.6). Said tubular structure (75.6) is sustained to the rigid sustaining structure (75.4) by the means of sustaining members (75.5). The light ray driving pipe (75.12) drives the light rays towards a flat reflection mirror (75.7), which then drives the light rays upwards towards a downward projecting Plano concave mirror (75.8). Said Plano concave mirror (75.8) is supported by vertical members (75.13). Said Plano concave mirror (75.8) drives and concentrates the upward projecting light rays, downwards towards the fluid driving pipe (75.14), which embeds the primary (75.16) and energy storage fluid (75.15) pipes. The Plano concave mirror (75.8) hence transfers the light rays heat simultaneously to the two fluid pipes (75.15, 75.16). The vertically downward projecting position of the Plano concave mirror (75.8) allows at least two horizontal pipes (75.11, 75.12) to drive the concentrated light rays of the light collection and concentration systems, to a flat reflection mirror (75.7) at each side. Said flat reflection mirrors (75.7) then drive the light rays vertically upwards towards said Plano concave mirror (75.8) for light ray concentration towards the fluid driving pipe (75.14). Said Plano concave mirror (75.8) and flat reflection mirrors (75.7) and fluid driving pipe (75.14), are comprised inside a box style structure (75.9) that makes part of the tubular structure (75.6), and which is sealed from the outer external environment. The roof comprises an inclined part (75.10) in order to drive the rain water away from the roof (75.0).

The tubular structure (76.1) is driven over the rough terrain (76.2) by driving the tubular structure (76.3) over the rough terrain surface (76.2). The start of the tubular structure (76.1) is initiated at the initial light collection and concentration system set. A plurality of light driving pipes (76.4), drive the light rays towards a set of flat reflection mirrors (76.8), which then drive the light rays to the downward projecting surface of the Plano concave mirror (76.7). Said Piano concave mirror (76.7) then drives and concentrates the light rays towards the fluid driving pipe (76.9), which embeds the primary (76.11) and energy storage fluid (76.10) pipes. The Plano concave mirror (76.7) is enclosed inside a box style structure (76.6) which makes part of the tubular structure (76.4), which also comprises an inclined roof structure (76.5) to drive the rainwater away. Said structure (76.6) interior is also sealed from the exterior environment.

The tubular structure (77.1) is sustained at the initial light collection and concentration system set. Said tubular structure (77.2) is driven over the rough terrain surface (77.3) of the rough floor (77.3), no matter how rough the terrain is (77.3). A concave mirror (77.5) can be comprised projecting downwards towards the fluid driving pipe (77.7), hence transferring the light rays' (77.6) heat to said pipe (77.7), and in turn to the primary (77.9) and energy storage fluid (77.8) pipes simultaneously. A concave mirror (77.5) allows the light rays to be concentrated into a lower surface area on the surface of the fluid driving pipe (77.7), hence minimising the surface area required to a minimum. A plurality of pipes (77.4) can be comprised driving the light rays towards said flat reflection mirrors (76.8), which hence drives the light rays towards said concave mirror (77.5). The concave mirror (77.5) reflects and drives the light rays (77.60 towards the fluid driving pipe (77.7), hence maximising the concentration of said light rays (77.6) towards said pipe (77.7).

Plano concave (75.8, 76.7) or concave (77.5) mirrors can be comprised projecting upwards, using the same system, but with flat reflection mirrors (76.8) reflecting the light rays onto the opposite way round.

The light rays can be driven through a tubular structure 78.4a) which is driven along an upper direction due to the rough terrain surface (78.10a). In that case, the light rays can be reflected by flat reflection mirrors (78.2a) on the lower side, and be driven upwards along the tubular structure towards the upper flat reflection mirror (78.5a). Said flat reflection mirror (78.5a) drives the light rays back into a horizontal direction of projection. The light rays are hence driven along the next horizontal strip (78.8a). The flat reflection mirrors (78.2a, 78.5a) cover the entire view from the rear pipes (78.4a), hence guaranteeing that all light rays are accurately driven and reflected into the required directions. Opening structures (78.3a, 78.9a) can be comprised along the lower surfaces of the tubular structure (78.4a, 78.8a). The sustaining members (78.1a) sustain said tubular structure (78.4a, 78.8a) by rigid vertical sustaining members (78.7a). However, as said tubular structure should be sealed and closed to avoid maintenance issues and environmental issues, said openings (78.3a, 78.9a) might not be needed at all. The sustaining structural members (78.1a) are sustained over the ground floor surface (78.10a) by vertical sustaining members (78.6a) in order to guarantee a stable structure.

In the same design manner, the rigid sustaining members (78.1b) sustain the tubular structure (78.3b) by the means of horizontal sustaining members (78.4b). The flat reflection mirror (78.5b) of the initial light reflection drives the light rays (78.6b) into the required direction of projection along the tubular structure (78.3b). The flat reflection mirror (78.7b) of the next light reflection drives the light rays (78.6b) back into the required direction of projection. So, the tubular structure (78.8b) then drives the light rays into the required direction of projection. Openings (78.2b) can be included on the lower surface of said tubular structures (78.3b) in order to evacuate rainwater if required. However, the sealed and closed tubular structures (78.3b) avoids any use of said openings (78.2b), as said openings would invite undesired matter or environmental species, to be deposited along critical areas, hence harming the environment and increasing maintenance costs of the system. So, said openings (78.2b) are therefore not required. Said flat reflection mirrors (78.5b, 78.7b) comprise the entire view in the tubular structures (78.3b, 78.8b) in order to guarantee that all light rays are reflected and driven into the required directions of projection. So, the tubular structure (78.3b) can be inclined as required. Said tubular structure (78.4a) can also be inclined upwards or downwards according to the geometry of the terrain (78.10a).

The sustaining structural members (79.1), sustaining the tubular structure (79.14) by the means of sustaining members (79.2) that attach to both sustaining members (79.1) and tubular structure (79.14). The sustaining structure (79.1) is sustained by vertical members (79.8) to the ground floor (79.12). The light rays are reflected by a flat reflection mirror (79.9) that drives the light rays vertically upwards, and then to two laterally comprised flat reflection mirrors (79.3) to drive the light rays laterally. Said light rays are then directed by a light delivery mirror at the required height. This design is used to drive the light rays over a rough terrain geometry profile (79.12). The upper flat reflection mirrors (79.3) is comprised inside a box style structure (79.4) that makes part of the tubular structure (79.5). Said light rays can also be driven by the tubular structure (79.5) to low laterally comprised flat reflection mirrors (79.11) if the terrain surface is low.

Openings (79.7, 79.10) comprised on the lower surfaces of the tubular structure (79.5) are used to evacuate the rainwater if it accumulates inside the tubular structure (79.14). This system is however unnecessary, given that the tubular structure (79.5, 79.14) is sealed from the outer environment to minimise maintenance costs and harm to the environment. The flat reflection mirrors (79.6) can drive the light rays to a higher point of projection if the terrain (79.12) comprises the uneven demography (79.12) comprised. The lower flat reflection mirrors (79.13) can be used to change the direction of projection of the light rays. This is done by driving the light rays again towards an inclined driving mirror. This is because a flat reflection mirror (78.2a, 78.5a) would comprise a too large space or area inside the tubular structure (79.14), which makes this system more efficient. The light rays (79.15) are hence driven along the tubular structure (79.14) along the downward inclined tubular structure (79.14) until reaching a flat light collection mirror (79.19). The flat reflection mirrors (79.16) drive the light rays back downwards again, towards a light delivery mirror (79.20), which drives the light rays (79.15) again on a horizontal direction into the horizontal stretch of pipe (79.17). The sustaining members (79.1) are sustained by vertical sustaining members (79.21) on the ground floor (79.12). The light collection mirror (79.19) is slightly inclined downwards to reflect the light rays (79.15) from the inclined tubular structure (79.14). An opening (79.18) is comprised along the lower surface of the inclined tubular structure (79.14) in order to evacuate any deposited rain water. However, said feature (79.18) is not needed because the tubular structure (79.14) is sealed to the outer external environment.

The structural sustaining members (80.1), sustaining the tubular structure (80.9) by the means of horizontal sustaining members (80.2) which attach to both the tubular structure (80.9) and the sustaining members (80.1). The light rays (80.14) are driven over the openings (80.13) to drain any rain water away from the tubular structure (80.9). The horizontal sustaining members (80.3) are concentrated to the other sustaining members (80.1). The light rays (80.14) can be reflected by laterally comprised reflection mirrors (80.15). Flat reflection mirrors (80.4, 80.16) can drive the light rays (80.14) onto a perpendicular direction of projection as required by the terrain geometry. This minimises construction costs of the system. The flat reflection mirrors (80.17) can be comprised laterally to each other to reflect the light rays (80.14) accurately towards a light delivery flat mirror (80.6). The light delivery flat mirror (80.6) is slightly inclined to drive the light rays (80.8) towards an inclined tubular structure. The light rays (80.14) are initially collected by a flat light collection flat mirror (80.5). Openings (80.7) can be comprised on said tubular structure to drain the rain water away. This feature is however not really necessary. The light collection flat mirror (80.18) then drives the light rays (80.8) towards a set of flat reflection mirrors (80.10), which drives said light rays (80.8) towards a flat light delivery mirror (80.19). Said light delivery mirror (80.19) then drives the light rays (80.12) onto the required horizontal strip of tube (80.20). Openings (80.11) can also be comprised along the bottom surface of that tube strip (80.20). Like the light delivery mirror (80.6), the light collection mirror (80.18) is also inclined in order to drive the light rays onto the required direction of projection, along the inclined projecting path. The flat reflection mirrors would not be efficient enough, and would occupy a lot of space, hence making the system more difficult to install, and hence less flexible to use or operate for any rough terrain conditions.

The upper light collection flat mirror (81.1a) is sustained by a rigid horizontal member (81.6a), which is sustained by the vertical structure (81.2a) that attaches to the sustaining members (81.4a). Said vertical member (81.2a) is sustained by a set of horizontal members (81.4a) which are sustained over the surface of the ground floor (81.5a). The concave mirrors (81.3a) are sustained by said vertical members (81.4a) at each side, which also sustain the horizontal member (81.7a) that keeps both vertical members (81.4a) together. Said horizontal member (81.7a) also sustains the sustaining members (81.12a) of the tubular structure (81.11a), which sustains said tubular structure (81.11a) over the ground floor surface (81.5a). The convex mirror (81.8a) is comprised in the inner volume (81.9a) of the tubular structure (81.11a). On this design, the opening is not sealed by a transparent shield, as an opening (81.10a) on the lower surface of the tubular structure (81.11a) allows any rainwater of flowing out of the tubular system (81.11a).

However, the most suitable design is a tubular structure (81.9b) where the light rays driven by the concave mirrors (81.6b), are driven across a transparent sealing shield (81.12b). Said shields can be made of glass, preferably tempered glass or PVC or UPVC, and avoids any undesired environmental dirt or species, as well as rain water, of entering into the interior volume (81.10b) of the tubular structure (81.9b). This avoids any undesired deposition of water or matter into the tubular structure (81.9b). Therefore no opening (81.10a) is needed on this design. The sealed transparent shield (81.12b) comprises a curved surface in order to allow the drainage of rain water to the sides of said tubular structure (81.9b). The convex mirror (81.11b) is comprised inside the inner volume (81.10b) of the tubular structure (81.9b). The sustaining members (81.8b) of the tubular structure (81.9b), sustain the tubular structure (81.9b) over the ground floor surface (91.5b), and attach to the horizontal sustaining member (81.7a). Said member (81.7a) is sustained by the two lateral sustaining members (81.7b), which sustain the concave mirror (81.6b) at each side and which are sustained on the ground floor surface (81.5b). The sustaining members (81.7b) sustain the horizontal sustaining member (81.7a), the concave mirror (81.6b) and the upper horizontal sustaining member (81.2b). The vertical sustaining member (81.4b) sustains the upper horizontal rigid member (81.1b), which in turn supports the upper flat light collection mirror (81.2b) on the required position. The flat light collection mirror (81.2b) is sustained to said vertical member (81.4b) by the actuating members, which actuate and orientate said mirror (81.2b).

However, the curved transparent shield (81.12b) can drive light rays to be reflected out of control on said transparent shield (81.12b). So, a flat surfaced transparent shield (81.1b) with a wiper blade to move the water away, is to be preferably recommendable to use.

The light rays can be concentrated into a variety of methods, using concentrating systems that can concentrate a plurality of concentrated light rays, in order to maximise the efficiency of the system. The light rays can be driven across the tubular structures (82.10) in a plurality of tubular structures from various systems, which can comprise Plano concave mirrors (82.14) that further concentrate the light rays into Plano convex mirrors (82.1), as well as comprising flat reflection mirrors (82.15, 82.16) that can adjust the projection height of the light rays to the required height for horizontal projection. The other tubular structures (82.10) can project beside said structure, by comprising flat reflection mirrors (82.2) that align the light rays in parallel to the other light rays, hence being driven along a horizontal structural path (82.3) towards a set of Plano concave mirrors (82.5). The Plano concave mirrors (82.5) project upwards, and hence towards the fluid driving pipe (82.9) that is comprised along the upper surfaces of said mirrors (82.5).

The set of Plano concave mirrors (82.5) projects across many directions of projection to collect as much light ray heat as possible, but drive the light rays towards the same fluid driving pipe (82.9) in order to maximise efficiency and heat transfer while minimising the number of components. The Plano concave mirrors (82.5) also sustain the fluid driving pipe (82.9) by rigid sustaining struts (82.8). The fluid driving pipe (82.9) comprises the primary (82.6) and energy storage fluid (82.7) flowing in parallel to each other (82.6, 82.7), but separate to each other (82.6, 82.7). The Plano concave mirrors (82.5) heat the fluids flowing through both pipes (82.6, 82.7) simultaneously inside the fluid driving pipe (82.9). The energy storage fluid pipe (82.70 supplies heat to the energy storage fluid tank (82.11), while the primary circuit fluid from the primary circuit fluid pipe (82.6) drives a steam turbine (82.12) that in turn drives a generator (82.13) to generate electricity. The primary circuit fluid should be preferably water, which converts into steam for steam turbine (82.12) driving. A roof structure (82.4) is comprised over the Plano concave mirrors (82.5) to minimise deposition of matter, such as rain particles or environmental deposits.

The light rays (83.7) can be driven through the tubular structures (83.1), as a plurality of tubular structures (83.1) projecting in parallel to each other, towards the surface of a Plano concave mirror (83.8). Said Plano concave mirror (83.8) makes part of a set of Plano concave mirrors (83.8) that projects into a plurality of directions to collect as much light ray heat as possible. Said system maximises the efficiency and flexibility of the configuration of light collection and concentration systems, including the very orientation of these. Concentrated light rays from a plurality of directions, can project towards said Plano concave mirrors (83.8), projecting onto a plurality of directions of projection, all simultaneously. As said Plano concave mirrors (83.8) project sideways, said light rays are driven towards the fluid driving pipe (83.6), which flows along the centre areas of said mirrors (83.8). The fluid driving pipe (83.6) comprises both primary (83.3) and energy storage fluid (83.4) pipes being driven in parallel to each other, hence collecting the light ray heat simultaneously. Said two pipes (83.3, 83.4) are embedded inside the fluid driving pipe (83.6).

Vertical sustaining members (83.2) can sustain the tubular horizontal projecting pipes (83.1) into the required positions. The roof structure (83.5) impedes any rain water from being deposited over the surfaces of the Plano concave mirrors (83.8). The fluid driving pipe (83.6) can be sustained to the Plano concave mirrors (83.8) by rigid sustaining structures (83.9).

The light rays from a plurality of systems can be driven onto parallel projecting tubular structures (84.2) by the help of flat reflection mirrors (84.1) to drive said light rays towards a Plano concave mirror (84.3). Said Plano concave mirror (84.3) makes part of a set of Plano concave mirrors (84.3, 84.5) that project on a plurality of directions to maximise light rays collection efficiency and maximise the flexibility of the installation of the system. So, said light rays of a plurality of tubular structures, once being concentrated, are driven towards the Plano concave mirror (84.3). Said Plano concave mirror (84.3) drives the light rays towards the fluid driving pipe (84.10). Said fluid driving pipe (84.10) is comprised downwards, flowing along the lower surfaces of the mirrors (84.3, 84.5) because said mirrors (84.3, 84.5) project downwards. The same fluid driving pipe (84.10) flows along all mirrors (84.3, 84.5) to collect all the light ray heat. Said pipe (84.10) comprises both primary (84.12) and energy storage fluid (84.11) pipes embedded into it, hence maximising heat transfer efficiency to the fluids of said pipes (84.11, 84.12). So, both primary (84.13) and energy storage fluid (84.14) pipes are embedded one (84.13) over the other (84.14) inside said fluid driving pipe (84.10). This makes heat transfer more efficient and simultaneous to both pipes (84.11, 84.12, 84.13, 84.14) simultaneously. Sustaining struts (84.4) sustain the fluid driving pipe (84.10) to the Plano concave mirrors (84.10).

The energy storage fluid is supplied by pipe (84.15) to the energy storage fluid tank (84.6), hence supplying heat, while the primary circuit fluid is driven by pipe (84.16) to drive a steam turbine (84.8), which in turn drives a generator (84.9) to generate electricity. The two processes take place simultaneously. So, during low light or dark hours, the energy storage tank (84.6) supplies heat to a heat exchanger or steam generator, which transfers heat to the primary circuit pipe (84.16) in order to drive said steam turbine (84.8) during said time, hence avoiding any stoppage in power generation of the system. Another pipe (84.7) brings the primary circuit fluid back to the starting position, to be driven again along the mirrors (84.3, 84.5) through the fluid driving pipe (84.10).

The tubular structures (85.2) are driven in parallel to each other towards a Plano concave mirror (85.4). The flat reflection mirrors (85.1) drive the light rays towards the required directions of projection, in order to drive these towards the Plano concave mirror (85.4). Said Plano concave mirrors (85.4) are comprised in a set of Plan of concave mirrors (85.4, 85.6) as previously mentioned, but this time projecting upwards. So, the light rays are driven towards the fluid driving pipe (85.3). Sustaining struts (85.5) sustain the Plano concave mirrors (85.4) to said fluid driving pipe (85.3). The primary (85.8) and energy storage fluid (85.7) pipes are embedded inside said fluid driving pipe (85.3). The primary circuit fluid is driven by a pipe (85.9) to drive a steam turbine (85.11) that in turn drives a generator (85.12) to generate electricity. The fluid is then driven by a pipe (85.10) back to the start of the heat collection process. The primary circuit fluid should be preferably water. The tubular structures (85.14) can hence drive light rays from many sides towards said Plano concave mirrors (85.4, 85.6). Flat reflection mirrors (85.13) can drive the light rays towards the required directions of projection. The tubular structures (85.14) comprise lateral walls (85.15). This system design allows the light rays to be driven to various Plano concave mirrors (85.4, 85.6) simultaneously.

The tubular structures (86.1, 86.13) can also drive the light rays (86.14) straight horizontally towards a Plano concave mirror (86.16), which is part of a set of Plano concave mirrors (86.16). The light driving pipes (86.2) can be driven vertically upwards to position the light rays (86.14) onto the required positions of projection before being reflected by the flat reflection mirrors (85.1). The sustaining structure (86.15) sustains the mirrors (86.16) into the required positions of projection compared to the fluid driving pipe (86.6). Said Plano concave mirrors (86.16) project sideways, towards the sides into a plurality of directions to maximise light ray collection from the maximum number of light collection and concentration systems. A roof structure (86.3) minimises the amount of rain water deposited on the Plano concave mirrors (86.16) by the environment.

The tubular structures (86.18) can also comprise Plano concave mirrors (86.8) that concentrate the light rays (86.14) further towards a Plano convex mirror (86.20), before driving said light rays towards a set of flat reflection mirrors (86.7, 86.19), which moves the light rays (86.14) to the required position of horizontal projection. The light rays (86.17) are reflected by said Plano concave mirrors (86.16) towards the fluid driving pipe (86.6), which embeds the primary (86.4) and energy storage fluid (86.5) pipes into said fluid driving pipe (86.6). The primary circuit fluid is driven through a pipe (86.9) after heat collection, in order to drive a steam turbine (86.11) which in turn drives a generator (86.12) to generate electricity. A pipe (86.10) then drives the primary circuit fluid back to the start of the heat collection process again.

The tubular structures (87.10) drive the light rays horizontally after being reflected by flat reflection mirrors (87.1) from vertically projecting directions, or by flat reflection mirrors (87.6) from the sides, such that the light rays are projected horizontally and in parallel to each other along the tubular structures (87.10, 87.15). Said light rays are hence driven towards a set of Plano concave mirrors (87.3, 87.5) that project into a plurality of directions by comprising a plurality of mirrors (87.3, 87.5) in order to maximise the light ray collection for a plurality of directions, hence maximising efficiency and flexibility of the system. Said tubular structures (87.15) can be sustained by vertical members (87.14) over the ground floor. The Plano concave mirrors (87.3, 87.5) reflect the light rays towards the fluid driving pipe (87.11) which flows as one pipe in front of all mirrors (87.3, 87.5) in order to maximise heat collection efficiency, as well as flowing along the lower surfaces of said mirrors (87.3, 87.5), and hence closer to the ground floor surface due to the downward direction of projection of said Plano concave mirrors (87.3, 87.5).

Sustaining structures (87.4) sustain said Plano concave mirrors (87.3, 87.5) to said fluid driving pipe (87.11), such that the positions of the two members (87.3, 87.5, 87.11) are minimised as much as possible. The fluid driving pipe (87.11) comprises the primary (87.12) and energy storage fluid (87.13) circuits embedded inside said pipe (87.11), hence offering a simultaneous heat transfer system. The primary circuit pipe (87.12) drives fluid through a pipe (87.16) after heat collection, towards a steam turbine (87.8) that is driven by said heated fluid, which should be in the form of steam when driving the turbine (87.8). Said turbine in turn drives a generator (87.9) to generate electricity. The back driving pipe (87.7), drives fluid back to the start of the heat collection process for the primary circuit fluid pipe (87.12).

The tubular structures (88.2) drive the light rays horizontally after being reflected by flat reflection mirrors (88.1) if these project vertically upwards before, or by flat reflection mirrors (88.10) if these were projecting towards the side before. The sustaining vertical members (88.16) sustain the tubular structures (88.2) on the ground floor surface (88.14). The structure where the mirrors (88.17) can be closed and sealed from the outer environment, hence avoiding any unwanted deposition of environmental matter or rain water on the mirrors (88.17) and systems. So, insulation members (88.15, 88.19) seal the system on all sides of said mirrors (88.17). Said mirrors (88.17) reflect the incoming light rays towards the fluid driving pipe (88.3), which is driven along the upper surfaces of the mirrors (88.17) due to the upward projection of said mirrors (88.17). Said fluid driving pipe (88.3) comprises both primary (88.5) and energy storage fluid (88.6) pipes as previously mentioned, embedded inside the fluid driving pipe (88.3). The mirrors (88.17) and pipes (88.3) are reflected by an upper closed roof (88.7) that makes part of the insulated casing structure (88.15, 88.19).

The horizontal light driving pipes (88.11, 88.13) can drive the light rays in parallel to each other, and also comprise Plano concave mirrors (88.22) that concentrate the light rays towards a Plano convex mirror (88.23). Flat reflection mirrors (88.12, 88.21) then drives said light rays to the required horizontal position of projection. Said Plano concave (88.22) and Plano convex (88.23) mirrors are comprised if a plurality of light ray beams are driven across the pipe (88.13). A Plano concave mirror (88.8) can concentrate the light rays towards a Plano convex mirror (88.20), before said light rays are driven horizontally into a conduit (88.18) towards the Plano concave mirror (88.17). This would improve light concentration efficiency. A closed and sealed structural roof (88.9) protects said Plano concave (88.8) and Plano convex (88.20) mirrors from the environment.

The light rays can be driven by vertically projecting pipes (89.1) to the flat reflection mirrors, such that said horizontal pipes (89.2) drive the light rays straight towards a Plano concave mirror (89.11). Structural members (89.9) insulate the interior of the closed structure (89.3) where said Plano concave mirrors (89.11, 89.12, 89.15) from the outer environment. Sustaining structures (89.10) sustain the fluid driving pipe (88.3) to the Plano concave mirrors (89.11, 89.12, 89.15) at all times. Said fluid driving pipe (88.3) comprises both primary (89.14) an energy storage fluid (89.13) pipes embedded inside it (88.3). Said steam is comprised over the ground floor surface (89.8), which can also be rough if it results to be so. A covering member (89.4) seals the Plano concave mirror (89.17) from the outer environment, which can hence again concentrate the light rays towards a Plano convex mirror (89.18) without any deficiency.

The light rays are then driven towards the Plano concave mirror (89.15) by a horizontally projecting conduit (89.16). Said light rays are then driven towards the primary (89.14) and energy storage fluid (89.13) pipes. The Plano concave mirrors (89.11, 89.12, 89.15) are sideways projecting, such that the primary (89.14) and energy storage fluid (89.13) circuits are driven along the mid-section of said mirrors (89.11, 89.12, 89.15) for efficient heat collection. The light rays are driven by the tubular structures (89.5) to the initial concentrating Plano concave mirror (89.17). Said pipes (89.5) can comprise Plano concave mirrors (89.20) to concentrate the light rays towards a Plano convex mirror (89.21), before driving said light rays to a set of flat reflection mirrors (89.7, 89.19) which can adjust the position of horizontal projection of said light rays before reaching said Plano concave mirror (89.17). The advantage of comprising a pre concentrating mirror (89.17) is that less surface is required on the light ray collection mirrors (89.11, 89.12, 89.15), and hence a higher plurality of light ray driving pipes (89.2, 89.5) can be driven towards said light ray concentrating mirrors (89.11, 89.12, 89.15).

The light rays can be driven by flat reflection mirrors (90.1) to the required position of horizontal projection, such that said light rays then project horizontally in parallel to each other long the horizontally projecting pipes (90.12). Said pipes (90.12) project towards a Plano concave mirror (90.3) As said Plano concave mirror (90.3) projects downwards, the surface of said mirror (90.3) drives the light rays towards the fluid driving pipe (90.17), which is driven near to the ground floor surface. The sustaining members (90.2) sustain the Plano concave mirrors (90.3, 90.4) and the fluid driving pipe (90.17) into the required position of projection. The sustaining vertical member (90.13) sustain the horizontally projecting pipes (90.12) into the required positions. The insulated wall (90.14) at the side, insulates and seals the interior of the closed and sealed structure (90.5) from the outer environment, hence minimising contamination and maintenance costs to said Plano concave mirrors (90.3, 90.4). The Plano concave mirrors (90.3, 90.4) are comprised in mirror sets (90.3, 90.4) that project into a plurality of directions of projection in order to maximise system flexibility and utility at all times, with a capacity for a maximum number of light ray driving pipes (90.12) towards said mirrors (90.3, 90.4).

The sets of Plano concave mirrors (90.3, 90.4) are comprised inside the closed insulated structure (90.5, 90.14). The fluid driving pipe (90.17) comprises both primary (90.16) and energy storage fluid (90.15) pipes comprised inside said pipe (90.17). Both pipes (90.15, 90.16) project in parallel to each other along the fluid driving pipe (90.17). Flat reflection mirrors (90.7, 90.18) drive the light rays to the required position of horizontal projection in order to drive the light rays towards the required Plano concave mirror (90.3, 90.4). Said light rays are driven into a horizontal conduit (90.6) after the moving of the position of projection. The light rays can also be driven through horizontal pipes (90.9) after being concentrated, directly towards a Plano concave mirror (90.8) that concentrates the light rays straight towards a Plano convex mirror (90.19). The light rays are then driven directly towards said flat light collection mirror (90.18) horizontally. Flat reflection mirrors (90.10) can reflect the light rays if the light rays project onto a horizontal direction of projection. The Plano concave mirror (90.21) concentrates the light rays into a Plano convex mirror (90.22), before being driven to a set of flat reflection mirrors (90.11, 90.20) for adjustment of the position of horizontal projection of said light rays. The light rays are then driven directly towards said Plano concave mirror (90.8).

The light rays can be driven through horizontally projecting pipes (91.2) after being concentrated into the tubular structures, such that the vertical light driving pipes drive the light rays to the required position of horizontal projection. The light rays (91.4) are then driven towards a Plano concave mirror (91.7) which projects sideways. This Plano concave mirror (91.7) is part of a set of Plano concave mirrors (91.7) that project opposite to each other along a sideways direction of projection, hence maximising the efficiency of light rays collection and concentration. Said mirrors (91.7) then drives the light rays (91.14) towards the fluid driving pipe (91.5), which transfers the light rays heat instantaneously to the primary (91.16) and energy storage fluid (91.15) pipes. The sustaining structures (91.60 sustain the Plano concave mirrors (91.7) firmly to the fluid driving pipe (91.5), which is projected in front of both mirrors (91.7). The primary circuit (91.8) drives the fluid to drive a steam turbine (91.11), which in turn drives a generator (91.13) to generate electricity. The tubular pipes (91.9) can also comprise flat reflection mirrors (91.10) if said light rays are driven horizontally. The pipes (91.9) can also comprise a Plano concave mirror (91.19) to concentrate the light rays further towards a Plano convex mirror (91.20), before driving the light rays towards a set of flat reflection mirrors (91.17, 91.18) for horizontal heights of projection adjustments. The roof structure (91.3) is used to minimise any deposition of matter on the mirrors (91.7).

The light driving pipes (91.1, 92.2) can also drive the light rays towards a set of flat reflection mirrors (92.4), with one of said flat reflection mirrors (92.4) being comprised in front of each horizontal light ray driving pipe (92.1). Said flat reflection mirrors (92.4) drive the light rays (92.5) vertically downwards towards an upward projecting Plano concave mirror (92.16). Said fluid driving pipe (92.1) is sustained over said Plano concave mirror (92.16) by sustaining struts (92.14). Said upward projecting Plano concave mirror (92.16) drives the light rays upwards towards the fluid driving pipe (92.1), hence transferring the light ray heat instantaneously to the primary (92.1) and energy storage fluid (92.15) pipes. The primary circuit pipe (92.6) drives the heated fluid, preferably water in the form of steam, to drive a steam turbine (92.12), which in turn drives a generator (92.13) to generate electricity. The back flowing pipe (91.12, 92.11) drives the primary circuit fluid back to the start of the energy collection process after driving said steam turbine (91.11, 92.12). Flat reflection mirrors (92.8) drive the light rays towards the flat reflection mirrors (92.4), hence into the required direction of projection. A roof structure (92.3) over said Plano concave mirror (92.16) protects said mirror (92.16) from any unwanted deposits on it (92.16). The Plano concave mirror (92.10) can concentrate further the light trays towards the Plano convex mirror (92.18), before said light rays are adjusted in terms of position of horizontal projection by a set of flat reflection mirrors (92.9, 92.17).

The light rays (93.1, 93.10) can also project directly horizontally towards flat reflection mirrors (93.8), comprised in front of each tubular light driving pipe (93.18), and such that the light rays are driven vertically upwards towards a downwards projecting Plano concave mirror (93.5) by said flat reflection mirrors (93.8). Said flat reflection mirrors (93.8) are each sustained by a horizontal member (93.9) that sustains to the structure (93.2) which sustains the roof structure (93.3) over said mirror (93.5) system. The roof structure (93.3) avoids any unwanted deposits of matter on the mirror (93.5) and flat reflection mirrors (93.8). The sustaining members (93.4) sustain the mirror structure (93.5) over the fluid driving pipe (93.6). This system design transfers heat to the primary (93.7) and energy storage fluid (93.16) circuits simultaneously, which are both embedded inside the fluid driving pipe (93.6). The primary circuit pipe (93.17) drives steam to drive a steam turbine (93.13), which in turn drives a generator (93.14) to generate electricity. The back flowing pipe (93.12) drives the primary circuit fluid, preferably water or steam, back to the heat collection process position. The flat reflection mirrors (94.14) can reflect the light rays form vertical to horizontal, while at other orientations (93.11), said flat mirrors (93.11) can drive the light rays from a horizontal direction of projection, to the required direction of projection. The advantage of this design, is that the downward projecting position of the Plano concave mirror (93.5) avoids any deposition of rain water on its surface, no matter if the roof structure (93.3) is present over it (93.5) or not.

The light rays can also be driven through horizontal parallel projecting tubes (94.1) towards a Plano concave mirror (94.7), which drives said light rays directly to the fluid driving pipe (94.9), which comprises the primary (94.16) and energy storage fluid (94.15) pipes embedded over each other (94.8, 94.17) inside said fluid driving pipe (94.9). The sustaining members (94.60 sustain the set of Plano concave mirrors (94.7) in the required position, compared to the fluid driving pipe (94.9), hence guaranteeing a rigid position between said fluid driving pipe (94.9) and said Plano concave mirrors (94.7). The fluid driving pipe (94.9) is driven across all mirrors of said set of Plano concave mirrors (94.7) in order to maximise heat collection efficiency. A closed roof structure (94.5), closed by side panels (94.3), seals and closes the interior of the place where said mirrors (94.7) are comprised, from the outer environment, in order to avoid any contamination or unwanted deposition by environmental organisms, hence minimising maintenance costs of the system. Flat reflection mirrors (94.2, 94.14) can also drive the light rays to the required directions from being vertically projecting, as well as form being horizontally projecting (94.12). Each pipe (94.11) comprises lateral side walls (94.13) to protect the light rays from any outer unwanted obstacles. The parallel projecting pipes (94.11) can drive the light rays to a Plano concave mirror (94.10), which concentrates the light rays towards a Plano convex (94.18) mirror. The Plano convex mirror (94.18) drives the light rays horizontally again towards one of said Plano concave mirrors (94.7). The Plano concave (94.20) and flat reflection mirrors (94.19) can also be comprised inside the piping (94.11) to pre concentrate the light rays further. Said Plano concave (94.10) and Plano convex (94.18) mirrors pre concentrate the light rays to a single storage light ray beam, hence minimising the size required by said Plano concave mirrors (94.7) for light ray reception.

The light driving tubes (95.1) always come directly from the tubular structures (75.6) that are comprised under the concave mirrors (75.1) on the solar ray collection and concertation systems, such that said tube structures (95.1) remain totally closed and sealed from the outer environment. The vertical light ray driving pipes (95.2) comprise flat reflection mirrors (95.3, 95.15) to drive the light rays horizontally, while the horizontally projecting pipe (95.14) comprises flat reflection mirrors (95.13) to drive said light rays horizontally across the pipe (95.12). The light rays can be pre concentrated by a Plano concave mirror (95.11), which concentrates said light rays to a Plano convex mirror (95.21), which then drives the concentrated light rays (95.20) horizontally towards a light reflection mirror. Alternatively, said light rays (95.5) can be driven directly towards the fat reflection mirrors (95.6). Said light rays (95.5) are driven vertically downwards towards the surface of an upward projecting Plano concave mirror (95.16), which concentrates the light rays directly towards the fluid driving pipe (95.8). The fluid driving pipe (95.8) embeds the primary (95.9) and energy storage fluid (95.18) pipes inside it (95.8), hence maximising simultaneous heat transfer efficiency. The sustaining members (95.17) sustain firmly said fluid driving pipe (95.8) to said lower comprised Plano concave mirror (95.16), hence guaranteeing a firm position between these two members (95.8, 95.16). The flat reflection mirrors (95.6) are each sustained by a horizontal member (95.19) which is sustained to the vertically projecting members (95.100 that sustain the roof structure (95.7), which is in this design case closed and sealed with the help of lateral members (95.4), in order to fully seal the Plano concave mirror (95.16) from the outer environment, hence minimising system maintenance costs. All flat reflection mirrors (95.6) are comprised over said Plano concave mirror (95.16).

The Plano concave mirror (96.7) can also be comprised projecting downwards towards the ground floor surface, hence driving the light rays towards the fluid driving pipe (96.20), which embeds both primary (96.8) and energy storage fluid (96.21) pipes in it (96.20). Said mirror (96.7) is sustained by vertical projecting members (96.10) over the ground floor, and sustaining members (96.9) sustain said fluid driving pipe (96.20) firmly to said Plano concave mirror (96.7). The light rays (96.3) are driven to a flat reflection mirror (96.19), which drives said light rays to a vertically upward projecting direction, hence towards said Plano concave mirror (96.7). All flat reflection mirrors (96.19) are comprised under said Plano concave mirror (96.7). Said flat reflection mirrors (96.19) are sustained into position by horizontal members (96.22) which are sustained by the vertical members (96.10) that sustain said upper comprised Plano concave mirror (96.7) or by the vertical members (96.5) that sustain said closed roof structure (96.6), which makes it a closed and sealed space due to the lateral members (96.4) being also comprised to avoid any pollution from the outer environment, hence minimising system maintenance costs. The light driving pipes (96.1) drive the light rays (96.3) horizontally after being reflected by flat reflection mirrors (96.2, 96.18). The horizontal projecting pipes (96.17) also drive the light rays into the require direction by the means of flat reflection mirrors (96.16). Said light rays are driven across the pipes (96.15) towards a Plano concave mirror (96.13), which pre concentrates said light rays towards a Plano convex mirror (96.25), hence driving said light rays horizontally towards a set of flat reflection mirrors (96.12, 96.24) to adjust the position of horizontal projection of said light rays. So, a horizontal conduit (96.11) drives said light rays (96.23) towards said flat reflection mirrors. A flat member (96.14) is comprised over the pre concentrating Plano concave mirror (96.13) to seal it (96.4, 96.6) as well from the outer environment, hence minimising maintenance costs. The Plano concave (96.28) and Plano convex (96.29) mirrors can pre concentrate the light rays into said pipes (96.1, 96.15), and can also be adjusted to the required height of horizontal projection by the means of a set of flat reflection mirrors (96.26, 96.27).

The tubular structure (97.2) under said concave mirrors, is sustained to the rigid sustaining structure by vertical members (97.1) which in turn are sustained by vertical members (97.8) to the ground floor surface. The convex mirror (97.3) comprised inside said tubular structure (97.2), is comprised under the transparent shield (97.4), which allows the light rays to be driven through, The tubular structure (97.2) can comprise openings (97.9) under the opening of the transparent shield (97.4) if no transparent shield is present, or openings (97.7) under the sets of mirrors (97.5, 97.6, 97.10, 97.11) in order to allow rain water to fall to the ground if the transparent shields (97.4) are not present. This would be comprised along the lower surface of the tubular structures (97.12). The Plano concave mirrors (97.5) concentrate the light rays towards the Plano convex mirrors (97.10), which then drives the light rays towards the set of flat reflection mirrors (97.6, 97.11) that adjust the position of the height of the horizontal projection of said light rays.

The tubular structures (98.5) comprised under the concave mirrors (98.3), comprise the convex mirror (98.1) present under the transparent shield (98.2) inside said tubular structure (98.5), such that the concave mirror (98.3) can concentrate the light rays towards said convex mirror (98.1). Closed openings (98.7) can be comprised under the transparent shield (98.2) for concave mirror (98.1) maintenance and transparent shield (98.2) cleaning. Also, closed openings (98.10) can be comprised under the mirrors (98.4, 98.9), including the Plano concave (98.4) and Plano convex (98.9) mirrors for maintenance of said mirrors. Both openings (98.7, 98.10) are closed to seal the tubular structure from the outside environment, but can be opened by maintenance crews if required for maintenance applications. The new light rays (98.8) from the convex mirrors (98.1) and the already concentrated light rays (98.6), are re concentrated again by said Plano concave mirror (98.4) towards said Plano convex mirror (98.9).

The lower flat light collection mirror (99.1) collects the inclined projecting light rays (99.5), such that said light rays (99.5) project towards said mirror (99.1) from the sun. Said mirror (99.1) surface then drives the light rays directly to the concave mirror (99.6), which then concentrates said light rays towards the convex mirror (99.3), which is comprised inside the tubular structure (99.8). The tubular structure (99.8) is comprised under said light collection (99.1) and concave (99.6) mirrors. The light rays are driven through a flat transparent shield (99.40 in order to seal the interior of the tubular structure from the outer environment. Said light collection mirror (99.1) is sustained by a vertical member (99.7), which sustains the actuation system (99.2) that positions said mirror (99.1) constantly into the required orientation and direction of projection. An opened opening (99.9) can be comprised under the transparent shield (99.4) for maintenance applications. However, a closed opening (99.9) is preferable. A closed opening (99.10) is comprised under the main sets of mirrors for maintenance applications, which is closed during operation, but can be opened by maintenance crews for maintenance applications. The transparent shield (99.4) should be preferably flat and its (99.4) surface should project vertically upwards, hence minimising the undesired reflection of the light rays to other unwanted and uncontrolled directions. The same feature is to be inclined with said other transparent shields (97.4, 98.2), which have to also be preferably flat transparent shields (97.4, 98.2) present over the tubular structures (97.2, 98.5).

The light rays from the sun (100.3) can project at an inclined angle if projection, towards the lower flat light collection mirror (100.1), which is inclined at an angle to allow the horizontal driving of the light rays (100.4) towards the concave mirror (100.15). Said concave mirror (100.15) then concentrates the light rays (100.13) towards the convex mirror (100.9). Then, said light rays (100.16), are driven in a coherent manner through the lower tubular structure (100.14) after being concentrated. The light rays cross the transparent flat shield (100.10) when being driven towards the convex mirror (100.9) by the concave mirror (100.6). A wiper blade (100.11) allows the removal of water and dirt particles from the transparent shield (100.10) when required, in order to maximise transparency and minimise light ray losses or unwanted reflections. A rotary member (100.12) connects to said wiper blade (100.11) and comprises the electric motor required. A water flowing system can also be included with said wiper blade (100.11), such that the water will improve the removal of dirt from the transparent shield (100.10). The lower flat light collection mirror (100.1) is sustained by a vertical member (100.7), which in turn is sustained to a sustaining horizontal member (100.2), which is supported by the supporting members (100.8). A supporting horizontal member (100.5) is also supported by the sustaining members (100.8), but supports the upper flat light collection mirror (100.6). The tubular structure (100.14) is supported by members (100.17) that connect both the upper surface of the lower tubular structure (100.14) and the sustaining members (100.8).

If the light rays (101.3) from the sun are projected across the opposite direction, without any matter on the inclination of the projection direction of said light rays (101.3), the upper flat light collection mirror (101.4) collects the light rays (101.3). Said mirror (101.4) then drive the light rays (101.2) in a linear and coherent direction of projection, towards the lower light collection mirror (101.1). Said lower light collection mirror (101.1) is inclined in such a way that the light rays (101.7) are then driven by said lower mirror (101.1) in a horizontal direction of projection, towards the concave mirror. Said concave mirror then concentrates the light rays towards the convex mirror, which is comprised inside said tubular structure (101.11). The upper flat light collection mirror (101.4) is supported by a vertical member (101.6), which also supports the actuation system (101.5) which assures that the orientation and direction if projection of said upper light collection mirror (101.4), is accurate at all times. Said vertical member (101.6) is separated into two separate lateral members (101.6) in order to avoid any obstacles on the path of the light rays (101.7).

The tubular structure (101.11) is supported to the horizontal sustaining members (101.9) by the means of sustaining members (101.10) that attach to both the sustaining members (101.9) and said tubular structure (101.11). The transparent shield (101.13), seals the interior of the tubular structure (101.11) from the outer environment, and is hence closed, but is as transparent as possible to allow the light rays to be driven through it (101.13). A wiper blade (101.14) is used to clean the upper surface of said transparent shield (101.13) when required. A water jet can be used to ensure that said wiper blade (101.14) is as efficient as possible, and leaves a transparent shield (101.13) that is as transparent as possible at all times. Said wiper blade (101.14) is rotated back and forth by a rotational member (101.8), which is actuated by an electric motor.

An opening (101.12) can be comprised on the lower surface of the tubular structure (101.11) for maintenance applications of the transparent shield (101.13) and the convex mirror, which should be preferably closed when the system is in operation, hence minimising maintenance costs for the system. A closed opening structure (101.15) can be comprised on the lower surface of the tubular structure (101.11) for maintenance crews to maintain the sets of mirrors when required. However, said opening (101.15) should be closed during operation and service time, in order to maximise safety and to minimise the contamination of said inner tubular structure (101.11) by environmental organisms, hence minimising maintenance costs for the renewable energy system.

The light rays (102.2) are driven towards the upper flat light collection mirror (102.3), which is inclined in such a manner that it drives the incoming solar light rays (102.10) directly towards the lower flat light collection mirror (102.8). Said lower flat light collection mirror (102.8) then in turn drives the light rays (102.9) horizontally towards the concave mirror (102.14). Said concave mirror (102.14) then concentrates the light rays (102.5) directly towards the convex mirror, which then drives the light rays (102.15) horizontally again inside the tubular structure (102.7) towards the next light ray collection system. Said tubular structure (102.7) is sustained to the sustaining members (102.13) by the rigid sustaining members (102.6), which attaches to both members (102.7, 102.13) simultaneously. The upper flat light collection mirror (102.3) is sustained by a vertical member which is sustained by a horizontal member (102.4) which connects to the sustaining members (102.13). Said concave mirror (102.14) drives the light rays (102.5) through the transparent shield (102.1) when concentrating these (102.5). A wiper blade (102.11) is used to wipe out the transparent shield (102.1) to ensure that said shield (102.1) remains as transparent as possible at all times, which can hence also be performed with a water jet to assist the cleaning of said transparent shield (102.1). Said wiper blade (102.11) is rotated by a rotational member (102.12), which is actuated by an electric motor when the usage of said wiper blade (102.11) is required.

The light rays (103.1) can project from the sun towards the upper flat light collection mirror (103.4), which then drives the light rays (103.2) downwards towards the lower flat light collection mirrors (103.9), which then in turn drive the light rays (103.3) towards the concave mirror. The upper flat light collection mirror (103.4) is sustained into the required position by a set of vertical members (103.6), which sustain the actuator (103.5) to control the orientation and direction of projection of said upper mirror (103.4). A wiper blade (103.7) can wash the upper surface of the transparent shield (103.10) in order to remove any water or dirt particles from the surface (103.10). The wiper blade (103.7) is actuated by a rotational member (103.8) that is actuated by an electric motor. The opening (103.11) comprised under the wiper blade (103.7) can be used for maintenance crews to carry maintenance or repair applications, although said opening (103.11) should preferably be closed during operation times. Another opening structure (103.12) can be comprised along the lower surface of the tubular structure (103.13) for maintenance or report of the sets of mirrors. The concentrated light rays (103.14) are driven across the lower tubular structure (103.13).

The light rays of the sun (104.3) can be driven at an angle, which is why the upper flat light collection mirror (104.5) is inclined in such a way that said light rays (104.3) are driven by said mirror (104.5) into a linear direction of projection (104.13) towards the lower flat light collection mirror (104.1). Said lower flat light collection mirror (104.1) then drive the light rays (104.12) in a linear direction towards the concave mirror. Said lower flat light collection mirror (104.1) is sustained by a vertical member (104.10) that is sustained by a horizontal member (104.2) which attaches to the sustaining members (104.11). The tubular structure (104.8) is sustained to the sustaining members (104.11) by rigid sustaining rails (104.9), which hence sustain it (104.8) rigidly into the required position. The light rays (104.17) are driven across the tubular structure (104.8) by the convex mirror (104.4) after receiving the light rays. The upper flat light collection mirror (104.5) is sustained into position by a vertical member (104.7), which is in turn sustained by a horizontal sustaining member (104.6) that connects to both sustaining members (104.11) at each side. A lower opening (104.14) can be comprised for water drainage applications. The wiper blade (104.15) is used to clean the surface of the transparent shield, which is controlled by a rotary actuator (104.16) that is actuated by an electric motor.

The light rays (105.1) from the sun can projects directly towards the low flat light collection mirrors (105.2), such that the upper flat light collection mirror (105.3) is inclined such that its surface (105.3) projects perpendicularly to the incoming solar light rays (105.1). This results in the minimum surface area achievable for said mirror (105.3) to be in the position comprised, hence minimising light rays losses, and maximising light ray collection by said lower flat light collation mirror (105.2). The lower flat light collation mirror (105.2) can hence drive the light rays (105.4) horizontally towards the concave mirror. The tubular structure (105.8) is sustained over the ground flor surface (105.9) to the sustaining members by vertical rigid members (105.5), without any matter on how uneven or rough the terrain (105.9) is. The end of the tubular structure (105.6) comprises a flat reflection mirror to drive the light rays to the required heat exchanger or steam generator (105.7).

Said light rays from the sun (106.1) are driven past the surface of the upper flat light collection mirror (106.3) towards the lower flat light collection mirror (106.2) when said solar light rays (106.1) project towards said lower flat light collection mirror (106.2). So, the surface (106.3) of said upper flat light collection mirror (106.3) projects at 90 degrees to the direction of projection of the light rays (106.1) at all times for this case. So, the lower flat light collection mirror (106.2) can collect the solar rays (106.1) with maximum efficiency and drive said light rays (106.4) towards the concave mirror. The tubular structure (106.8) is sustained over the ground floor surface (106.9) by rigid sustaining members (106.5), which sustain said tubular structure (106.8) to the sustaining members. The end of the tubular structure (106.6) comprises a flat reflection mirror that drives the light rays towards the required heat exchanger or steam generator (106.7). The terrain (106.9) can be uneven or rough, but the tubular structure (106.8) drives the light rays over it (106.9) in this case, hence minimising construction and installation costs for the system.

The light rays (107.1) from the sun can project between the two surfaces of the upper light flat collection mirror (107.3) as previously explained, and be collected by the lower flat light collection mirror (107.2), which is accurately inclined and projecting, such that the light rays (107.4) are then driven by said lower flat light collection mirror (107.2) towards the concave mirror. For direct or straight tubular structures (107.8), the structure (107.8) is also sustained over the ground floor surface (107.9) by rigid members (107.5) to the sustaining members. So, damage to the tubular structure (107.8) and the ground floor surface (107.9) is brought to a minimum, and hence are also the installation costs of the system. The end of the tubular structure (107.6) comprises a flat reflection mirror to drive the light rays directly to the required heat exchanger or steam generator (107.7).

The tubular structures (105.8, 106.8, 107.8) can drive the light rays directly towards the tubular pipes (82.10, 83.1, 84.2, 85.2, 85.14, 86.1, 87.10, 87.15, 88.2, 88.11, 89.2, 89.5, 90.9, 90.12, 91.2, 91.9, 92.1, 93.18, 94.1, 94.11, 95.1, 95.12, 96.1, 96.15) of the light ray concentration systems previously described, such that the tubular structures (105.8, 106.8, 107.8) drive the light rays directly towards the light concentrating mirrors (82.5, 83.8, 84.3, 84.5, 85.4, 85.6, 86.16, 87.3, 87.5, 88.17, 89.11, 89.12, 90.3, 90.4, 91.7, 92.16, 93.5, 94.7, 95.16, 96.7), hence also maintaining the tubular structure (105.8, 106.8, 107.8) totally isolated and sealed from the outer environment, hence minimising maintenance costs to the systems. This design is the most preferable design option. Said piping structures (82.10, 83.1, 84.2, 85.2, 85.14, 86.1, 87.10, 87.15, 88.2, 88.11, 89.2, 89.5, 90.9, 90.12, 91.2, 91.9, 92.1, 93.18, 94.1, 94.11, 95.1, 95.12, 96.1, 96.15) can also be driven in parallel towards the light concentrating mirrors (82.5, 83.8, 84.3, 84.5, 85.4, 85.6, 86.16, 87.3, 87.5, 88.17, 89.11, 89.12, 90.3, 90.4, 91.7, 92.16, 93.5, 94.7, 95.16, 96.7) or the light pre concentrating mirrors (88.8, 89.17, 90.8, 94.10, 95.11, 96.13).

The solar rat collection and concentration system can be comprised on the roof (108.1) of a building (108.15), hence offering the possibility to put the system over the ground floor surface (108.16), and hence minimising the floor space required for the system installation. So, the vertical sustaining members (108.12) sustain the sustaining members over the roof floor surface (108.1), such that the tubular structure (108.3) is sustained to said sustaining members by rigid sustaining members (108.2). The light rays (108.8) of the sun can be driven between the two surfaces (108.9) of the upper flat light collection mirror (108.9) towards the lower flat light collection mirror (108.7). Said mirror (108.7) then drives the light rays horizontally towards the concave mirror (108.4), which then concentrates the light rays towards the convex mirror (108.5) comprised inside the tubular structure (108.3). Said light rays are driven through the transparent shield (108.6) when driven towards the convex mirror (108.5), such that said shield (108.6) seals the interior of the tubular structure from the outer environment to minimise maintenance costs of the system. The tubular structure (108.13) drives the light rays to the fluid driving pipe (108.10), which embeds both primary (108.11) and energy storage fluid (108.14) pipes, hence guaranteeing a constant and simultaneous heat transfer to both pipes (108.11, 108.14).

The solar ray collection and concentration system can also be comprised over the roof surface (109.1) of any tall building (109.16), hence putting said system well above the ground floor surface (109.17). However, the tubular structure (109.11) can drive the light rays to a flat reflection mirror (109.12), which drives said light rays down a vertical pipe (109.13) to the fluid driving pipe (109.14). Said fluid driving pipe (109.14) can be comprised on the ground floor surface (109.17), hence minimising piping and installation costs of the system, as well as minimising the components required at the top of said building (109.1) roof surface (109.1). The fluid driving pipe (109.14) can be comprised under a shed roof structure (109.19) in order to minimise exposure of said pipe (109.14) to the outer environment. Said fluid driving pipe (109.14) embeds both primary (109.15) an energy storage fluid (109.18) pipes inside it (109.14), hence guaranteeing an efficient and instantaneous transfer of heat to the two pipes (109.15, 109.18) simultaneously.

As explained previously, the light rays (109.80 from the sun can project along the surfaces (109.9) of the upper flat light collection mirror (109.9) towards the lower flat light collection mirror (109.10), which collects said light rays (109.8) and drives these (109.8) towards the concave mirror (109.3). Said concave mirror (109.3) drives said light rays directly to the convex mirror (109.2), through the transparent shield (109.4). The transparent shield (109.4) seals the interior of the tubular structure (109.5), where said convex mirror (109.2) is comprised, from the outer environment, hence minimising maintenance costs of the system. The tubular structure (109.5) is sustained by rigid members (109.7) to the rigid sustaining members, which are in turn sustained to the roof surface (109.1) rigidly by rigid vertical members (109.6).

A plurality of light ray collection and concentration systems (110.3) can be comprised on the roof surface (110.18) of a building (110.9). Said systems (110.3) should be better comprised beside each other in order to minimise the surface area (110.18) on said roof surface (110.18) required by said systems. On each solar ray collection and concentration system (110.3), the upper flat light collection mirrors (110.1) are sustained by the rigid vertical members (110.3) on both sides. The concave mirror (110.2) is also sustained by said two rigid vertical members (110.3) at each side. The horizontal projecting member (110.4) connects to both vertical sustaining members (110.3) and sustains the rigid members (110.7) which sustain the tubular structures (110.8) rigidly in their place over the roof structure (110.18).

The concentrated light rays of each light collection and concentration system (110.3), are driven via the tubular structure (110.8) to a flat reflection mirror, which drives said light rays downwards into a vertical pipe (110.10) along the outer wall of the building (110.9), hence minimising the space used inside said building (110.9). A flat reflection mirror (110.11) then drives the light rays into a horizontal direction of projection, along a pipe (110.14), until reaching a last flat reflection mirror (110.17) at the required position of heat transfer. At that position, the light rays are driven vertically downwards into a vertical pipe (110.16) by said flat reflection mirror (110.17) towards the fluid driving pipe (110.13), where the heat of the light rays is transferred to the primary circuit fluid. Said pipes **(110.10, 110.14,** 110.16) can be comprised separately for each light collection and concentration system (110.3), such that each system delivers the concentrated light rays laterally and in parallel, to the fluid driving pipe (110.13). Said fluid driving pipe (110.13) is sustained by vertical members (110.15) to the ground floor surface (110.12), hence keeping said pipe (110.13) well sustained.

The fluid driving pipe (110.13) collects the heat of the light rays driven through said vertical pipes (110.16) and drives the heated fluid, preferably water, to drive a steam turbine (110.6). Said steam turbine (110.6) in turn drives a generator set (110.5) to generate electricity. Energy storage fluid can be driven along a separate parallel pipe to said fluid driving pipe (110.13), in order to guarantee an instantaneous and simultaneous supply of heat to the energy storage fluid tank as well. The positioning of said steam turbine (110.6) and said generator set (110.5) over the ground floor surface (110.12) minimises the space required on the roof surface (110.18) for the installation of the system concerned, as well as minimising the weights installed on top of the building (110.9) concerned.

The solar ray collection and concentration systems (110.3) can also be of larger size, with larger concave (110.2) and flat light collection mirrors (110.1) in order to minimise the materials and construction costs on the roof (1 10.18) of the building (110.9) concerned. This design would result in a lower number of systems 9110.3) comprised beside each other on the roof (110.18) of the building (110.9), and hence will comprise a lower number of pipes (110.10, 110.14, 110.16) required for the system installation.

The upper flat light collection mirrors (111.7) are sustained by a horizontal member (111.8) which is sustained to the two vertical members (111.3) which are comprised over the roof surface of a building (111.12). Said vertical members (111.3) sustain the concave mirror (111.2) of said systems. The lower horizontal member (111.9) sustain the lower tubular structure (111.5), which is sustained by rigid sustaining members (111.4) to said horizontal member (111.9). From each tubular structure (111.5), a flat reflection mirror drives the light rays through a downward projecting pipe (111.10) to a flat reflection mirror (111.11). Said flat reflection mirror (111.11) drives the light rays through a horizontal pipe (111.17) towards another flat reflection mirror (111.21). Said flat reflection mirror (111.21) finally drives said light rays through a vertical pipe (111.20) that projects towards the lower flat reflection mirrors (111.19). One flat reflection mirror (111.19) is comprised under each of said vertical projecting pipes (111.20), which projects in parallel to each other (111.20) towards the flat reflection mirrors (111.19).

Said flat reflection mirrors (11.19) drive the light rays towards a Plano concave mirror (111.24) which concentrates the light rays (111.23) towards the fluid driving pipe (111.22). The fluid driving pipe (111.22) drives the fluid through the fluid driving pipe (111.15) after collecting the heat from the light rays (111.23). Said heated fluid can hence drive a steam turbine

(111.6), which can in tum drive a generator set (111.1) to generate electricity. The remaining primary circuit fluid is then driven from the steam turbine (111.6) through a vertical pipe (111.14). The vertical sustaining members (111.18) sustain the flat reflection mirrors (111.19). The light driving pipes (111.10, 111.17, 111.20) are positioned along the outer surface of the wall of the building (111.12), hence maximising the space available inside said building. The fluid driving pipe (111.15) is sustained over the ground floor surface (111.13) by sustaining members (111.16). The advantage of this system design is that the concentration of all light rays (111.23) towards the fluid driving pipe (111.22), is that the heat transfer is much higher and concentrated on one area, which can increase the heat transfer significantly. The energy stage fluid pipe can also be driven in parallel to said fluid driving pipe (111.15, 111.22), hence guaranteeing a simultaneous heat transfer to both pipes, such that the energy storage fluid tank can also be supplied with heat. The Plano concave mirror (111.24) is comprised inside a closed structure in order to seal the entire system from the outer environment, hence minimising environmental damage, and hence system maintenance costs. The primary circuit pipe (111.15, 111.22) should preferably drive water as a primary circuit fluid.

The light rays (112.3) from the sun can project between the two surfaces of the upper flat light collection mirror (112.4), towards the lower flat light collection mirror (112.1). Said lower flat light collection mirror (112.1) can then drive the light rays into a horizontal and coherent path. The tubular structure (112.15) is sustained by members (112.2) to the sustaining members (112.6), which are supported by the vertical members (112.14) to the ground floor surface (112.16). The transparent shield (112.5) seals the interior of the tubular structure (112.15) from the outer environment, hence minimising maintenance costs. The end of said tubular structure (112.15) can comprise a flat reflection mirror (112.7) which drives the light rays down a vertical pipe (112.17) towards a heat exchanger or steam generator (112.25). Water flows downwards by gravity through a downward projecting pipe (112.20) from a water basin (112.13) or water supply pipe, and drives a water turbine (112.21), which transmits the rotational motion through a shaft (112.22) to a generator set (112.23), which generates electricity.

Then, said water is driven through a pipe (112.24) through said heat exchanger or steam generator (112.25), hence collecting the heat supplied by the concentrated light rays. The light rays heat said heat exchanger or steam generator (112.25) but do not contact the flowing water, which flows inside said pipe (112.24) through said heat exchanger or steam generator (112.25) to collect the light ray heat as required. The steam is driven up a vertical pipe (112.26) to drive a steam turbine (112.9), which in turn drives a generator set (112.11) to generate electricity. The steam turbine (112.9) is comprised inside a casing (112.8) for protection applications. The remaining steam is then driven through a pipe (112.10) from said steam turbine (112.9), through a heat exchanger (112.12) to condense and liquefy said steam before being delivered again to said water basin (112.13). Said system is performed by a secondary cooling circuit (112.18), which comprises a pipe (112.18) that collects water from the water basin (112.13) and is driven by a pump (112.19) through said pipe (112.18) to said heat exchanger (112.12). Said water collects the heat form the exit pipe (112.10) of the steam turbine (112.9) inside said heat exchanger (112.12), hence assuring that the water is condensed as required before being delivered to said water basin (112.13).

The cooling water flows fast enough in order to avoid any production of steam inside said cooling pipe (112.18) when said water flows through said heat exchanger (112.12). The system with the pump (112.19) is controlled by a computerised controller. An electrically controlled gate inside said water collecting pipe (112.20), can control the flow of water through the water collecting pipe (112.20) according to the intensity of the projecting light rays. The water flows down said pipe (112.20) by gravity, hence minimising the energy consumption of the system. The water flow control gate is to be preferably comprised at the interior of the start of the downward projecting water collection pipe (112.20). The water flow control gate should be inside said pipe (112.20) to control the flow of the water flow intake of the system. The advantage of such a system, is that the electricity generation is increased, as both water turbine and steam turbine combined together, generate a high electrical generation output, with no additional energy required to move the water through the pipes (112.20, 112.24, 112.26). The electrical energy produced comes from a combination of steam power and hydroelectric power. Although the system is therefore a fully passive water driven system, the construction costs of such a system can be high.

The tubular structure (113.4a) is sustained over the ground floor surface (113.1a) by rigid members attaching to the structural casing (113.4a). The transparent shield (113.3a) on the upper surface of said tubular structure (113.4a) can be inclined towards one side of said tubular structure (113.4a) with a wiper blade (113.5a) present to clean any undesired water or environmental dirt present on said transparent shield. This would maximise the light ray intensity being driven to the interior (113.2a) of said tubular structure (113.4a). The advantage of said design is that water particles would be drained automatically away from said transparent shield surface (113.3a) by gravity. The wiper blade (113.5a) should project perpendicularly to the direction of projection of said tubular structure (113.4a), in order to remove water and dirt particles from the upper surface of the transparent shield (113.3a) as quickly and efficiently as possible. So, the wiper blade (113.5a) must consequently be moved back and forth in directions of motion that are parallel to the direction of projection of said tubular structure (113.4a).

The tubular structure (113.2b) can alternatively comprise a flat transparent shield surface (113.4b) with a wiper blade (113.5b) that can clean the transparent shield surface (113.4b) when required. So, light rays could reach the interior (113.1b) of said tubular structure (113.2b) with maximum efficiency. The tubular structure (113.2b) is always sustained over the ground floor surface (113.1b). The wiper blade (113.5b) should in this case project in parallel to the direction of projection of said tubular structure (113.2b), in order to maximise water and dirt removal efficiency from the upper surface of said transparent shield surface (113.4b). So, said wiper blade (113.5b) must be consequently moved back and forth in directions which are perpendicular to the directions of projection of said tubular structure (113.2b). The wiper blade (113.5b) will hence drive the water and dirt particles to the sides of said transparent shield (113.4b), hence leaving said unwanted dirt and water, to fall downwards on the outer surfaces of the side walls (113.2b) of the tubular structure (113.2b) by simple gravity.

The solar ray collection and concentration systems should comprise de-icing filaments, (114.8) comprised around the transparent shield (114.3). This is very important, as the transparent shield (114.3) should be free at all times of any obstacles in order for the light rays to be easily penetrable through said shield (114.3). The wiper blade (114.9) wipes the undesired water particles when required. So, the light rays (114.10) can be driven as required by said convex mirror. The flat light collection mirrors (114.2, 114.4) also can comprise wire filaments in order to avoid any icing of being accumulated over the surfaces of said mirrors (114.2, 114.4). The same system is comprised with the concave mirror (114.7), where a layer of filament wires (114.6) comprised along the rear surface of said mirror (114.7), heats said concave mirror (114.7) to ensure that no ice particles are present on the mirror's (114.7) surface. De-icing filaments (114.1, 114.5) can also be comprised around the actuators in order to make sure that said mirror orientating devices are ready to enter into actuation at all times, as required. The wire filaments (114.2, 114.4, 114.6, 114.8) heat the surfaces comprised around these, hence melting the ice, and leaving water particles around. On said transparent shield (114.3), said wire filaments (114.8) avoid any ice from forming, and said wiper blade (114.9) removes the water particles as required from its (114.3) surface.

The flat light collection mirrors (115.1, 115.9) comprises wire filaments (115.2, 115.4) to avoid any ice of forming on the surfaces of said mirrors (115.1, 115.9). A similar situation is comprised on the concave mirror (115.6), where wire filaments (115.5) are comprised under its surface (115.6) to keep the temperature of its surface (115.6) above icing, and so, above 0 degrees, hence removing any forming of ice sheets. The wire filaments (115.7) comprised around said transparent shield (115.8) ensure that the temperature of the transparent shield's (115.8) surface never reaches the freezing point, or 0 degrees. So, no ice is formed, and the resulting water particles are removed by the wiper blade (115.3) as required. Hence, no ice sheets can ever be formed on the transparent shield (115.8), hence maximising system functionality at all times.

The components inside the closed tubular structure (116.7) are never covered by any icing, as no water from the outer environment can enter into said structure (116.7). So, said mirror (116.6) does not need to be de-iced, as the closed structural components (116.5) around it (116.6), ensure that no icing is to harm said mirrors from the outer environment, as said tubular structure (116.7) is closed and sealed from the outer environment. The transparent shields (116.1) ensure that no water penetrates inside the tubular structure (116.7). Heating resistances are comprised just around (116.8) said transparent shields (116.1) to ensure that no ice is formed over the upper shield (116.1) surfaces. This is performed by ensuring that the temperatures around said shield surfaces (116.1) do not reach the freezing temperatures, in other words, 0 degrees. So, no ice sheets can be formed on said transparent shields (116.1) at any time. The light collection mirrors (116.2, 116.3) and concave mirrors (116.4) should however comprise de-icing systems, as these (116.2, 116.3, 116.4) are comprised into the open outer environment. Said power generation system is comprised such that it can operate in any weather or environmental conditions, at any year time, at all times.

The solar ray collection and concentration systems (117.1, 117.2, 117.7, 117.16, 117.26) can be comprised on the ground floor, but oriented into any direction, as the system is designed such that the flat light collection and reflection mirrors or heliostats (117.1, 117.2, 117.16, 117.26) are oriented towards the light rays (117.14) of the sun, such that said light rays (117.14) are projected towards the mirror or heliostat surface (117.1, 117.2, 117.16, 117.26). So, if the lower mirror or heliostat (117.2) collects the light rays (117.14), said light rays (117.14) will be driven towards the concave mirror (117.7) for light concentration (117.23) into the transparent lenses (117.24) of the light driving pipe (117.20, 117.29). However, if the light rays (117.14) project onto the opposite direction, said upper mirrors or heliostats (117.1, 117.26) will collect the light rays (117.14) and drive these (117.14) towards said lower mirror or heliostat (117.2), prior of said lower mirror or heliostat (117.2) driving said light rays (117.14) towards the concave mirror (117.7). Said concave mirror (117.7) drives the light rays (117.23) towards the transparent surface (117.24) of the light driving pipe (117.20, 117.29). Each set of mirrors (117.1, 117.2, 117.7, 117.16, 117.26) has its own orientation system, based on the position at which it is oriented on the system (117.11) according to the position of the direction of the sustaining members (117.11).

Each set of mirrors or heliostats (117.1, 117.2, 117.7, 117.16, 117.26) has its own geometrical orientation system, independent of the other mirror or heliostat (117.1, 117.2, 117.7, 117.16, 117.26) systems. The dimensions of both the upper (117.1, 117.26) and the lower (117.2) mirrors or heliostats are exactly the same for each system. Said upper (117.1, 117.26) and lower (117.2) mirrors or heliostats are always comprised over the height of the sustaining bars (117.11, 117.25) on the two sides. This allows the system to maximise light reflection efficiency from the lower mirror or heliostat (117.2) at all times of the day. The distance between the upper mirror or heliostat (117.1) and the lower mirror or heliostat (117.2) is such that always one mirror (117.1, 117.2, 117.16, 117.26) will be able to be rotated sideways up to 45 degrees form its original position, while the other (117.1, 117.2, 117.16, 117.26) mirror or heliostat comprised laterally, will be in its original idle position. This is because only one mirror or heliostat (117.16) can collect and initially reflect the solar light rays (117.14), weather it is the lower mirror or heliostat (117.2) or the upper mirror or heliostat (117.1, 117.26). The distance for only one rotated mirror (117.16) is recommended, as the greater is the distance, the less light rays (117.14) can be collected in the distance concerned.

So, the mirrors (117.1, 117.2, 117.16, 117.26) are oriented onto any required direction to reflect efficiently the light rays (117.14), independently of the other systems. So, no fixed position is required for the solar ray collection and concentration systems in question. The light driving pipe (117.20, 117.29) comprises flat mirrors (117.1, 117.2, 117.16, 117.26) to drive the light rays towards the required direction, if angles are less than 45 degrees. Each system comprises a transparent shield (117.9) to transfer the light rays (117.14) into the light driving pipe (117.20, 117.29). Said pipe (117.20, 117.29) can also comprise flat mirrors (117.10) to drive the light rays into the pipe (117.20, 117.29), provided that the change in direction has an angle greater than 45 degrees.

The light driving pipe (117.22, 117.29) comprises side surface areas for the sets of four flat mirrors (117.12, 117.13, 117.15), such that said mirrors (117.12, 117.13, 117.15) drive the light rays onto the required direction. Said system is needed, as the change in direction of the light rays has an angle lower than 45 degrees. The initial mirror (117.13) drives the light rays perpendicularly to the set of two mirrors (117.15), which drive the light rays back to a flat mirror (117.12) which is less inclined than the first one (1117.13) in order to drive the light rays onto the right direction. The lower mirror (117.2, 117.21) is inclined if it (117.2, 117.21) is the first to collect the incoming light rays (117.14), to drive these towards the concave mirror (117.7). So, the upper mirror (117.1, 117.26) does not need to be inclined. If it is the upper mirror (117.1, 117.26) that initially collect the incoming light rays (117.14), the lower mirror should not be sidewise inclined, as it is the one which should reflect and drive the light rays (117.17) towards the concave mirror (117.7).

The sustaining members (117.18, 117.25) sustain the system structure on both sides. The lower mirror (117.19) can be comprised being positioned perpendicularly to the incoming light driving pipe (117.20, 117.29), as long as said pipe (117.20, 117.29) is comprised opposite to said mirror (117.19) at its required position. The two upper (117.1, 117.26) and lower (117.2, 117.21) mirrors (117.16) should never touch each other. The positioning of the lower mirror (117.19) towards the extreme of a perpendicular member (117.18) maximises the usage and efficiency of the space used for said systems, hence maximising light collection per unit of area. If the upper mirror (117.26) collects the incoming light rays (117.14) initially, the lower mirror (117.19) is not inclined sideways, but just tilted to drive said light rays towards the concave mirror (117.7). However, if the lower mirror (117.2) collects the light rays (117.14) from the sun initially, said mirror (117.2) droves the light rays directly towards said concave mirror (117.7), hence meaning that the upper mirror (117.1) is not tilted sideways, but just inclined perpendicularly to the direction of projection of said light rays (117.14), in order to maximise light ray collection efficiency by said lower mirror (117.2).

The flat light collection mirror (117.26) is inclined at nearly 45 degrees to the idle linear direction of projection according to the directions of projection of the sustaining bars (117.25) for this case, in order to reflect the light rays efficiently towards the lower flat mirror (117.19). However, on other mirror positions (117.2, 117.21), the flat light collection mirror (117.2) is inclined slightly sideways compared to the idle linear direction of projection (117.11) of said mirror (117.2), according to the direction of projection of the sustaining bars (117.11) comprised in the position of said mirror (117.2). So, the light rays (117.17) can be driven efficiently and coherently towards the concave mirror (117.7) comprised in front of said lower flat light collection mirror (117.2). So, each system operates separately from the others, hence avoiding the need of inserting systems linearly together, and hence maximising system efficiency and installation flexibility.

The light driving pipes (117.20, 117.29) are driven from a plurality of directions, towards the heat exchanger (117.8), which transfers the heat of the light rays to the energy storage fluid pipe (117.28) in order to heat up the energy storage fluid tank's (117.4) contents, as well as to the primary circuit (117.27) in order to drive the steam turbine (117.6), which simultaneously drives a generator (117.5) to generate electricity. Both processes can be performed simultaneously in said heat exchanger (117.8). The light rays (117.23) are driven by said concave mirror (117.7) towards the transparent surface (117.24), which is flat to avoid any undesired light refraction.

The parts of the light driving pipes (117.30, 117.31, 136.8, 137.8) which are driven behind said lower mirrors or heliostats (117.2, 136.7, 137.7) are designed to not interfere with the structure of said systems (117.30, 117.31, 136.8, 137.8) thanks to the very low cross-sectional diametrical dimensions of said structures (117.30, 117.31, 136.8, 137.8). So, said lower mirrors or heliostats (117.2, 136.7, 137.7) can be rotated at up to 45 degrees sideways as required without any obstacles being encountered into the mirror's (117.2, 136.7, 137.7) path.

The solar light ray collection and concentration systems (118.4) can be comprised around a building (118.2) in order to minimise costs and space required, as well as to minimise the surface area required for the system. This can be done by inserting the system over the roof of the building (118.2). The building's roof (118.2) can comprise a plurality of systems, comprised beside each other, with a pipe (118.3) that drives said light rays from the roof (118.2) to the ground floor. Alternatively, a set of vertical pipes (118.7, 118.9) droves the light rays up to the roof (1 18.2) from the ground floor (118.7), and then back down to the grid floor (118.9), hence forming a continuous system with one single light driving pipe (118.10). Said light driving pipe (118.10, 118.16) can start at any place (118.10), and is sustained by the sustaining members (118.12). The light driving pipes (118.1, 118.16) drive the light rays from the building roof (118.2) to the heat exchanger (118.11) by the means of a driving pipe (118.13), along with the other light driving pipe **(118.10, 118.16),** which drives the light rays also to said heat exchanger (118.11). The lower mirror **(118.4)** can be comprised facing perpendicularly to the lateral sustaining members (118.5) if the angle of inclination is large, hence maximising system space usage.

The heat exchanger **(118.11)** supplies heat to the energy storage fluid pipe (118.17), which can flow under the access platform of the building (118.8) and supply heat to the energy storage fluid tank (118.16). Simultaneously, the heat of the light rays is supplied to the primary circuit fluid (118.18), which drives a steam turbine (118.14) that can in turn drive a generator **(118.15)** to generate electricity.

Buildings (119.1) can also comprise a plurality of solar ray collection and concentration systems that drive the light driving pipe (119.2, 119.3, 119.7, 119.11, 119.13) to different positions along the walls (119.1) for said building (119.1). One pipe (119.1) can drive light rays to heat a radiator (119.4) inside the building (119.1). Another pipe (119.3) can supply heat to the water boiler (119.5), while another pipe (119.7) can drive the light rays through a set of four mirrors (119.6) for orientation, in order to supply heat to another radiator (119.8) inside the building (119.1). Similarly, another pipe (119.11) can supply heat for cooking applications to the cooker (119.10). Another pipe (119.13) can use flat reflection mirrors (119.9) to drive the light rays to the required position, hence to supply heat to the electrical energy conversion unit (119.12). This system can simultaneously also supply heat to the energy storage fluid pipe (119.15), which supplies heat to the energy storage fluid tank's (119.14) contents.

All pipes (119.2, 119.3, 119.7, 119.11, 119.13) can be driven separately from each other, and onto the separate directions as required, as no fixed position is required for the technology concerned. All pipes (119.2, 119.3, 119.7, 119.11, 119.13) can supply the heat of the light rays simultaneously to the required applications on said building (119.1).

The upper mirrors or heliostats (120.1) of said solar light ray collection and concentration system, are positioned perpendicularly to the direction of projection of the incoming light rays if these are collected by the lower flat mirror or heliostat (120.2). This system design maximises the efficiency of light collection of said lower mirror or heliostat (120.2). Both mirrors (or heliostats) (120.1, 120.2) of each system comprise the same dimensions, and hence the same width and height, as these mirrors or heliostats (120.1, 120.2) should correspond geometrically together to maximise light collection efficiency. Said lower mirror or heliostat (120.2) is positioned such that it (120.2) is always comprised above the height of the sustaining bars (120.3) that are comprised at both sides. This allows a side viewer to see said lower mirrors or heliostat (120.2) entirely from the side, even if said mirrors or heliostats (120.2) are inclined at a maximum perpendicularly to the ground floor (120.4). Said system is comprised like this, even when said lower mirrors or heliostats (120.2) are inclined at a maximum perpendicularly to the ground floor's (120.4) surface. This system design is such that the efficiency of the light rays' collection is maximised by said lower flat mirrors or heliostats (120.2). The light ray heat is supplied to a heat exchanger (120.5), which can supply the storage and primary circuit pipes simultaneously with heat.

If the lower mirrors or heliostats (121.1) collect initially the light rays (121.5) from the sun, said lower mirrors or heliostats (121.1) can be inclined sideways, as is necessary to collect and reflect said light rays (121.5) with maximum efficiency. In this case, the upper mirrors or heliostats (121.6) are inclined perpendicularly to the direction of projection of said light rays (121.5). This maximises light ray collection by said lower mirrors or heliostats (121.1), as no obstacles are present in the pathway of said solar light rays (121.5). This maximises system operational efficiency. Said lower mirrors or heliostat (121.1) drive said light rays (121.3) horizontally towards said concave mirror (121.2) for accurate light ray concentration. Said upper mirrors or heliostats (121.6) are constantly maintained in an upward position by the vertical members (121.4) which sustain each of these (121.6).

If the light rays (122.1) are projected towards another direction, such that it is the upper mirrors or heliostats (122.2) which collect and reflect these (122.1), said upper mirrors or heliostats (122.2) are inclined sideways as required in order to efficiently collect and reflect said light rays (122.1). So, in this case, said upper mirrors or heliostats (122.2) drive the light rays (122.3) coherently downwards towards the lower flat mirror or heliostat (122.4). Said lower flat mirror or heliostat (122.4) is titled in order to reflect the incoming light rays (122.3) towards a coherent horizontal direction (122.5) towards said concave mirror (122.6).

The lower mirror or heliostat (122.4) is tilted (122.4) in order to efficiently accomplish said light ray reflection, but is (122.4) never inclined sideways in any sort, as no sideways inclination from said lower mirror or heliostat (122.4) is required in this case. So, for each light collection system (122.2, 122.4, 122.6), always only one of the light collection mirrors or heliostats (122.1, 122.4) is inclined sideways, but never both (122.1, 122.4) simultaneously. Said light rays (122.5) are driven horizontally and coherently towards the concave mirror (122.6) by said lower mirror or heliostat (122.4) for efficient light ray concentration.

Each light ray collection and concentration system (122.2, 122.4, 122.6) operates independently of the others, such that each light collection mirror or heliostat (122.2, 122.4) can be inclined at the required angle according to the directions of projection of the light rays (122.1) from the sun towards said mirrors or heliostats (122.2, 122.4). This depends entirely on the position on which said mirrors or heliostats (122.2, 122.4) are oriented for each light collection and concentration system (122.4, 122.4, 122.6), separately from the others.

The solar ray collection and concentration system (123.5, 123.6, 123.7) can be comprised as a plurality of sets of light collection, on the roof (123.9) of a car park. So, the roof (123.9) is sustained by vertical pillars (123.11) to the ground floor (123.12). On said ground floor (123.12), the cars (123.10) are being parked. Said vehicles (123.10) can be any, from buses to trucks, lorries or coaches, with even platforms around said sustaining pillars (123.11). The heat exchanger (123.8) can transfer heat simultaneously to the energy storage fluid pipe which supplies heat to the energy storage fluid tank (123.16), as well as the primary circuit, which drives a steam turbine (123.14). Said steam turbine (123.14) in turn drives a generator (123.15) which generates electrical power. Said steam turbine (123.14), generator (123.15) and energy storage fluid tank (123.16), can all be comprised inside a sustaining pillar (123.13), which sustains the roof structure (123.9) on the ground floor (123.12) in order to minimise the space used and to hence maximise system installation efficiency.

The vertical masts (123.1) sustain the sustaining side pillars (123.2) on the roof floor (123.9). The vertical sustaining members (123.4) attach to said sustaining bars (123.2), and hence sustain said light driving pipe (123.3) in its required position. The lower mirror (123.5) in this case collects the light rays, such that the upper mirror (123.7) is comprised perpendicularly to the direction of projection of said light rays. So, the light rays are driven by said lower flat mirror (123.5) to the concave mirror (123.6) for light concentration, with the maximum light collection and reflection efficiencies. The vehicles (123.10) comprised under said roof structure (123.9) can also be busses, hence making a bus station architecture. Said station can also comprise platforms around said sustaining vertical pillars (123.11). The roof structure (123.9) projects horizontally.

The sustaining vertical pillars (124.1) can also sustain the sustaining bars (124.2) which in turn sustain the light driving pipe (124.3) by vertical sustaining members (124.4), to the top of the roof (124.9) of a bus stop or bus station (124.10). So, a plurality of light collection and concentration systems (124.5, 124.6, 124.7) can be comprised over the roof structure (124.9) of said bus station or bus stop (124.10). The heat exchanger (124.8) transfers simultaneously the heat of the light rays to the energy storage fluid tank (124.17) by the energy storage fluid pipe (124.8). Simultaneously, the heat exchanger (124.8) also supplies heat to a fluid which drives a steam turbine (124.15). Said steam turbine (124.15) drives in turn a generator (124.16) to generate electrical output. Said energy storage fluid tank (124.17), steam turbine (124.15) and generator (124.16) can be comprised inside a vertical sustaining member (124.14) to minimise the horizontal space or surface area used. The heat exchanger (124.8) houses both pipes in its cross-sectional design.

The roof structure (124.9) is horizontally projecting, and is sustained by vertical pillars (124.13) to the ground floor (124.12). A boarding or unloading platform (124.10) can be comprised to serve the stopping buses (124.11) without affecting the functionality of the system (124.5, 124.6, 124.7) at all.

The roof floor structure (125.14) concerned can also be used to sustain said solar ray light collection and concentration system (125.6, 125.7, 125.8) over a train (125.15) stop or station (125.16), hence minimising the floor space used for said systems, particularly in densely populated urban areas. So, the roof floor structure (125.15) concerned can project horizontally such that it can be sustained by vertical pillars (125.12) to the ground floor (125.10) under. The boarding platform (125.16) to serve the trains (125.15) can be comprises around the lower part of said sustaining pillars (125.12), hence maximising space utilisation. The pantograph (125.13) of the train (125.15) can collect current from a catenary (125.4) which is sustained by columns (125.11), without affecting the power generation system (125.6, 125.7, 125.8). The trains (125.15) can roll on the rail tracks (125.10) as required. So, this system offers a solution to maximise space utilisation, and to hence minimise system installation costs, by using the roof as a flat surface to use said system. Thus minimises a lot of costs, especially in very densely populated areas.

The light driving pipe (125.3) is sustained by vertical members (125.5) to the sideways sustaining bars (125.2), which are in turn sustained by vertical members (125.1) to the surface floor (125.14) of the floor structure (125.14). The upper (125.7) and lower (125.6) flat mirrors collect and/or reflect the light rays, to drive these towards the concave mirrors (125.8) in each solar light ray collection and concentration system (125.6, 125.7, 125.8). The heat exchanger (125.9) drives the steam turbine (125.18) and supplies heat to the energy storage fluid tank (125.20) simultaneously. Sais steam turbine (125.18) drives a generator (125.19) in turn to generate electrical power. All of said steam turbine (125.18, generator (125.19) and energy storage fluid tank (125.20) can all be stored inside a vertical sustaining member (125.17), hence maximising floor space utilisation. Both fluid pipes (125.9) are comprised into said heat exchanger (125.9), in order for said passing fluids, to collect said light rays heat.

The light driving pipe (126.1) can also transfer the light rays, onto a coherent and concentrated manner, through the final light driving pipe (126.2), towards a flat reflection mirror (126.5). Said mirror (126.5) is inclined in order to drive the light rays upwards towards the heating pot (126.6) of a cooker. So, said mirror (126.5) should preferably be inclined at an angle of 45 degrees for said application, hence minimising the space used. So, said cooking pot (126.6) receives all the heat of the light rays. This can be used to cook quickly and efficiently any cooking pan (126.3) with a similar efficiency to an electrical heater or cooker, or even faster.

Said cooking pan (126.3) can hence cook food even faster than an electrical cooker. However, this depends on the number of light collection and concentration systems comprised into said system. So, if more than the electrical energy supplied by an electrical heater is supplied by said light collection and concentration systems, said cooker (126.6) can cook things faster than an electrical heater. However if not enough solar light ray collection and concentration systems are present, said cooker (126.6) will take longer to reach the required temperatures on the cooking pan (126.3) concerned than with an electrical heater. Said mirror (126.5) and cooker (126.6), are all sustained by a sustaining member (126.4) over the ground floor surface.

The solar ray collection and concentration system can be comprised over the upper surface (127.4) of a floating vessel (127.11). The vertical members (127.1) sustain the sustaining bars (127.2) over the floor surface (127.4) of said floating vessel (127.11). The vertical members (127.5) sustain said light driving pipe (127.3) to said sustaining horizontally projecting bars (127.2). The final light driving pipe (127.6) drives the concentrated light rays to the heat exchanger (127.8). In said heat exchanger (127.8), the light rays' heat is transferred simultaneously to the energy storage fluid pipe (127.9) and the primary circuit fluid pipe (127.7).

Said floating vessel (127.11) is comprised floating over the water (127.10) of a basin, lake, sea or river. Said water (127.10) can be salted or unsalted. The floating vessel (127.11) is sustained by rigid members (127.13) to the basin floor (127.12). Alternatively, said floating vessel (127.11) can be sustained by rigid vertical members (127.14) which are sustained to rigid pods (127.15) comprised attached to the bed (127.12) of the water channel. Alternatively, said floating vessel can be comprised of both rigid members (127.13) and sustaining ropes (127.14) attached to pods (127.15) on the bed. The sustaining rigid members should preferably be made of steel.

Said sustaining ropes (127.14) should preferably be made of steel, and can sustain said vessel (127.11), such that any waves will not make it move due to the high floating buoyancy present. This can be done by attaching the ropes (127.14) to the pods (127.15) on the sea bed, and then emptying the vessel (127.11) to achieve the maximum buoyancy. This should minimise vessel oscillations due to waves or winds. Rigid sustaining members (127.13) might still be the best option, as no movement should be monitored on the vessel (127.11) at any time. Any movements will minimise the accuracy of the reflected light rays, and would therefore reduce the system's efficiency drastically.

The vertical members (128.2) sustain the light driving pipes (128.3) to the sideways projecting sustaining bars (128.1), which project in the same direction as said light driving pipe (128.3). Said sustaining members (128.2) connect both side bars (128.1) and said light driving pipe (128.3). The light rays of a plurality of lateral concentration systems, can be driven by pipe (128.4) to the light concentration station (128.6). Said light concentration station (128.6) comprises a plurality of pipes (128.5) driving light rays towards a Plano concave mirror (128.7). Said pipes (128.5) also include the light driving pipe (128.10) of the side viewed power generation system (128.1). Said Piano concave mirror (128.7) reflects the light rays of all pipes (128.5, 128.10), which drive these coherently in parallel to each other, towards said Plano concave mirror (128.7). So, said Plano concave mirror (128.7) focuses the light rays towards a Plano convex mirror (128.11).

Said Plano convex mirror (128.11) then drives the light rays to the required height by the means of a set of flat reflection mirrors (128.12, 128.13), which should preferably be inclined at 45 degrees each. So, the first mirror (128.13) drives the light rays upwards, until these are finally reflected by another flat mirror (128.12) when said light rays reach the required height. Said last mirror (128.12) drives said light rays horizontally. So, said light driving pipe (128.8) can be driven into another light concentration station (128.6). There, the same process is repeated. A plurality of other pipes, including the pipe (128.8) concerned, drive the light rays towards a Plano concave mirror (128.9). Said Plano concave mirror (128.9) then concentrates the light rays towards a Plano convex mirror (128.14). Said process can hence be repeated into a plurality of times, and the number of times can be as repetitive as required. However, the greater the times of repetitions, the lower is the intensity and density of the light rays of the initial light concentration station (128.6).

Said Plano convex mirror (128.14) drives the light rays towards the heat exchanger (128.15), where the heat of said light rays are transferred to the pipes for electrical power generation as well as heat energy storage.

A plurality of pipes (129.2, 129.7, 129.12), can drive light rays towards a Plano concave mirror (129.11). Said Plano concave mirror (129.11) then concentrates said light rays towards a Plano convex mirror (129.13). Said Plano convex mirror (129.13) then drives concentrated light rays (129.3) through a light driving pipe (129.4) towards a heat exchanger (129.5). Said heat exchanger (129.5) comprises both energy storage fluid pipe (129.14) and primary circuit fluid pipe (129.19) embedded into it (129.5). So, both pipes are supplied with heat simultaneously.

The primary circuit fluid pipe (129.19) comprises a pump (129.6) which drives said fluid into the heat exchanger (129.5) for heat collection. Then, said fluid drives a steam turbine (129.17), before continuing to the initial starting point. Said steam turbine (129.17) drives in turn a generator (129.18) to generate electrical power. Said fluid driving pipe (129.20) continues back to the initial position (129.19). Said energy storage fluid pipe (129.14) comprises a pump (129.15), which drives the fluid through the heat exchanger (129.5). After collecting the heat, said fluid is driven back to the energy storage fluid tank (129.16).

Sets of flat reflection mirrors (129.1, 129.10) drove the light rays accurately and coherently in parallel to each other towards said Plano concave mirror(s) (129.11). Weather said pipe curve is of 90 degrees (129.1) or at around 45 degrees (129.10), single flat mirrors (129.1, 129.10) can be used for light reflection and orientation around said pipes (129.2, 129.12). Sets of four flat mirrors (129.9, 129.8) can be used if the required curve of the pipe (129.7) is of less than 45 degrees. So, the initial flat mirror (129.9) drives the light rays perpendicularly. The last flat mirror (129.8) then drives the light rays into the required direction of projection, in other words, towards the Plano concave mirror (129.11) for light concentration.

The light ray collection and concentration systems can comprise a light driving pipe (130.1) which drives said light rays towards a flat reflection mirror (130.5). The use of a single flat reflection mirror (130.5) should be used if the change in direction of the light rays is of 45 degrees in angle or more. So, the light rays are driven into the light driving pipe (130.2) upwards until reaching the Plano concave or concave mirror (130.6). Said Plano concave or concave mirror (130.6) concentrates the light rays into a Plano convex or convex mirror (130.8). The Plano convex or convex mirror (130.8) drives the light rays coherently in the direction of the light driving pipe (130.2), until reaching the flat reflection mirror (130.7). Said mirror (130.7) is used to adjust the position of said light rays. So, after being reflected again by another flat reflection mirror, said light rays are driven up into the light driving pipe (130.2), coherently with the direction of projection of said pipe (130.2).

The light driving pipe (130.2) is sustained by the sustaining bars (130.4), which sustain these by the sustaining members (130.3). Hence, said light driving pipe (130.2) is sustained over the ground floor structure (130.9). So, a flat reflection mirror can then drive said light rays onto the same light driving pipe (130.10), horizontally at a higher point of projection. The light driving pipe (130.2, 130.11) is sustained over the ground floor surface (130.9, 130.12) without touching the ground floor surface. So, the light rays can then be driven to a lower point (130.13) as required by said flat mirrors, where said light rays would again reject horizontally, coherently with the direction of projection of said light driving pipe (130.13).

The light driving pipe (131.1) can also drive the light rays towards a flat mirror (131.12) which drives the light rays towards another flat mirror (131.2). Said flat mirror (131.2) should be at the required distance from the other mirror (131.9), as all light rays should then be driven by said flat mirror (131.2) towards said last mirror (131.9). This might prove to be a disadvantageous design situation, but the advantage is that the number of mirrors (131.12, 131.2, 131.9) is of three instead of four, hence maximising light driving efficiency by minimising losses. So, said initial flat mirror (131.12) drives the light rays perpendicularly towards the upper flat mirror (131.2). Said upper flat mirror (131.2) then drives the light rays sideways towards the least flat mirror (131.9). Said last flat mirror (131.9) then drives the light rays towards the concave or Plano concave mirror (131.3), which concentrates said light rays towards a convex or Plano convex mirror (131.8).

The use of the convex or Plano convex (131.8) and the concave or Plano concave (131.3) mirrors on any upwards or downwards projecting pipes (131.4), saves space in the piping system, hence maximising the space utilized to install the maximum number of light collection and concentration systems. The light driving pipe (131.4) can also drive light rays to a flat mirror (131.5) which drives the light rays downwards towards another flat mirror (131.11). Said flat mirror (131.11) then drives the light rays upwards again to another flat mirror (131.6). Said last flat mirror (131.6) can hence drive said light rays coherently and horizontally, along the light driving pipe (131.13) at said new upper projection point. The disadvantage is that a low enough distance is needed between said upper light driving pipe (131.4) and said lower flat mirror (131.11). However, if the ground floor (131.7) is kept low enough, the advantage of this design is that the number of mirrors used is lower, hence minimising losses and maximising light concentration efficiency. Said lower mirror (131.11) should be far enough, as the mirror 9131.11) should reflect the entire light that is sent to it (131.11) by said upper mirror (131.5), hence requiring some space. The light driving pipe (131.14) is always sustained over the ground floor surface (131.15). Any lower point (131.16) of projection is possible and achievable.

The light driving pipe (132.1) drives the concentrated light rays towards a flat reflection mirror (132.14), which drives said light rays upwards to another flat mirror (132.2), such that said flat mirror (132.2) reflects said light rays and drives these to a final flat reflection mirror (132.15). So, said final flat reflection mirror (132.15) drives said light rays coherently through the light driving pipe (132.3). Said system is hence, as preferably, using sets of three mirrors (132.14, 132.2, 132.15) for light ray driving and projection. If the space from the ground floor surface (132.16) is available, it is a better system to use than sets of four mirrors as less mirrors are needed, hence minimising losses and hence maximising light driving efficiency of the system.

The ground floor (132.16) is inclined such that said upper first flat reflection mirror (132.4) can drive the light rays of the light driving pipe (132.3) perpendicularly to the lower flat reflection mirror (132.17). So, said lower flat reflection mirror (132.17) drives the light rays upwards towards the final flat reflection mirror (132.5), which finally drives said light rays coherently through the light driving pipe (132.18) at said upper point of projection (132.18). The sustaining bars (132.6) attach to the vertical sustaining members (132.11), which sustain said light driving pipe (132.18) over the ground floor surface. Said design is better, as minimal contact with the ground floor maximises environmental space and minimises environmental damage.

The light ray can be driven coherently through said light driving pipe (132.18) to an initial flat reflection mirror (132.7), which drives the light rays to a set of flat reflection mirrors (132.19, 132.20). Said mirrors (132.19, 132.20) project such that the last mirror (132.20) drives the light rays to a flat reflection mirror (132.8), which then drives the light rays coherently through the downward projecting light driving pipe (132.26). In this design case, a set of four flat mirrors (132.7, 132.19, 132.20, 132.8) is needed, as the change in direction of the light rays has an angle of less than 45 degrees. The concave or Plano concave mirrors (132.9) concentrate the light rays to the convex or Plano convex mirrors (132.21), hence concentrating the light rays further. If a concave mirror is used (132.9), a convex mirror (132.21) should be used to drive said light rays coherently through the light driving pipe (132.26). This means that if a Plano concave mirror (132.9) is used, a Plano convex mirror (132.21) should hence be used to drive the light rays coherently through said light driving pipe (132.26). Said system can be comprised into said downward projecting pipe (132.26) in order to maximise the space utilisation to insert light collection and concentration systems.

A set of two flat reflection mirrors (132.22, 132.10) adjust the position of projection of the light rays to the required point of projection across the light driving pipe (132.26). Said last mirror (132.10) is positioned such that the required position of projection is achieved. Another set of four flat mirrors (132.24, 132.12, 132.13, 132.25) is comprised in order to drive said light rays back horizontally and coherently through the lower light driving pipe (132.27), which is the then new point of projection of said light rays (132.27). So, the first mirror (132.24) collects the light rays and drives these to a set of two flat reflection mirrors (132.12, 132.13), which are positioned such that the last mirror (132.13) drives the light rays down to the last flat reflection mirror (132.25). Said last flat mirror (132.25) then drives said light rays coherently through the light driving pipe (132.27). Said systems are always comprised over the ground floor surface (132.23), as this minimises system installation costs.

The light driving pipe (133.1) can comprises sets of four mirrors (134.16, 134.2, 134.3, 134.17, 134.6, 134.21, 134.22, 134.5) in order to drive the light rays to another point of projection (133.7). So, the first flat mirror (133.15) can drive the light rays to a set of two flat mirrors (133.2, 133.3), such that the last mirror (133.3) droves the light rays towards a last flat reflection mirror (133.16) that drives the light rays coherently through the light driving pipe upwards. A concave mirror (133.4) can be comprised to concentrate the light rays towards a convex mirror (133.18). Said convex mirror (133.18) drives the light rays to a flat reflection mirror (133.19), which adjusts the position of projection of said light rays by working with another upper flat reflection mirror. The sustaining bars are sustained by vertical members to the ground floor surface (133.17), which hence sustain said light driving pipe (133.20), which can also be directly sustained by vertical members to said ground floor surface (133.17).

The initial flat mirror (133.5) can drive the light rays of a set of flat mirrors (133.21, 133.22), such that the last mirror (133.22) drives the light rays to the final flat mirror (133.6), which drives said light rays coherently through the light driving pipe (133.7). So, said light rays are driven through said light driving pipe (133.8) until a flat mirror (133.9) drives these downwards again. Said sustaining bars (133.11) sustain said vertical members (133.10) that sustain said light driving pipe over the ground floor surface (133.25). The concave mirror (133.12) can also be present into said downward light driving pipe (133.14), in order to maximise space utilisation of the flat surfaces. So, the concave mirror (133.12) concentrates the light rays to the convex mirror (133.23), which drives said rays to a flat reflection mirror (133.24). Said mirror (133.24) drives said light rays to a last flat mirror (133.13) that is supported to the concave mirror (133.12). Said mirror (133.13) drives the light rays coherently through the light driving pipe (133.14) until reaching the flat reflection mirror (133.26), which drives said rays horizontally and coherently through the light driving pipe (133.27).

The light driving pipe (134.1) can comprise the same system of four flat reflection mirrors (134.16, 134.2, 134.3, 134.17, 134.6, 134.21, 134.22, 134.5) as previously explained, with said concave (134.4) and convex (134.18) mirrors concentrating the light rays into said light driving pipe (134.20). So a flat reflection mirror (134.19) can drive the light rays to an adjusted position along said light driving pipe (134.20). So, said light driving pipe (134.7) can drive the light rays coherently through said pipe (134.8) after being driven by said final upper flat mirror (134.5).

A flat reflection mirror (134.9) can drive the light rays down to another flat mirror (134.23), which in turn drives said light rays to another flat reflection mirror (134.11). Said mirror (134.11) drives the light rays through the light driving pipe (134.15). The light driving pipe (134.15) is sustained by the vertical members (134.10) which sustain said pipe to the sustaining bars (134.12), which sustain these over the ground floor surface (134.27). The last mirror (134.11) drives the light rays down to the concave mirror (134.13), which concentrates said rays to the convex mirror (134.25). Said convex mirror (134.25) drives said light rays to a flat reflection mirror (134.26), which drives the light rays to the required upwards position before being driven by the last flat mirror (134.14) coherently through the light driving pipe (134.15). On the lower end of said pipe (134.15), a flat reflection mirror (134.28) drives said light rays to another flat mirror horizontally, which then drives said rays vertically to a last flat reflection mirror (134.29). Said last flat reflection mirror (134.29) drives said light rays coherently and horizontally through the lower light driving pipe (134.30), hence projecting through said lower pipe (134.31) at a coherent, horizontal and straight manner.

So, sets of three mirrors (134.9, 134.23, 134.11, 134.28, 134.29) can be used. However the disadvantage of the design is that the last upper (134.11) and first lower (134.28) reflection mirrors are positioned catching the light rays very dimly. This might increase the difficulty of the design comprised. However, sets of three mirrors minimise light ray losses, as less mirrors are present, and hence maximise the efficiency of light ray driving of the system. If the ground floor surface (134.27) does not leave enough space for light driving, this architecture of three flat reflection mirror designs, can also be used to drive the light rays into the required paths, without needing to dig onto the ground floor surface (134.27). This would increase system installation costs.

The light driving pipe (135.1) is sustained to said sustaining bars (135.3) by said sustaining members (135.2), which attach to both (135.1, 135.3) simultaneously. The lower flat light collection mirror (135.4) is sustained always above the height of the sustaining bars (135.3), such that the lower area (135.8) of said mirrors (135.4) is always exposed to the sunlight, even at the lowest angles of inclination. This is designed to maximise light rays collection, and hence maximise the light collection efficiency of said lower flat light ray collection mirrors (135.4). Said upper mirrors (135.5) can drive said light rays to the lower flat mirrors (135.4) if the light rays from the sun are projected from another direction. Said lower flat mirror (135.4) then drives these light rays directly to the concave mirror (135.6) for efficient light concentration. The lower flat mirrors (135.4) are comprised, such that the lower areas (135.8) are always visible above the height of the lateral sustaining bars (135.3). The dimensions of both upper (135.5) and lower (135.3) flat mirrors are identical, as said design should coincide with each other. The lower flat mirrors (135.4) are sustained by the sustaining pivots (135.7), which keep the lowest areas (135.8) of said mirrors (135.4) above the height of the sustaining bars (135.3), even at the shallowest angles of inclination.

The sustaining bars (136.1) sustain the light ray driving pipe (136.9) above the ground floor surface (136.6). The lower flat mirrors (136.3) are always comprised over the surface of the sustaining bars (136.1), hence maximising the solar ray collection and projection of said lower mirrors (136.3). Said lower mirrors (136.3) are sustained by the mid sustaining rotary pivot (136.2), around which said mirrors (136.3) can be rotated and oriented. Said lower mirror (136.7) is always fully comprised over the height of the sustaining bars (136.1), even at a lower point of projection. The mirror (136.7) can be rotated with said light driving pipe (136.8) behind, as it has a very low cross sectional diameter. The member (136.4) comprised in front of said concave mirrors (136.5) assists said mirror (136.5) in avoiding any falling water on it from rain, hence maximising light concentration accuracy and efficiency.

Similarly, the sustaining bars (137.1) sustain said system over the ground floor surface (137.6). If said ground floor surface (137.6) is uneven, the lower mirrors (137.3, 137.7) are comprised always above said bars (137.1), even at unequal points of projection, which can be over or under the initial projection point, in order to maximise the solar light ray collection efficiency of said mirrors (137.3, 137.7). The rotary pivot (137.2) is comprised on the mid area of the mirrors (137.3, 137.7), in order to minimise the energy used to exert a rotational movement to said mirrors (137.3, 137.7). The upper members (137.4) minimise the rain drops deposited on said concave mirror (137.5), hence projecting it from the rain. The lower mirrors (137.7) can be rotated at 45 degrees, as the low cross sectional diameter of said light driving pipe (137.8) comprised behind said mirror (137.7), allows it. The light driving pipe (137.9) drives the concentrated light rays onto the required direction, coherently and fully protected from the outer world.

The light driving pipes (138.1, 138.7) can project at a plurality of directions, fully independently from each other. So, each light driving pipe (138.1, 138.7) can drive concentrated light rays to the final light driving pipe (138.2, 138.6). Said light driving pipes (138.2, 138.6) can each supply separately and independently, light ray heat for an application (138.3, 138.5) on a building (138.4). So, the left application can be the water boiler (138.3) which needs heat to heat the water, while the right application can be the cooking unit (138.5) which needs heat to heat the cooking pans. So, each side of the building (138.4) can comprise light driving pipes (138.1, 138.7) which project towards the walls of said building (138.4), for heat supply use in a plurality of applications (138.3, 138.5) on said building (138.4).

Similarly, said light driving pipes (139.1, 139.7) can each drive separately light rays through the final light driving pipes (139.2, 139.6). So, said pipes (139.2, 139.6) can hence each supply light ray heat separately to an application of the building (139.4). The left application can be a radiator (139.3) which needs heat to heat the room concerned, while the right application can be the electrical power generation unit. So, said building (139.4) can comprise pluralities of light driving pipes (139.1, 139.7) to fulfil the needs of the household without the need of an external power source.

The light driving pipe (140.1) on the left side, can drive the light rays up to the top of the roof (140.9) of a building (140.10) by the means of sets of flat reflection mirrors (140.5, 140.15), while the right hand side light driving pipe (140.12) can supply heat to a radiator (140.16) inside said building by driving said light rays through the final light driving pipe (140.11). So, one light driving pipe (140.12) can supply heat to a radiator (140.16) on one side, while the other light driving pipe (140.1) can use the surface (140.9) of the building's (140.10) roof to use it as a horizontal surface (140.9) for light ray driving pipe (140.6) and solar ray concentration system space. So, said space (140.9) can be used to insert said light driving pipe (140.6) over it. This maximises space utilisation for light collection and concentration without using the external surface comprised around said building (140.10) itself. So, said light driving pipe (140.4) drives the light rays along the walls of the building (140.10) into a vertical direction, until reaching the horizontal surface (140.9) of the building's (140.10) roof (140.9).

The initial flat reflection mirror (140.15) drives the light rays coherently upwards through the light driving pipe (140.4), until said rays reach a downwards facing concave or Plano concave mirror (140.2). Said downward projecting concave or Plano concave mirror (140.2) concentrates the light rays towards an upwards facing convex or Plano convex mirror (140.14). Said upward facing convex or Plano concave mirror (140.14) drives the light rays to a flat reflection mirror (140.13). Said rays are hence driven perpendicularly to the direction of projection of the light driving pipe (140.4) by said flat mirror (140.13). When said light rays reach the required point of projection into said light driving pipe (140.4), another flat reflection mirror (140.3) drives said light rays coherently through the light driving pipe (140.4). Said concentrated light rays are then reflected back onto a horizontal direction of projection by another flat reflection mirror (140.5). So, said light rays can then project coherently and horizontally through the light driving pipe (140.6) of the system above the roof surface (140.9) of the building concerned (140.10). The light rays can be driven through the final light driving pipe (140.7) to the heat exchanger (140.8) for efficient electrical energy generation.

The set of flat reflection mirrors (140.3, 140.13) is used to cover the position of projection of said light rays as required, such that after being driven by the last flat reflection mirror (140.3), said light rays can be driven coherently through the light driving pipe (140.4) upwards until reaching the upper flat reflection mirror (140.5). Said upper flat mirror (140.5) drives said light rays back onto a horizontal direction into the upper light driving pipe (140.6) Said flat reflection mirrors (140.5, 140.15) should preferably be inclined at 45 degrees for efficient and coherent light ray driving if required. The positioning of said concave or Plano concave mirror (140.3) and said Plano convex or convex mirror **(140.14)** into the light driving pipe, maximises the space on the horizontal areas (140.1, 140.6) of the light driving pipe (140.1, 140.6) to insert light concentration and collection systems.

The light driving pipe (141.1) can also comprise a flat reflection mirror (141.15) that drives said light rays vertically upwards towards the concave or Plano concave mirrors (141.2). Said mirror (141.2) in turn concentrates the light rays towards the convex or Plano convex mirror (141.16). The mirror (141.16) then drives said light rays towards a flat reflection mirror (141.17), which drives the light rays perpendicularly to the light driving pipe's (141.4) direction of projection. When said light rays reach the required point of projection, another flat reflection mirror (141.3) reflects these light rays back vertically upwards, hence driving said light rays coherently through the light driving pipe (141.4) upwards. Another flat mirror (141.5) can then drive the light rays through the light driving pipe (141.6). Said pipe (141.6) is comprised over the horizontal surface (141.18) of the roof (141.18) of the building concerned (141.10). This minimises the space required around said building (141.10) for system installation, hence maximising system efficiency per unit of area. This design also profits of the area comprised on the roof (141.18) of said building (141.10), hence minimising costs.

The vertical members (141.7) sustain said light driving pipe (141.6) over the floor surface (141.18) of the building **(141.10).** Said members (141.7) sustain the sustaining bars (141.9) into position, which in turn sustain the light driving pipe (141.6) over the roof surface (141.18) by the means of the sustaining members (141.8), to which both the light driving pipe (141.6) and the horizontal sustaining bars (141.9) are attached to. Another flat mirror (141.11) then drives the light rays back downwards through the light driving pipe (141.12). On the vertical downward light driving pipe (141.12), the concave or Plano concave mirror (141.13) and the convex or Plano convex mirror (141.19) can also be comprised. This design maximises horizontal space utilisation for light concentration system installation.

So, the concave or Plano concave mirror (141.13) concentrates the light rays of the light driving pipe (141.12), towards said convex or Plano convex mirror (141.19). Said light rays are then driven by said convex or Plano convex mirror (141.19) further vertically downwards to a flat reflection mirror (141.20). Said mirror (141.20) drives said light rays perpendicularly to the direction of projection of the light driving pipe (141.12) until reaching the required point of projection. At said point, another flat mirror (141.14) drives said light drays back vertically downwards, coherently with the direction of projection of the light driving pipe (141.12). A last flat mirror (141.21) then drives the light rays back horizontally through the light driving pipe (141.22) comprised down and besides said building (141.10).

The last flat reflection mirror (141.14) can be comprised sustained to the concave or Plano concave mirror (141.13). This saves space and maximises design compactness, hence maximising design efficiency. Only a Plano concave mirror (141.2, 141.13) can be present if a Plano convex mirror (141.16, 141.19) is present in front of it (141.2, 141.13). Otherwise, concave mirrors (141.2, 141.13) have to be paired with convex mirrors (141.16, 141.19) in front of these (141.2, 141.13). This assures that said light rays will be driven in the required direction, and coherently to the direction of projection of said light driving pipes (141.4, 141.12) after being driven by said convex or Plano convex mirrors (141.16, 141.19).

The flat reflection mirrors concerned (140.15, 140.13, 140.3, 140.5, 141.15, 141.17, 141.3, 141.5, 141.11, 141.20, 141.14, 141.21) should preferably be inclined at 45 degrees to the direction of projection of the light driving pipes (140.1, 140.4, 141.1, 141.4, 141.6, 141.12), which are the pipes (140.1, 140.4, 141.1, 141.4, 141.6, 141.12) from which said light rays initially project towards said flat reflection mirrors (140.15, 140.13, 140.3, 140.5, 141.15, 141.17, 141.3, 141.5, 141.11, 141.20, 141.14, 141.21). So, said flat mirrors (140.15, 140.13, 140.3, 140.5, 141.15, 141.17, 141.3, 141.5, 141.11, 141.20, 141.14, 141.21) should preferably be tilted at 45 degrees, such that these (140.15, 140.13, 140.3, 140.5, 141.15, 141.17, 141.3, 141.5, 141.11, 141.20, 141.14, 141.21) project at 45 degrees perpendicularly to the initial direction of projection of said light rays concerned.

The light ray driving pipes (142.1) can be equipped with sets of three mirrors (142.8, 142.9, 142.2) for light ray driving, even if the changes in the direction of the light ray projection are of less than 45 degrees. If space is available, said combination of three flat mirrors (142.8, 142.9, 142.2) is better than that of four, as the design reduces the number of mirrors, reduces the light rays absorbed by said mirrors, and hence maximises light ray driving efficiency. The initial flat mirror (142.8) drives the light rays perpendicularly to the original direction of projection, towards the other flat mirror (142.9). Said flat mirror (142.9) then finally drives said light rays towards the last flat mirror (142.2), which drives said light rays onto the required direction of projection. If enough horizontal space is available at the side of said light driving pipes (142.1, 142.10), said sets of three mirrors are a more recommendable design to use.

The light rays driving pipe (142.4) is comprised, such that the inner volume (142.10) houses the driving of said light rays. Said light rays are driven coherently through the light driving pipe (142.10) until reaching the initial flat mirror (142.3), which drives said light rays perpendicularly to the original coherent direction of projection of said light driving pipe (142.10). Said mirror (142.3) drives said light rays towards the flat mirror (142.6) comprised at the end of said compartment (142.7). Said flat mirror (142.6) then drives said light rays to the final flat reflection mirror (142.5), which drives said light rays coherently through the light driving pipe (142.10). Even if the changes in direction are of less than 45 degrees for said light rays, said system can be useful if the necessary space is available for the system compartment (142.7). A compartment (142.7) is used to keep said light driving pipe (142.4, 142.7) closed to the outer world, but also to house the mirror (142.6), as all light rays should be reflected and driven by said flat reflection mirror (142.6).

The compartments (142.7) are part of the light ray driving pipe (142.4) as a structure, and are used to keep all required mirrors (142.3, 142.6, 142.5) in the required structural position at all times, with the distances between said mirrors (142.3, 142.6, 142.5) comprised as is required. If enough space is available for said compartments (142.7) to be comprised at any point of light ray reflection or driving, this could maximise the light ray driving efficiencies of the system. Said compartments (142.7) should preferably be in a horizontal position of projection, and are always part of the single light driving pipe (142.1, 142.10) designs concerned.

The sustaining bars (143.1, 143.13, 143.18, 143.20) can drive the light driving pipes (143.8, 143.3, 143.17, 143.23) sustained by said bars (143.1, 143.13, 143.18, 143.20) onto different direction compared to the main light driving pipe's (143.5) direction of projection, which projects in parallel to the direction of projection of said sustaining bars (143.16). So, a main light driving pipe (143.5) can be comprised with all light driving pipes (143.10, 143.3, 143.17, 143.23) driving the concentrated light rays to said main light driving pipe (143.5). This design is aimed at accumulating all the light ray heat of a plurality of systems into one single main light driving pipe (143.5) in order to minimise the number of components and heat exchangers used. Said sustaining bars (143.16) sustain said light driving pipe into the required position.

One light driving pipe (143.8) can project in parallel with the direction of projection of said sustaining bars (143.1), away from said main light driving pipe (143.5). However, a flat reflection mirror (143.9) can drive said concentrated light rays directly towards said main light driving pipe (143.5). Said mirror (143.9) drives said light rays directly through the light driving pipe (143.10) to a set of four mirrors (143.11, 143.12, 143.6) to ensure that said light rays are driven at 90 degrees perpendicular to the direction of projection of said main light driving pipe (143.5). So, the initial mirror (143.11) drives the light rays to a set of two flat reflection mirrors (143.12), with said last mirror (143.12) finally driving the light rays towards the final mirror (143.6). Said final mirror (143.6) drives the light rays at 90 degrees perpendicularly to the main light driving pipe (143.5), towards it (143.5).

Another light driving pipe (143.3) can project in parallel to the direction of projection of said sustaining bars (143.13), towards said main light driving pipe (143.5). Said light driving pipe (143.2) can also start with at least one light collection and concentration system comprised. This depends on design requirements and ground topology. In this case, a flat reflection mirror (143.4) can drive said light rays directly to said main light driving pipe (143.5), which should be preferably at 90 degrees perpendicular to it (143.5).

Another light driving pipe (143.17) can drive the light rays in parallel to the sustaining bars (143.18), straight towards said main light driving pipe (143.5). So, a flat mirror (143.7) can then drive said light rays coherently and in parallel to the direction of projection of said main light driving pipe (143.5), through said light driving pipe (143.5) and towards the heat exchanger. Mirrors are also comprised for the other light driving pipes (143.10, 143.3) at the main light driving pipe (143.5), but at different heights, such that the light rays do not encounter any obstacle in the path.

Another light driving pipe (143.23) can project in parallel to the direction of projection of said main light driving pipe (143.5), and preferably in parallel to the direction of projection of said sustained bars (143.20). Said sustaining bars (143.20) sustain said light driving pipe (143.23) by sustaining struts. The light driving pipe (143.23) can start at any point (143.19), in order to maximise the ground space utilisation for energy collection system installation. The number of systems depends on ground topology and design requirements. The sustaining members (143.24) of the light driving pipe (143.23) can project perpendicularly to the initial sustaining bars (143.20). This is because a flat reflection mirror (143.26) can drive said light rays to the main light rays driving pipe (143.5). A flat reflection mirror (143.15) is also comprised to drive said light rays coherently to said main light driving pipe (143.5), and through it (143.5) towards the heat exchanger. Said mirror (143.15) is comprised at a certain height to avoid any obstacles met by said light rays on the pathway. A flat reflection mirror, which in this case is the lower mirror (143.25) can be comprised on said perpendicular projecting system in order to maximise space utilisation for light concentration system installation, and to maximise system efficiency per unit of area.

Both sustaining members (143.16) sustain the main light driving pipe (143.5) into position. The lower mirror (143.21), upper mirror (143.22) and light concentration concave mirror (143.14) are comprised at each light collection and concentration system. The distances between said upper mirror (143.22) and said lower mirror (143.21) are enough between each system (143.21, 143.22, 143.14) such that one mirror (143.21, 143.22) can be rotated to 45 degrees of sideways inclination, in order to collect the light rays as efficiently and economically as possible.

The parts of the light driving pipes (143.27, 143.28, 136.8, 137.8) which are driven behind said lower mirrors or heliostats (143.21, 136.7, 137.7) are designed to not interfere with the structure of said systems (143.27, 143.28, 136.8, 137.8) thanks to the very low cross-sectional diametrical dimensions of said structures (143.27, 143.28, 136.8, 137.8). So, said lower mirrors or heliostats (143.21, 136.7, 137.7) can be rotated at up to 45 degrees sideways as required without any obstacles being encountered into the mirror's (143.21, 136.7, 137.7) path.

The light driving pipes (144.2, 144.7) can be comprised beside said main light driving pipe (144.21), such that both pipes (144.2, 144.7, 144.21) project in parallel to each other. Said light driving pipes (144.1, 144.16) can start at any point (144.1, 144.16) and comprise at least one light collection and concentration system. This depends on ground floor topology. The light driving pipes (144.2, 144.7) can drive the light rays to sets of flat reflection mirrors (144.4, 144.8, 144.25, 144.32) towards said main light driving pipe (144.21), by driving said light rays through the light driving pipes (144.12, 144.18, 144.24, 144.31). Said light driving pipes (144.12, 144.18, 144.24, 144.31) project perpendicularly to the direction of projection of said main light driving pipe (144.21). The sustaining members (144.3, 144.6) sustain said light driving pipes in the required positions at all times. Said pipes (144.2, 144.7) can be comprised on both sides of the main light driving pipe (144.21).

The flat reflection mirrors (144.23) can drive said light rays towards a concave mirror (144.17), or can directly (144.19) drive said light rays coherently to the direction of projection of said main light driving pipe (144.29). So, said flat mirrors (144.19) can also drive said light rays through said light driving pipe (144.29), and hence beside the other flat mirrors if required. The main light driving pipe (144.21) comprises sets of solar light ray collection and concentration systems over it (144.21), comprising each a lower flat mirror (144.9), an upper flat mirror (144.11) and a concave light concentration mirror (144.10) over said light driving pipe (144.21) but under said upper flat mirror (144.11). The sustaining bars (144.20) drive said light driving pipe (144.21) into the required direction. The flat reflection mirrors (144.23) can be comprised at a height which is different to said flat reflection mirrors (144.26) comprised on the same pathway, in order to avoid any obstacles being met by said light rays.

So, said light driving pipe (144.21), drives the light rays towards a concave concentration mirror (144.17). Light rays of other light driving pipes (144.13), are reflected by flat reflection mirrors (144.15, 144.26, 144.28) which are under or above said flat reflection mirrors (144.15, 144.26, 144.28) to avoid any obstacles for said light rays. The inner flat reflection mirrors (144.28) can be sustained by horizontal members (144.27) which drive said light rays towards said concave mirror (144.17). So, the light driving pipe (144.22) drives all light rays reflected by said flat reflection mirrors (144.15, 144.23, 144.26, 144.28) embedded into its interior (144.21), towards said concave light concentration mirror (144.17). Said concave mirror (144.17) then concentrates said light rays downwards to a convex mirror (144.14). So, said convex mirror (144.14) then drives said light rays coherently through said light driving pipe (144.21), onto said closed structure (144.29).

Said structure (144.29) drives the light rays towards the heat exchanger as required, hence minimising the number of heat exchangers needed. The set of flat reflection mirrors (144.15, 144.23, 144.26, 144.28) are comprised under or over said light rays being driven by said light driving pipe (144.21) before reaching said light concentration point. The use of concave (144.17) and convex (144.14) mirrors allows the use of said light driving pipe for a large plurality of light rays being concentrated from many light driving pipes (144.13, 144.12, 144.18, 144.24, 144.31) simultaneously and coherently. This results in a large solar ray concentration by said concave mirror (144.17), which drives the concentrated light rays downwards towards said convex mirror (144.14). The transparent light ray lens (144.30) is always comprised on said light driving pipe (144.29) structure at each light collection and concentration system. The vertical members (144.5) sustain said light driving pipe over the ground floor surface, as is required. Said light driving pipes (144.13) are driven from lateral light collection and concentration systems, such that said light concentration system (144.17, 144.14) based on concave (144.17) and convex (144.14) mirrors minimises the use of components, piping and heat exchangers needed.

The lower flat mirrors (145.1, 145.21) are comprised in order to efficiently collect and reflect the solar rays, which these (145.1, 145.21) drive towards the concave light concentration mirror (145.3, 145.10). Said concave mirrors (145.3, 145.10) then drive said light rays towards the flat transparent lens (145.2) comprised on the light driving pipe (145.5) for efficient light ray driving and. The sustaining members (145.8) sustain said light driving pipe (145.5) in the required positions. A flat reflection mirror (145.12) drives said light rays into a light driving pipe (145.16) towards said main light driving pipe (145.14). The upper flat mirrors (145.4, 145.11) stay on a position which is perpendicular to the light rays coming, hence maximising light ray collection efficiencies by said lower flat mirrors (145.1, 145.21). The light driving pipe structure (145.9) can start at any point (145.7), depending on ground floor topology and design requirements.

The light driving pipes (145.6, 145.16, 145.23) drive the light rays towards flat reflection mirrors (145.24, 145.27, 145.29) which are sustained into said light driving pipe structure (145.14). The inner flat reflection mirrors (145.29) are sustained by sustaining members (145.28) which attach to the edge of the light driving pipe structure (145.14). The light rays are driven towards a concave mirror (145.19). Said concave mirror (145.19) then drives the light rays, hence concentrating these downwards, towards a convex mirror (145.18). Said convex mirror (145.18) then drives the light rays through said light driving pipe structure (145.14), which projects in parallel to the sustaining members (145.13) of said pipe. The flat light reflection mirrors (145.30) can also drive the light rays beside other mirrors.

The light rays (145.17, 145.22) of the sun are driven to the lower flat mirrors (145.15, 145.20), which are inclined in order to drive said light rays efficiently and coherently towards said concave mirrors (145.25). Said concave mirrors (145.25) then concentrate said light rays towards said transparent lens (145.2) comprised at each light ray collection and concentration system (145.15, 145.25, 145.26). The upper flat mirror (145.26) is in this case in a perpendicular position to the inclining light rays (145.17) from the sun, hence maximising light ray collection and reflection efficiencies for said lower flat mirrors (145.15, 145.20). The light rays from the sun (145.17, 145.145.22) are always projected towards the light ray collecting mirrors (145.15, 145.20, 145.26), which can be either the lower flat mirrors (145.15, 145.20) or the upper flat mirrors (145.26). This depends on the position of projection of said main light driving pipe (145.14), and the direction of projection of said light rays at the given time.

The system design concerned comprises just one set of light ray collection and concentration systems (145.15, 145.25, 145.26) beside each system (145.1, 145.3, **145.4,** 145.21, 145.10, **145.11)** comprised beside said main light driving pipe (145.14). This system design allows the light rays (145.17, 145.22) to be easily collected by said flat mirrors (145.15, 145.20, 145.26) without having any of the lateral systems (145.1, 145.3, 145.4, 145.21, 145.10, 145.11) that could block the light rays (145.17, 145.22) of reaching said flat light collection and reflection mirrors (145.15, 145.20, 145.26). Said systems (145.1, 145.3, 145.4, 145.21, 145.10, 145.11) should be comprised preferably projecting in a parallel direction to the main light driving pipe (145.14) on both of its sides, with the sustaining members (145.13) preferably projecting into the same linear direction as said main light ray driving pipe (145.14).

The flat mirrors (146.2) can be sustained by vertical members (146.3) to the light driving pipe structure (148.1), such that said members (146.3) can sustain more than one flat mirror (146.2) above the other (146.2), where the same members (146.3) sustain everything. The flat mirrors (146.2) can be comprised being hanged (146.3) by said members (146.3) at different positions along the light driving pipe (148.1), such that no obstacle could be present on the path of the light rays (146.4), which are driven horizontally through said pipe. The flat mirrors (146.2) are all positioned in front of incoming light driving pipes (146.1) which supply the light rays to the flat reflection mirrors (146.2). This design is shown with said pipes (145.16, 145.23, 145.6) being reflected by flat reflection mirrors (145.24, 145.27, 145.29, 145.30). The light rays (146.5) can hence be projected on the same direction as lower comprised light rays (146.6), such that said light rays (146.6) can be driven past other flat reflection mirrors (146.2) without any obstacle or problem being posed. So, the light rays (146.7) can become a plurality, which increases the light ray (146.7) intensity.

The concentrated light rays (147.1) can be driven past said flat reflection mirrors (147.6) if these (147.6) are comprised at different positions in the light driving pipe (148.1). However, said mirrors (147.6) can be comprised at the same height as the concentrated light rays. Light driving pipes (147.5) which project perpendicularly (147.5), can be comprised in front of each flat reflection mirror (147.6) in order to drive the light rays efficiently. The light rays (147.7) can altogether be driven to the heat exchanger (147.8) for simultaneous heat supply applications. The sustaining members (147.3) sustain said flat reflection mirrors (147.6) in place. So, the light rays 147.1, 147.2, 147.4) can increase in intensity, by passing beside more and more flat reflection mirrors (147.6) comprising flat reflection mirrors (147.6) at the same height, but beside the directions of projection of said light rays, in order to avoid any obstacles blocking the pathway of the light rays. Said concave light driving mirrors are comprised over the height of the light rays (147.4) concerned in this system design.

The flat reflection mirrors (148.3) can be comprised hanging from vertical members (148.4), which rigidly attach to the light driving pipe's (148.1) upper surface. Light driving pipes (148.2) which project perpendicularly (148.2), drive the light rays to the flat reflection mirrors (148.3). Said mirrors (148.3) then drive the light rays coherently through the light driving pipe (148.1), in the same direction of projection as said pipe **(148.1).** The light rays **(148.5, 148.6)** are driven beside said flat reflection mirrors (148.3), such that although said mirrors (148.3) are comprised at the same height, obstacles can be comprised on the pathway of said light rays (148.5, 148.6) that are driven. On this system design, the light rays (148.8) driven coherently through said light driving pipe (148.1), are comprised under said flat reflection mirrors (148.3), hence meaning that said light rays (148.8) are driven under said light rays (148.5, 148.6) which are being driven coherently through the light driving pipe (148.1) by said flat reflection mirrors (148.3). Said light rays (148.5, 148.6) are hence driven coherently in the same direction as the direction of projection of said light driving pipe (148.1) by said flat reflection mirrors (148.3).

Said flat reflection mirrors (146.2, 147.6, 148.3) are always comprised in front of incoming light driving pipes (146.1, 147.5, 148.3), and are sustained by vertically projecting sustaining members (146.3, 147.3, 148.4), such that said flat reflection mirrors (146.2, 147.6, 148.3) are always comprised inside the structure of the light driving pipes (148.1), hence meaning that the light rays will be driven through said light driving pipe (148.1) to the heat exchangers (147.8, 148.6) for power generation and supply of storage heat. The sustaining members (146.3, 147.3, 148.4) can sustain at least two flat mirrors (146.2, 147.6, 148.3) over each other, hence meaning that the light rays (146.4, 146.5, 146.6, 146.7, 147.1, 147.2, 147.4, 148.5, 148.6, 148.8) can be projected coherently and in parallel to each other as a plurality of light rays (146.5, 146.6, 146.7, 148.5, 148.6, 148.8) through the light driving pipe (148.1), towards said heat exchangers (147.8, 148.7).

The light rays can be driven by said upper convex mirror (148.9) coherently onto the same direction through said light driving pipe (148.1), to the concave or Plano concave mirror (148.11) comprised into said light driving pipe (148.1). Said light rays are then concentrated by said concave or Plano concave mirror (148.11), towards the convex or Plano convex mirror (148.10) comprised along the lower surface of said light driving pipe (148.1). With said design, a plurality of systems can be comprised in front of each other along the light driving pipe (148.1) without letting the light rays being obstructed by any obstacles. So, the cross-sectional surface area to insert flat reflection mirrors (148.3) could be maximised on said light driving pipe (148.1), hence maximising efficiency. The light rays (148.6, 148.8) can be driven under said upper convex mirror (148.9), but over said lower Plano convex or convex mirror (148.10). A concave mirror (148.11) should be comprised if a convex mirror (148.10) is used to drive the light rays coherently through said light driving pipe (148.1). However, a Plano concave mirror (148.11) should be used if the lower mirror in question (148.10) which receives said concentrated light rays, is a Plano convex mirror (148.10). This is because the system should drive the light rays coherently and simultaneously through said light driving pipe (148.1) without any incidence occurring. So, both mirrors (148.10, 148.11) should correspond in geometry to each other (148.10, 148.11). Using a concave (148.11) and a convex (148.10) mirror would reduce the cross-sectional print of the light rays, hence maximising space inside said light driving pipe (148.1) to insert as many components as possible on the next light collection and concentration system concerned. So, a combination of concave (148.11) and convex (148.10) mirrors is to be preferably used for such a system. So, the entire surface area beside said lower convex mirror (148.10) could be used to position further flat light reflection mirrors (148.3) into the small space concerned. Said surface area comprises both sides beside said lower convex mirror (148.10), hence maximising space usage and light concentration efficiencies.

The light driving pipes (149.1, 149.17) on a plurality of sides, can drive the light rays from both sides of a main light driving pipe system (148.1, 149.24) towards it (148.1, 149.24). Said light driving pipes (149.1) are comprised over the ground floor surface (149.18) to minimise system installation and concentration costs. The light driving pipes (149.1, 149.17) on the two sides, drive the light rays towards light driving pipes (149.19, 149.15). Said pipes (149.19, 149.15) can comprise sets of four flat mirrors (149.20, 149.14) to adjust the height of light projection position of said light rays. The light driving pipes (149.2, 149.16) of a plurality of lateral light collection and concentration systems, can also drive the light rays through said pipes (149.2, 149.16) towards a set of four flat reflection mirrors (149.3, 149.13) at each side of said main light driving tubular system (148.1, 149.24). Said sets of flat mirrors (149.3, 149.13) are used to regulate the height of projection of said light rays to any desired level, as is the case for the other light driving pipes (149.19, 149.15) which comprise said sets of flat reflection mirror systems (149.20, 149.14).

The sets of four flat reflection mirrors (148.3, 149.3, 149.13, 149.14, 149.20), drive the light rays through horizontally projecting light driving pipes (149.4, 149.5, 149.12) from said flat reflection mirrors (149.3, 149.13, 149.14, 149.20). The vertical sustaining members (149.29) sustain said light driving pipes (149.4, 149.5, 149.12) over the ground surface (149.18) on the required fixed and rigid positions. Each light driving pipe (149.4, 149.5, 149.12) drives the light rays from a separate set of flat reflection mirrors (148.3, 149.4, 149.5, 149.12), independently towards said main light driving pipe system (148.1, 149.24). Flat reflection mirrors (148.3, 149.11) drive said light rays to the required horizontal position of projection, such that said light driving pipes (149.10, 149.25) can drive the light rays easily and coherently towards the flat reflection mirrors (149.9, 149.23) comprised in said main light driving pipe (148.1, 149.24) without any difficulty. Each light driving pipe (149.10, 149.25) is driven separately and coherently towards a different flat reflection mirror (148.3, 149.9, 149.23) into said main light driving pipe (148.1, 149.24). The flat reflection mirrors (148.3, 149.9) can be comprised over other flat mirrors (148.3, 149.23) if required. However, the pathways of the upper convex (148.9, 149.8) and lower convex (148.10, 149.22) mirrors are never obstructed by flat reflection mirrors (149.9, 149.23). This is because said light rays reflected by said flat reflection mirrors (148.3, 149.9, 149.23) are all driven towards the concave mirrors **(148.11)** coherently for light concentration to said lower convex mirror (148.10, 149.22). The upper convex mirror (148.9, 149.8) drives the light rays driven by said concave mirror (148.11) coherently and horizontally through said light driving pipe (148.1, 149.24).

The main light driving pipe (148.1, 149.24) can hence be comprised on a lower ground floor surface (149.21). The sustaining members (149.26) sustain said light driving pipe structure (148.1, 149.24) to the horizontal sustaining member (149.27). The vertical members (149.28) at each side, sustain said horizontal member (149.27) as well as the concave mirror (149.6) which concentrates said light rays towards said upper convex mirror (148.9, 149.8). Said horizontal sustaining members (149.27) also sustain said upper flat light collection and concentration mirror (149.7) into the required position.

Said light driving pipes (146.1, 147.5, 148.2, 149.10, 149.25), drive the light rays to said flat reflection mirrors (146.2, 147.6, 148.3, 149.9, 149.23) in order for said light rays (146.4, 146.5, 146.6, 146.7, 147.1, 147.2, 147.4, 148.5, 148.6, 148.8) to be driven coherently and horizontally towards said heat exchanger (147.8, 148.7). In this case, said flat reflection mirrors (148.3, 149.9, 149.23) are attached to the walls of the main light driving pipe (148.1, 149.24). The main light driving pipe (148.1, 149.24) drives the light rays (146.4, 146.5, 146.6, 146.7, 147.1, 147.2, 147.4, 148.5, 148.6, 148.8) coherently and horizontally through said light driving pipes (148.1, 149.24).

The ground surface heights (150.10, 150.11, 150.19, 150.19) are comprised at different heights at both sides of said main light driving pipe (148.1, 149.24). The flat reflection mirrors (150.1, 150.2, 150.3, 150.8, 150.9, 150.12, 150.17, 150.18) drive the light rays up or down said pipes (150.6, 150.7, 150.13) for coherent horizontal projection, provided that the change in direction of said light rays is at an angle of at least 45 degrees. Said light driving pipes (150.6, 150.7, 150.17) drive the light rays towards the main light driving pipe (148.1, 149.24). Said main light driving pipe (148.1, 149.24) comprises flat reflection mirrors (148.3, 150.14, 150.16) in order to drive the light rays of each of said pipes (148.2, 150.6, 150.7, 150.13) coherently, independently and horizontally through said light driving pipe (148.1, 149.24). Flat mirrors (148.3, 150.16) can be comprised over each other (148.3, 150.14) if necessary, as well as comprising a plurality of mirrors (150.14) being housed at each side along said light driving pipe (148.1, 149.24). Said mirrors (148.3, 150.14) are sustained by vertical sustaining members (148.4, 150.5). The upper convex mirror (148.9, 150.4) drives the light rays concentrated by the light concentrating concave mirror (149.6). The lower convex mirror (148.10, 150.15) drives the light rays that are concentrated by the concave mirror (148.11) comprised inside said light driving pipe (148.1, 149.24).

The light driving pipes (146.1, 147.5, 148.2, 150.6, 150.7, 150.13) drive the concentrated light rays to the flat reflection mirrors (150.14, 150.16, 146.2, 147.6, 148.3) coherently and horizontally through the main light driving pipe (148.1, 149.24), hence driving the light rays (146.4, 146.5, 146.6, 146.7, 147.1, 147.2, 147.4, 148.5, 148.6, 148.8) through the main light driving pipe (148.1, 149.24). The flat reflection mirrors (148.3, 150.14) can be sustained by vertical sustaining members (150.5, 146.3, 147.3, 148.4) that are attached to the upper surface of said light driving pipe (148.1, 149.24). This system hence drives the light rays (146.4, 146.5, 146.6, 146.7, 147.1, 147.2, 147.4, 148.5, 148.6, 148.8) to the heat exchanger concerned (147.8, 148.7).

The light driving pipes (151.1, 151.6, 151.7) drive the light rays towards the main light driving pipe (148.1, 151.10). The sustaining members (151.11) sustain said pipe structure (148.1, 151.10) to the horizontal member (149.27). The light driving pipes (151.1, 151.6, 151.7) drive the concentrated light rays to a flat reflection mirror (148.3, 151.3, 151.4, 151.5). Flat reflection mirrors (148.3, 151.3) can be sustained to the wall structure of the light driving pipe (148.1, 151.10). Other flat reflection mirrors (148.3, 151.4, 151.5) can be comprised the one (148.3, 151.4) over the other (148.3, 151.5) in order to maximise space inside said light driving pipe (148.1, 151.10). Horizontal sustaining members (151.8, 151.12) can each sustain separately and independently said flat reflection mirrors (148.3, 151.4, 151.5) to the lateral wall surfaces of said light driving pipe (148.1, 151.10). The upper convex mirror (148.9, 151.2) is used to drive the light rays driven by the concave mirror (149.6) coherently through said light driving pipe (148.1, 151.10). The lower convex mirror (148.10, 151.9) is used to drive the light rays coherently through said light driving pipe (148.1, 151.10) after being concentrated by the concave mirror (148.11) which is comprised inside said light driving pipe (148.1, 151.10). Said concave mirror (148.11) further concentrates said light rays towards said lower convex mirror (148.10, 151.9), hence freeing as much space as possible through said light driving pipe (148.1, 151.10), and hence allowing the next set of flat reflection mirrors (148.3, 151.3, 151.4, 151.5) to be housed at a further position through said light driving pipe (148.1, 151.10).

The light driving pipes (151.1, 151.6, 151.7, 146.1, 147.5, 148.2) drive the concentrated light rays to flat reflection mirrors (148.3, 151.3, 151.4, 151.5, 146.2, 147.6, 148.3), which drive said light rays (146.4, 146.5, 146.6, 146.7, 147.1, 147.2, 147.4, 148.5, 148.6, 148.8) coherently and horizontally through the light driving pipe structure (148.1, 151.10), and hence towards the required heat exchanger concerned (147.8, 148.7). None of the flat reflection mirrors (148.3, 151.3, 151.4, 151.5) are comprised on the same path, in order to avoid any obstacles being present on the pathway of said concentrated light rays (146.4, 146.5, 146.6, 146.7, 147.1, 147.2, 147.4, 148.5, 148.6, 148.8). The upper flat reflection mirrors (148.3, 151.3) can be comprised over the flat mirrors (148.3, 151.4, 151.5) or beside these (148.3, 151.4, 151.5). Said flat reflection mirrors (148.3, 151.4, 151.5) which are sustained by separate and independently projecting horizontally projecting members (151.8, 151.12), can comprise a member (151.8, 151.12) to sustain each mirror (148.3, 151.4, 151.5) separately, and can be comprised one (148.3, 151.4) over the other (148.3, 151.5) if required in order to save space inside said light driving pipe structure (148.1, 151.10). Said concave mirror (148.11) concentrates the light rays onto said lower convex mirror (148.10) in order to maximise the space used inside said main light driving pipe structure (148.1, 151.10). This hence maximises the space offered inside said pipe (148.1, 151.10) to install as many flat reflection mirrors (148.3, 151.3, 151.4, 151.5) as required, while keeping a clear path for the light rays (148.6, 148.8) to be driven without any obstacles into the main light driving pipe (148.1, 151.10).

Said light driving pipe (148.1, 151.10) can comprise a circular cross-section (151.10), but can also comprise square or oval cross-sections as well, depending on design requirements for the field concerned. So, each light driving pipe (148.1, 151.10) should comprise a hollow elongated structure (67.12, 123.3, 151.10), preferably a tubular structure (67.12, 123.3, 151.10) of circular, oval or square cross-section (67.12, 123.3, 151.10). On the square cross-sectioned pipes, the upper light reflection mirrors (149.9, 150.16, 151.3) would have more space to be installed, hence meaning that it could be a more favourable option depending on design requirements. The lower convex mirror (148.10, 149.22, 150.15, 151.9) should always be clear of any concave mirrors (71.6, 72.3, 148.11) on its (148.10, 149.22, 150.15, 151.9) front, and hence on the driving path for the light rays, from said lower convex mirror (148.10, 149.22, 150.15, 151.9), hence allowing it (148.10, 149.22, 150.15, 151.9) to drive light rays through the light driving pipe (148.1, 151.10).

Said solar ray concentration system can be comprised in a solar ray concentration system in which said previously stated elements are made of a composite material, preferably carbon fibre reinforced plastics or glass fibre reinforced plastics, or a transparent material, preferably glass, transparent PVC or UPVC, or Plexiglas, or a plastic material, preferably UPVC, PVC, polyethylene or polypropylene, or a metallic material, preferably steel or an aluminium alloy, or cement, or concrete, or a ceramic material, or a combination of at least two of said materials, such that said solar ray concentration system is comprised in a solar ray concentration system, in which all of said systems and components of the above, are manufactured using extrusion and extrusion moulding processes, hot or cold die processing, forging, forging press processes, casting, plastic injection moulding processes, and machining processes such as milling, laser cutting or water jet cutting processes.

Said solar ray concentration system can be comprised such that said solar ray concentration system supplies power and/or supplies heat and/or supplies water and/or is comprised in mountainous areas, high altitude places, low altitude places, lake shores, sea shores, lakes, rivers, river sides, seas, canals, channels, canal shores, channel shores, ships, boats, submarines, trains, trucks, lorries, trailers, aircraft, air cushion ground effect vehicles, ground effect vehicles, maritime vehicles, naval vehicles, helicopters, airplanes, space planes, spacecraft, satellites, space stations, buildings, houses, factories, factory buildings, telecommunication towers, communication towers, airports, airport control towers, hospitals, tower blocks, towers, skyscrapers, quarries, mines, harbours, cranes, power stations, cooling towers, antennas, oceanographic vessels, icebreakers, offshore vessels, wind turbine offshore vessels, oil tankers, container vessels, solar thermal power generation offshore vessels. thermal power generation offshore vessels, offshore vessels, workboats. work vessels. tugs. marine vessels. oil rigs. oil rig towers. oil drilling towers. oil drilling vessels. industrial vessels. crane masts. cranes. wind turbines. wind turbine masts. signalling masts. signalling towers. railway signalling towers. railway signalling masts, traffic light masts, jack-up cranes, jack-up vessels, jack-up ships, jack-up rigs, rigs, barges, floating barges, sea barges, river barges, canal barges, railway catenary pillars, railway catenary masts, road traffic masts, road lighting masts, street lighting masts, pontoons, submersible pontoons, submersible barges, submersible vessels, submersible offshore vessels, bridges, bridge masts, dams, submersible wind turbine vessels, submersible solar thermal power generation vessels, desalination plants, offshore desalination plants, submersible desalination plants, semi-submersible desalination plants, semi-submersible barges, semi-submersible pontoons, semi-submersible vessels, semi-submersible offshore vessels, semi-submersible wind turbine vessels, semi-submersible solar thermal power generation vessels, icebreakers, shipyards, shipyard docks, dry docks, floating docks, semi-submersible docks, docks, harbours, ports, dockyards, airports, petrol stations, electric vehicle supply stations, space launching stations, spaceports and railway stations.

So, the present invention comprises a concentrated solar power (CSP) generation system comprising a set of flat collection mirrors or heliostats (1.1), each comprising at least a vertical element (1.12, 78.6a, 123.1) supporting at least a horizontal member (1.6, 66.15, 120.3) above the ground or floor surface (1.18, 105.9, 120.4), which supports said flat solar ray collection mirrors or heliostats (1.1, 105.2, 120.2), wherein each flat collection mirror or heliostat (1.1,150.2, 120.2) is sustained by a vertical member (1.11), and faces, preferably by means of an orientation or rotational pivot (1.19, 99.2), at least partly, preferably completely, to a Plano concave or concave mirror (1.2, 66.2, 121.2) facing at least towards a convex or Piano convex mirror (1.9, 66.5) in front and under said Plano concave or concave mirror, and wherein said convex or Plano convex mirror (1.9, 66.5) is placed closer to said concave or Piano concave mirror (1.2, 6.4, 66.2, 121.2) than the focal point of said concave or Plano concave mirror (1.2, 6.4, 66.2, 121.2), and ), and wherein light rays are driven by said Plano convex or convex mirror (1.9) towards a flat reflection mirror (1.13), said flat mirror (1.13) drives said light rays upwards to another flat reflection mirror (1.4), which drives said light rays towards the lowest part of the next Plano concave or concave mirror (1.2) comprised beside the next flat collection mirror or heliostat (1.1), said flat reflection mirrors (1.4,1.13) are comprised under and behind said next flat collection mirror or heliostat (1.1).

The preferred embodiments are the following.

A concentrated solar power (CSP) generation system according to the above, wherein 2 to 100, preferably 10 to 50, devices or units are placed in a linear pattern (1.6), angular (117.29) pattern, or linear-angular pattern (117.29), preferably wherein said units are placed in front of each other, thereby said convex or Piano convex mirrors (1.9, 66.5) drive said light rays into the same direction as that projected towards said concave or Plano concave mirror (1.2, 6.4, 66.2, 121.2) by said light collection mirror or heliostat (1.1, 150.2, 120.2), resulting in said light rays (1.14) gaining progressively in light intensity and density, such that the set of flat reflection mirrors (1.4, 1.13) moves the position of projection of said light rays (1.14) upwards in order to not encounter said next lower convex or Piano convex mirror (1.9) mirror in the path of said light rays (1.14).

A concentrated solar power (CSP) generation system according to the above, wherein said device or unit further comprises at least a second flat collection and reflection mirror or heliostat (105.3, 107.3, 120.1) positioned over the concave or Piano concave mirror (1.2, 6.4, 66.2, 121.2), facing said concave or Piano concave mirror (1.2, 6.4, 66.2, 121.2), preferably by means of a rotational or orientation pivot (11.7, 101.5), so that the light rays (122.1) collected by said upper flat mirror or heliostat (105.3, 107.3, 120.1), are directed towards said lower mirror or heliostat (1.1, 150.2, 120.2), preferably being supported over the ground or floor surface (81.5a, 81.5b) by means of two laterally arranged vertical members (81.4a, 81.7b), which simultaneously support said concave or Plano concave mirror (81.3a, 81.6b) and sustain a horizontal member (81.3b) on which the vertical member (81.2a) which supports said upper flat collection mirror or heliostat (105.3, 107.3, 120.1) is comprised.

A concentrated solar power (CSP) generation system according to the above, wherein the light rays (1.14) reflected by said convex or Plano convex mirrors (1.9, 66.5) are driven inside a, preferably closed, hollow elongated structure (67.12, 123.3, 151.10), preferably a tubular structure (67.12, 123.3, 151.10) of circular, oval or square cross-section (67.12, 123.3, 151.10), which houses for each system a Plano concave or concave mirror (66.9, 148.11) concentrating said light rays (1.14) progressively along said light driving pipe (67.12, 123.3) by means of units comprising a convex or Plano convex mirror (66.8, 69.8), wherein the upper surface (66.16, 117.9) of said tubular structure (67.12, 123.3) is flat and transparent to allow said light rays (100.13, 117.23) to be driven by said concave or Plano concave mirror (1.2, 69.1, 121.2) towards said tube (67.12, 123.3) embedded Plano convex or convex mirror (66.8, 69.8) through said flat transparent surface (66.16, 117.9), preferably said tubular structure (67.12, 123.3) comprising a cleaning wiper blade (100.11, 101.14, 113.5b) over said surface (66.16, 117.9), wherein said convex or Plano convex mirror (1.9, 66.5) has a smaller radius of curvature than said concave or Piano concave mirror (1.2, 6.4, 66.2, 121.2), wherein a plurality of said systems being comprised along a linear pattern (1.6), angular (117.29) pattern, or linear-angular pattern (117.29) over the ground floor surface (1.18), such that at least a set of two flat reflection mirrors (66.6, 66.7, 69.9, 69.12) moves the position of projection of said light rays (1.14, 66.10, 146.4) upwards in order to not encounter said next lower convex or Piano convex mirror (66.8, 67.5) mirror in the path of said light rays (1.14, 66.10, 146.4).

A concentrated solar power (CSP) generation system according to the above, in which said light rays are driven under the next flat collection mirror or heliostat (1.1, 101.1, 105.2, 120.2) after being concentrated by said concave or Plano concave mirror (1.2, 66.2, 117.7, 121.2), and then driven by said convex or Piano convex mirror (1.9, 66.5, 148.9), with said system also comprising a horizontal mirror system (1.3, 136.4) which projects downwards towards said convex or Plano convex mirror (1.9, 66.5, 148.9) in order to protect it (1.9, 66.5, 148.9) from rainwater and snow, as well as to protect the skyline from any accidental light ray emissions, with said system being controlled by a computerised system that controls the orientations of both solar ray collection mirrors or heliostats (1.1, 7.3, 11.1, 11.3, 13.2, 13.3, 14.1, 14.3, 15.1, 15.2, 16.1, 16.2, 101.1, 101.4, 121.1, 121.6) by actuating the rotational pivots (1.19, 7.7, 11.6, 11.7, 12.5, 12.6, 13.4, 13.5, 17.11a, 17.11b, 28.13, 28.14, 101.5, 135.7) which attach to said flat mirrors or heliostats (1.1, 7.3, 11.1, 11.3, 13.2, 13.3, 14.1, 14.3, 15.1, 15.2, 16.1, 16.2101.1, 101.4, 121.1, 121.6), preferably comprising said convex or Plano convex mirror (1.9, 66.5, 148.9) is sustained by a vertical member (1.10) to said horizontal members (1.6, 66.15, 120.3) and which comprises an electrically powered actuation system comprised on top of a vertical member (1.11, 24.3), onto the rotational and orientation pivots (1.19, 11.6, 11.7, 99.2, 101.5, 135.7) which orientate said flat light collection mirrors or heliostats (1.1, 11.1, 11.3, 99.1, 101.4, 120.1, 120.2), which is sustained to said horizontal members (1.6, 66.15, 120.3), and which actuates said flat solar ray collection mirrors or heliostats (1.1, 11.1, 11.3, 99.1, 101.4, 120.1, 120.2) in order to position these (1.1, 11.1, 11.3, 99.1, 101.4, 120.1, 120.2) in the required orientation according to the direction of projection of the solar rays comprised (1.5, 99.5, 105.1, 121.5, 122.1).

A concentrated solar power (CSP) generation system according to the above, which comprises a transparent clear glass or plastic structure (66.16, 117.9, 145.2) being comprised on the light driving pipe structure (67.12, 123.3), comprised in front of each concave or Plano concave mirror (21.1, 66.2, 121.2), which is supported by metallic frames or members (11.2, 66.15, 120.3), and preferably comprising an electrically actuated de-icing system (114.8, 115.7) around said glass structure (66.16, 117.9, 145.2) in order to protect said mirrors or heliostats (1.1, 11.1, 11.3, 99.1, 101.4, 120.1, 120.2) from frost, ice or snow during winter months, such that said system can comprise the flat reflection mirrors (66.6, 66.7, 67.1, 67.2, 131,2, 131.12) sustained inside said light driving pipe (67.12, 123.3) without being affected by any frost.

A concentrated solar power (CSP) generation system according to the above, in which said Plano concave or concave mirrors (1.2, 6.4, 66.2, 121.2) face upwards partly towards the skyline and partly towards the frontally positioned flat collection mirror or heliostat (1.1, 11.1, 11.3, 101.1, 101.4, 120.1, 120.2), hence comprising a concave (21.1, 66.2, 121.2,) or convex (21.4, 66.5, 148.9, 30.3), or Plano concave (1.2) or Plano convex (1.9, 28.1) mirror (1.2, 1.9, 28.1) being comprised upwards in front of and over said Plano concave or concave mirror (1.2, 6.4, 29.2, 31.1), such that said light rays (28.2) are then driven towards a set of flat reflection mirrors (1.4, 1.13, 3.1, 3.4, 28.4, 28.11, 30.1) which drive said light rays downwards in order for these to be reflected by flat reflection mirrors (28.11, 29.5, 31.4) such that said light rays are then concentrated by the next Plano concave or concave mirror (1.2, 6.4, 66.9, 68.5) towards the lower convex or Piano convex mirror (66.8, 68.7, 148.10) inside said light driving pipe structure (67.12, 123.3).

A concentrated solar power (CSP) generation system according to the above, which comprises both flat reflection mirrors (1.4, 1.13, 3.1, 3.4) always positioned at different heights over each other, and which also comprises said convex or Plano convex mirror (1.9, 66.5, 148.9) being positioned always in front of the lower part of said Plano concave or concave mirror (1.2, 6.4, 66.2, 121.2) which is the closest to the laterally comprised flat reflection mirror or heliostat (1.1, 101.1, 120.2), such that said concentrated high intensity light rays (100.13, 117.23) are concentrated towards said convex or Piano convex mirrors (1.9, 66.5, 148.9) to transfer said light ray (66.10) heat to a heat exchanger or steam generator (1.8, 66.13, 117.8, 120.5), such that said heat is simultaneously transferred to the primary circuit pipe (1.16, 84.16, 117.27) in order to convert said primary circuit (1.16, 84.16, 117.27) fluid into steam to drive a steam turbine (82.12, 123.14), in which said primary circuit fluid, preferably water, and to said energy storage fluid pipe (84.7, 117.28) which transfers heat to said tank (1.7, 84.6, 117.4).

A concentrated solar power (CSP) generation system according to the above, which comprises said mirrors (1.2, 1.9, 7.2, 66.2, 66.5, 121.2) at different railing (7.4, 68.3) heights along said CSP solar ray collection system, and which comprises for both rough (7.6, 8.4, 67.13, 68.8) and flat terrain, a flat solar ray collection mirror or heliostat (13.3, 105.3, 120.1, 122.2) comprised over the upper edge of the concave or Plano concave mirrors (1.2, 1.9, 7.2, 66.2, 121.2), hence driving said solar rays to said lower positioned flat mirrors or heliostats (7.3, 14.3, 105.2, 120.2, 121.1) if said solar rays project behind said lower flat mirrors or heliostats (7.3, 14.3, 105.2, 120.2, 121.1), with said lower flat mirrors or heliostats (7.3, 14.3, 105.2, 120.2, 121.1) driving the light rays (1.14, 66.10, 148.6, 148.8) to the concave or Plano concave mirrors (1.2, 66.2, 121.2) for light concentration, such that said system can comprise a set of two pairs of connected flat mirrors (17.1a, 17.2a, 17.9a, 17.10a, 17.1b, 17.4b, 17.8b, 17.9b) which are comprised over each other, such that the lower mirror which collects said light rays (17.9a) is comprised with the upper edge over the lateral adjacent mirror (17.10a) if the light rays are moved to a lower position of projection, or which comprises said lateral mirror (17.9b) with the upper edge over the light collection mirror (17.8b) if said light rays are moved to an upper position of projection.

A concentrated solar power (CSP) generation system according to the above, which comprises the sets of mirrors **(18.2, 18.3,** 18.4) at different positions to the sets of the railings (18.8) which sustain said mirrors (18.2, 18.3, 18.4), such that a set of two flat inclined mirrors (18.6, 18.11, 18.9, 18.12, 22.1, 22.2, 22.3, 22.5) are comprised at each separation point between the previous and next solar rays collection mirrors or heliostats (18.3), such that the light rays are always driven exactly towards the next concave (21.1, 24.2) or Plano concave (1.2, 15.4) light concentration mirror, such that said system can also comprise convex mirrors (21.4, 24.5), such that the light rays (19.16) projected by a plurality of solar ray collecting systems (19.2, 19.7, 19.13, 19.15) onto a plurality of directions, are all simultaneously driven to a heat exchanger or steam generator (19.12) by the means of a plurality of flat reflection mirrors (19.4, 19.14) or system orientations, such that if said mirrors are concave (21.1, 24.2) and convex (21.4, 24.5), said light rays are driven onto a concentrated light ray beam (23.4) which can be driven towards said heat exchanger or steam generator (23.6) by small flat reflection mirrors (23.3, 23.5).

A concentrated solar power (CSP) generation system according to the above, where said light collection systems (118.1, 118.16, 119.2, 119.3, 119.7, 119.11, 119.13) are driven around, over or towards buildings (118.2, 119.1) to supply light ray heat to the energy storage applications (119.4, 119.5, 119.8, 119.12, 119.10) or to save volume around said building, with said light rays collection systems also being comprised over the roofs of car parks (123.9), bus stations (124.9) and train stations (125.14), hence meaning that the light rays can supply simultaneously heat to a steam turbine (125.18) and the energy storage fluid tank (125.20), in which an upper flat light collection mirror or heliostat (11.1, 105.3, 120.1) is sustained to a rotational pivot (11.7, 101.5) to orientate said flat mirror or heliostat (11.1, 105.3, 120.1), and sustained by an upward projecting vertical member (101.6) which lies over said concave or Plano concave mirrors (1.2, 66.2, 121.2).

A concentrated solar power (CSP) generation system according to the above, where the light driving pipe (128.3) drives light rays through a plurality of light concentration systems (128.6), each comprising a concave or Plano concave mirror (128.7, 128.9) which concentrates the light rays of both said light driving pipe (128.3) and other laterally comprised light collection and concentration systems (128.4), towards a convex or Plano convex mirror (128.11, 128.14), such that the concentrated light rays can be driven to the next light concentration system, which comprises, as on the previously mentioned system, pipes (128.5) which supply the light rays towards said concave or Plano concave mirror (128.9), with said light collection and concentration system also being comprised on floating vessels (127.11) that can reduce the space used on the ground floor, with said light driving pipes (130.1) comprising sets of three mirrors (131.2, 131.12, 131.9) to drive the light rays upwards or downwards.

A concentrated solar power (CSP) generation system according to the above, where the light driving pipes (140.1, 140.12) can simultaneously supply light ray heat to the applications (140.16) of a building (140.10) such as boilers, radiators, cookers or electricity generating equipment, and at the same time, drive the light rays upwards on the roof (140.9) of said building (140.10), hence maximising the light rays that can be collected by the system, and minimising the space usage required by said system, with said system also comprising a concave or Plano concave mirror (140.2) in front of a sideways comprised convex or Plano convex mirror (140.14) comprised inside said light driving pipe (140.4, 141.4) which drives the light rays upwards, hence maximising system design efficiency, with said system comprising sets of three mirrors (142.3, 142.6, 142.5) being comprised inside the light driving pipe (73.2, 112.15, 148.1, 149.24) in order to drove the light rays with the minimal number of mirrors (142.3, 142.6, 142.5) required, with said light driving pipes (148.1, 149.24) comprising lateral flat reflection mirrors (146.2, 149.9) to reflect the light rays driven by light driving pipes (148.2, 149.10) in order for said light rays to be concentrated by said concave mirror (148.11) towards said lower convex mirrored (148.10) inside said light driving pipe (148.1, 149.24) in order to free cross-sectional space inside the pipe (148.1, 149.24) for the next light collection system.

A concentrated solar power (CSP) generation system according to the above, which comprises a tubular structure (66.4, 67.11, 68.9) which is sustained to the rigid sustaining structure (66.15, 68.3) by vertical sustaining members (66.1, 68.1) which sustain said tubular structure (66.4, 67.11, 68.9) over the ground floor surface (67.12, 68.8), such that said solar light rays are driven by the concave mirrors (66.2, 68.2) to the convex mirrors (66.5, 68.6) that are comprised inside said tubular structure (66.4, 67.11, 68.9) through a transparent shield (66.16, 67.11, 69.17), such that the light rays are driven into the required projection heights by flat reflection mirrors (66.6, 66.7, 66.11, 67.1, 67.2, 67.3, 67.4, 67.6, 67.7, 68.10, 68.11, 68.12, 68.13, 68.14) after being concentrated by Plano concave (66.9) or concave (67.9, 68.5) mirrors towards Plano convex (66.8) or convex (67.5, 68.7) mirrors, with said light driving convex mirrors (66.5, 68.6) comprised under each transparent shield (66.16, 67.11, 69.17) and inside said tubular structure (66.4, 67.11, 68.9), such that said tubular structure (66.4, 67.11, 68.9) drives the light rays over any ground floor (67.12, 68.8) irregular geometry with said flat reflection mirrors (66.6, 66.7, 66.11, 67.1, 67.2, 67.3, 67.4, 67.6, 67.7, 68.10, 68.11, 68.12, 68.13, 68.14), such that said system can drive the light rays towards Plano concave mirrors (88.17, 88.8, 89.11, 89.12, 89.17, 90.3, 90.4, 90.8, 94.7, 94.10, 95.16, 95.11, 96.7, 96.13) for light pre concentration, or direct light ray concentration to the fluid driving pipes (88.3, 90.17, 94.9, 95.8, 96.20) for heat transfer, such that said system can be comprised on building roofs (108.1, 109.1, 110.18) and can comprise wiper blades (100.11, 101.14, 102.11, 103.7, 104.15) over the transparent glass shields (100.10, 101.13, 102.1, 103.10) to guarantee constant maximum transparency.

A concentrated solar power (CSP) generation system according to the above, in which said solar ray concentration system is comprised in a solar ray concentration system in which said previously stated elements are made of a composite material, preferably carbon fibre reinforced plastics or glass fibre reinforced plastics, or a transparent material, preferably glass, transparent PVC or UPVC, or Plexiglas, or a plastic material, preferably UPVC, PVC, polyethylene or polypropylene, or a metallic material, preferably steel or an aluminium alloy, or cement, or concrete, or a ceramic material, or a combination of at least two of said materials, such that said solar ray concentration system is comprised in a solar ray concentration system, in which all of said systems and components of the above, are manufactured using extrusion and extrusion moulding processes, hot or cold die processing, forging, forging press processes, casting, plastic injection moulding processes, and machining processes such as milling, laser cutting or water jet cutting processes, preferably comprised in said solar ray concentration system supplying power and/or supplying heat and/or supplying water and/or is comprised in mountainous areas, high altitude places, low altitude places, lake shores, sea shores, lakes, rivers, river sides, seas, canals, channels, canal shores, channel shores, ships, boats, submarines, trains, trucks, lorries, trailers, aircraft, air cushion ground effect vehicles, ground effect vehicles, maritime vehicles, naval vehicles, helicopters, airplanes, space planes, spacecraft, satellites, space stations, buildings, houses, factories, factory buildings, telecommunication towers, communication towers, airports, airport control towers, hospitals, tower blocks, towers, skyscrapers, quarries, mines, harbours, cranes, power stations, cooling towers, antennas, oceanographic vessels, icebreakers, offshore vessels, wind turbine offshore vessels, oil tankers, container vessels, solar thermal power generation offshore vessels, thermal power generation offshore vessels, offshore vessels, workboats, work vessels, tugs, marine vessels, oil rigs, oil rig towers, oil drilling towers, oil drilling vessels, industrial vessels, crane masts, cranes, wind turbines, wind turbine masts, signalling masts, signalling towers, railway signalling towers, railway signalling masts, traffic light masts, jack-up cranes, jack-up vessels, jack-up ships, jack-up rigs, rigs, barges, floating barges, sea barges, river barges, canal barges, railway catenary pillars, railway catenary masts, road traffic masts, road lighting masts, street lighting masts, pontoons, submersible pontoons, submersible barges, submersible vessels, submersible offshore vessels, bridges, bridge masts, dams, submersible wind turbine vessels, submersible solar thermal power generation vessels, desalination plants, offshore desalination plants, submersible desalination plants, semi-submersible desalination plants, semi-submersible barges, semi-submersible pontoons, semi-submersible vessels, semi-submersible offshore vessels, semi-submersible wind turbine vessels, semi-submersible solar thermal power generation vessels, icebreakers, shipyards, shipyard docks, dry docks, floating docks, semi-submersible docks, docks, harbours, ports, dockyards, airports, petrol stations, electric vehicle supply stations, space launching stations, spaceports, railway stations and bus stations.

## Claims

1. A concentrated solar power (CSP) generation system comprising at least a device or unit comprising a set of flat collection mirrors or heliostats (1.1), each comprising at least a vertical element (1.12, 78.6a, 123.1) supporting at least a horizontal member (1.6, 66.15, 120.3) above the ground or floor surface (1.18, 105.9, 120.4), which supports at least a said flat solar ray collection mirrors or heliostats (1.1, 105.2, 120.2), wherein each flat collection mirror or heliostat (1.1, 150.2, 120.2) is sustained by a vertical member (1.11), and faces, preferably by means of an orientation or rotational pivot (1.19, 99.2), at least partly, preferably completely, to a Plano concave or concave mirror (1.2, 66.2, 121.2) facing at least towards a convex or Plano convex mirror (1.9, 66.5) in front and under said Plano concave or concave mirror, and-wherein said convex or Plano convex mirror is placed closer to said concave or Plano concave mirror (1.2, 6.4, 66.2,121.2) than the focal point of said concave or Piano concave mirror (1.2, 6.4, 66.2, 121.2), and wherein light rays are driven by said Plano convex or convex mirror (1.9) towards a flat reflection mirror (1.13), said flat mirror (1.13) drives said light rays upwards to another flat reflection mirror (1.4), which drives said light rays towards the lowest part of the next Plano concave or concave mirror (1.2) comprised beside the next flat collection mirror or heliostat (1.1), said flat reflection mirrors (1.4,1.13) are comprised under and behind said next flat collection mirror or heliostat (1.1).

2. A concentrated solar power (CSP) generation system according to Claim 1, wherein more than one, preferably 2 to 100, and more preferably 10 to 50, devices or units are placed in a linear pattern (1.6), angular (117.29) pattern, or linear-angular pattern (117.29), preferably wherein said units are placed in front of each other, thereby said convex or Plano convex mirrors (1.9, 66.5) drive said light rays into the same direction as that projected towards said concave or Piano concave mirror (1.2, 6.4,66.2, 121.2) by said light collection mirror or heliostat (1.1, 150.2, 120.2), resulting in said light rays (1.14) gaining progressively in light intensity and density, such that the set of flat reflection mirrors (1.4, 1.13) moves the position of projection of said light rays (1.14) upwards in order to not encounter said next lower convex or Plano convex mirror (1.9) mirror in the path of said light rays (1.14).

3. A concentrated solar power (CSP) generation system according to Claims 1 or 2, wherein said device or unit further comprises at least a second flat collection and reflection mirror or heliostat (105.3, 107.3, 120.1) positioned over the concave or Plano concave mirror (1.2, 6.4, 66.2, 121.2), facing said concave or Plano concave mirror (1.2, 6.4, 66.2, 121.2), preferably by means of a rotational or orientation pivot (11.7, 101.5), so that the light rays (122.1) collected by said upper flat mirror or heliostat (105.3, 107.3, 120.1), are directed towards said lower mirror or heliostat (1.1, 150.2, 120.2), preferably being supported over the ground or floor surface (81.5a, 81.5b) by means of two laterally arranged vertical members (81.4a, 81.7b), which simultaneously support said concave or Plano concave mirror (81.3a, 81.6b) and sustain a horizontal member (81.3b) on which the vertical member (81.2a) which supports said upper flat collection mirror or heliostat (105.3, 107.3, 120.1) is comprised.

4. A concentrated solar power (CSP) generation system according to Claims 1 to 3, wherein the light rays (1.14) reflected by said convex or Plano convex mirrors (1.9, 66.5) are driven inside a, preferably closed, hollow elongated structure (67.12, 123.3, 151.10), preferably a tubular structure (67.12, 123.3, 151.10) of circular, oval or square cross-section (67.12, 123.3, 151.10), which houses for each system a Plano concave or concave mirror (66.9, 148.11) concentrating said light rays (1.14) progressively along said light driving pipe (67.12, 123.3) by means of units comprising a convex or Plano convex mirror (66.8, 69.8), wherein the upper surface (66.16, 117.9) of said tubular structure (67.12, 123.3) is flat and transparent to allow said light rays (100.13, 117.23) to be driven by said concave or Plano concave mirror (1.2, 69.1, 121.2) towards said tube (67.12, 123.3) embedded Plano convex or convex mirror (66.8, 69.8) through said flat transparent surface (66.16, 117.9), preferably said tubular structure (67.12, 123.3) comprising a cleaning wiper blade (100.11, 101.14, 1 13.5b) over said surface (66.16, 117.9), wherein said convex or Plano convex mirror (1.9, 66.5) has a smaller radius of curvature than said concave or Plano concave mirror (1.2, 6.4, 66.2, 121.2), wherein a plurality of said systems being comprised along a linear pattern (1.6), angular (117.29) pattern, or linear-angular pattern (117.29) over the ground floor surface (1.18), such that at least a set of two flat reflection mirrors (66.6, 66.7, 69.9, 69.12) moves the position of projection of said light rays (1.14, 66.10, 146.4) upwards in order to not encounter said next lower convex or Plano convex mirror (66.8, 67.5) mirror in the path of said light rays (1.14, 66.10, 146.4).

5. A concentrated solar power (CSP) generation system according to Claims 1 to 4, in which said light rays are driven under the next flat collection mirror or heliostat (1.1, 101.1, 105.2, 120.2) after being concentrated by said concave or Plano concave mirror (1.2, 66.2, 117.7, 121.2), and then driven by said convex or Plano convex mirror (1.9, 66.5, 148.9), with said system also comprising a horizontal mirror system (1.3, 136.4) which projects downwards towards said convex or Plano convex mirror (1.9, 66.5, 148.9) in order to protect it (1.9, 66.5, 148.9) from rainwater and snow, as well as to protect the skyline from any accidental light ray emissions, with said system being controlled by a computerised system that controls the orientations of both solar ray collection mirrors or heliostats (1.1, 7.3, 11.1, 11.3, 13.2, 13.3, 14.1, 14.3, 15.1, 15.2, 16.1, 16.2, 101.1, 101.4, 121.1, 121.6) by actuating the rotational pivots (1.19, 7.7, 11.6, 11.7, 12.5, 12.6, 13.4, 13.5, 17.11a, 17.11b, 28.13, 28.14, 101.5, 135.7) which attach to said flat mirrors or heliostats (1.1, 7.3, 11.1, 11.3, 13.2, 13.3, 14.1, 14.3, 15.1, 15.2, 16.1, 16.2101.1, 101.4, 121.1, 121.6), preferably comprising said convex or Plano convex mirror (1.9, 66.5, 148.9) is sustained by a vertical member (1.10) to said horizontal members (1.6, 66.15, 120.3) and which comprises an electrically powered actuation system comprised on top of a vertical member (1.11, 24.3), onto the rotational and orientation pivots (1.19, 11.6, 11.7,99.2, 101.5, 135.7) which orientate said flat light collection mirrors or heliostats (1.1, 11.1, 11.3, 99.1, 101.4, 120.1, 120.2), which is sustained to said horizontal members (1.6, 66.15, 120.3), and which actuates said flat solar ray collection mirrors or heliostats (1.1, 11.1, 11.3, 99.1, 101.4, 120.1, 120.2) in order to position these (1.1, 11.1, 11.3, 99.1, 101.4, 120.1, 120.2) in the required orientation according to the direction of projection of the solar rays comprised (1.5, 99.5, 105.1, 121.5, 122.1).

6. A concentrated solar power (CSP) generation system according to Claims 1 to 5, which comprises a transparent clear glass or plastic structure (66.16, 117.9, 145.2) being comprised on the light driving pipe structure (67.12, 123.3), comprised in front of each concave or Plano concave mirror (21.1, 66.2, 121.2), which is supported by metallic frames or members (11.2, 66.15, 120.3), and preferably comprising an electrically actuated de-icing system (114.8, 115.7) around said glass structure (66.16, 117.9, 145.2) in order to protect said mirrors or heliostats (1.1, 11.1, 11.3, 99.1, 101.4, 120.1, 120.2) from frost, ice or snow during winter months, such that said system can comprise the flat reflection mirrors (66.6, 66.7, 67.1, 67.2, 131,2, 131.12) sustained inside said light driving pipe (67.12, 123.3) without being affected by any frost.

7. A concentrated solar power (CSP) generation system according to Claims 1 to 6, in which said Piano concave or concave mirrors (1.2, 6.4, 66.2, 121.2) face upwards partly towards the skyline and partly towards the frontally positioned flat collection mirror or heliostat (1.1, 11.1, 11.3, 101.1, 101.4, 120.1, 120.2), hence comprising a concave (21.1, 66.2, 121.2, ) or convex (21.4, 66.5, 148.9, 30.3), or Plano concave (1.2) or Piano convex (1.9, 28.1) mirror (1.2, 1.9, 28.1) being comprised upwards in front of and over said Piano concave or concave mirror (1.2, 6.4, 29.2, 31.1), such that said light rays (28.2) are then driven towards a set of flat reflection mirrors (1.4, 1.13, 3.1, 3.4, 28.4, 28.11, 30.1) which drive said light rays downwards in order for these to be reflected by flat reflection mirrors (28.11, 29.5, 31.4) such that said light rays are then concentrated by the next Plano concave or concave mirror (1.2, 6.4, 66.9, 68.5) towards the lower convex or Plano convex mirror (66.8, 68.7, 148.10) inside said light driving pipe structure (67.12, 123.3).

8. A concentrated solar power (CSP) generation system according to Claims I to 7, which comprises both flat reflection mirrors (1.4, 1.13, 3.1, 3.4) always positioned at different heights over each other, and which also comprises said convex or Plano convex mirror (1.9, 66.5, 148.9) being positioned always in front of the lower part of said Plano concave or concave mirror (1.2, 6.4, 66.2, 121.2) which is the closest to the laterally comprised flat reflection mirror or heliostat (1.1, 101.1, 120.2), such that said concentrated high intensity light rays (100.13, 117.23) are concentrated towards said convex or Plano convex mirrors (1.9, 66.5, 148.9) to transfer said light ray (66.10) heat to a heat exchanger or steam generator (1.8, 66.13, 117.8, 120.5), such that said heat is simultaneously transferred to the primary circuit pipe (1.16, 84.16, 117.27) in order to convert said primary circuit (1.16, 84.16, 117.27) fluid into steam to drive a steam turbine (82.12, 123.14), in which said primary circuit fluid, preferably water, and to said energy storage fluid pipe (84.7, 117.28) which transfers heat to said tank (1.7, 84.6, 117.4).

9. A concentrated solar power (CSP) generation system according to claims 1 to 8, which comprises said mirrors (1.2, 1.9, 7.2, 66.2, 66.5, 121.2) at different railing (7.4, 68.3) heights along said CSP solar ray collection system, and which comprises for both rough (7.6, 8.4, 67.13, 68.8) and flat terrain, a flat solar ray collection mirror or heliostat (13.3, 105.3, 120.1, 122.2) comprised over the upper edge of the concave or Plano concave mirrors (1.2, 1.9, 7.2, 66.2, 121.2), hence driving said solar rays to said lower positioned flat mirrors or heliostats (7.3, 14.3, 105.2, 120.2, 121.1) if said solar rays project behind said lower flat mirrors or heliostats (7.3, 14.3, 105.2, 120.2, 121.1), with said lower flat mirrors or heliostats (7.3, 14.3, 105.2, 120.2, 121.1) driving the light rays (1.14, 66.10, 148.6, 148.8) to the concave or Plano concave mirrors (1.2, 66.2, 121.2) for light concentration, such that said system can comprise a set of two pairs of connected flat mirrors (17.1a, 17.2a, 17.9a, 17.10a, 17.1b, 17.4b, 17.8b, 17.9b) which are comprised over each other, such that the lower mirror which collects said light rays (17.9a) is comprised with the upper edge over the lateral adjacent mirror (17.10a) if the light rays are moved to a lower position of projection, or which comprises said lateral mirror (17.9b) with the upper edge over the light collection mirror (17.8b) if said light rays are moved to an upper position of projection.

10. A concentrated solar power (CSP) generation system according to claims 1 to 9, which comprises the sets of mirrors (18.2, 18.3, 18.4) at different positions to the sets of the railings (18.8) which sustain said mirrors (18.2, 18.3, 18.4), such that a set of two flat inclined mirrors (18.6, 18.11, 18.9, 18.12, 22.1, 22.2, 22.3, 22.5) are comprised at each separation point between the previous and next solar rays collection mirrors or heliostats (18.3), such that the light rays are always driven exactly towards the next concave (21.1, 24.2) or Plano concave (1.2, 15.4) light concentration mirror, such that said system can also comprise convex mirrors (21.4, 24.5), such that the light rays (19.16) projected by a plurality of solar ray collecting systems (19.2, 19.7, 19.13, 19.15) onto a plurality of directions, are all simultaneously driven to a heat exchanger or steam generator (19.12) by the means of a plurality of flat reflection mirrors (19.4, 19.14) or system orientations, such that if said mirrors are concave (21.1, 24.2) and convex (21.4, 24.5), said light rays are driven onto a concentrated light ray beam (23.4) which can be driven towards said heat exchanger or steam generator (23.6) by small flat reflection mirrors (23.3, 23.5).

11. A concentrated solar power (CSP) generation system according to Claims 1 to 10, where said light collection systems (118.1, 118.16, 119.2, 119.3, 119.7, 119.11, 119.13) are driven around, over or towards buildings (118.2, 119.1) to supply light ray heat to the energy storage applications (119.4, 119.5, 119.8, 119.12, 119.10) or to save volume around said building, with said light rays collection systems also being comprised over the roofs of car parks (123.9), bus stations (124.9) and train stations (125.14), hence meaning that the light rays can supply simultaneously heat to a steam turbine (125.18) and the energy storage fluid tank (125.20), in which an upper flat light collection mirror or heliostat (11.1, 105.3, 120.1) is sustained to a rotational pivot (11.7, 101.5) to orientate said flat mirror or heliostat (11.1, 105.3, 120.1), and sustained by an upward projecting vertical member (101.6) which lies over said concave or Plano concave mirrors (1.2, 66.2, 121.2).

12. A concentrated solar power (CSP) generation system according to Claims 1 to 11, where the light driving pipe (128.3) drives light rays through a plurality of light concentration systems (128.6), each comprising a concave or Plano concave mirror (128.7, 128.9) which concentrates the light rays of both said light driving pipe (128.3) and other laterally comprised light collection and concentration systems (128.4), towards a convex or Plano convex mirror (128.11, 128.14), such that the concentrated light rays can be driven to the next light concentration system, which comprises, as on the previously mentioned system, pipes (128.5) which supply the light rays towards said concave or Piano concave mirror (128.9), with said light collection and concentration system also being comprised on floating vessels (127. 11) that can reduce the space used on the ground floor, with said light driving pipes (130.1) comprising sets of three mirrors (131.2, 131.12, 131.9) to drive the light rays upwards or downwards.

13. A concentrated solar power (CSP) generation system according to Claims 1 to 12, where the light driving pipes (140.1, 140.12) can simultaneously supply light ray heat to the applications (140.16) of a building (140.10) such as boilers, radiators, cookers or electricity generating equipment, and at the same time, drive the light rays upwards on the roof (140.9) of said building (140.10), hence maximising the light rays that can be collected by the system, and minimising the space usage required by said system, with said system also comprising a concave or Piano concave mirror (140.2) in front of a sideways comprised convex or Plano convex mirror (140.14) comprised inside said light driving pipe (140.4, 141.4) which drives the light rays upwards, hence maximising system design efficiency, with said system comprising sets of three mirrors (142.3, 142.6, 142.5) being comprised inside the light driving pipe (73.2, 112.15, 148.1, 149.24) in order to drove the light rays with the minimal number of mirrors (142.3, 142.6, 142.5) required, with said light driving pipes (148.1, 149.24) comprising lateral flat reflection mirrors (146.2, 149.9) to reflect the light rays driven by light driving pipes (148.2, 149.10) in order for said light rays to be concentrated by said concave mirror (148.11) towards said lower convex mirrored (148.10) inside said light driving pipe (148.1, 149.24) in order to free cross-sectional space inside the pipe (148.1, 149.24) for the next light collection system.

14. A concentrated solar power (CSP) generation system according to Claims 4 to 13, which comprises a tubular structure (66.4, 67.11, 68.9) which is sustained to the rigid sustaining structure (66.15, 68.3) by vertical sustaining members (66.1, 68.1) which sustain said tubular structure (66.4, 67.11, 68.9) over the ground floor surface (67.12, 68.8), such that said solar light rays are driven by the concave mirrors (66.2, 68.2) to the convex mirrors (66.5, 68.6) that are comprised inside said tubular structure (66.4, 67.11, 68.9) through a transparent shield (66.16, 67.11, 69.17), such that the light rays are driven into the required projection heights by flat reflection mirrors (66.6, 66.7, 66.11, 67.1, 67.2, 67.3, 67.4, 67.6, 67.7, 68.10, 68.11, 68.12, 68.13, 68.14) after being concentrated by Plano concave (66.9) or concave (67.9, 68.5) mirrors towards Plano convex (66.8) or convex (67.5, 68.7) mirrors, with said light driving convex mirrors (66.5, 68.6) comprised under each transparent shield (66.16, 67.11, 69.17) and inside said tubular structure (66.4, 67.11, 68.9), such that said tubular structure (66.4, 67.11, 68.9) drives the light rays over any ground floor (67.12, 68.8) irregular geometry with said flat reflection mirrors (66.6, 66.7, 66.11, 67.1, 67.2, 67.3, 67.4, 67.6, 67.7, 68.10, 68.11, 68.12, 68.13, 68.14), such that said system can drive the light rays towards Plano concave mirrors (88.17, 88.8, 89.11, 89.12, 89.17, 90.3, 90.4, 90.8, 94.7, 94.10, 95.16, 95.11, 96.7, 96.13) for light pre concentration, or direct light ray concentration to the fluid driving pipes (88.3, 90.17, 94.9, 95.8, 96.20) for heat transfer, such that said system can be comprised on building roofs (108.1, 109.1, 110.18) and can comprise wiper blades (100.11, 101.14, 102.11, 103.7, 104.15) over the transparent glass shields (100.10, 101.13, 102.1, 103.10) to guarantee constant maximum transparency.

15. A concentrated solar power (CSP) generation system according to Claims 1 to 14, in which said solar ray concentration system is comprised in a solar ray concentration system in which said previously stated elements are made of a composite material, preferably carbon fibre reinforced plastics or glass fibre reinforced plastics, or a transparent material, preferably glass, transparent PVC or UPVC, or Plexiglas, or a plastic material, preferably UPVC, PVC, polyethylene or polypropylene, or a metallic material, preferably steel or an aluminium alloy, or cement, or concrete, or a ceramic material, or a combination of at least two of said materials, such that said solar ray concentration system is comprised in a solar ray concentration system, in which all of said systems and components of the above, are manufactured using extrusion and extrusion moulding processes, hot or cold die processing, forging, forging press processes, casting, plastic injection moulding processes, and machining processes such as milling, laser cutting or water jet cutting processes, preferably comprised in said solar ray concentration system supplying power and/or supplying heat and/or supplying water and/or is comprised in mountainous areas, high altitude places, low altitude places, lake shores, sea shores, lakes, rivers, river sides, seas, canals, channels, canal shores, channel shores, ships, boats, submarines, trains, trucks, lorries, trailers, aircraft, air cushion ground effect vehicles, ground effect vehicles, maritime vehicles, naval vehicles, helicopters, airplanes, space planes, spacecraft, satellites, space stations, buildings, houses, factories, factory buildings, telecommunication towers, communication towers, airports, airport control towers, hospitals, tower blocks, towers, skyscrapers, quarries, mines, harbours, cranes, power stations, cooling towers, antennas, oceanographic vessels, icebreakers, offshore vessels, wind turbine offshore vessels, oil tankers, container vessels, solar thermal power generation offshore vessels, thermal power generation offshore vessels, offshore vessels, workboats, work vessels, tugs, marine vessels, oil rigs, oil rig towers, oil drilling towers, oil drilling vessels, industrial vessels, crane masts, cranes, wind turbines, wind turbine masts, signalling masts, signalling towers, railway signalling towers, railway signalling masts, traffic light masts, jack-up cranes, jack-up vessels, jack-up ships, jack-up rigs, rigs, barges, floating barges, sea barges, river barges, canal barges, railway catenary pillars, railway catenary masts, road traffic masts, road lighting masts, street lighting masts, pontoons, submersible pontoons, submersible barges, submersible vessels, submersible offshore vessels, bridges, bridge masts, dams, submersible wind turbine vessels, submersible solar thermal power generation vessels, desalination plants, offshore desalination plants, submersible desalination plants, semi-submersible desalination plants, semi-submersible barges, semi-submersible pontoons, semi-submersible vessels, semi-submersible offshore vessels, semi-submersible wind turbine vessels, semi-submersible solar thermal power generation vessels, icebreakers, shipyards, shipyard docks, dry docks, floating docks, semi-submersible docks, docks, harbours, ports, dockyards, airports, petrol stations, electric vehicle supply stations, space launching stations, spaceports, railway stations and bus stations.

## Patentansprüche

1. Ein System zur Erzeugung konzentrierter Solarenergie (CSP), umfassend mindestens eine Vorrichtung oder Einheit mit einem Satz flacher Sammelspiegel oder Heliostaten (1.1), die jeweils mindestens ein vertikales Element (1.12, 78.6a, 123.1) umfassen, das mindestens ein horizontales Element (1.6, 66.15, 120.3) über dem Boden oder der Bodenoberfläche (1.18, 105.9, 120.4) trägt, welches wiederum mindestens einen der flachen Sammelspiegel oder Heliostaten (1.1, 105.2, 120.2) trägt, wobei jeder flache Sammelspiegel oder Heliostat (1.1, 150.2, 120.2) von einem vertikalen Element (1.11) getragen wird und ist vorzugsweise mittels eines Ausrichtungs- oder Drehgelenks (1.19, 99.2) zumindest teilweise, vorzugsweise vollständig, auf einen Plankonkav- oder Konkavspiegel (1.2) ausgerichtet (66.2, 121.2) gerichtet, wobei der konvexe oder plankonvexe Spiegel (1.9, 66.5) vor und unterhalb des plankonkaven oder konkaven Spiegels angeordnet ist und näher am konkaven oder plankonkaven Spiegel (1.2, 6.4, 66.2, 121.2) liegt als dessen Brennpunkt, wobei Lichtstrahlen werden vom plankonvexen oder konvexen Spiegel (1.9) auf einen flachen Reflexionsspiegel (1.13) gelenkt, der sie nach oben zu einem weiteren ebenen Reflexionsspiegel (1.4) lenkt, dieser wiederum lenkt die Lichtstrahlen zum unteren Rand des nächsten plankonkaven oder konkaven Spiegels (1.2), der sich neben dem nächsten ebenen Sammelspiegel bzw. Heliostaten befindet (1.1), die genannten ebenen Reflexionsspiegel (1.4, 1.13) befinden sich unterhalb und hinter dem nächsten flachen Sammelspiegel bzw. Heliostaten (1.1).

2. Ein System zur Erzeugung konzentrierter Solarenergie (CSP) nach Anspruch 1, bei dem mehrere, vorzugsweise 2 bis 100 und besonders bevorzugt 10 bis 50, Vorrichtungen oder Einheiten in einer linearen Anordnung (1.6), einer Winkelanordnung (117.29) oder einer linear-winkeligen Anordnung (117.29) angeordnet sind, wobei die Einheiten vorzugsweise einander gegenüberliegen, dadurch lenken die konvexen oder plankonvexen Spiegel (1.9, 66.5) die Lichtstrahlen in dieselbe Richtung, in die sie vom Lichtsammelspiegel oder Heliostaten (1.1, 150.2, 120.2) auf den konkaven oder plankonkaven Spiegel (1.2, 6.4, 66.2, 121.2) projiziert werden, dies führt dazu, dass die Lichtstrahlen (1.14) zunehmend an Intensität und Dichte gewinnen, sodass die planreflektierenden Spiegel (1.4, 1.13) die Projektionsposition der Lichtstrahlen verändern. (1.14) nach oben, um nicht auf den nächstniedrigeren konvexen oder plankonvexen Spiegel (1.9) im Strahlengang der Lichtstrahlen (1.14) zu treffen.

3. Ein System zur Erzeugung konzentrierter Solarenergie (CSP) nach Anspruch 1 oder 2, wobei die Vorrichtung oder Einheit ferner mindestens einen zweiten flachen Sammel- und Reflexionsspiegel oder Heliostaten (105.3, 107.3, 120.1) umfasst, der über dem konkaven oder plankonkaven Spiegel (1.2, 6.4, 66.2, 121.2) angeordnet ist und diesem zugewandt ist, vorzugsweise mittels eines Dreh- oder Ausrichtungsgelenks (11.7, 101.5), sodass die vom oberen flachen Spiegel oder Heliostaten (105.3, 107.3, 120.1) gesammelten Lichtstrahlen (122.1) auf den unteren Spiegel oder Heliostaten (1.1, 150.2, 120.2) gerichtet sind, der vorzugsweise auf dem Boden oder einer Bodenfläche (81.5a, 107.3, 120.1) gelagert ist. 81.5b) mittels zweier seitlich angeordneter vertikaler Elemente (81.4a, 81.7b), die gleichzeitig den Konkavspiegel oder Plankonkavspiegel (81.3a, 81.6b) tragen und ein horizontales Element (81.3b) stützen, auf dem das vertikale Element (81.2a) besteht, welches den oberen flachen Sammelspiegel oder Heliostaten (105.3, 107.3, 120.1) trägt.

4. Ein System zur Erzeugung konzentrierter Solarenergie (CSP) nach den Ansprüchen 1 bis 3, bei dem die von den konvexen oder plankonvexen Spiegeln (1.9, 66.5) reflektierten Lichtstrahlen (1.14) in eine vorzugsweise geschlossene, hohle, längliche Struktur (67.12, 123.3, 151.10), vorzugsweise eine rohrförmige Struktur (67.12, 123.3, 151.10) mit kreisförmigem, ovalem oder quadratischem Querschnitt (67.12, 123.3, 151.10), geleitet werden, die für jedes System einen plankonkaven oder konkaven Spiegel (66.9, 148.11) enthält, der die Lichtstrahlen (1.14) mittels Einheiten, die einen konvexen oder plankonvexen Spiegel (66.8, 69.8) umfassen, schrittweise entlang des Lichtleitrohrs (67.12, 123.3) konzentriert, wobei die Fläche der Oberseite (66.16, 117.9) der genannten rohrförmigen Struktur (67.12, 123.3) ist flach und transparent, sodass die Lichtstrahlen (100.13, 117.23) durch den konkaven oder plankonkaven Spiegel (1.2, 69.1, 121.2) auf den in das Rohr (67.12, 123.3) eingebetteten plankonvexen oder konvexen Spiegel (66.8, 69.8) durch die flache, transparente Fläche (66.16, 117.9) gelenkt werden können, vorzugsweise weist die rohrförmige Struktur (67.12, 123.3) einen Reinigungswischer (100.11, 101.14, 113.5b) auf, der über die Fläche (66.16, 117.9) geführt wird, der konvexe oder plankonvexe Spiegel (1.9, 66.5) besitzt einen kleineren Radius; die Krümmung des konkaven oder plankonkaven Spiegels (1.2, 6.4, 66.2, 121.2) ist größer als die des konkaven oder plankonvexen Spiegels, wobei mehrere dieser Systeme entlang eines linearen Musters (1.6), eines Winkelmusters (117.29) oder eines linear-winkelförmigen Musters (117.29) über der Grundfläche (1.18) angeordnet sind, wobei mindestens zwei flache Reflexionsspiegel (66.6, 66.7, 69.9, 69.12) verschieben die Projektionsposition der Lichtstrahlen (1.14, 66.10, 146.4) nach oben, um zu verhindern, dass diese auf den darunter liegenden konvexen oder plankonvexen Spiegel (66.8, 67.5) treffen.

5. Ein System zur Erzeugung konzentrierter Solarenergie (CSP) nach den Ansprüchen 1 bis 4, bei dem die Lichtstrahlen, nachdem sie durch den konkaven oder plankonkaven Spiegel (1.2, 66.2, 117.7, 121.2) konzentriert wurden, unter den nächsten flachen Sammelspiegel oder Heliostaten (1.1, 101.1, 105.2, 120.2) geführt und anschließend durch den konvexen oder plankonvexen Spiegel (1.9, 66.5, 148.9) gelenkt werden, wobei das System außerdem ein horizontales Spiegelsystem (1.3, 136.4) umfasst, das sich nach unten auf den konvexen oder plankonvexen Spiegel (1.9, 66.5, 148.9) erstreckt, um diesen vor Regenwasser und Schnee zu schützen und die Skyline vor versehentlicher Lichtstrahlung zu bewahren, wobei das System durch ein computergesteuertes System gesteuert wird, das die Ausrichtung der beiden Sonnenstrahlensammelspiegel bzw. Heliostaten (1.1, 7.3, 11.1, 11.3, 13.2, 13.3, 14.1, 14.3, 15.1, 15.2, 16.1, 16.2, 101.1, 101.4, 121.1, 121.6) durch Betätigung der Drehzapfen (1.19, 7.7, 11.6, 11.7, 12.5, 12.6, 13.4, 13.5, 17.11a, 17.11b, 28.13, 28.14, 101.5, 135.7) steuert, die an den genannten Flachspiegeln bzw. Heliostaten (1.1, 7.3, 11.1, 11.3, 13.2, 13.3, 14.1, 14.3, 15.1, 15.2, 16.1, 16.2, 101.1, 101.4, 121.1, 121.6), vorzugsweise bestehend aus dem konvexen oder plankonvexen Spiegel (1.9, 66.5, 148.9), der von einem vertikalen Element (1.10) an den horizontalen Elementen (1.6, 66.15, 120.3) gehalten wird und ein elektrisch betriebenes Betätigungssystem umfasst, das sich oberhalb eines vertikalen Elements (1.11, 24.3) auf den Dreh- und Ausrichtungszapfen (1.19, 11.6, 11.7, 99.2, 101.5, 135.7) befindet, welche die flachen Lichtsammelspiegel oder Heliostaten (1.1, 11.1, 11.3, 99.1, 101.4, 120.1, 120.2), das an den horizontalen Elementen (1.6, 66.15, 120.3) befestigt ist und die flachen Sonnenstrahlensammelspiegel bzw. Heliostaten (1.1, 11.1, 11.3, 99.1, 101.4, 120.1, 120.2) betätigt, um diese (1.1, 11.1, 11.3, 99.1, 101.4, 120.1, 120.2) entsprechend der Projektionsrichtung der enthaltenen Sonnenstrahlen (1.5, 99.5, 105.1, 121.5, 122.1) in die erforderliche Ausrichtung zu bringen.

6. Ein System zur Erzeugung konzentrierter Solarenergie (CSP) nach den Ansprüchen 1 bis 5, umfassend eine transparente Struktur aus Klarglas oder Kunststoff (66.16, 117.9, 145.2), die auf der Lichtleitrohrstruktur (67.12, 123.3) vor jedem konkaven oder plankonkaven Spiegel (21.1, 66.2, 121.2) angeordnet und von Metallrahmen oder -elementen (11.2, 66.15, 120.3) getragen wird, und vorzugsweise umfassend ein elektrisch betätigtes Enteisungssystem (114.8, 115.7) um die Glasstruktur (66.16, 117.9, 145.2) zum Schutz der Spiegel oder Heliostaten (1.1, 11.1, 11.3, 99.1, 101.4, 120.1, 120.2). vor Frost, Eis oder Schnee in den Wintermonaten, so dass das System die flachen Reflexionsspiegel (66.6, 66.7, 67.1, 67.2, 131.2, 131.12) umfassen kann, die sich im Inneren des Lichtantriebsrohrs (67.12, 123.3) befinden, ohne von Frost beeinträchtigt zu werden.

7. Ein System zur Erzeugung konzentrierter Solarenergie (CSP) nach den Ansprüchen 1 bis 6, bei dem die Plan-Konkavspiegel (1.2, 6.4, 66.2, 121.2) teilweise nach oben zur Skyline und teilweise zum frontal positionierten flachen Sammelspiegel bzw. Heliostat (1.1, 11.1, 11.3, 101.1, 101.4, 120.1, 120.2) gerichtet sind und somit einen konkaven (21.1, 66.2, 121.2) oder konvexen (21.4, 66.5, 148.9, 30.3) oder plankonkaven (1.2) oder Plan-konvexen (1.9, 28.1) Spiegel (1.2, 1.9, 28.1) umfassen, der vor und über dem Plan-Konkavspiegel angeordnet ist. (1.2, 6.4, 29.2, 31.1), sodass die Lichtstrahlen (28.2) auf eine Gruppe ebener Reflexionsspiegel (1.4, 1.13, 3.1, 3.4, 28.4, 28.11, 30.1) gelenkt werden, diese lenken die Lichtstrahlen nach unten, wo sie von weiteren flachen Reflexionsspiegeln (28.11, 29.5, 31.4) reflektiert werden, anschließend werden die Lichtstrahlen durch den nächsten Plankonkavspiegel (1.2, 6.4, 66.9, 68.5) auf den darunterliegenden Plankonvexspiegel (66.8, 68.7, 148.10) innerhalb der Lichtlenkrohrstruktur (67.12, 123.3) konzentriert.

8. Ein System zur Erzeugung konzentrierter Solarenergie (CSP) nach den Ansprüchen 1 bis 7, das zwei flache Reflexionsspiegel (1.4, 1.13, 3.1, 3.4) umfasst, die stets in unterschiedlichen Höhen übereinander angeordnet sind, und das ferner den konvexen oder plankonvexen Spiegel (1.9, 66.5, 148.9) umfasst, der stets vor dem unteren Teil des plankonkaven oder konkaven Spiegels (1.2, 6.4, 66.2, 121.2) angeordnet ist, der dem seitlich angeordneten flachen Reflexionsspiegel oder Heliostaten (1.1, 101.1, 120.2) am nächsten liegt, sodass die konzentrierten, hochintensiven Lichtstrahlen (100.13, 117.23) auf die konvexen oder plankonvexen Spiegel (1.9, 66.5, 148.9) fokussiert werden, um die Wärme der Lichtstrahlen (66.10) auf einen Wärmetauscher oder Dampferzeuger (1.8, 66.13, 117.8, 120.5), sodass die Wärme gleichzeitig an die Primärkreislaufleitung (1.16, 84.16, 117.27) übertragen wird, um das Fluid im Primärkreislauf (1.16, 84.16, 117.27) in Dampf umzuwandeln, der eine Dampfturbine (82.12, 123.14) antreibt, in der das Fluid im Primärkreislauf vorzugsweise Wasser ist, und an die Energiespeicherleitung (84.7, 117.28), die Wärme an den Tank (1.7, 84.6, 117.4) abgibt.

9. Ein System zur Erzeugung konzentrierter Solarenergie (CSP) nach den Ansprüchen 1 bis 8, das die Spiegel (1.2, 1.9, 7.2, 66.2, 66.5, 121.2) in verschiedenen Höhen entlang des CSP-Solarstrahlsammelsystems umfasst und sowohl für unebenes (7.6, 8.4, 67.13, 68.8) als auch für flaches Gelände einen flachen Solarstrahlsammelspiegel oder Heliostaten (13.3, 105.3, 120.1, 122.2) aufweist, der über der Oberkante der konkaven oder plankonkaven Spiegel (1.2, 1.9, 7.2, 66.2, 121.2) angeordnet ist und dadurch die Sonnenstrahlen zu den tiefer positionierten flachen Spiegeln oder Heliostaten (7.3, 14.3, 105.2) lenkt. 120.2, 121.1), wenn die Sonnenstrahlen hinter den unteren Flachspiegeln oder Heliostaten (7.3, 14.3, 105.2, 120.2, 121.1) projizieren, wobei die unteren Flachspiegel oder Heliostaten (7.3, 14.3, 105.2, 120.2, 121.1) die Lichtstrahlen (1.14, 66.10, 148.6, 148.8) zu den Konkav- oder Plankonkavspiegeln (1.2, 66.2, 121.2) zur Lichtkonzentration lenken, sodass das System aus zwei Paaren verbundener Flachspiegel (17.1 a, 17.2a, 17.9a, 17.10a, 17.1b, 17.4b, 17.8b, 17.9b) bestehen kann, wobei die Elemente so übereinander angeordnet sind, dass der untere Spiegel, der die Lichtstrahlen sammelt (17.9a), mit seiner Oberkante über dem seitlich angrenzenden Spiegel (17.10a) liegt, wenn die Lichtstrahlen in eine niedrigere Projektionsposition bewegt werden, oder dass der seitliche Spiegel (17.9b) mit seiner Oberkante über dem Lichtsammelspiegel (17.8b) liegt, wenn die Lichtstrahlen in eine höhere Projektionsposition bewegt werden.

10. Ein System zur Erzeugung konzentrierter Solarenergie (CSP) nach den Ansprüchen 1 bis 9, das die Spiegelgruppen (18.2, 18.3, 18.4) an verschiedenen Positionen zu den Schienen (18.8) umfasst, welche die Spiegel (18.2, 18.3, 18.4) tragen. An jedem Trennpunkt zwischen den vorhergehenden und nachfolgenden Solarstrahlensammelspiegeln oder Heliostaten (18.3) ist jeweils ein Satz von zwei geneigten Flachspiegeln (18.6, 18.11, 18.9, 18.12, 22.1, 22.2, 22.3, 22.5) angeordnet, sodass die Lichtstrahlen stets exakt auf den nächsten konkaven (21.1, 24.2) oder plankonkaven (1.2, 15.4) Lichtkonzentrationsspiegel gelenkt werden; das System kann auch konvexe Spiegel (21.4, 22.5) umfassen. 24.5), sodass die von mehreren Solarkollektoren (19.2, 19.7, 19.13, 19.15) in verschiedene Richtungen projizierten Lichtstrahlen (19.16) gleichzeitig mittels mehrerer ebener Reflexionsspiegel (19.4, 19.14) oder durch die Ausrichtung des Systems zu einem Wärmetauscher oder Dampferzeuger (19.12) gelenkt werden, wobei die Spiegel konkav (21.1, 24.2) oder konvex (21.4, 24.5) sind, wobei die Lichtstrahlen zu einem konzentrierten Lichtstrahl (23.4) gebündelt werden, der anschließend durch kleine ebene Reflexionsspiegel (23.3, 23.5) zum Wärmetauscher oder Dampferzeuger (23.6) geführt wird.

11. Ein System zur Erzeugung konzentrierter Solarenergie (CSP) nach den Ansprüchen 1 bis 10, bei dem die Lichtsammelsysteme (118.1, 118.16, 119.2, 119.3, 119.7, 119.11, 119.13) um, über oder auf Gebäude (118.2, 119.1) gerichtet sind, um die Wärme der Lichtstrahlen den Energiespeicheranwendungen (119.4, 119.5, 119.8, 119.12, 119.10) zuzuführen oder um Platz um das Gebäude herum zu sparen; die Lichtsammelsysteme werden auch über den Dächern von Parkhäusern (123.9), Busbahnhöfen (124.9) und Bahnhöfen (125.14) angeordnet, sodass die Lichtstrahlen gleichzeitig eine Dampfturbine (125.18) und den Energiespeicherbehälter (125.20) mit Wärme versorgen können; der Lichtsammelspiegel bzw. Heliostaten (11.1, 105.3, 120.1) an einem Drehpunkt (11.7, 101.5) befestigt ist, um den Planspiegel bzw. Heliostaten (11.1, 105.3, 120.1) auszurichten, und wird von einem nach oben ragenden vertikalen Element (101.6) getragen, das über den konkaven bzw. plankonkaven Spiegeln (1.2, 66.2, 121.2) liegt.

12. Ein System zur Erzeugung konzentrierter Solarenergie (CSP) nach den Ansprüchen 1 bis 11, bei dem das Lichtleitrohr (128.3) Lichtstrahlen durch mehrere Lichtkonzentrationssysteme (128.6) leitet, die jeweils einen konkaven oder plankonkaven Spiegel (128.7, 128.9) umfassen. Dieser konzentriert die Lichtstrahlen sowohl des Lichtleitrohrs (128.3) als auch weiterer seitlich angeordneter Lichtsammel- und Konzentrationssysteme (128.4) auf einen konvexen oder plankonvexen Spiegel (128.11, 128.14), sodass die konzentrierten Lichtstrahlen zum nächsten Lichtkonzentrationssystem geleitet werden können. Dieses umfasst, wie beim zuvor genannten System, Rohre (128.5), die die Lichtstrahlen dem konkaven oder plankonkaven Spiegel (128.9) zuführen, die Lichtsammel- und Konzentrationssysteme sind zudem aufschwimmenden Schiffen (128.11) angeordnet, wodurch der Platzbedarf im Boden reduziert werden kann, wobei die Lichtleitrohre (130.1) aus Sätzen von drei Spiegeln (131.2, 131.12, 131.9) bestehend, um die Lichtstrahlen nach oben oder unten zu lenken.

13. Ein System zur Erzeugung konzentrierter Solarenergie (CSP) nach den Ansprüchen 1 bis 12, bei dem die Lichtleitrohre (140.1, 140.12) gleichzeitig Wärme aus Lichtstrahlen an die Anwendungen (140.16) eines Gebäudes (140.10) wie Kessel, Heizkörper, Herde oder Stromerzeugungsanlagen liefern und gleichzeitig die Lichtstrahlen auf das Dach (140.9) des Gebäudes (140.10) nach oben lenken, wodurch die vom System aufgefangene Lichtmenge maximiert und der Platzbedarf minimiert wird; das System umfasst außerdem einen konkaven oder Plan-konkaven Spiegel (140.2) vor einem seitlich angeordneten konvexen oder Plankonvexen Spiegel (140.14), der sich innerhalb des Lichtleitrohrs (140.4, 140.4) befindet und die Lichtstrahlen nach oben lenkt, wodurch die Systemeffizienz maximiert wird. Das System umfasst jeweils drei Spiegel; die Spiegel (142.3, 142.6, 142.5) sind im Lichtleitrohr (73.2, 112.15, 148.1, 149.24) angeordnet, um die Lichtstrahlen mit der minimal erforderlichen Anzahl an Spiegeln (142.3, 142.6, 142.5) zu lenken, wobei die Lichtleitrohre (148.1, 149.24) seitliche, flache Reflexionsspiegel (146.2, 149.9) umfassen, die die von den Lichtleitrohren (148.2, 149.10) erzeugten Lichtstrahlen reflektieren, diese Lichtstrahlen durch den Hohlspiegel (148.11) auf den unteren, konvexen Spiegel (148.10) im Inneren des Lichtleitrohrs (148.1, 149.24) konzentriert werden, um im Inneren des Rohrs (148.1, 149.24) freien Querschnittsraum für das nächste Lichtsammelsystem zu schaffen.

14. Ein System zur Erzeugung konzentrierter Solarenergie (CSP) nach den Ansprüchen 4 bis 13, bestehend aus einer rohrförmigen Struktur (66.4, 67.11, 68.9), die mittels vertikaler Tragelemente (66.1, 68.1) an der starren Tragkonstruktion (66.15, 68.3) befestigt ist; diese Tragelemente stützen die rohrförmige Struktur (66.4, 67.11, 68.9) über der Bodenfläche (67.12, 68.8); die Sonnenstrahlen werden durch konkave Spiegel (66.2, 68.2) mittels einer transparenten Abschirmung (66.16, 67.11, 69.17) auf die innerhalb der rohrförmigen Struktur (66.4, 67.11, 68.9) befindlichen konvexen Spiegel (66.5, 68.6) gelenkt und durch ebene Reflexion auf die erforderliche Projektionshöhe gebracht. Spiegel (66.6, 66.7, 66.11, 67.1, 67.2, 67.3, 67.4, 67.6, 67.7, 68.10, 68.11, 68.12, 68.13, 68.14), nachdem sie durch plankonkave (66.9) oder konkave (67.9, 68.5) Spiegel auf plankonvexe (66.8) oder konvexe (67.5, 68.7) Spiegel fokussiert wurden, wobei die lichtleitenden konvexen Spiegel (66.5, 68.6) unter jeder transparenten Abschirmung (66.16, 67.11, 69.17) und innerhalb der röhrenförmigen Struktur (66.4, 67.11, 68.9) angeordnet sind, so dass die röhrenförmige Struktur (66.4, 67.11, 68.9) lenkt die Lichtstrahlen über eine beliebige Grundfläche (67.12, 68.8) mit unregelmäßiger Geometrie mithilfe der genannten flachen Reflexionsspiegel (66.6, 66.7, 66.11, 67.1, 67.2, 67.3, 67.4, 67.6, 67.7, 68.10, 68.11, 68.12, 68.13, 68.14), sodass das System die Lichtstrahlen zur Vorkonzentration oder direkten Konzentration der Lichtstrahlen auf plan-konkave Spiegel (88.17, 88.8, 89.11, 89.12, 89.17, 90.3, 90.4, 90.8, 94.7, 94.10, 95.16, 95.11, 96.7, 96.13) lenken kann; die Flüssigkeitsantriebsleitungen (88.3, 90.17, 94.9, 95.8, 96.20) dienen der Wärmeübertragung, sodass das System auf Gebäudedächern (108.1, 109.1, 110.18) installiert werden kann und Wischerblätter (100.11, 101.14, 102.11, 103.7, 104.15) über den transparenten Glasscheiben (100.10, 101.13, 102.1, 103.10) umfassen kann, um eine konstant maximale Transparenz zu gewährleisten.

15. Ein System zur Erzeugung konzentrierter Solarenergie (CSP) nach den Ansprüchen 1 bis 14, wobei das Solarstrahlkonzentrationssystem in einem Solarstrahlkonzentrationssystem enthalten ist, dessen zuvor genannte Elemente aus einem Verbundwerkstoff, vorzugsweise kohlenstofffaserverstärkten Kunststoffen oder glasfaserverstärkten Kunststoffen, oder einem transparenten Material, vorzugsweise Glas, transparentem PVC oder UPVC oder Plexiglas, oder einem Kunststoffmaterial, vorzugsweise UPVC, PVC, Polyethylen oder Polypropylen, oder einem metallischen Material, vorzugsweise Stahl oder einer Aluminiumlegierung, oder Zement oder Beton, oder einem keramischen Material oder einer Kombination aus mindestens zwei dieser Materialien bestehen, sodass das Solarstrahlkonzentrationssystem in einem Solarstrahlkonzentrationssystem enthalten ist, dessen gesamtes System und alle Komponenten mittels Extrusions- und Extrusionsformverfahren, Warm- oder Kaltformbearbeitung, Schmieden, Schmiedepressverfahren, Gießen, Kunststoffspritzgussverfahren und Bearbeitungsverfahren wie Fräsen, Laserschneiden oder Wasserstrahlschneiden hergestellt werden und vorzugsweise in dem Solarstrahlkonzentrationssystem enthalten sind, das Strom und/oder Wärme und/oder Wasser liefert. und/oder umfasst Gebirgsregionen, Hochgebirgslagen, Tieflandlagen, Seeufer, Meeresküsten, Seen, Flüsse, Flussufer, Meere, Kanäle, Wasserstraßen, Kanalufer, Schiffe, Boote, U-Boote, Züge, Lastwagen, Anhänger, Flugzeuge, Luftkissenfahrzeuge, Bodeneffektfahrzeuge, Seefahrzeuge, Hubschrauber, Flugzeuge, Raumflugzeuge, Raumfahrzeuge, Satelliten, Raumstationen, Gebäude, Häuser, Fabriken, Fabrikgebäude, Telekommunikationstürme, Kommunikationstürme, Flughäfen, Flughafenkontrolltürme, Krankenhäuser, Hochhäuser, Türme, Wolkenkratzer, Steinbrüche, Bergwerke, Häfen, Kräne, Kraftwerke, Kühltürme, Antennen, ozeanografische Schiffe, Eisbrecher, Offshore-Schiffe, Offshore-Windkraftanlagen, Öltanker, Containerschiffe, Offshore-Solarkraftwerke, Offshore-Kraftwerke, Offshore-Schiffe, Arbeitsschiffe, Schlepper, Seeschiffe, Ölplattformen, Ölbohrtürme, Öl Bohrschiffe, Industrieschiffe, Kranmasten, Kräne, Windkraftanlagen, Windkraftanlagenmasten, Signalmasten, Signaltürme, Eisenbahnsignaltürme, Eisenbahnsignalmasten, Ampelmasten, Hub krane, Hubschiffe, Hubplattformen, Bohrinseln, Lastkähne, schwimmende Lastkähne, Seeschiffe, Flussschiffe, Kanalschiffe, Oberleitungspfeiler, Oberleitungsmasten, Straßenmasten, Straßenbeleuchtungsmasten, Pontons, Tauchpontons, Tauchschiffe, Tauchschiffe, Offshore-Tauchschiffe, Brücken, Brückenmasten, Staudämme, Tauchwindkraftanlagen, Tauchsolarkraftwerke, Entsalzungsanlagen, Offshore-Entsalzungsanlagen, Tauchentsalzungsanlagen, Halbtaucherentsalzungsanlagen, Halbtaucherentsalzungsanlagen Pontons, Halbtaucherschiffe, Halbtaucher-Offshore-Halbtaucherschiffe, Halbtaucher-Windkraftanlagenschiffe, Halbtaucher-Solarthermie-Kraftwerksschiffe, Eisbrecher, Werften, Werftdocks, Trockendocks, Schwimmdocks, Halbtaucherdocks, Docks, Häfen, Dockanlagen, Flughäfen, Tankstellen, Ladestationen für Elektrofahrzeuge, Weltraumstartplätze, Weltraumbahnhöfe, Bahnhöfe und Busbahnhöfe.

## Revendications

1. Système de production d'énergie solaire concentrée (CSP) comprenant au moins un dispositif ou une unité comprenant un ensemble de miroirs de collecte plans ou d'héliostats (1.1), chacun comprenant au moins un élément vertical (1.12, 78.6a, 123.1) supportant au moins un élément horizontal (1.6, 66.15, 120.3) au-dessus du sol (1.18, 105.9, 120.4), lequel supporte au moins un miroir de collecte de rayons solaires plan ou un héliostat (1.1, 105.2, 120.2), chaque miroir de collecte plan ou héliostat (1.1, 150.2, 120.2) étant supporté par un élément vertical (1.11) et orienté, de préférence au moyen d'un pivot d'orientation ou de rotation (1.19, 99.2), au moins partiellement, de préférence totalement, vers un miroir plan-concave ou concave (1.2, 66.2, 1.11). 121.2) orienté au moins vers un miroir convexe ou plan-convexe (1.9, 66.5) placé devant et sous ledit miroir plan-concave ou concave, ledit miroir convexe ou plan-convexe étant placé plus près dudit miroir concave ou plan-concave (1.2, 6.4, 66.2, 121.2) que le foyer dudit miroir concave ou plan-concave (1.2, 6.4, 66.2, 121.2), les rayons lumineux étant dirigés par ledit miroir plan-convexe ou convexe (1.9) vers un miroir plan de réflexion (1.13), lequel miroir plan (1.13) dirige lesdits rayons lumineux vers le haut, vers un autre miroir plan de réflexion (1.4), lequel dirige lesdits rayons lumineux vers la partie inférieure du miroir plan-concave ou concave suivant (1.2), situé à côté du miroir plan de collecte ou héliostat suivant (1.1); ces miroirs plans de réflexion (1.4, 1.13) sont constitués dessous et derrière ledit miroir de collecte plan suivant ou héliostat (1.1).

2. Système de production d'énergie solaire concentrée (CSP) selon la revendication 1, dans lequel plusieurs dispositifs ou unités, de préférence de 2 à 100, et plus particulièrement de 10 à 50, sont disposés selon une configuration linéaire (1.6), angulaire (117.29) ou linéaire-angulaire (117.29), de préférence placés les uns devant les autres, ainsi les miroirs convexes ou plan-convexes (1.9, 66.5) dirigent les rayons lumineux dans la même direction que celle projetée sur les miroirs concaves ou plan-concaves (1.2, 6.4, 66.2, 121.2) par le miroir collecteur de lumière ou l'héliostat (1.1, 150.2, 120.2). Il en résulte une augmentation progressive de l'intensité et de la densité lumineuses des rayons (1.14), tandis que l'ensemble de miroirs de réflexion plans (1.4, 1.13) modifie le point de projection de ces rayons lumineux (1.14) vers le haut afin de ne pas rencontrer le miroir convexe inférieur ou plan-convexe (1.9) sur le trajet des rayons lumineux (1.14).

3. Système de production d'énergie solaire concentrée (CSP) selon les revendications 1 ou 2, dans lequel ledit dispositif ou unité comprend en outre au moins un second miroir plan de collecte et de réflexion ou héliostat (105.3, 107.3, 120.1) positionné au-dessus du miroir concave ou plan-concave (1.2, 6.4, 66.2, 121.2), face à celui-ci, de préférence au moyen d'un pivot de rotation ou d'orientation (11.7, 101.5), de sorte que les rayons lumineux (122.1) collectés par ledit miroir plan ou héliostat supérieur (105.3, 107.3, 120.1) soient dirigés vers ledit miroir ou héliostat inférieur (1.1, 150.2, 120.2), de préférence supporté au-dessus du sol (81.5a, 81.5b) moyennant deux éléments verticaux disposés latéralement (81.4a, 81.7b), qui supportent simultanément ledit miroir concave ou plan concave (81.3a, 81.6b) et supportent un élément horizontal (81.3b) sur lequel est compris l'élément vertical (81.2a) qui supporte ledit miroir de collecte plat supérieur ou héliostat (105.3, 107.3, 120.1).

4. Système de production d'énergie solaire concentrée (CSP) selon les revendications 1 à 3, dans lequel les rayons lumineux (1.14) réfléchis par lesdits miroirs convexes ou plan-convexes (1.9, 66.5) sont dirigés à l'intérieur d'une structure allongée, creuse et de préférence fermée (67.12, 123.3, 151.10), de préférence tubulaire (67.12, 123.3, 151.10) de section circulaire, ovale ou carrée (67.12, 123.3, 151.10), qui abrite pour chaque système un miroir plan-concave ou concave (66.9, 148.11) concentrant progressivement lesdits rayons lumineux (1.14) le long dudit conduit lumineux (67.12, 123.3) au moyen d'éléments comprenant un miroir convexe ou plan-convexe (66.8, 69.8), la surface supérieure (66.16, 117.9) de ladite structure tubulaire (67.12, 123.3) est plane et transparente, permettant ainsi aux rayons lumineux (100.13, 117.23) d'être dirigés par ledit miroir concave ou plan-concave (1.2, 69.1, 121.2) vers ledit tube (67.12, 123.3) intégrant un miroir plan-convexe ou convexe (66.8, 69.8), à travers ladite surface plane et transparente (66.16, 117.9), de préférence, ladite structure tubulaire (67.12, 123.3) comprend un balai d'essuie-glace (100.11, 101.14, 113.5b) sur ladite surface (66.16, 117.9); le miroir convexe ou plan-convexe (1.9, 66.5) présente un rayon de courbure inférieur à celui du miroir concave ou plan-concave (1.2, 6.4, 66.2, 121.2), comprenant plusieurs systèmes disposés selon un motif linéaire (1.6), angulaire (117.29) ou linéaire-angulaire (117.29) sur la surface du sol (1.18), de sorte qu'au moins deux miroirs plans (66.6, 66.7, 69.9, 69.12) déplacent vers le haut le point de projection des rayons lumineux (1.14, 66.10, 146.4) afin qu'ils ne rencontrent pas le miroir convexe ou plan convexe inférieur (66.8, 67.5) sur leur trajet.

5. Système de production d'énergie solaire concentrée (CSP) selon les revendications 1 à 4, dans lequel les rayons lumineux sont dirigés sous le miroir de collecte plan suivant ou héliostat (1.1, 101.1, 105.2, 120.2) après avoir été concentrés par le miroir concave ou plan-concave (1.2, 66.2, 117.7, 121.2), puis dirigés par le miroir convexe ou plan-convexe (1.9, 66.5, 148.9), ledit système comprenant également un système de miroirs horizontaux (1.3, 136.4) orienté vers le bas en direction du miroir convexe ou plan-convexe (1.9, 66.5, 148.9) afin de le protéger (1.9, 66.5, 148.9) de la pluie et de la neige, ainsi que de toute émission accidentelle de rayons lumineux, ledit système étant contrôlé par un système informatisé. Il contrôle l'orientation des deux miroirs ou héliostats de collecte des rayons solaires (1.1, 7.3, 11.1, 11.3, 13.2, 13.3, 14.1, 14.3, 15.1, 15.2, 16.1, 16.2, 101.1, 101.4, 121.1, 121.6) en actionnant les pivots de rotation (1.19, 7.7, 11.6, 11.7, 12.5, 12.6, 13.4, 13.5, 17.11a, 17.11b, 28.13, 28.14, 101.5, 135.7) qui sont fixés auxdits miroirs ou héliostats plans (1.1, 7.3, 11.1, 11.3, 13.2, 13.3, 14.1, 14.3, 15.1, 15.2, 16.1, 16.2, 101.1, 101.4, 121.1, 121.6), comprenant de préférence ledit miroir convexe ou plan-convexe (1.9, 66.5, 148.9) est supporté par un élément vertical (1.10) par lesdits éléments horizontaux (1.6, 66.15, 120.3) et qui comprend un système d'actionnement électrique situé au-dessus d'un élément vertical (1.11, 24.3), sur les pivots de rotation et d'orientation (1.19, 11.6, 11.7, 99.2, 101.5, 135.7) qui orientent lesdits miroirs plans de collecte de lumière ou héliostats (1.1, 11.1, 11.3, 99.1, 101.4, 120.1, 120.2), qui est soutenu par lesdits éléments horizontaux (1.6, 66.15, 120.3), et qui actionne lesdits miroirs plats de collecte de rayons solaires ou héliostats (1.1, 11.1, 11.3, 99.1, 101.4, 120.1, 120.2) afin de positionner ces (1.1, 11.1, 11.3, 99.1, 101.4, 120.1, 120.2) dans l'orientation requise selon la direction de projection des rayons solaires compris (1.5, 99.5, 105.1, 121.5, 122.1).

6. Système de production d'énergie solaire concentrée (CSP) selon les revendications 1 à 5, comprenant une structure transparente en verre clair ou en plastique (66.16, 117.9, 145.2) disposée sur la structure du tube de guidage de la lumière (67.12, 123.3), située devant chaque miroir concave ou plan-concave (21.1, 66.2, 121.2), supportée par des cadres ou éléments métalliques (11.2, 66.15, 120.3), et comprenant de préférence un système de dégivrage à commande électrique (114.8, 115.7) autour de ladite structure en verre (66.16, 117.9, 145.2) afin de protéger lesdits miroirs ou héliostats (1.1, 11.1, 11.3, 99.1, 101.4, 120.1, 120.2) du dégivrage. En hiver, le système peut être protégé du gel, de la glace ou de la neige, de sorte que les miroirs de réflexion plans (66.6, 66.7, 67.1, 67.2, 131.2, 131.12) contenus dans le tube de guidage de la lumière (67.12, 123.3) ne soient pas affectés par le gel.

7. Système de production d'énergie solaire concentrée (CSP) selon les revendications 1 à 6, dans lequel lesdits miroirs concaves de type piano ou concaves (1.2, 6.4, 66.2, 121.2) sont orientés vers le haut, en partie vers l'horizon et en partie vers le miroir de collecte plan ou l'héliostat positionné frontalement (1.1, 11.1, 11.3, 101.1, 101.4, 120.1, 120.2), comprenant ainsi un miroir concave (21.1, 66.2, 121.2) ou convexe (21.4, 66.5, 148.9, 30.3), ou un miroir plan concave (1.2) ou convexe de type piano (1.9, 28.1) (1.2, 1.9, 28.1) étant situé en amont et au-dessus desdits miroirs concaves de type piano ou concaves (1.2, 6.4). 29.2, 31.1), de sorte que lesdits rayons lumineux (28.2) soient ensuite dirigés vers un ensemble de miroirs plans (1.4, 1.13, 3.1, 3.4, 28.4, 28.11, 30.1) qui les dirigent vers le bas afin qu'ils soient réfléchis par des miroirs plans (28.11, 29.5, 31.4), de sorte qu'ils soient ensuite concentrés par le miroir plan concave suivant (1.2, 6.4, 66.9, 68.5) vers le miroir plan convexe inférieur (66.8, 68.7, 148.10) situé à l'intérieur de la structure du conduit de lumière (67.12, 123.3).

8. Un système de production d'énergie solaire concentrée (CSP) selon les revendications 1 à 7, comprenant deux miroirs plans à réflexion (1.4, 1.13, 3.1, 3.4) positionnés à des hauteurs différentes l'un par rapport à l'autre, et comprenant également ledit miroir convexe ou plan-convexe (1.9, 66.5, 148.9) positionné en permanence devant la partie inférieure dudit miroir plan-concave ou concave (1.2, 6.4, 66.2, 121.2) le plus proche du miroir plan à réflexion ou héliostat (1.1, 101.1, 120.2) situé latéralement, de sorte que lesdits rayons lumineux concentrés de haute intensité (100.13, 117.23) soient concentrés vers lesdits miroirs convexes ou plan-convexes (1.9, 66.5, 148.9) afin de transférer la chaleur desdits rayons lumineux (66.10) à un échangeur de chaleur ou générateur de vapeur (1.8, 66.13, 117.8, 120.5), de sorte que ladite chaleur soit simultanément transférée au tuyau du circuit primaire (1.16, 84.16, 117.27) afin de convertir ledit fluide du circuit primaire (1.16, 84.16, 117.27) en vapeur pour entraîner une turbine à vapeur (82.12, 123.14), dans laquelle ledit fluide du circuit primaire, de préférence de l'eau, et audit tuyau de fluide de stockage d'énergie (84.7, 117.28) qui transfère la chaleur audit réservoir (1.7, 84.6, 117.4).

9. Système de production d'énergie solaire concentrée (CSP) selon les revendications 1 à 8, comprenant lesdits miroirs (1.2, 1.9, 7.2, 66.2, 66.5, 121.2) à différentes hauteurs de rails (7.4, 68.3) le long dudit système de captation des rayons solaires CSP, et comprenant, pour les terrains accidentés (7.6, 8.4, 67.13, 68.8) et plats, un miroir plat de captation des rayons solaires ou héliostat (13.3, 105.3, 120.1, 122.2) placé au-dessus du bord supérieur des miroirs concaves ou plan-concaves (1.2, 1.9, 7.2, 66.2, 121.2), dirigeant ainsi lesdits rayons solaires vers lesdits miroirs plats ou héliostats situés plus bas (7.3, 14.3, 105.2, 120.2). 121.1) si lesdits rayons solaires se projettent derrière lesdits miroirs plans inférieurs ou héliostats (7.3, 14.3, 105.2, 120.2, 121.1), lesdits miroirs plans inférieurs ou héliostats (7.3, 14.3, 105.2, 120.2, 121.1) dirigeant les rayons lumineux (1.14, 66.10, 148.6, 148.8) vers les miroirs concaves ou plan-concaves (1.2, 66.2, 121.2) pour la concentration de la lumière, de sorte que ledit système puisse comprendre un ensemble de deux paires de miroirs plans connectés (17.1a, 17.2a, 17.9a, 17.10a, 17.1b, 17.4b, 17.8b, 17.9b) qui sont superposés, de sorte que le miroir inférieur collectant les rayons lumineux (17.9a) présente son bord supérieur au-dessus du miroir latéral adjacent (17.10a) si les rayons lumineux sont projetés vers le bas, ou bien le miroir latéral (17.9b) présente son bord supérieur au-dessus du miroir collecteur de lumière (17.8b) si les rayons lumineux sont projetés vers le haut.

10. Système de production d'énergie solaire concentrée (CSP) selon les revendications 1 à 9, comprenant des ensembles de miroirs (18.2, 18.3, 18.4) positionnés différemment des ensembles de rails (18.8) supportant lesdits miroirs (18.2, 18.3, 18.4), de sorte qu'un ensemble de deux miroirs plans inclinés (18.6, 18.11, 18.9, 18.12, 22.1, 22.2, 22.3, 22.5) soit présent à chaque point de séparation entre les miroirs de collecte de rayons solaires ou héliostats (18.3) précédents et suivants, de sorte que les rayons lumineux soient toujours dirigés précisément vers le miroir de concentration de lumière concave (21.1, 24.2) ou plan-concave (1.2, 15.4) suivant, ledit système pouvant également comprendre des miroirs convexes (21.4, 24.5); les rayons lumineux (19.16) projetés par plusieurs systèmes de captation de rayons solaires (19.2, 19.7, 19.13, 19.15) dans plusieurs directions sont simultanément dirigés vers un échangeur de chaleur ou un générateur de vapeur (19.12) au moyen de plusieurs miroirs plans (19.4, 19.14) ou selon différentes orientations du système; si ces miroirs sont concaves (21.1, 24.2) et convexes (21.4, 24.5), les rayons lumineux sont concentrés en un faisceau (23.4) qui peut ensuite être dirigé vers l'échangeur de chaleur ou le générateur de vapeur (23.6) par de petits miroirs plans (23.3, 23.5).

11. Système de production d'énergie solaire concentrée (CSP) selon les revendications 1 à 10, dans lequel lesdits systèmes de captation de la lumière (118.1, 118.16, 119.2, 119.3, 119.7, 119.11, 119.13) sont déplacés autour, au-dessus ou en direction des bâtiments (118.2, 119.1) afin de fournir de la chaleur par les rayons lumineux aux applications de stockage d'énergie (119.4, 119.5, 119.8, 119.12, 119.10) ou de réduire l'encombrement autour dudit bâtiment; ces systèmes de captation de la lumière sont également installés sur les toits des parkings (123.9), des gares routières (124.9) et des gares ferroviaires (125.14), ainsi les rayons lumineux peuvent alimenter simultanément une turbine à vapeur (125.18) et le réservoir de fluide caloporteur (125.20), ce dernier étant doté d'un étage supérieur plat ; le miroir de collecte de lumière ou héliostat (11.1, 105.3, 120.1) est maintenu par un pivot de rotation (11.7, 101.5) pour orienter ledit miroir plat ou héliostat (11.1, 105.3, 120.1), et est maintenu par un élément vertical projeté vers le haut (101.6) qui repose sur lesdits miroirs concaves ou plan-concaves (1.2, 66.2, 121.2).

12. Système de production d'énergie solaire concentrée (CSP) selon les revendications 1 à 11, dans lequel le conduit de lumière (128.3) achemine les rayons lumineux à travers plusieurs systèmes de concentration de lumière (128.6), chacun comprenant un miroir concave ou plan-concave (128.7, 128.9) qui concentre les rayons lumineux provenant à la fois du conduit de lumière (128.3) et d'autres systèmes de collecte et de concentration de lumière latéraux (128.4), vers un miroir convexe ou plan-convexe (128.11, 128.14), de sorte que les rayons lumineux concentrés puissent être acheminés vers le système de concentration de lumière suivant, qui comprend, comme dans le système mentionné précédemment, des conduits (128.5) acheminant les rayons lumineux vers ledit miroir concave ou plan-concave (128.9), ledit système de collecte et de concentration de lumière étant également intégré sur des navires (127.11) permettant de réduire l'espace occupé au sol, lesdits conduits de lumière (130.1) étant constitués d'ensembles de trois miroirs (131.2, 131.12, 131.9) permettent de diriger les rayons lumineux vers le haut ou vers le bas.

13. Système de production d'énergie solaire concentrée (CSP) selon les revendications 1 à 12, dans lequel les conduits de lumière (140.1, 140.12) peuvent simultanément fournir de la chaleur par rayonnement lumineux aux applications (140.16) d'un bâtiment (140.10) telles que des chaudières, des radiateurs, des cuisinières ou des équipements de production d'électricité, et en même temps, diriger les rayons lumineux vers le haut sur le toit (140.9) dudit bâtiment (140.10), maximisant ainsi la quantité de rayons lumineux captés par le système et minimisant l'espace requis; ce système comprend également un miroir concave ou plan-concave (140.2) placé devant un miroir convexe ou plan-convexe (140.14) disposé latéralement et intégré à l'intérieur des conduits de lumière (140.4, 140.4) qui dirigent les rayons lumineux vers le haut, optimisant ainsi l'efficacité du système; ce système comprend des ensembles de trois miroirs; les éléments (142.3, 142.6, 142.5) sont intégrés à l'intérieur du tube de guidage de la lumière (73.2, 112.15, 148.1, 149.24) afin de diriger les rayons lumineux avec le nombre minimal de miroirs (142.3, 142.6, 142.5) requis; ces tubes de guidage de la lumière (148.1, 149.24) comportent des miroirs plans latéraux (146.2, 149.9) qui réfléchissent les rayons lumineux issus des tubes de guidage (148.2, 149.10); ces rayons sont ensuite concentrés par le miroir concave (148.11) vers le miroir convexe inférieur (148.10) situé à l'intérieur du tube de guidage (148.1, 149.24), libérant ainsi de l'espace dans la section transversale de ce dernier pour prochain système de captation de lumière.

14. Système de production d'énergie solaire concentrée (CSP) selon les revendications 4 à 13, comprenant une structure tubulaire (66.4, 67.11, 68.9) fixée à la structure porteuse rigide (66.15, 68.3) par des éléments de support verticaux (66.1, 68.1) qui la maintiennent au-dessus du sol (67.12, 68.8). Les rayons solaires sont dirigés par les miroirs concaves (66.2, 68.2) vers les miroirs convexes (66.5, 68.6) situés à l'intérieur de la structure tubulaire (66.4, 67.11, 68.9), à travers un écran transparent (66.16, 67.11, 69.17) ; les rayons lumineux sont ainsi dirigés vers les hauteurs de projection requises par des miroirs de réflexion plans. (66.6, 66.7, 66.11, 67.1, 67.2, 67.3, 67.4, 67.6, 67.7, 68.10, 68.11, 68.12, 68.13, 68.14) après avoir été concentrée par des miroirs plan-concaves (66.9) ou concaves (67.9, 68.5) vers des miroirs plan-convexes (66.8) ou convexes (67.5, 68.7), ladite lumière dirigeant les miroirs convexes (66.5, 68.6) compris sous chaque écran transparent (66.16, 67.11, 69.17) et à l'intérieur de ladite structure tubulaire (66.4, 67.11, 68.9), de sorte que ladite structure tubulaire (66.4, 67.11, 68.9) Ce système dirige les rayons lumineux sur toute géométrie irrégulière d'un rez-de-chaussée (67.12, 68.8) à l'aide de miroirs plans (66.6, 66.7, 66.11, 67.1, 67.2, 67.3, 67.4, 67.6, 67.7, 68.10, 68.11, 68.12, 68.13, 68.14), de sorte qu'il puisse les diriger vers des miroirs plan-concaves (88.17, 88.8, 89.11, 89.12, 89.17, 90.3, 90.4, 90.8, 94.7, 94.10, 95.16, 95.11, 96.7, 96.13) pour une préconcentration ou une concentration directe vers les conduites d'alimentation en fluide. (88.3, 90.17, 94.9, 95.8, 96.20) pour le transfert de chaleur, de sorte que ledit système puisse être intégré sur les toits des bâtiments (108.1, 109.1, 110.18) et puisse comprendre des essuie-glaces (100.11, 101.14, 102.11, 103.7, 104.15) sur les écrans en verre transparent (100.10, 101.13, 102.1, 103.10) pour garantir une transparence maximale constante.

15. Système de production d'énergie solaire concentrée (CSP) selon les revendications 1 à 14, dans lequel ledit système de concentration des rayons solaires est constitué d'un matériau composite, de préférence un plastique renforcé de fibres de carbone ou de fibres de verre, ou d'un matériau transparent, de préférence du verre, du PVC transparent ou de l'UPVC, ou du plexiglas, ou d'un matériau plastique, de préférence de l'UPVC, du PVC, du polyéthylène ou du polypropylène, ou d'un matériau métallique, de préférence de l'acier ou un alliage d'aluminium, ou du ciment, du béton, ou d'un matériau céramique, ou d'une combinaison d'au moins deux de ces matériaux, de sorte que ledit système de concentration des rayons solaires soit constitué d'un système de concentration des rayons solaires, dans lequel tous lesdits systèmes et composants des éléments ci-dessus sont fabriqués par extrusion et moulage par extrusion, usinage à chaud ou à froid, forgeage, pressage à forger, fonderie, moulage par injection plastique et procédés d'usinage tels que le fraisage, la découpe laser ou la découpe au jet d'eau, de préférence comprenant ledit système de concentration des rayons solaires fournissant de l'énergie et/ou de la chaleur et/ou de l'eau et/ou comprend des zones montagneuses, des lieux de haute altitude, des lieux de basse altitude, des rives de lacs, des rivages maritimes, des lacs, des rivières, des berges de rivières, des mers, des canaux, des chenaux, des rives de canaux, des berges de chenaux, des navires, des bateaux, des sous-marins, des trains, des camions, des semi-remorques, des aéronefs, des véhicules à effet de sol sur coussin d'air, des véhicules à effet de sol, des véhicules maritimes, des véhicules navals, des hélicoptères, des avions, des navettes spatiales, des engins spatiaux, des satellites, des stations spatiales, des bâtiments, des maisons, des usines, des bâtiments d'usine, des tours de télécommunication, des tours de communication, des aéroports, des tours de contrôle d'aéroport, des hôpitaux, des immeubles de grande hauteur, des tours, des gratte-ciel, des carrières, des mines, des ports, des grues, des centrales électriques, des tours de refroidissement, des antennes, des navires océanographiques, des brise-glaces, des navires offshore, des navires offshore à éoliennes, des pétroliers, des porte-conteneurs, des navires offshore de production d'énergie solaire thermique, des navires offshore de production d'énergie thermique, des navires offshore, des bateaux de travail, des navires de travail, des remorqueurs, des navires maritimes, des plateformes pétrolières, des tours de plateformes pétrolières, des tours de forage pétrolier, des navires de forage pétrolier, des navires industriels, des grues mâts, grues, éoliennes, mâts d'éoliennes, mâts de signalisation, tours de signalisation, tours de signalisation ferroviaire, mâts de signalisation ferroviaire, mâts de feux de circulation, grues autoélévatrices, navires autoélévateurs, plateformes autoélévatrices, plateformes, barges, barges flottantes, barges maritimes, barges fluviales, péniches, piliers de caténaire ferroviaire, mâts de caténaire ferroviaire, mâts de signalisation routière, mâts d'éclairage routier, mâts d'éclairage public, pontons, pontons submersibles, barges submersibles, navires submersibles, navires offshore submersibles, ponts, mâts de pont, barrages, navires à éoliennes submersibles, navires submersibles de production d'énergie solaire thermique, usines de dessalement, usines de dessalement offshore, usines de dessalement submersibles, usines de dessalement semi-submersibles, barges semi-submersibles, pontons semi-submersibles, navires semi-submersibles, navires offshore semi-submersibles, navires à éoliennes semi-submersibles navires semi-submersibles de production d'énergie solaire thermique, brise-glaces, chantiers navals, docks de chantiers navals, cales sèches, docks flottants, docks semi-submersibles, docks, ports, aéroports, stations-service, stations de recharge pour véhicules électriques, bases de lancement spatial, spatioports, gares ferroviaires et gares routières.
